(19) Europäisches Patentamt
European Patent Office
Office européen des brevets

(11) EP 4 196 507 B1

(12) EUROPEAN PATENT SPECIFICATION

(45) Date of publication and mention of the grant of the patent:
**21.05.2025 Bulletin 2025/21**

(21) Application number: **21766728.6**

(22) Date of filing: **27.07.2021**

(51) International Patent Classification (IPC):
***C08F 210/02*** *(2006.01)* ***C08F 210/06*** *(2006.01)*
***C08F 232/04*** *(2006.01)* ***C08F 4/659*** *(2006.01)*
***C08F 232/08*** *(2006.01)*

(52) Cooperative Patent Classification (CPC):
(C-Sets available)
**C08F 232/04;** C08F 4/65908; C08F 232/08 (Cont.)

(86) International application number:
**PCT/US2021/043331**

(87) International publication number:
**WO 2022/035585 (17.02.2022 Gazette 2022/07)**

(54) **CYCLIC CONTAINING POLYMER COMPOSITIONS OBTAINED USING TRANSITION METAL BIS(PHENOLATE) CATALYST COMPLEXES AND PROCESS FOR PRODUCTION THEREOF**

POLYMERZUSAMMENSETZUNGEN MIT CYCLISCHEM INHALT AUS ÜBERGANGSMETALL-BIS(PHENOLAT)-KATALYSATORKOMPLEXEN UND HERSTELLUNGSVERFAHREN DAFÜR

COMPOSITIONS POLYMÈRES CONTENANT UN CYCLE OBTENUES À L'AIDE DE COMPLEXES DE CATALYSEUR DE BIS(PHÉNOLATE) DE MÉTAL DE TRANSITION ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2020 US 202063065344 P**

(43) Date of publication of application:
**21.06.2023 Bulletin 2023/25**

(73) Proprietor: **ExxonMobil Chemical Patents Inc.**
**Baytown, TX 77520 (US)**

(72) Inventors:
- **CANICH, Jo Ann M.**
  **Houston, TX 77059 (US)**
- **LAMBIC, Nikola S.**
  **Houston, TX 77007 (US)**
- **CULCU, Gursu**
  **Humble, TX 77346 (US)**
- **JIANG, Peijun**
  **Katy, TX 77494 (US)**
- **HAGADORN, John R.**
  **Houston, TX 77035 (US)**
- **MATTLER, Sarah J.**
  **League City, TX 77573 (US)**

(74) Representative: **ExxonMobil Petroleum & Chemical BV**
**IP Law Europe**
**Hermeslaan 2**
**1831 Machelen (BE)**

(56) References cited:
**WO-A1-2020/018254**
**WO-A2-2008/033197**
**KR-A- 20180 022 137**
**US-A1- 2020 172 645**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 196 507 B1

(52) Cooperative Patent Classification (CPC): (Cont.)

C-Sets
**C08F 210/02, C08F 4/64158;**
**C08F 210/02, C08F 4/659;**
**C08F 210/06, C08F 4/64158;**
**C08F 210/06, C08F 4/659;**
C08F 210/02, C08F 232/04;
C08F 210/02, C08F 232/04, C08F 2500/01, C08F 2500/32;
C08F 210/02, C08F 232/04, C08F 2500/02;
C08F 210/02, C08F 232/04, C08F 2500/03, C08F 2500/02, C08F 2500/27;
C08F 210/02, C08F 232/04, C08F 2500/04, C08F 2500/27, C08F 2500/34;
C08F 210/02, C08F 232/04, C08F 2500/27;
C08F 210/02, C08F 232/04, C08F 2500/27, C08F 2500/34, C08F 2500/03;
C08F 210/02, C08F 232/04, C08F 2500/27, C08F 2500/34, C08F 2500/03, C08F 2500/01;
C08F 210/02, C08F 232/08, C08F 2500/27, C08F 2500/03;
C08F 210/02, C08F 232/08, C08F 2500/27, C08F 2500/03, C08F 2500/02;
C08F 210/06, C08F 232/04, C08F 2500/27, C08F 2500/03, C08F 2500/02;
C08F 210/06, C08F 232/04, C08F 2500/27, C08F 2500/03, C08F 2500/02, C08F 2500/34;
C08F 210/06, C08F 232/08, C08F 2500/27, C08F 2500/03, C08F 2500/02, C08F 2500/34;
C08F 232/04, C08F 210/02

## Description

### FIELD OF THE INVENTION

This invention relates polymer compositions containing cyclic monomers prepared using novel catalyst compounds comprising group 4 bis(phenolate) complexes, compositions comprising such and processes to prepare such copolymers.

### BACKGROUND OF THE INVENTION

Many have been interested in modifying the architecture of such polyolefins in the hopes of obtaining new and better combinations of properties such as melt strength, stiffness, shrink and optical properties. Moreover, high optical clarity, great melt strength, bubble stability and good extrusion characteristics are critical for blown film, such as for heat sealable blown films. However, wide-ranging films made from polyethylene compositions still lack certain properties (e.g., great tensile and impact strength, puncture resistance, excellent optical properties and first-rate sealing properties). Improved strength properties, along with excellent drawability, would allow down gauging in blown film applications (e.g., as a bag).

Catalyst design, polymer reaction engineering, and polymer process technologies have been explored to produce novel polyolefin materials to meet the demands of highly diversified industries. Catalyst design play key roles in manipulating molecular structures of polyethylene, and hence the material properties and processability. Polymer markets are currently dominated by products prepared with Ziegler-Natta (ZN) type catalysts and metallocene type catalysts. Optimization of these polyethylene products almost always involve processes that use multiple reactors and/or multiple catalysts. Either of the strategies tends to be complicated and costly. Hence there is interest in finding new catalyst systems that increase the commercial usefulness of the catalyst and allow the production of polymers having improved properties.

Catalysts for olefin polymerization can be based on bis(phenolate) complexes as catalyst precursors, which are activated typically by an alumoxane or an activator containing a non-coordinating anion. Examples of bis(phenolate) complexes can be found in the following references:

KR 2018-022137 (LG Chem.) describes transition metal complexes of bis(methylphenyl phenolate)pyridine.

US 7,030,256 B2 (Symyx Technologies, Inc.) describes bridged bi-aromatic ligands, catalysts, processes for polymerizing and polymers therefrom.

US 6,825,296 (University of Hong Kong) describes transition metal complexes of bis(phenolate) ligands that coordinate to metal with two 6-membered rings.

US 7,847,099 (California Institute of Technology) describes transition metal complexes of bis(phenolate) ligands that coordinate to metal with two 6-membered rings.

WO 2016/172110 (Univation Technologies) describes complexes of tridentate bis(phenolate) ligands that feature a non-cyclic ether or thioether donor. US 2020/0172645 A1 discloses the preparation of copolymers comprising from 0.5 wt % to 25 wt % cyclic olefin content using bridged biscyclopentadienyl transition metal compounds. WO 2008/033197 discloses a process comprising the reaction of an olefin or alpha-olefin with a cyclic olefin using a catalyst comprising a metal-ligand complex having a bridged bi-phenyl phenol ligand structure.

Other references of interest include: Baier, M. C. et al. in "Post-Metallocenes in the Industrial Production of Polyolefins" Angew. Chem. Int. Ed. 2014, 53, 9722-9744; and Golisz and Bercaw in "Synthesis of Early Transition Metal Bisphenolate Complexes and their use as Olefin Polymerization Catalysts" Macromolecules 2009, 42, 8751-8762.

Further, it is advantageous to conduct commercial solution polymerization reactions at elevated temperatures. Two major catalyst limitations often preventing access to such high temperature polymerizations are the catalyst efficiency and the molecular weight of produced polymers, as both of these factors decrease with rising temperature. Typical metallocene catalysts suitable for use in producing polyethylene copolymer have relatively limited molecular weight capabilities which require low process temperatures to achieve a desired low melt flow rate product.

The newly developed single-site catalyst described herein and in related USSN 16/787,909, filed February 11, 2020, has the capability of producing high molecular weight polymer at elevated polymerization temperatures. These catalysts, when paired with various types of activators and used in a solution process can produce polymer compositions with good properties, such as lower Tm's with good molecular weight, among other things. Further, the catalyst activity is high which facilitates use in commercially relevant process conditions. This new process provides new polymers having an extended melt flow rate range and that can be produced with increased reactor throughput and at higher polymerization temperatures during polymer production.

Summary of the Invention.

This invention relates to polymer compositions containing cyclic olefins, such as copolymers of cyclic olefins with ethylene and/or propylene and/or one or more $C_4$ to $C_{12}$ alpha-olefins, and blends comprising such copolymers, where the polymer compositions are prepared in a solution process using transition metal catalyst complexes of bis(phenolate) ligands. Preferably the bis(phenolate) ligand is a dianionic, tridentate ligand that features a central neutral heterocyclic Lewis base and two phenolate donors, where the tridentate ligand coordinates to the metal center to form two eight-membered rings. The compositions of polymers and copolymers described herein preferably contain greater than 0.1 mol% cyclic olefin with ethylene and/or propylene, and with optional $C_4$ or higher alpha olefin comonomer content.

This invention also relates to polymer composition, such as copolymers of cyclic olefins with ethylene and/or propylene and/or one or more $C_4$ to $C_{12}$ alpha-olefins, and blends comprising such copolymers, where the polymer composition are, prepared in a solution process using bis(phenolate) complexes represented by Formula (II):

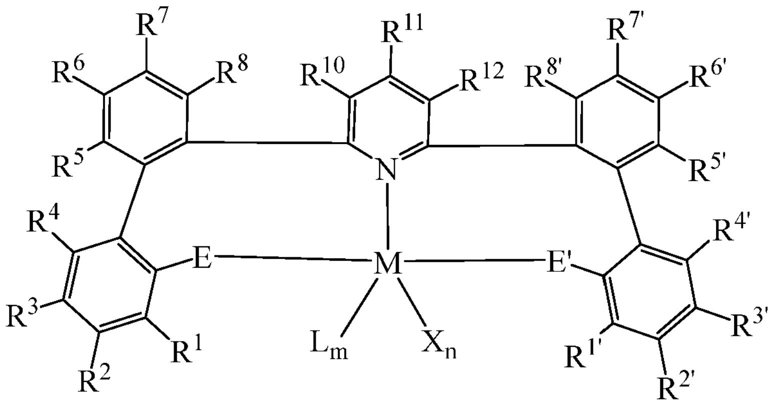

**(II)**

wherein:

M is Hf, Zr or Ti;
E and E' are each O
each L is independently a Lewis base;
each X is independently an anionic ligand;
n is 1, 2 or 3;
m is 0, 1, or 2;
n+m is not greater than 4;
$R^1$ and $R^{1'}$ are independently a $C_4$-$C_{40}$ tertiary hydrocarbyl group, a $C_4$-$C_{40}$ cyclic tertiary hydrocarbyl group, or a $C_4$-$C_{40}$ polycyclic tertiary hydrocarbyl group,
each of $R^2$, $R^3$, $R^4$, $R^{2'}$, $R^{3'}$, and $R^{4'}$ is independently hydrogen, $C_1$-$C_{40}$ hydrocarbyl, $C_1$-$C_{40}$ substituted hydrocarbyl, a heteroatom or a heteroatom-containing group, or one or more of $R^2$ and $R^3$, $R^3$ and $R^4$, $R^{2'}$ and $R^{3'}$, $R^{3'}$ and $R^{4'}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings;
any two L groups may be joined together to form a bidentate Lewis base;
an X group may be joined to an L group to form a monoanionic bidentate group;
any two X groups may be joined together to form a dianionic ligand group,
each of $R^5$, $R^6$, $R^7$, $R^8$, $R^{5'}$, $R^{6'}$, $R^{7'}$, $R^{8'}$, $R^{10}$, $R^{11}$, and $R^{12}$ is independently hydrogen, a $C_1$-$C_{40}$ hydrocarbyl, a $C_1$-$C_{40}$ substituted hydrocarbyl, a heteroatom or a heteroatom-containing group, or one or more of $R^5$ and $R^6$, $R^6$ and $R^7$, $R^7$ and $R^8$, $R^{5'}$ and $R^{6'}$, $R^{6'}$ and $R^{7'}$, $R^{7'}$ and $R^{8'}$, $R^{10}$ and $R^{11}$, or $R^{11}$ and $R^{12}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings.

This invention also relates to a solution phase method to polymerize cyclic olefins comprising contacting a catalyst compound as described herein with an activator, a cyclic olefin and optionally ethylene and/or propylene and one or more $C_4$-$C_{10}$ alpha-olefin comonomers. This invention further relates to polymer compositions comprising cyclic olefins produced by the methods described herein.

Definitions

For the purposes of this invention and the claims thereto, the following definitions shall be used:

The new numbering scheme for the Periodic Table Groups is used as described in Chemical and Engineering News, v.63(5), pg. 27 (1985). Therefore, a "group 4 metal" is an element from group 4 of the Periodic Table, e.g. Hf, Ti, or Zr.

"Catalyst productivity" is a measure of the mass of polymer produced using a known quantity of polymerization catalyst. Typically, "catalyst productivity" is expressed in units of kg of polymer per kg of catalyst or grams of polymer per mmols of catalyst or the like. If units are not specified, then the "catalyst productivity" is in units of gram of polymer per gram of catalyst. For calculating catalyst productivity, only the weight of the transition metal component of the catalyst is used (i.e. the activator and/or co-catalyst is omitted). "Catalyst activity" is a measure of the mass of polymer produced using a known quantity of polymerization catalyst per unit time for batch and semi-batch polymerizations. Typically, "catalyst activity" is expressed in units of (g of polymer)/(mmol of catalyst)/hour or (kg of polymer)/(mmols of catalyst)/hour or the like. If units are not specified, then the "catalyst activity" is in units of (g of polymer)/(mmol of catalyst)/hour.

"Conversion" is the percentage of a monomer that is converted to polymer product in a polymerization, and is reported as % and is calculated based on the polymer yield, the polymer composition, and the amount of monomer fed into the reactor.

An "olefin," alternatively referred to as "alkene," is a linear, branched, or cyclic compound of carbon and hydrogen having at least one double bond. For purposes of this specification and the claims appended thereto, when a polymer or copolymer is referred to as comprising an olefin, the olefin present in such polymer or copolymer is the polymerized form of the olefin. For example, when a copolymer is said to have an "ethylene" content of 35 wt% to 55 wt%, it is understood that the mer unit in the copolymer is derived from ethylene in the polymerization reaction and said derived units are present at 35 wt% to 55 wt%, based upon the weight of the copolymer. A "polymer" has two or more of the same or different mer units. A "homopolymer" is a polymer having mer units that are the same. A "copolymer" is a polymer having two or more mer units that are different from each other. A "terpolymer" is a polymer having three mer units that are different from each other. Accordingly, the definition of copolymer, as used herein, includes terpolymers and the like. "Different" as used to refer to mer units indicates that the mer units differ from each other by at least one atom or are different isomerically. An "ethylene polymer" or "ethylene copolymer" is a polymer or copolymer comprising at least 50 mole% ethylene derived units, a "propylene polymer" or "propylene copolymer" is a polymer or copolymer comprising at least 50 mole% propylene derived units, and so on. A polyethylene composition comprises an ethylene polymer or ethylene copolymer.

Ethylene shall be considered an $\alpha$-olefin.

Unless otherwise specified, the term "$C_n$" means hydrocarbon(s) having n carbon atom(s) per molecule, wherein n is a positive integer.

The term "hydrocarbon" means a class of compounds containing hydrogen bound to carbon, and encompasses (i) saturated hydrocarbon compounds, (ii) unsaturated hydrocarbon compounds, and (iii) mixtures of hydrocarbon compounds (saturated and/or unsaturated), including mixtures of hydrocarbon compounds having different values of n. Likewise, a "$C_m$-$C_y$" group or compound refers to a group or compound comprising carbon atoms at a total number thereof in the range from m to y. Thus, a $C_1$-$C_{50}$ alkyl group refers to an alkyl group comprising carbon atoms at a total number thereof in the range from 1 to 50.

The terms "group," "radical," and "substituent" may be used interchangeably.

The terms "hydrocarbyl radical," "hydrocarbyl group," or "hydrocarbyl" may be used interchangeably and are defined to mean a group consisting of hydrogen and carbon atoms only. Preferred hydrocarbyls are $C_1$-$C_{100}$ radicals that may be linear, branched, or cyclic, and when cyclic, aromatic or non-aromatic. Examples of such radicals include, but are not limited to, alkyl groups such as methyl, ethyl, n-propyl, isopropyl, n-butyl, isobutyl, sec-butyl, tert-butyl, pentyl, iso-amyl, hexyl, octyl cyclopropyl, cyclobutyl, cyclopentyl, cyclohexyl, cyclooctyl, and the like, aryl groups, such as phenyl, benzyl naphthalen-2-yl, and the like.

Unless otherwise indicated, (e.g., the definition of "substituted hydrocarbyl", etc.), the term "substituted" means that at least one hydrogen atom has been replaced with at least one non-hydrogen group, such as a hydrocarbyl group, a heteroatom or heteroatom-containing group, such as halogen (such as Br, Cl, F or I) or at least one functional group such as $-NR^*_2$, $-OR^*$, $-SeR^*$, $-TeR^*$, $-PR^*_2$, $-AsR^*_2$, $-SbR^*_2$, $-SR^*$, $-BR^*_2$, $-SiR^*_3$, $-GeR^*_3$, $-SnR^*_3$, $-PbR^*_3$, $-(CH_2)_q-SiR^*_3$, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or polycyclic ring structure), or where at least one heteroatom has been inserted within a hydrocarbyl ring.

The term "substituted hydrocarbyl" means a hydrocarbyl radical in which at least one hydrogen atom of the hydrocarbyl radical has been substituted with at least one heteroatom (such as halogen, e.g., Br, Cl, F or I) or heteroatom-containing group (such as a functional group, e.g., $-NR^*_2$, $-OR^*$, $-SeR^*$, $-TeR^*$, $-PR^*_2$, $-AsR^*_2$, $-SbR^*_2$, $-SR^*$, $-BR^*_2$, $-SiR^*_3$, $-GeR^*_3$, $-SnR^*_3$, $-PbR^*_3$, $-(CH_2)_q-SiR^*_3$, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or polycyclic ring structure), or where at least one heteroatom has been

inserted within a hydrocarbyl ring.

The term "aryl" or "aryl group" means an aromatic ring (typically made of 6 carbon atoms) and the substituted variants thereof, such as phenyl, 2-methyl-phenyl, xylyl, 4-bromo-xylyl. Likewise, heteroaryl means an aryl group where a ring carbon atom (or two or three ring carbon atoms) has been replaced with a heteroatom, such as N, O, or S. As used herein, the term "aromatic" also refers to pseudoaromatic heterocycles which are heterocyclic substituents that have similar properties and structures (nearly planar) to aromatic heterocyclic ligands, but are not by definition aromatic.

The term "substituted aromatic," means an aromatic group having 1 or more hydrogen groups replaced by a hydrocarbyl, substituted hydrocarbyl, heteroatom or heteroatom containing group.

A "substituted phenolate" is a phenolate group where at least one, two, three, four or five hydrogen atoms in the 2, 3, 4, 5, and/or 6 positions has been replaced with at least one non-hydrogen group, such as a hydrocarbyl group, a heteroatom or heteroatom-containing group, such as halogen (such as Br, Cl, F or I) or at least one functional group such as $-NR^*_2$, $-OR^*$, $-SeR^*$, $-TeR^*$, $-PR^*_2$, $-AsR^*_2$, $-SbR^*_2$, $-SR^*$, $-BR^*_2$, $-SiR^*_3$, $-GeR^*_3$, $-SnR^*_3$, $-PbR^*_3$, $-(CH_2)_q-SiR^*_3$, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or polycyclic ring structure), where the 1 position is the phenolate group (Ph-O-, Ph-S-, and Ph-N(R^)-groups, where R^ is hydrogen, $C_1$-$C_{40}$ hydrocarbyl, $C_1$-$C_{40}$ substituted hydrocarbyl, a heteroatom or a heteroatom-containing group). Preferably, a "substituted phenolate" group in the catalyst compounds described herein is represented by the formula:

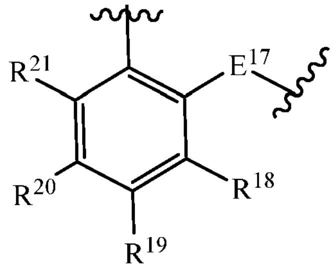

where $R^{18}$ is hydrogen, $C_1$-$C_{40}$ hydrocarbyl (such as $C_1$-$C_{40}$ alkyl) or $C_1$-$C_{40}$ substituted hydrocarbyl, a heteroatom or a heteroatom-containing group, $E^{17}$ is oxygen, sulfur, or $NR^{17}$, and each of $R^{17}$, $R^{19}$, $R^{20}$, and $R^{21}$ is independently selected from hydrogen, $C_1$-$C_{40}$ hydrocarbyl (such as $C_1$-$C_{40}$ alkyl) or $C_1$-$C_{40}$ substituted hydrocarbyl, a heteroatom or a heteroatom-containing group, or two or more of $R^{18}$, $R^{19}$, $R^{20}$, and $R^{21}$ are joined together to form a $C_4$-$C_{62}$ cyclic or polycyclic ring structure, or a combination thereof, and the wavy lines show where the substituted phenolate group forms bonds to the rest of the catalyst compound.

An "alkyl substituted phenolate" is a phenolate group where at least one, two, three, four or five hydrogen atoms in the 2, 3, 4, 5, and/or 6 positions has been replaced with at least one alkyl group, such as a $C_1$ to $C_{40}$, alternately $C_2$ to $C_{20}$, alternately $C_3$ to $C_{12}$ alkyl, such as methyl, ethyl, methyl, ethyl, n-propyl, isopropyl, n-butyl, isobutyl, sec-butyl, tert-butyl, pentyl, iso-amyl, hexyl, octyl cyclopropyl, cyclobutyl, cyclopentyl, cyclohexyl, cyclooctyl, adamantanyl and the like including their substituted analogues.

An "aryl substituted phenolate" is a phenolate group where at least one, two, three, four or five hydrogen atoms in the 2, 3, 4, 5, and/or 6 positions has been replaced with at least one aryl group, such as a $C_1$ to $C_{40}$, alternately $C_2$ to $C_{20}$, alternately $C_3$ to $C_{12}$ aryl group, such as phenyl, 4-fluorophenyl, 2-methylphenyl, 2-propylphenyl, 2,6-dimethylphenyl, mesityl, 2-ethylphenyl, naphthalen-2-yl and the like including their substituted analogues.

The term "ring atom" means an atom that is part of a cyclic ring structure. By this definition, a benzyl group has six ring atoms and tetrahydrofuran has 5 ring atoms.

A heterocyclic ring, also referred to as a heterocyclic, is a ring having a heteroatom in the ring structure as opposed to a "heteroatom-substituted ring" where a hydrogen on a ring atom is replaced with a heteroatom. For example, tetrahydrofuran is a heterocyclic ring and 4-N,N-dimethylamino-phenyl is a heteroatom substituted ring. A substituted heterocyclic ring means a heterocyclic ring having 1 or more hydrogen groups replaced by a hydrocarbyl, substituted hydrocarbyl, heteroatom or heteroatom containing group.

A substituted hydrocarbyl ring means a ring comprised of carbon and hydrogen atoms having 1 or more hydrogen groups replaced by a hydrocarbyl, substituted hydrocarbyl, heteroatom or heteroatom containing group.

For purposes of the present disclosure, in relation to catalyst compounds (e.g., substituted bis(phenolate) catalyst compounds), the term "substituted" means that a hydrogen group has been replaced with a hydrocarbyl group, a heteroatom or heteroatom-containing group, such as halogen (such as Br, Cl, F or I) or at least one functional group such as $-NR^*_2$, $-OR^*$, $-SeR^*$, $-TeR^*$, $-PR^*_2$, $-AsR^*_2$, $-SbR^*_2$, $-SR^*$, $-BR^*_2$, $-SiR^*_3$, $-GeR^*_3$, $-SnR^*_3$, $-PbR^*_3$, $-(CH_2)_q-SiR^*_3$, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or

polycyclic ring structure), or where at least one heteroatom has been inserted within a hydrocarbyl ring.

A tertiary hydrocarbyl group possesses a carbon atom bonded to three other carbon atoms. When the hydrocarbyl group is an alkyl group, tertiary hydrocarbyl groups are also referred to as tertiary alkyl groups. Examples of tertiary hydrocarbyl groups include tert-butyl, 2-methylbutan-2-yl, 2-methylhexan-2-yl, 2-phenylpropan-2-yl, 2-cyclohexylpropan-2-yl, 1-methylcyclohexyl, 1-adamantyl, bicyclo[2.2.1]heptan-1-yl and the like. Tertiary hydrocarbyl groups can be illustrated by Formula A:

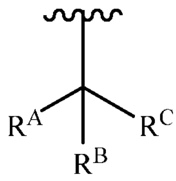

,

wherein $R^A$, $R^B$ and $R^C$ are hydrocarbyl groups or substituted hydrocarbyl groups that may optionally be bonded to one another, and the wavy line shows where the tertiary hydrocarbyl group forms bonds to other groups.

A cyclic tertiary hydrocarbyl group is defined as a tertiary hydrocarbyl group that forms at least one alicyclic (non-aromatic) ring. Cyclic tertiary hydrocarbyl groups are also referred to as alicyclic tertiary hydrocarbyl groups. When the hydrocarbyl group is an alkyl group, cyclic tertiary hydrocarbyl groups are also referred to as cyclic tertiary alkyl groups or alicyclic tertiary alkyl groups. Examples of cyclic tertiary hydrocarbyl groups include 1-adamantanyl, 1-methylcyclohexyl, 1-methylcyclopentyl, 1-methylcyclooctyl, 1-methylcyclodecyl, 1-methylcyclododecyl, bicyclo[3.3.1]nonan-1-yl, bicyclo[2.2.1]heptan-1-yl, bicyclo[2.3.3]hexan-1-yl, bicycle[1.1.1]pentan-1-yl, bicycle[2.2.2]octan-1-yl, and the like. Cyclic tertiary hydrocarbyl groups can be illustrated by Formula B:

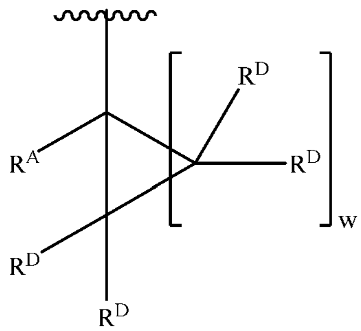

,

wherein $R^A$ is a hydrocarbyl group or substituted hydrocarbyl group, each $R^D$ is independently hydrogen or a hydrocarbyl group or substituted hydrocarbyl group, w is an integer from 1 to about 30, and $R^A$, and one or more $R^D$, and or two or more $R^D$ may optionally be bonded to one another to form additional rings.

When a cyclic tertiary hydrocarbyl group contains more than one alicyclic ring, it can be referred to as polycyclic tertiary hydrocarbyl group or if the hydrocarbyl group is an alkyl group, it may be referred to as a polycyclic tertiary alkyl group.

The terms "alkyl radical," and "alkyl" are used interchangeably throughout this disclosure. For purposes of this disclosure, "alkyl radical" is defined to be $C_1$-$C_{100}$ alkyls, that may be linear, branched, or cyclic. Examples of such radicals can include methyl, ethyl, n-propyl, isopropyl, n-butyl, isobutyl, sec-butyl, tert-butyl, pentyl, iso-amyl, hexyl, octyl cyclopropyl, cyclobutyl, cyclopentyl, cyclohexyl, cyclooctyl, and the like including their substituted analogues. Substituted alkyl radicals are radicals in which at least one hydrogen atom of the alkyl radical has been substituted with at least a non-hydrogen group, such as a hydrocarbyl group, a heteroatom or heteroatom-containing group, such as halogen (such as Br, Cl, F or I) or at least one functional group such as $-NR^*_2$, $-OR^*$, $-SeR^*$, $-TeR^*$, $-PR^*_2$, $-AsR^*_2$, $-SbR^*_2$, $-SR^*$, $-BR^*_2$, $-SiR^*_3$, $-GeR^*_3$, $-SnR^*_3$, $-PbR^*_3$, $-(CH_2)_q-SiR^*_3$, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or polycyclic ring structure), or where at least one heteroatom has been inserted within a hydrocarbyl ring.

Where isomers of a named alkyl, alkenyl, alkoxide, or aryl group exist (e.g., n-butyl, iso-butyl, sec-butyl, and tert-butyl) reference to one member of the group (e.g., n-butyl) shall expressly disclose the remaining isomers (e.g., iso-butyl, sec-butyl, and tert-butyl) in the family. Likewise, reference to an alkyl, alkenyl, alkoxide, or aryl group without specifying a particular isomer (e.g., butyl) expressly discloses all isomers (e.g., n-butyl, iso-butyl, sec-butyl, and tert-butyl).

As used herein, Mn is number average molecular weight, Mw is weight average molecular weight, and Mz is z

average molecular weight, wt% is weight percent, and mol% is mole percent. Molecular weight distribution (MWD), also referred to as polydispersity index (PDI), is defined to be Mw divided by Mn. Unless otherwise noted, all molecular weight units (e.g., Mw, Mn, Mz) are g/mol (g $mol^{-1}$).

The following abbreviations may be used herein: Me is methyl, Et is ethyl, Pr is propyl, cPr is cyclopropyl, nPr is n-propyl, iPr is isopropyl, Bu is butyl, nBu is normal butyl, iBu is isobutyl, sBu is sec-butyl, tBu is tert-butyl, Oct is octyl, Ph is phenyl, MAO is methylalumoxane, dme (also referred to as DME) is 1,2-dimethoxyethane, p-tBu is para-tertiary butyl, TMS is trimethylsilyl, TIBAL is triisobutylaluminum, TNOA and TNOAL are tri(n-octyl)aluminum, p-Me is para-methyl, Bn is benzyl (i.e., $CH_2Ph$), THF (also referred to as thf) is tetrahydrofuran, RT is room temperature (and is 23°C unless otherwise indicated), tol is toluene, EtOAc is ethyl acetate, Cbz is carbazole, Cy is cyclohexyl, cP is cyclopentene, NB is 2-norbornene, h is hours, and min is minutes. Micromoles may be abbreviated as umol or μmol. Microliters may be abbreviated as uL or μL.

A "catalyst system" is a combination comprising at least one catalyst compound and at least one activator. When "catalyst system" is used to describe such a pair before activation, it means the unactivated catalyst complex (precatalyst) together with an activator and, optionally, a co-activator. When it is used to describe such a pair after activation, it means the activated complex and the activator or other charge-balancing moiety. The transition metal compound may be neutral as in a precatalyst, or a charged species with a counter ion as in an activated catalyst system. For the purposes of this invention and the claims thereto, when catalyst systems are described as comprising neutral stable forms of the components, it is well understood by one of ordinary skill in the art, that the ionic form of the component is the form that reacts with the monomers to produce polymers. A polymerization catalyst system is a catalyst system that can polymerize monomers to polymer.

In the description herein, the catalyst may be described as a catalyst, a catalyst precursor, a pre-catalyst compound, catalyst compound or a transition metal compound, and these terms are used interchangeably.

An "anionic ligand" is a negatively charged ligand which donates one or more pairs of electrons to a metal ion. The term "anionic donor" is used interchangeably with "anionic ligand". Examples of anionic donors in the context of the present invention include, but are not limited to, methyl, chloride, fluoride, alkoxide, aryloxide, alkyl, alkenyl, thiolate, carboxylate, amido, methyl, benzyl, hydrido, amidinate, amidate, and phenyl. Two anionic donors may be joined to form a dianionic group.

A "neutral Lewis base or "neutral donor group" is an uncharged (i.e. neutral) group which donates one or more pairs of electrons to a metal ion. Non-limiting examples of neutral Lewis bases include ethers, thioethers, amines, phosphines, ethyl ether, tetrahydrofuran, dimethylsulfide, triethylamine, pyridine, alkenes, alkynes, allenes, and carbenes. Lewis bases may be joined together to form bidentate or tridentate Lewis bases.

For purposes of this invention and the claims thereto, phenolate donors include Ph-O-, Ph-S-, and Ph-N(R^)- groups, where R^ is hydrogen, $C_1$-$C_{40}$ hydrocarbyl, $C_1$-$C_{40}$ substituted hydrocarbyl, a heteroatom or a heteroatom-containing group, and Ph is optionally substituted phenyl.

## Detailed Description

This invention relates solution processes and polymer compositions comprising cyclic monomers prepared using a new catalyst family comprising transition metal complexes of a bis(phenolate) ligand, preferably a dianionic, tridentate ligand that features a central neutral donor group and two phenolate donors, where the tridentate ligands coordinate to the metal center to form two eight-membered rings. In complexes of this type it is advantageous for the central neutral donor to be a heterocyclic group. It is particularly advantageous for the heterocyclic group to lack hydrogens in the position alpha to the heteroatom. In complexes of this type it is also advantageous for the phenolates to be substituted with one or more cyclic tertiary alkyl substituents. The use of cyclic tertiary alkyl substituted phenolates is demonstrated to improve the ability of these catalysts to produce high molecular weight polymer.

Complexes of substituted bis(phenolate) ligands (such as adamantanyl-substituted bis(phenolate) ligands) useful herein form active olefin polymerization catalysts when combined with activators, such as non-coordinating anion or alumoxane activators. Useful bis(aryl phenolate)pyridine complexes comprise a tridentate bis(aryl phenolate)pyridine ligand that is coordinated to a group 4 transition metal with the formation of two eight-membered rings.

This invention also relates to solution processes to produce polymer compositions comprising cyclic monomers utilizing a metal complex comprising: a metal selected from groups 3-6 or Lanthanide metals, and a tridentate, dianionic ligand containing two anionic donor groups and a neutral Lewis base donor, wherein the neutral Lewis base donor is covalently bonded between the two anionic donors, and wherein the metal-ligand complex features a pair of 8-membered metallocycle rings.

This invention relates to catalyst systems used in solution processes to prepare cyclic monomer containing polymer compositions comprising activator and one or more catalyst compounds as described herein.

This invention also relates to solution processes (preferably at higher temperatures) to polymerize olefins using the catalyst compounds described herein comprising contacting the cyclic monomer and optionally one or more olefin

comonomers with a catalyst system comprising an activator and a catalyst compound described herein.

The present disclosure also relates to a catalyst system comprising a transition metal compound and an activator compound as described herein, to the use of such activator compounds for activating a transition metal compound in a catalyst system for polymerizing cyclic monomer and optionally one or more olefin comonomers, and to processes for polymerizing said olefins, the process comprising contacting under polymerization conditions cyclic monomers and one or more olefin comonomers with a catalyst system comprising a transition metal compound and activator compounds, where aromatic solvents, such as toluene, are absent (e.g. present at zero mol% relative to the moles of activator, alternately present at less than 1 mol%, preferably the catalyst system, the polymerization reaction and/or the polymer produced are free of detectable aromatic hydrocarbon solvent, such as toluene).

The cyclic olefin comprising polymer compositions produced herein preferably contain 0 ppm (alternately less than 1 ppm, alternately less than 100 ppm, alternately less than 500 ppm) of aromatic hydrocarbon, such as toluene. Preferably, the polyethylene compositions produced herein contain 0 ppm (alternately less than 1 ppm) of toluene.

The catalyst systems used herein preferably contain 0 ppm (alternately less than 1 ppm) of aromatic hydrocarbon. Preferably, the catalyst systems used herein contain 0 ppm (alternately less than 1 ppm) of toluene.

## Catalyst Compounds

The terms "catalyst", "compound", "catalyst compound", and "complex" may be used interchangeably to describe a transition metal or Lanthanide metal complex that forms an olefin polymerization catalyst when combined with a suitable activator.

The catalyst complexes of the present invention comprise a metal selected from groups 3, 4, 5 or 6 or Lanthanide metals of the Periodic Table of the Elements, a tridentate dianionic ligand containing two anionic donor groups and a neutral heterocyclic Lewis base donor, wherein the heterocyclic donor is covalently bonded between the two anionic donors. Preferably the catalyst complex comprises a dianionic, tridentate ligand featuring a central heterocyclic donor group and two phenolate donors and the tridentate ligand coordinates to the metal center to form two eight-membered rings. Also preferably, the catalyst complex comprises a tridentate dianionic ligand featuring a central heterocyclic donor joined to two phenolate donors, wherein, the central heterocycle is linked to each of the phenolate donors *via* an 1,2-arylene bridge (such as 1,2-phenylene).

The metal is preferably selected from group 3, 4, 5, or 6 elements. Preferably the metal, M, is a group 4 metal. Most preferably the metal, M, is zirconium or hafnium.

Preferably the heterocyclic Lewis base donor features a nitrogen or oxygen donor atom. Preferred heterocyclic groups include derivatives of pyridine, pyrazine, pyrimidine, triazine, thiazole, imidazole, thiophene, oxazole, thiazole, furan, and substituted variants of thereof. Preferably the heterocyclic Lewis base lacks hydrogen(s) in the position alpha to the donor atom. Particularly preferred heterocyclic Lewis base donors include pyridine, 3-substituted pyridines, and 4-substituted pyridines.

The anionic donors of the tridentate dianionic ligand may be arylthiolates, phenolates, or anilides. Preferred anionic donors are phenolates. It is preferred that the tridentate dianionic ligand coordinates to the metal center to form a complex that lacks a mirror plane of symmetry. It is preferred that the tridentate dianionic ligand coordinates to the metal center to form a complex that has a two-fold rotation axis of symmetry; when determining the symmetry of the bis(phenolate) complexes only the metal and dianionic tridentate ligand are considered (i.e. ignore remaining ligands).

The bis(phenolate) ligands useful in the present invention include dianionic tridentateligands that feature two anionic phenolate donors. The bis(phenolate) ligands are tridentate dianionic ligands that coordinate to the metal M in such a fashion that a pair of 8-membered metallocycle rings are formed. The preferred bis(phenolate) ligands wrap around the metal to form a complex with a 2-fold rotation axis, thus giving the complexes $C_2$ symmetry. The $C_2$ geometry and the 8-membered metallocycle rings are features of these complexes that make them effective catalyst components for the production of polyolefins, particularly isotactic poly(alpha olefins). If the ligands were coordinated to the metal in such a manner that the complex had mirror-plane ($C_s$) symmetry, then the catalyst would be expected to produce only atactic poly(alpha olefins); these symmetry-reactivity rules are summarized by Bercaw in Macromolecules 2009, v.42, pp. 8751-8762. The pair of 8-membered metallocycle rings of the inventive complexes is also a notable feature that is advantageous for catalyst activity, temperature stability, and isoselectivity of monomer enchainment. Related group 4 complexes featuring smaller 6-membered metallocycle rings are known (Macromolecules 2009, v.42, pp. 8751-8762) to form mixtures of $C_2$ and $C_s$ symmetric complexes when used in olefin polymerizations and are thus not well suited to the production of highly isotactic poly(alpha olefins).

Bis(phenolate) ligands that contain oxygen donor groups (i.e. E = E' = oxygen in Formula (**II**)) in the present invention are preferably substituted with alkyl, substituted alkyl, aryl, or other groups. It is advantageous that each phenolate group be substituted in the ring position that is adjacent to the oxygen donor atom. It is preferred that substitution at the position adjacent to the oxygen donor atom be an alkyl group containing 1-20 carbon atoms. It is preferred that substitution at the position next to the oxygen donor atom be a non-aromatic cyclic alkyl group with one or more five- or six-membered rings. It is preferred that substitution at the position next to the oxygen donor atom be a cyclic tertiary alkyl group. It is highly preferred that substitution at the position next to the oxygen donor atom be adamantan-1-yl or substituted adamantan-1-yl.

The neutral heterocyclic Lewis base donor is covalently bonded between the two anionic donors via "linker groups" that join the heterocyclic Lewis base to the phenolate groups. The choice of each linker group may affect the catalyst performance, such as the tacticity of the poly(alpha olefin) produced. Both linker groups may independently be phenylene or substituted phenylene. The alkyl substituents on the phenylene group may be chosen to optimize catalyst performance. Typically, one or both phenylenes may be unsubstituted or may be independently substituted with $C_1$ to $C_{20}$ alkyl, such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, or an isomer thereof, such as isopropyl, etc.

This invention is further related to catalyst compounds, and catalyst systems comprising such compounds, represented by the Formula (II):

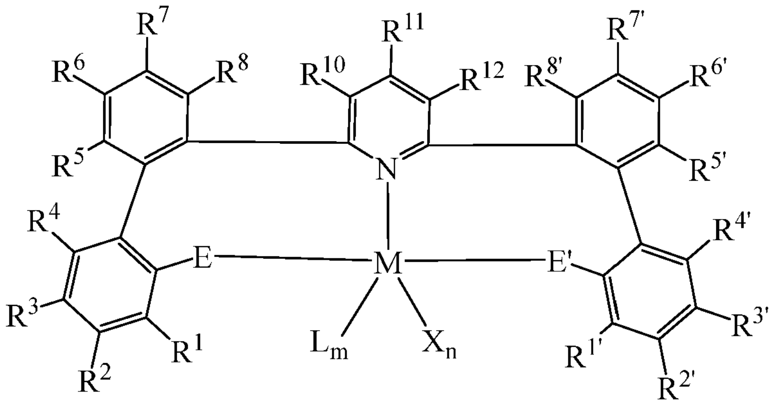

**(II)**

wherein:

M is Hf, Zr or Ti;
E and E' are each O
each L is independently a Lewis base;
each X is independently an anionic ligand;
n is 1, 2 or 3;
m is 0, 1, or 2;
n+m is not greater than 4;
$R^1$ and $R^{1'}$ are independently a $C_4$-$C_{40}$ tertiary hydrocarbyl group, a $C_4$-$C_{40}$ cyclic tertiary hydrocarbyl group, or a $C_4$-$C_{40}$ polycyclic tertiary hydrocarbyl group,
each of $R^2$, $R^3$, $R^4$, $R^{2'}$, $R^{3'}$, and $R^{4'}$ is independently hydrogen, $C_1$-$C_{40}$ hydrocarbyl, $C_1$-$C_{40}$ substituted hydrocarbyl, a heteroatom or a heteroatom-containing group, or one or more of $R^2$ and $R^3$, $R^3$ and $R^4$, $R^{2'}$ and $R^{3'}$, $R^{3'}$ and $R^{4'}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings;
any two L groups may be joined together to form a bidentate Lewis base;
an X group may be joined to an L group to form a monoanionic bidentate group;
any two X groups may be joined together to form a dianionic ligand group;
each of $R^5$, $R^6$, $R^7$, $R^8$, $R^{5'}$, $R^{6'}$, $R^{7'}$; $R^{8'}$, $R^{10}$, $R^{11}$, and $R^{12}$ is independently hydrogen, $C_1$-$C_{40}$ hydrocarbyl, $C_1$-$C_{40}$ substituted hydrocarbyl, a heteroatom or a heteroatom-containing group, or one or more of $R^5$ and $R^6$, $R^6$ and $R^7$, $R^7$ and $R^8$, $R^{5'}$ and $R^{6'}$, $R^{6'}$ and $R^{7'}$, $R^{7'}$ and $R^{8'}$, $R^{10}$ and $R^{11}$, or $R^{11}$ and $R^{12}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings.

The metal, M, is preferably zirconium or hafnium.

In Formula (II), E and E' are each selected from oxygen.

In complexes of Formula **(II),** it is advantageous that each phenolate group be substituted in the position that is next to the oxygen atom (i.e. $R^1$ and $R^{1'}$ in Formula **(II)).** Thus, E and E' is oxygen it and each of $R^1$ and $R^{1'}$ is preferably a non-aromatic cyclic tertiary alkyl group (such as 1-methylcyclohexyl, adamantanyl, or substituted adamantanyl).

In some embodiments of the invention of Formula **(II),** each of $R^1$ and $R^{1'}$ is independently a $C_4$-$C_{40}$ tertiary

hydrocarbyl group. In other embodiments of the invention of Formula **(II)**, each of $R^1$ and $R^{1'}$ is independently a $C_4$-$C_{40}$ cyclic tertiary hydrocarbyl group. In other embodiments of the invention of Formula **(II)**, each of $R^1$ and $R^{1'}$ is independently a $C_4$-$C_{40}$ polycyclic tertiary hydrocarbyl group.

In embodiments of the invention herein, in Formula **(II)**, M is Hf or Zr.

In Formula **(II)**, E and E' are O.

In embodiments of the invention herein, in Formula **(II)**, $R^2$, $R^3$, $R^4$, $R^{2'}$, $R^{3'}$, and $R^{4'}$ is independently hydrogen, $C_1$-$C_{40}$ hydrocarbyl, $C_1$-$C_{40}$ substituted hydrocarbyl, a heteroatom or a heteroatom-containing group, or one or more of, $R^2$ and $R^3$, $R^3$ and $R^4$, $R^{2'}$ and $R^{3'}$, $R^{3'}$ and $R^{4'}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings, preferably hydrogen, methyl, ethyl, propyl, butyl, pentyl, hexyl, or an isomer thereof.

In embodiments of the invention herein, in Formula (**II**), $R^2$, $R^3$, $R^4$, $R^{2'}$, $R^{3'}$, $R^{4'}$, and $R^9$ are independently selected from methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, phenyl, substituted phenyl (such as methylphenyl and dimethylphenyl), benzyl, substituted benzyl (such as methylbenzyl), naphthalen-2-yl, cyclohexyl, cyclohexenyl, methylcyclohexyl, and isomers thereof.

In embodiments of the invention herein, in Formula **(II)**, $R^4$ and $R^{4'}$ is independently hydrogen or a $C_1$ to $C_3$ hydrocarbyl, such as methyl, ethyl or propyl.

In embodiments of the invention herein, in Formula **(II)**, $R^9$ is hydrogen, $C_1$-$C_{40}$ hydrocarbyl, $C_1$-$C_{40}$ substituted hydrocarbyl, or a heteroatom-containing group, preferably hydrogen, methyl, ethyl, propyl, butyl, pentyl, hexyl, or an isomer thereof. Preferably $R^9$ is methyl, ethyl, propyl, butyl, $C_1$ to $C_6$ alkyl, phenyl, 2-methylphenyl, 2,6-dimethylphenyl, or 2,4,6-trimethylphenyl.

In embodiments of the invention herein, in Formula **(II)**, each X is, independently, selected from the group consisting of hydrocarbyl radicals having from 1 to 20 carbon atoms (such as alkyls or aryls), hydrides, amides, alkoxides, sulfides, phosphides, halides, alkyl sulfonates, and a combination thereof, (two or more X's may form a part of a fused ring or a ring system), preferably each X is independently selected from halides, aryls, and $C_1$ to $C_5$ alkyl groups, preferably each X is independently a hydrido, dimethylamido, diethylamido, methyltrimethylsilyl, neopentyl, phenyl, benzyl, methyl, ethyl, propyl, butyl, pentyl, fluoro, iodo, bromo, or chloro group.

Alternatively, each X may be, independently, a halide, a hydride, an alkyl group, an alkenyl group or an arylalkyl group.

In embodiments of the invention herein, in Formula **(II)**, each L is a Lewis base, independently, selected from the group consisting of ethers, thioethers, amines, nitriles, imines, pyridines, halocarbons, and phosphines, preferably ethers and thioethers, and a combination thereof, optionally two or more L's may form a part of a fused ring or a ring system, preferably each L is independently selected from ether and thioether groups, preferably each L is a ethyl ether, tetrahydrofuran, dibutyl ether, or dimethylsulfide group.

In embodiments of the invention herein, in Formula **(II)**, $R^1$ and $R^{1'}$ are independently cyclic tertiary alkyl groups.

In embodiments of the invention herein, in Formula **(II)**, n is 1, 2 or 3, typically 2.

In embodiments of the invention herein, in Formula **(II)**, m is 0, 1 or 2, typically 0.

In embodiments of the invention herein, in Formula **(II)**, M is Hf or Zr, each $R^2$, $R^3$, $R^4$, $R^{2'}$, $R^{3'}$, and $R^{4'}$ is independently hydrogen, $C_1$-$C_{20}$ hydrocarbyl, $C_1$-$C_{20}$ substituted hydrocarbyl, a heteroatom or a heteroatom-containing group, or one or more of $R^2$ and $R^3$, $R^3$ and $R^4$, $R^{2'}$ and $R^{3'}$, $R^{3'}$ and $R^{4'}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings; each X is, independently, selected from the group consisting of hydrocarbyl radicals having from 1 to 20 carbon atoms (such as alkyls or aryls), hydrides, amides, alkoxides, sulfides, phosphides, halides, and a combination thereof, (two or more X's may form a part of a fused ring or a ring system); each L is, independently, selected from the group consisting of ethers, thioethers, and halo carbons (two or more L's may form a part of a fused ring or a ring system).

In embodiments of the invention herein, in Formula **(II)**, each of $R^5$, $R^6$, $R^7$, $R^8$, $R^{5'}$, $R^{6'}$, $R^{7'}$, $R^{8'}$, $R^{10}$, $R^{11}$ and $R^{12}$ is independently hydrogen, $C_1$-$C_{40}$ hydrocarbyl, $C_1$-$C_{40}$ substituted hydrocarbyl, a heteroatom or a heteroatom-containing group, or one or more adjacent R groups may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings.

In embodiments of the invention herein, in Formula **(II)**, each of $R^5$, $R^6$, $R^7$, $R^8$, $R^{5'}$, $R^{6'}$, $R^{7'}$, $R^{8'}$, $R^{10}$, $R^{11}$ and $R^{12}$ is independently hydrogen, methyl, ethyl, propyl, butyl, pentyl, hexyl, or an isomer thereof. In embodiments of the invention herein, in Formula **(II)**, each of $R^5$, $R^6$, $R^7$, $R^8$, $R^{5'}$, $R^{6'}$, $R^{7'}$, $R^{8'}$, $R^{10}$, $R^{11}$ and $R^{12}$ is are independently selected from methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl,

octacosyl, nonacosyl, triacontyl, phenyl, substituted phenyl (such as methylphenyl and dimethylphenyl), benzyl, substituted benzyl (such as methylbenzyl), naphthalen-2-yl, cyclohexyl, cyclohexenyl, methylcyclohexyl, and isomers thereof.

In embodiments of the invention herein, in Formula **(II),** M is Hf or Zr,

each $R^2$, $R^3$, $R^4$, $R^{1'}$, $R^{2'}$, $R^{3'}$, and $R^{4'}$ is independently hydrogen, $C_1$-$C_{20}$ hydrocarbyl, $C_1$-$C_{20}$ substituted hydrocarbyl, a heteroatom or a heteroatom-containing group, or one or more of $R^2$ and $R^3$, $R^3$ and $R^4$, $R^{2'}$ and $R^{3'}$, $R^{3'}$ and $R^{4'}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings; $R^9$ is hydrogen, $C_1$-$C_{20}$ hydrocarbyl, $C_1$-$C_{20}$ substituted hydrocarbyl, or a heteroatom-containing group, such as hydrogen, methyl, ethyl, propyl, butyl, pentyl, hexyl, or an isomer thereof;

each X is, independently, selected from the group consisting of hydrocarbyl radicals having from 1 to 20 carbon atoms (such as alkyls or aryls), hydrides, amides, alkoxides, sulfides, phosphides, halides, dienes, amines, phosphines, ethers, and a combination thereof, (two or more X's may form a part of a fused ring or a ring system); n is 2; m is 0; and

each of $R^5$, $R^6$, $R^7$, $R^8$, $R^{5'}$, $R^{6'}$, $R^{7'}$, $R^{8'}$, $R^{10}$, $R^{11}$ and $R^{12}$ is independently hydrogen, $C_1$-$C_{20}$ hydrocarbyl, $C_1$-$C_{20}$ substituted hydrocarbyl, a heteroatom or a heteroatom-containing group, or one or more adjacent R groups may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings, such as each of $R^5$, $R^6$, $R^7$, $R^8$, $R^{5'}$, $R^{6'}$, $R^{7'}$, $R^{8'}$, $R^{10}$, $R^{11}$ and $R^{12}$ is are independently selected from methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, phenyl, substituted phenyl (such as methylphenyl and dimethylphenyl), benzyl, substituted benzyl (such as methylbenzyl), naphthyl, cyclohexyl, cyclohexenyl, methylcyclohexyl, and isomers thereof.

Preferred embodiment of Formula **(II)** is M is Zr or Hf and both $R^1$ and $R^{1'}$ are $C_4$-$C_{20}$ cyclic tertiary alkyls.

Preferred embodiment of Formula **(II)** is M is Zr or Hf, and both $R^1$ and $R^{1'}$ are adamantan-1-yl or substituted adamantan-1-yl.

Preferred embodiment of Formula **(II)** is M is Zr or Hf, and each of $R^1$, $R^{1'}$, $R^3$ and $R^{3'}$ are adamantan-1-yl or substituted adamantan-1-yl.

Preferred embodiment of Formula **(II)** is M is Zr or Hf, both $R^1$ and $R^{1'}$ are $C_4$-$C_{20}$ cyclic tertiary alkyls, and both $R^7$ and $R^{7'}$ are $C_1$-$C_{20}$ alkyls.

Catalyst compounds that are particularly useful in this invention include one or more of: dimethylzirconium [2',2'''-(pyridine-2,6-diyl)bis(3-adamantan-1-yl)-5-(tert-butyl)-[1,1'-biphenyl]-2-olate)], dimethylhafnium[2',2'''-(pyridine-2,6-diyl)bis(3-adamantan-1-yl)-5-(tert-butyl)-[1,1'-biphenyl]-2-olate)], dimethylzirconium[6,6'-(pyridine-2,6-diyl-bis(benzo[b]thiophene-3,2-diyl))bis(2-adamantan-1-yl)-4-methylphenolate)], dimethylhafnium[6,6'-(pyridine-2,6-diyl-bis(benzo[b]thiophene-3,2-diyl))bis(2-adamantan-1-yl)-4-methylphenolate)], dimethylzirconium[2',2'''-(pyridine-2,6-diyl)bis(3-((3r,5r,7r)-adamantan-1-yl)-5-methyl-[1,1'-biphenyl]-2-olate)], dimethylhafnium[2',2'''-(pyridine-2,6-diyl) bis(3-((3r,5r,7r)-adamantan-1-y1)-5-methyl-[1,1'-biphenyl]-2-olate)], dimethylzirconium[2',2'''-(pyridine-2,6-diyl) bis(3-((3r,5r,7r)-adamantan-1-yl)-4',5-dimethyl-[1,1'-biphenyl]-2-olate)], dimethylhafnium[2',2'''-(pyridine-2,6-diyl) bis(3-((3r,5r,7r)-adamantan-1-yl)-4',5-dimethyl-[1,1'-biphenyl]-2-olate)].

Catalyst compounds that are particularly useful in this invention include those represented by one or more of the formulas:

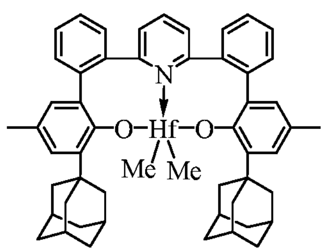

Complex 1

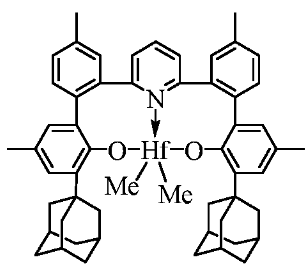

Complex 2

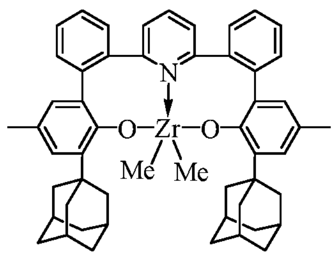

Complex 3

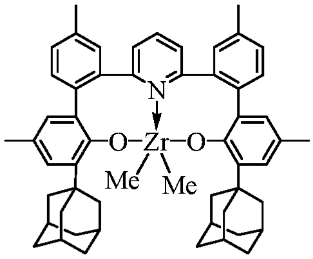

Complex 4

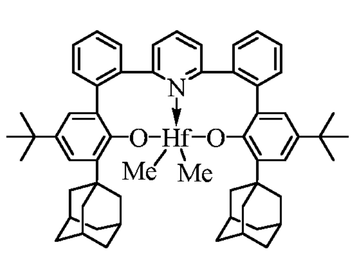

Complex 5

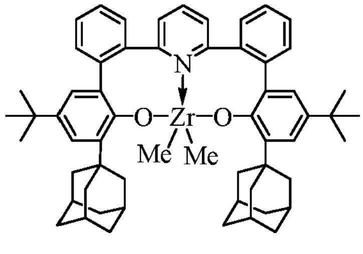

Complex 6

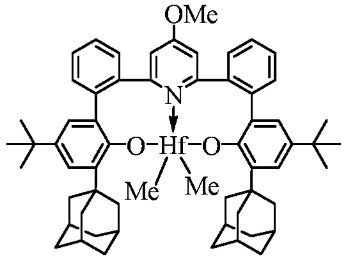

Complex 7

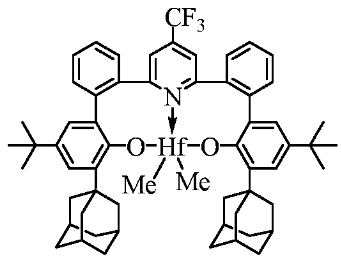

Complex 8

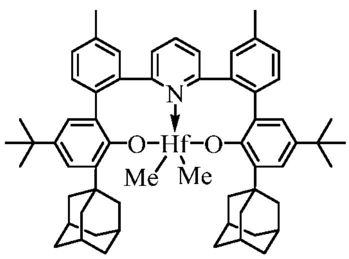

Complex 9

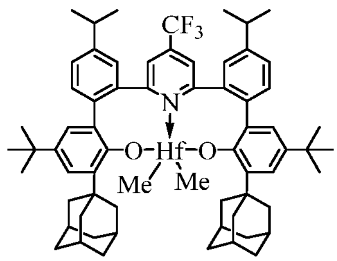

Complex 10

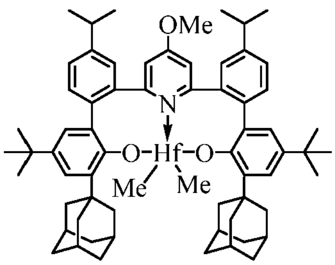

Complex 11

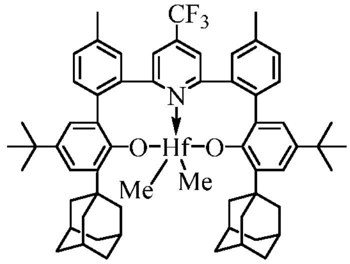

Complex 12

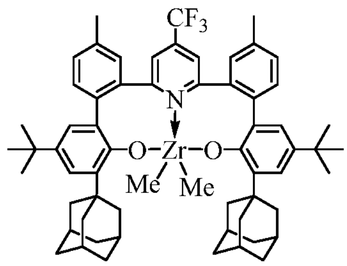

Complex 13

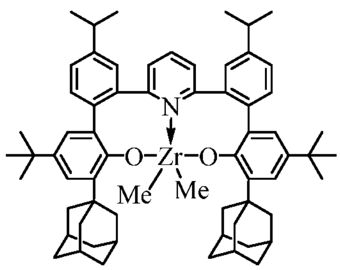

Complex 14

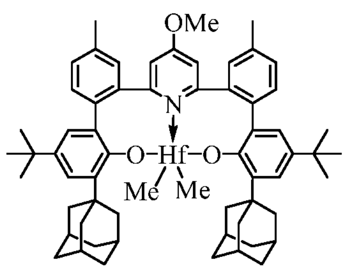

Complex 15

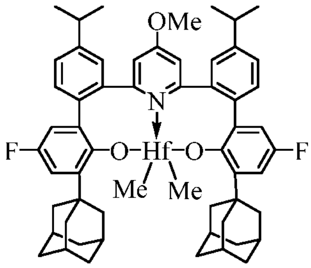

Complex 16

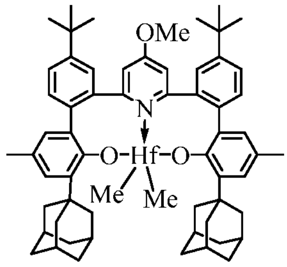

Complex 17

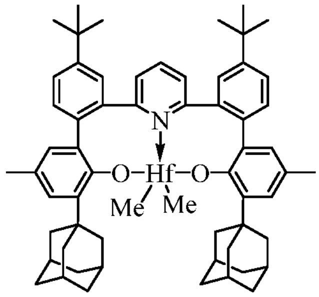

Complex 18

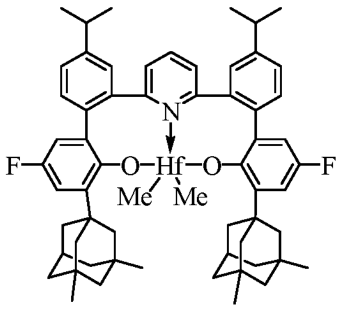

Complex 19

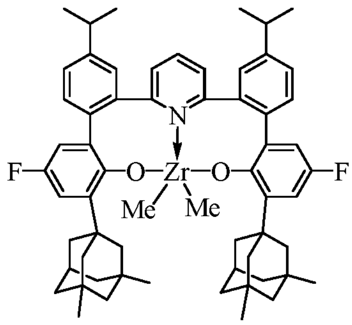

Complex 20

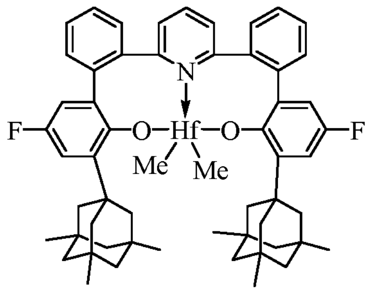

Complex 21

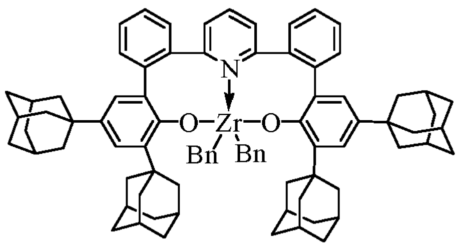

Complex 22

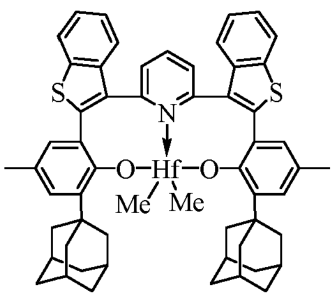

Complex 23

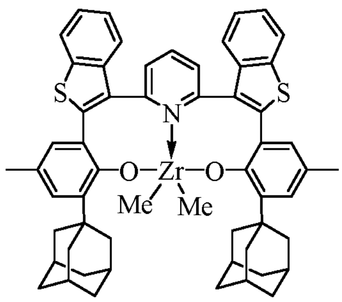

Complex 24

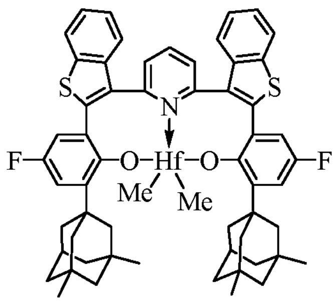

Complex 25

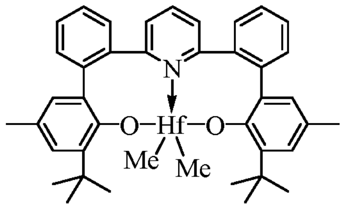
Complex 26

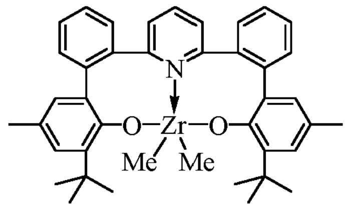
Complex 27

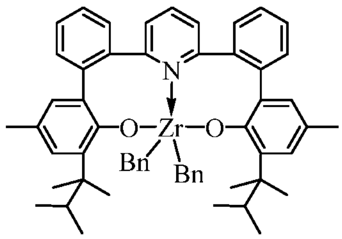
Complex 29

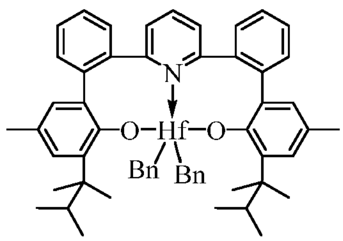
Complex 30

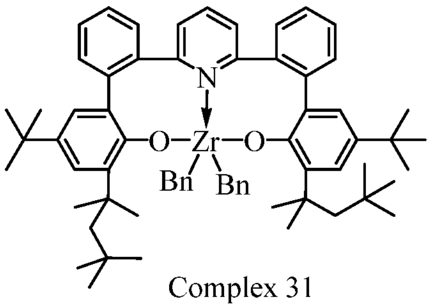
Complex 31

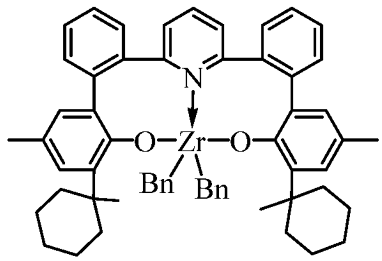
Complex 32

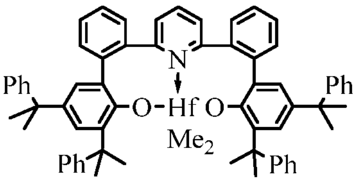
Complex 33

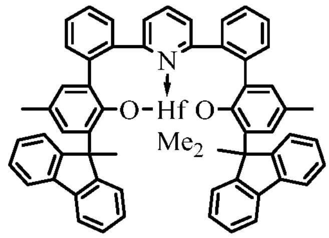
Complex 34

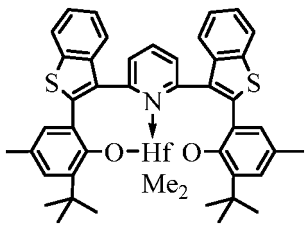
Complex 35

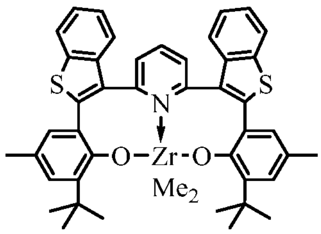
Complex 36

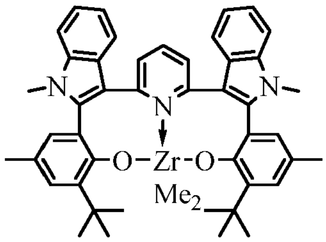

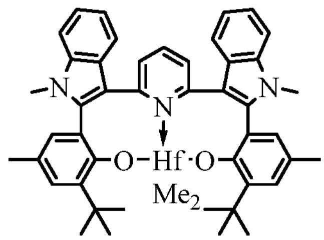

Complex 38

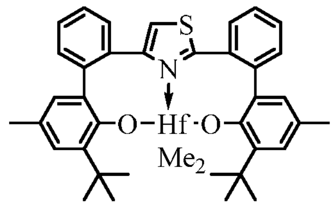

Complex 39

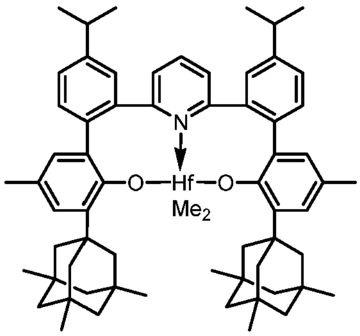

Complex 40

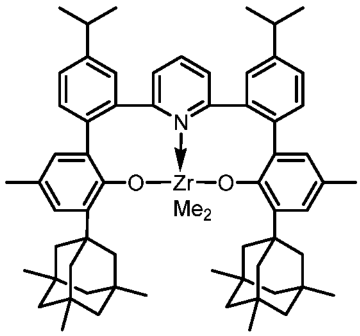

Complex 41

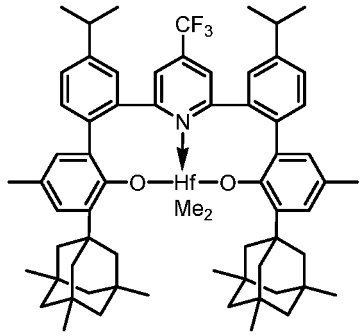

Complex 42

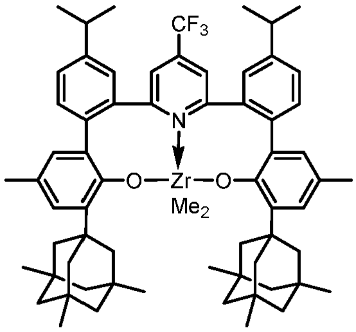

Complex 43

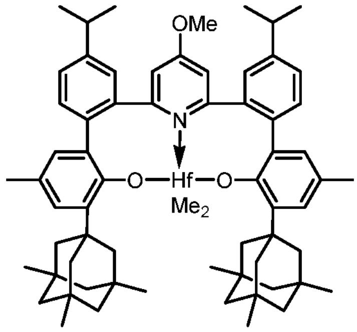

Complex 44

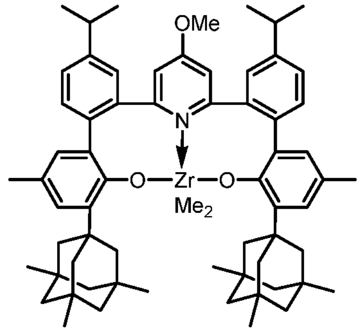

Complex 45

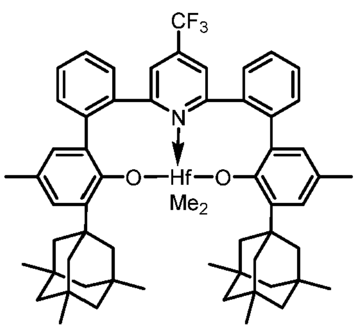

Complex 46

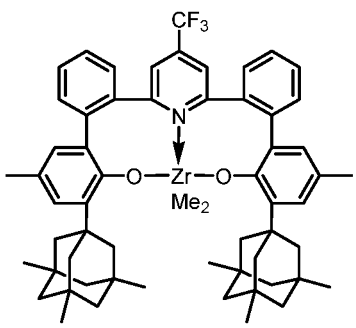

Complex 47

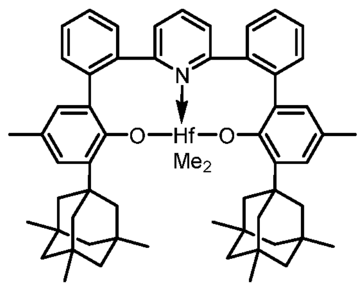

Complex 48

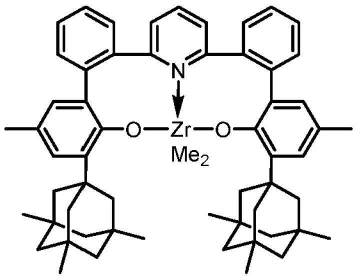

Complex 49

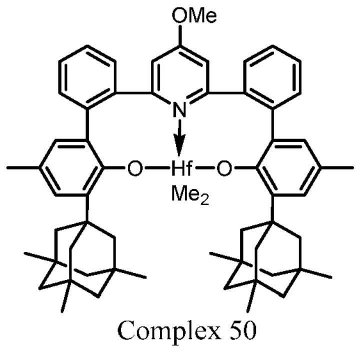

Complex 50

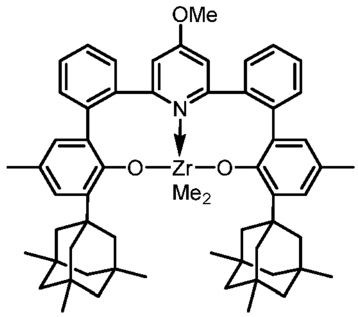

Complex 51

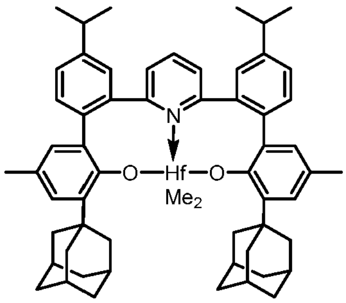

Complex 52

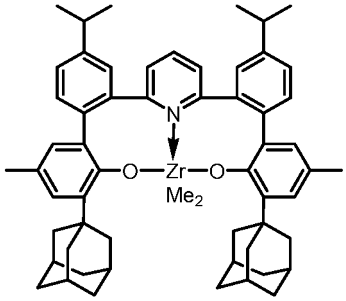

Complex 53

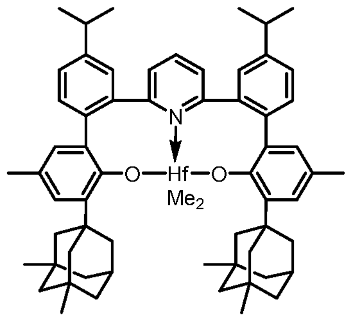

Complex 54

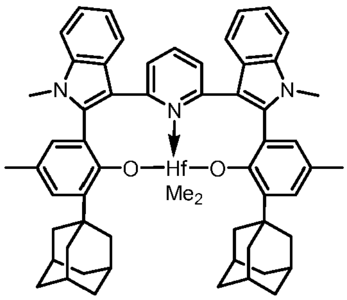

Complex 56

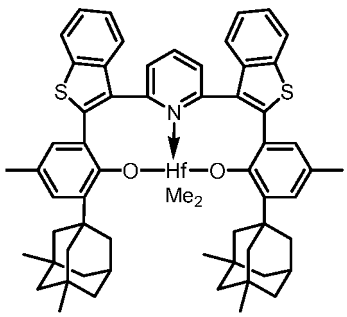

Complex 57

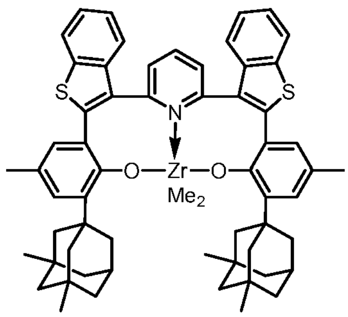

Complex 58

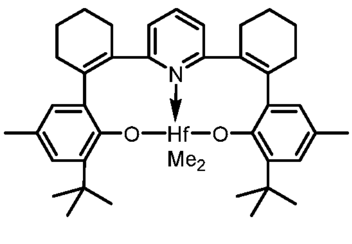

Complex 59

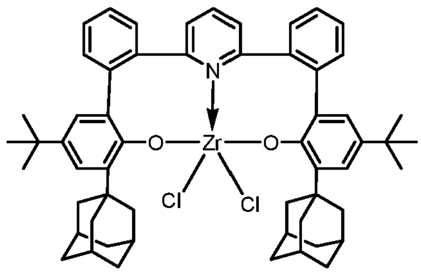

Complex 60

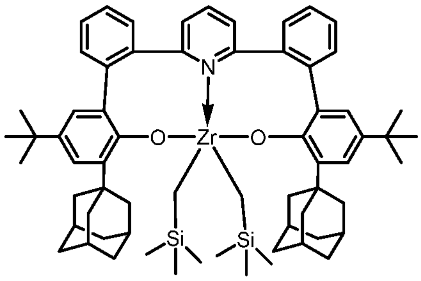

Complex 62

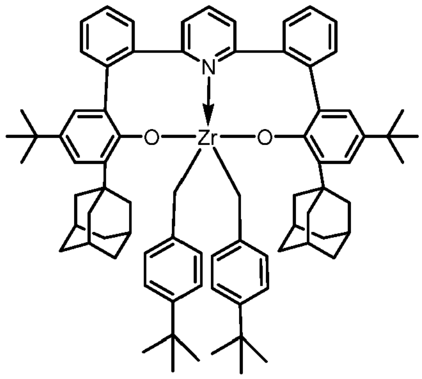

Complex 63

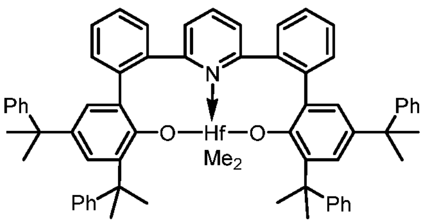

Complex 64

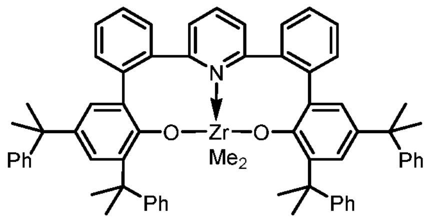

Complex 65

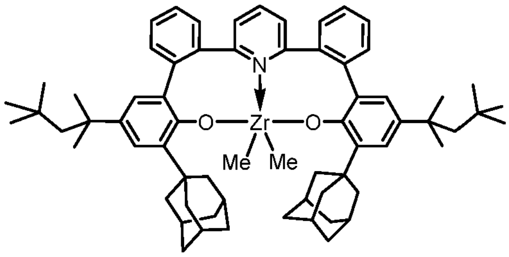

Complex 66

In some embodiments, two or more different catalyst compounds are present in the catalyst system used herein. In some embodiments, two or more different catalyst compounds are present in the reaction zone where the process(es) described herein occur. It is preferable to use the same activator for the transition metal compounds, however, two different activators, such as a non-coordinating anion activator and an alumoxane, can be used in combination. If one or more transition metal compounds contain an X group which is not a hydride, hydrocarbyl, or substituted hydrocarbyl, then the alumoxane can be contacted with the transition metal compounds prior to addition of the non-coordinating anion activator.

The two transition metal compounds (pre-catalysts) may be used in any ratio. Preferred molar ratios of (A) transition metal compound to (B) transition metal compound fall within the range of (A:B) 1:1000 to 1000:1, alternatively 1:100 to 500:1, alternatively 1:10 to 200:1, alternatively 1:1 to 100:1, and alternatively 1:1 to 75:1, and alternatively 5:1 to 50:1. The particular ratio chosen will depend on the exact pre-catalysts chosen, the method of activation, and the end product desired. In a particular embodiment, when using the two pre-catalysts, where both are activated with the same activator, useful mole percents, based upon the molecular weight of the pre-catalysts, are 10 to 99.9% A to 0.1 to 90% B, alternatively 25 to 99% A to 0.5 to 50% B, alternatively 50 to 99% A to 1 to 25% B, and alternatively 75 to 99% A to 1 to 10% B.

Methods to Prepare the Catalyst Compounds.

Ligand synthesis

The bis(phenol) ligands may be prepared using the general methods shown in Scheme 1. The formation of the bis(phenol) ligand by the coupling of compound A with compound B (method 1) may be accomplished by known Pd- and Ni-catalyzed couplings, such as Negishi, Suzuki, or Kumada couplings. The formation of the bis(phenol) ligand by the

coupling of compound C with compound D (method 2) may also be accomplished by known Pd- and Ni-catalyzed couplings, such as Negishi, Suzuki, or Kumada couplings. Compound D may be prepared from compound E by reaction of compound E with either an organolithium reagent or magnesium metal, followed by optional reaction with a main-group metal halide (e.g. $ZnCl_2$) or boron-based reagent (e.g. $B(O^iPr)_3$, $^iPrOB(pin)$). Compound E may be prepared in a non-catalyzed reaction from by the reaction of an aryllithium or aryl Grignard reagent (compound F) with a dihalogenated arene (compound G), such as 1-bromo-2-chlorobenzene. Compound E may also be prepared in a Pd- or Ni-catalyzed reaction by reaction of an arylzinc or aryl-boron reagent (compound F) with a dihalogenated arene (compound G).

**Scheme 1.**

**(method 1)**

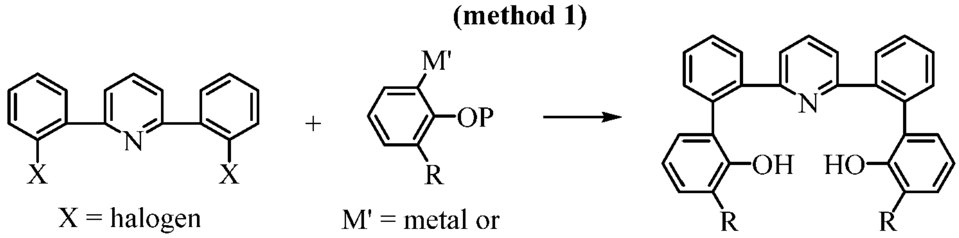

X = halogen

compound A

M' = metal or metalloid

P = protecting group

compound B

bis(phenol) ligand

**(method 2)**

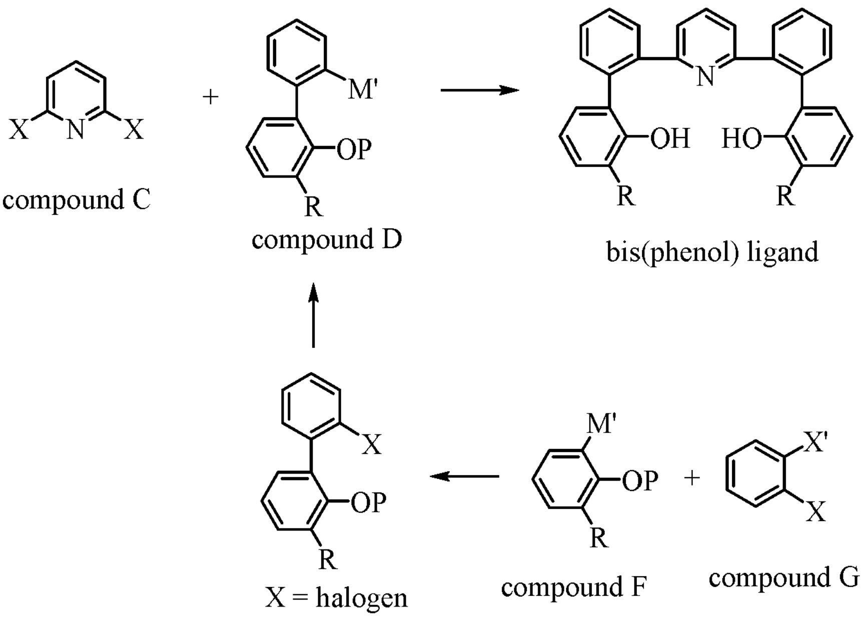

compound C

compound D

bis(phenol) ligand

X = halogen

compound E

compound F

compound G

where M' is a group 1, 2, 12, or 13 element or substituted element such as Li, MgCl, MgBr, ZnCl, $B(OH)_2$, B(pinacolate), P is a protective group such as methoxymethyl (MOM), tetrahydropyranyl (THP), t-butyl, allyl, ethoxymethyl, trialkylsilyl, t-butyldimethylsilyl, or benzyl, R is a $C_1$-$C_{40}$ alkyl, substituted alkyl, aryl, tertiary alkyl, cyclic tertiary alkyl, adamantanyl, or substituted adamantanyl and each X' and X is halogen, such as Cl, Br, F or I.

It is preferred that the bis(phenol) ligand and intermediates used for the preparation of the bis(phenol) ligand are prepared and purified without the use of column chromatography. This may be accomplished by a variety of methods that include distillation, precipitation and washing, formation of insoluble salts (such as by reaction of a pyridine derivative with an organic acid), and liquid-liquid extraction. Preferred methods include those described in Practical Process Research and Development - A Guide for Organic Chemists by Neal C. Anderson (ISBN: 1493300125X).

Synthesis of carbene bis(phenol) ligands

The general synthetic method to produce carbene bis(phenol) ligands is shown in Scheme 2. A substituted phenol can be ortho-brominated then protected by a known phenol protecting group, such as methoxymethylether (MOM), tetrahydropyranylether (THP), t-butyldimethylsilyl (TBDMS), benzyl (Bn), etc. The bromide is then converted to a boronic ester (compound I) or boronic acid which can be used in a Suzuki coupling with bromoaniline. The biphenylaniline (compound J) can be bridged by reaction with dibromoethane or condensation with oxalaldehyde, then deprotected (compound K). Reaction with triethyl orthoformate forms an iminium salt that is deprotonated to a carbene.

**Scheme 2.**

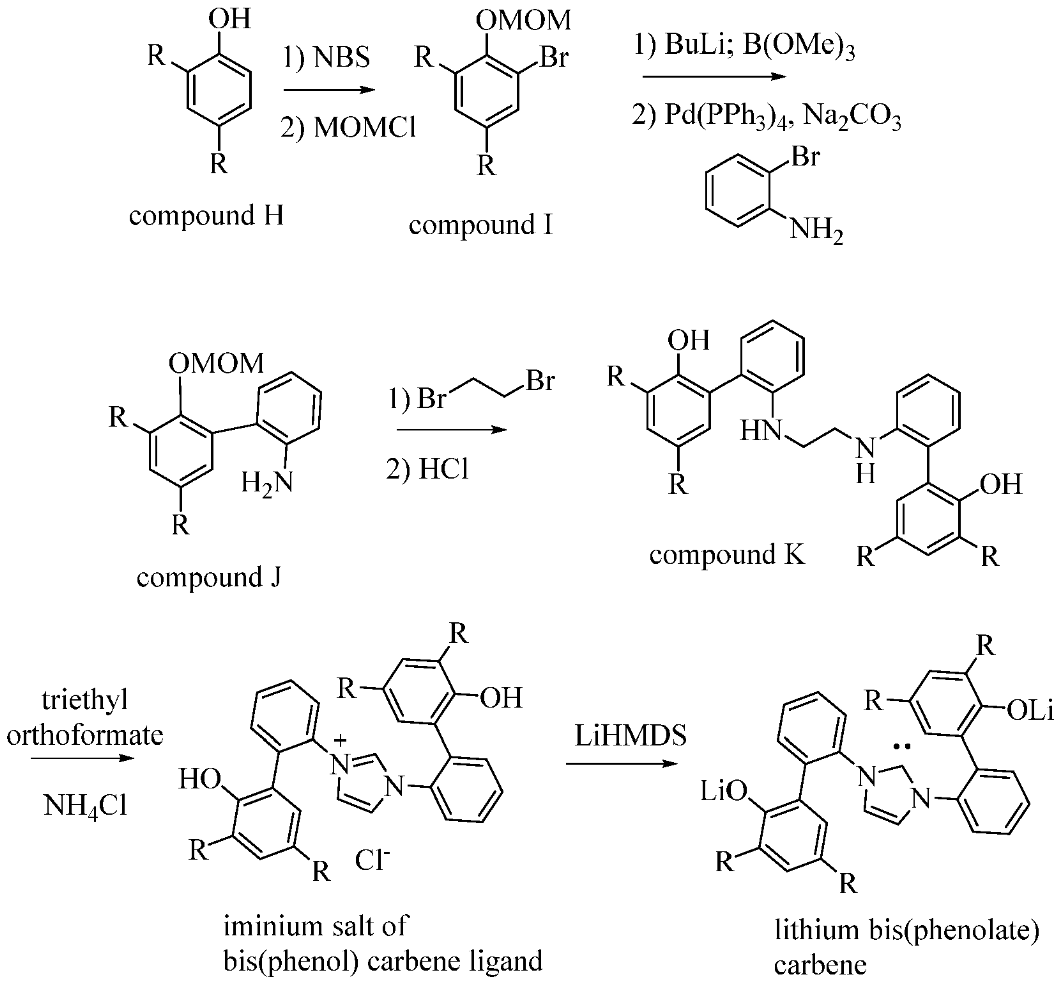

compound H
compound I
compound J
compound K
iminium salt of bis(phenol) carbene ligand
lithium bis(phenolate) carbene

To the substituted phenol (compound H) dissolved in methylene chloride, is added an equivalent of N-bromosuccinimide and 0.1 equivalent of diisopropylamine. After stirring at ambient temperature until completion, the reaction is quenched with a 10% solution of HCl. The organic portion is washed with brine, dried over magnesium sulfate, filtered, and concentrated under reduced pressure to give a bromophenol, typically as a solid. The substituted bromophenol, methoxymethylchloride, and potassium carbonate are dissolved in dry acetone and stirred at ambient temperature until completion of the reaction. The solution is filtered and the filtrate concentrated to give protected phenol (compound I). Alternatively, the substituted bromophenol and an equivalent of dihydropyran is dissolved in methylene chloride and cooled to 0°C. A catalytic amount of para-toluenesulfonic acid is added and the reaction stirred for 10 minutes, then quenched with trimethylamine. The mixture is washed with water and brine, then dried over magnesium sulfate, filtered, and concentrated under reduced pressure to give a tetrahydropyran-protected phenol.

Aryl bromide (compound I) is dissolved in THF and cooled to -78°C. n-Butyllithium is added slowly, followed by trimethoxy borate. The reaction is allowed to stir at ambient temperature until completion. The solvent is removed and the solid boronic ester washed with pentane. A boronic acid can be made from the boronic ester by treatment with HCl. The boronic ester or acid is dissolved in toluene with an equivalent of ortho-bromoaniline and a catalytic amount of palladium tetrakistriphenylphosphine. An aqueous solution of sodium carbonated is added and the reaction heated at reflux

overnight. Upon cooling, the layers are separated and the aqueous layer extracted with ethyl acetate. The combined organic portions are washed with brine, dried (MgSO4), filtered, and concentrated under reduced pressure. Column chromatography is typically used to purify the coupled product (compound J).

The aniline (compound J) and dibromoethane (0.5 equiv.) are dissolved in acetonitrile and heated at 60°C overnight. The reaction is filtered and concentrated to give an ethylene bridged dianiline. The protected phenol is deprotected by reaction with HCl to give a bridged bisamino(biphenyl)ol (compound K).

The diamine (compound K) is dissolved in triethylorthoformate. Ammonium chloride is added and the reaction heated at reflux overnight. A precipitate is formed which is collected by filtration and washed with ether to give the iminium salt. The iminium chloride is suspended in THF and treated with lithium or sodium hexamethyldisilylamide. Upon completion, the reaction is filtered and the filtrate concentrated to give the carbene ligand.

Preparation of bis(phenolate) complexes

Transition metal or Lanthanide metal bis(phenolate) complexes are used as catalyst components for olefin polymerization in the present invention. The terms "catalyst" and "catalyst complex" are used interchangeably. The preparation of transition metal or Lanthanide metal bis(phenolate) complexes may be accomplished by reaction of the bis(phenol) ligand with a metal reactant containing anionic basic leaving groups. Typical anionic basic leaving groups include dialkylamido, benzyl, phenyl, hydrido, and methyl. In this reaction, the role of the basic leaving group is to deprotonate the bis(phenol) ligand. Suitable metal reactants for this type of reaction include, but are not limited to, $HfBn_4$ (Bn = $CH_2Ph$), $ZrBn_4$, $TiBn_4$, $ZrBn_2Cl_2(OEt_2)$, $HfBn_2Cl_2(OEt_2)_2$, $Zr(NMe_2)_2Cl_2$(dimethoxyethane), $Zr(NEt_2)_2Cl_2$(dimethoxyethane), $Hf(NEt_2)_2Cl_2$(dimethoxyethane), $Hf(NMe_2)_2Cl_2$(dimethoxyethane), $Hf(NMe_2)_4$, $Zr(NMe_2)_4$, and $Hf(NEt_2)_4$. Suitable metal reagents also include $ZrMe_4$, $HfMe_4$, and other group 4 alkyls that may be formed *in situ* and used without isolation. Preparation of transition metal bis(phenolate) complexes is typically performed in etherial or hydrocarbon solvents or solvent mixtures at temperatures typically ranging from -80°C to 120°C.

A second method for the preparation of transition metal or Lanthanide bis(phenolate) complexes is by reaction of the bis(phenol) ligand with an alkali metal or alkaline earth metal base (e.g., Na, BuLi, $^iPrMgBr$) to generate deprotonated ligand, followed by reaction with a metal halide (e.g., $HfCl_4$, $ZrCl_4$) to form a bis(phenolate) complex. Bis(phenolate) metal complexes that contain metal-halide, alkoxide, or amido leaving groups may be alkylated by reaction with organolithium, Grignard, and organoaluminum reagents. In the alkylation reaction the alkyl groups are transferred to the bis(phenolate) metal center and the leaving groups are removed. Reagents typically used for the alkylation reaction include, but are not limited to, MeLi, MeMgBr, $AlMe_3$, $Al(^iBu)_3$, $AlOct_3$, and $PhCH_2MgCl$. Typically, 2 to 20 molar equivalents of the alkylating reagent are added to the bis(phenolate) complex. The alkylations are generally performed in ethereal or hydrocarbon solvents or solvent mixtures at temperatures typically ranging from -80°C to 120°C.

Activators

The terms "cocatalyst" and "activator" are used herein interchangeably.

The catalyst systems described herein typically comprises a catalyst complex, such as the transition metal or Lanthanide bis(phenolate) complexes described above, and an activator such as alumoxane or a non-coordinating anion. These catalyst systems may be formed by combining the catalyst components described herein with activators in any manner known from the literature. The catalyst systems may also be added to or generated in solution polymerization or bulk polymerization (in the monomer). Catalyst systems of the present disclosure may have one or more activators and one, two or more catalyst components. Activators are defined to be any compound which can activate any one of the catalyst compounds described above by converting the neutral metal compound to a catalytically active metal compound cation. Non-limiting activators, for example, include alumoxanes, ionizing activators, which may be neutral or ionic, and conventional-type cocatalysts. Preferred activators typically include alumoxane compounds, modified alumoxane compounds, and ionizing anion precursor compounds that abstract a reactive metal ligand making the metal compound cationic and providing a charge-balancing non-coordinating or weakly coordinating anion, e.g. a non-coordinating anion.

Alumoxane Activators

Alumoxane activators are utilized as activators in the catalyst systems described herein. Alumoxanes are generally oligomeric compounds containing $-Al(R^{99})-O-$ sub-units, where $R^{99}$ is an alkyl group. Examples of alumoxanes include methylalumoxane (MAO), modified methylalumoxane (MMAO), ethylalumoxane and isobutylalumoxane. Alkylalumoxanes and modified alkylalumoxanes are suitable as catalyst activators, particularly when the abstractable ligand is an alkyl, halide, alkoxide or amide. Mixtures of different alumoxanes and modified alumoxanes may also be used. It may be preferable to use a visually clear methylalumoxane. A cloudy or gelled alumoxane can be filtered to produce a clear solution or clear alumoxane can be decanted from the cloudy solution. A useful alumoxane is a modified methyl alumoxane

(MMAO) cocatalyst type 3A (commercially available from Akzo Chemicals, Inc. under the trade name Modified Methylalumoxane type 3A, covered under patent number US Patent No. 5,041,584). Another useful alumoxane is solid polymethylaluminoxane as described in US 9,340,630; US 8,404,880; and US 8,975,209.

When the activator is an alumoxane (modified or unmodified), typically the maximum amount of activator is at up to a 5000-fold molar excess Al/M over the catalyst compound (per metal catalytic site). The minimum activator-to-catalyst-compound is a 1:1 molar ratio. Alternate preferred ranges include from 1:1 to 500: 1, alternately from 1:1 to 200: 1, alternately from 1:1 to 100:1, or alternately from 1:1 to 50:1.

In an alternate embodiment, little or no alumoxane is used in the polymerization processes described herein. Preferably, alumoxane is present at zero mole %, alternately the alumoxane is present at a molar ratio of aluminum to catalyst compound transition metal less than 500:1, preferably less than 300: 1, preferably less than 100:1, preferably less than 1:1.

Ionizing/Non Coordinating Anion Activators

The term "non-coordinating anion" (NCA) means an anion which either does not coordinate to a cation or which is only weakly coordinated to a cation thereby remaining sufficiently labile to be displaced by a neutral Lewis base. Further, the anion will not transfer an anionic substituent or fragment to the cation so as to cause it to form a neutral transition metal compound and a neutral by-product from the anion. Non-coordinating anions useful in accordance with this invention are those that are compatible, stabilize the transition metal cation in the sense of balancing its ionic charge at +1, and yet retain sufficient lability to permit displacement during polymerization. The term NCA is also defined to include multicomponent NCA-containing activators, such as N,N-dimethylanilinium tetrakis(pentafluorophenyl)borate, that contain an acidic cationic group and the non-coordinating anion. The term NCA is also defined to include neutral Lewis acids, such as tris(pentafluorophenyl)boron, that can react with a catalyst to form an activated species by abstraction of an anionic group. Any metal or metalloid that can form a compatible, weakly coordinating complex may be used or contained in the non-coordinating anion. Suitable metals include, but are not limited to, aluminum, gold, and platinum. Suitable metalloids include, but are not limited to, boron, aluminum, phosphorus, and silicon.

It is within the scope of this invention to use an ionizing activator, neutral or ionic. It is also within the scope of this invention to use neutral or ionic activators alone or in combination with alumoxane or modified alumoxane activators.

In embodiments of the invention, the activator is represented by the Formula (III):

$$(Z)_d^{+} (A^{d-}) \quad \textbf{(III)}$$

wherein Z is (L-H) or a reducible Lewis Acid, L is an neutral Lewis base; H is hydrogen; $(L-H)^+$ is a Bronsted acid; $A^{d-}$ is a non-coordinating anion having the charge d-; and d is an integer from 1 to 3 (such as 1, 2 or 3), preferably Z is $(Ar_3C^+)$, where Ar is aryl or aryl substituted with a heteroatom, a $C_1$ to $C_{40}$ hydrocarbyl, or a substituted $C_1$ to $C_{40}$ hydrocarbyl. The anion component $A^{d-}$ includes those having the formula $[M^{k+}Q_n]^{d-}$ wherein k is 1, 2, or 3; n is 1, 2, 3, 4, 5, or 6 (preferably 1, 2, 3, or 4); n - k = d; M is an element selected from Group 13 of the Periodic Table of the Elements, preferably boron or aluminum, and Q is independently a hydride, bridged or unbridged dialkylamido, halide, alkoxide, aryloxide, hydrocarbyl, substituted hydrocarbyl, halocarbyl, substituted halocarbyl, and halosubstituted-hydrocarbyl radicals, said Q having up to 40 carbon atoms (optionally with the proviso that in not more than 1 occurrence is Q a halide). Preferably, each Q is a fluorinated hydrocarbyl group having 1 to 40 (such as 1 to 20) carbon atoms, more preferably each Q is a fluorinated aryl group, such as a perfluorinated aryl group and most preferably each Q is a pentafluoro aryl group or perfluoronaphthalen-2-yl group. Examples of suitable $A^{d-}$ also include diboron compounds as disclosed in US Patent No. 5,447,895.

When Z is the activating cation (L-H), it can be a Bronsted acid, capable of donating a proton to the transition metal catalytic precursor resulting in a transition metal cation, including ammoniums, oxoniums, phosphoniums, sulfoniums, and mixtures thereof, such as ammoniums of methylamine, aniline, dimethylamine, diethylamine, N-methylaniline, N-methyl-4-nonadecyl-N-octadecylaniline, N-methyl-4-octadecyl-N-octadecylaniline, diphenylamine, trimethylamine, triethylamine, N,N-dimethylaniline, methyldiphenylamine, pyridine, p-bromo N,N-dimethylaniline, p-nitro-N,N-dimethylaniline, dioctadecylmethylamine, phosphoniums from triethylphosphine, triphenylphosphine, and diphenylphosphine, oxoniums from ethers such as dimethyl ether, diethyl ether, tetrahydrofuran and dioxane, sulfoniums from thioethers, such as diethyl thioethers, tetrahydrothiophene, and mixtures thereof.

In particularly useful embodiments of the invention, the activator is soluble in non-aromatic-hydrocarbon solvents, such as aliphatic solvents.

In one or more embodiments, a 20 wt% mixture of the activator compound in n-hexane, isohexane, cyclohexane, methylcyclohexane, or a combination thereof, forms a clear homogeneous solution at 25°C, preferably a 30 wt% mixture of the activator compound in n-hexane, isohexane, cyclohexane, methylcyclohexane, or a combination thereof, forms a clear homogeneous solution at 25°C.

In embodiments of the invention, the activators described herein have a solubility of more than 10 mM (or more than 20 mM, or more than 50 mM) at 25°C (stirred 2 hours) in methylcyclohexane.

In embodiments of the invention, the activators described herein have a solubility of more than 1 mM (or more than 10 mM, or more than 20 mM) at 25°C (stirred 2 hours) in isohexane.

In embodiments of the invention, the activators described herein have a solubility of more than 10 mM (or more than 20 mM, or more than 50 mM) at 25°C (stirred 2 hours) in methylcyclohexane and a solubility of more than 1 mM (or more than 10 mM, or more than 20 mM) at 25°C (stirred 2 hours) in isohexane.

In a preferred embodiment, the activator is a non-aromatic-hydrocarbon soluble activator compound.

Non-aromatic-hydrocarbon soluble activator compounds useful herein include those represented by the Formula **(V):**

$$[R^{1'}R^{2'}R^{3'}EH]_{d+}[Mt^{k+}Q_n]^{d-} \qquad \textbf{(V)}$$

wherein:

- *E* is nitrogen or phosphorous;
- *d* is 1, 2 or 3; *k* is 1, 2, or 3; n is 1, 2, 3, 4, 5, or 6; $n - k = d$ (preferably *d* is 1, 2 or *3; k* is 3; n is 4, 5, or 6);
- $R^{1'}$, $R^{2'}$, and $R^{3'}$ are independently a $C_1$ to $C_{50}$ hydrocarbyl group optionally substituted with one or more alkoxy groups, silyl groups, a halogen atoms, or halogen containing groups,
- wherein $R^{1'}$, $R^{2'}$, and $R^{3'}$ together comprise 15 or more carbon atoms;
- *Mt* is an element selected from group 13 of the Periodic Table of the Elements, such as B or Al; and
- each Q is independently a hydride, bridged or unbridged dialkylamido, halide, alkoxide, aryloxide, hydrocarbyl, substituted hydrocarbyl, halocarbyl, substituted halocarbyl, or halosubstituted-hydrocarbyl radical.

Non-aromatic-hydrocarbon soluble activator compounds useful herein include those represented by the Formula (**VI**):

$$[R^{1'}R^{2'}R^{3'}EH]^+[BR^{4'}R^{5'}R^{6'}R^{7'}]^- \qquad \textbf{(VI)}$$

wherein: *E* is nitrogen or phosphorous; $R^{1'}$ is a methyl group; $R^{2'}$ and $R^{3'}$ are independently is $C_4$-$C_{50}$ hydrocarbyl group optionally substituted with one or more alkoxy groups, silyl groups, a halogen atoms, or halogen containing groups wherein $R^{2'}$ and $R^{3'}$ together comprise 14 or more carbon atoms; *B* is boron; and $R^{4'}$, $R^{5'}$, $R^{6'}$, and $R^{7'}$ are independently hydride, bridged or unbridged dialkylamido, halide, alkoxide, aryloxide, hydrocarbyl, substituted hydrocarbyl, halocarbyl, substituted halocarbyl, or halosubstituted-hydrocarbyl radical.

Non-aromatic-hydrocarbon soluble activator compounds useful herein include those represented by the Formula **(VII)** or Formula **(VIII):**

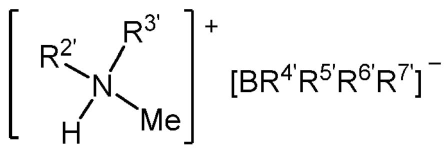

**(VII)**

and

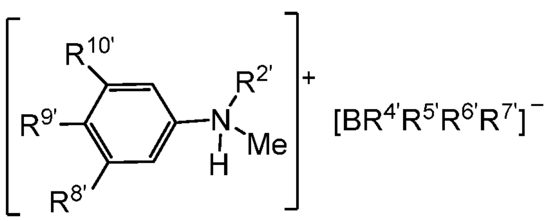

**(VIII)**

wherein:

- *N* is nitrogen;
- $R^{2'}$ and $R^{3'}$ are independently is $C_6$-$C_{40}$ hydrocarbyl group optionally substituted with one or more alkoxy groups, silyl groups, a halogen atoms, or halogen containing groups wherein $R^{2'}$ and $R^{3'}$ (if present) together comprise 14 or more

carbon atoms;
$R^{8'}$, $R^{9'}$, and $R^{10'}$ are independently a $C_4$-$C_{30}$ hydrocarbyl or substituted $C_4$-$C_{30}$ hydrocarbyl group;
B is boron;
and $R^{4'}$, $R^{5'}$, $R^{6'}$, and $R^{7'}$ are independently hydride, bridged or unbridged dialkylamido, halide, alkoxide, aryloxide, hydrocarbyl, substituted hydrocarbyl, halocarbyl, substituted halocarbyl, or halosubstituted-hydrocarbyl radical.

Optionally, in any of Formulas **(V), (VI), (VII)**, or (**VIII**) herein, $R^{4'}$, $R^{5'}$, $R^{6'}$, and $R^{7'}$ are pentafluorophenyl.

Optionally, in any of Formulas **(V),** (**VI**), (**VII**), or (**VIII**) herein, $R^{4'}$, $R^{5'}$, $R^{6'}$, and $R^{7'}$ are pentafluoronaphthalen-2-yl.

Optionally, in any embodiment of Formula (**VIII**) herein, $R^{8'}$ and $R^{10'}$ are hydrogen atoms and $R^{9'}$ is a $C_4$-$C_{30}$ hydrocarbyl group which is optionally substituted with one or more alkoxy groups, silyl groups, a halogen atoms, or halogen containing groups.

Optionally, in any embodiment of Formula (**VIII**) herein, $R^{9'}$ is a $C_8$-$C_{22}$ hydrocarbyl group which is optionally substituted with one or more alkoxy groups, silyl groups, a halogen atoms, or halogen containing groups.

Optionally, in any embodiment of Formula (**VII**) or (**VIII**) herein, $R^{2'}$ and $R^{3'}$ are independently a $C_{12}$-$C_{22}$ hydrocarbyl group.

Optionally, $R^{1'}$, $R^{2'}$ and $R^{3'}$ together comprise 15 or more carbon atoms (such as 18 or more carbon atoms, such as 20 or more carbon atoms, such as 22 or more carbon atoms, such as 25 or more carbon atoms, such as 30 or more carbon atoms, such as 35 or more carbon atoms, such as 38 or more carbon atoms, such as 40 or more carbon atoms, such as 15 to 100 carbon atoms, such as 25 to 75 carbon atoms).

Optionally, $R^{2'}$ and $R^{3'}$ together comprise 15 or more carbon atoms (such as 18 or more carbon atoms, such as 20 or more carbon atoms, such as 22 or more carbon atoms, such as 25 or more carbon atoms, such as 30 or more carbon atoms, such as 35 or more carbon atoms, such as 38 or more carbon atoms, such as 40 or more carbon atoms, such as 15 to 100 carbon atoms, such as 25 to 75 carbon atoms).

Optionally, $R^{8'}$, $R^{9''}$, and $R^{10'}$ together comprise 15 or more carbon atoms (such as 18 or more carbon atoms, such as 20 or more carbon atoms, such as 22 or more carbon atoms, such as 25 or more carbon atoms, such as 30 or more carbon atoms, such as 35 or more carbon atoms, such as 38 or more carbon atoms, such as 40 or more carbon atoms, such as 15 to 100 carbon atoms, such as 25 to 75 carbon atoms).

Optionally, when *Q* is a fluorophenyl group, then $R^{2'}$ is not a $C_1$-$C_{40}$ linear alkyl group (alternately $R^{2'}$ is not an optionally substituted $C_1$-$C_{40}$ linear alkyl group).

Optionally, each of $R^{4'}$, $R^{5'}$, $R^{6'}$, and $R^{7'}$ is an aryl group (such as phenyl or naphthalen-2-yl), wherein at least one of $R^{4'}$, $R^{5'}$, $R^{6'}$, and $R^{7'}$ is substituted with at least one fluorine atom, preferably each of $R^{4'}$, $R^{5'}$, $R^{6'}$, and $R^{7'}$ is a perfluoroaryl group (such as perfluorophenyl or perfluoronaphthalen-2-yl).

Optionally, each *Q* is an aryl group (such as phenyl or naphthalen-2-yl), wherein at least one *Q* is substituted with at least one fluorine atom, preferably each *Q* is a perfluoroaryl group (such as perfluorophenyl or perfluoronaphthalen-2-yl).

Optionally, $R^{1'}$ is a methyl group; $R^{2'}$ is $C_6$-$C_{50}$ aryl group; and $R^{3'}$ is independently $C_1$-$C_{40}$ linear alkyl or $C_5$-$C_{50}$-aryl group.

Optionally, each of $R^{2'}$ and $R^{3'}$ is independently unsubstituted or substituted with at least one of halide, $C_1$-$C_{33}$ alkyl, $C_5$-$C_{15}$ aryl, $C_6$-$C_{35}$ arylalkyl, $C_6$-$C_{35}$ alkylaryl, wherein $R^2$, and $R^3$ together comprise 20 or more carbon atoms.

Optionally, each *Q* is independently a hydride, bridged or unbridged dialkylamido, halide, alkoxide, aryloxide, hydrocarbyl, substituted hydrocarbyl, halocarbyl, substituted halocarbyl, or halosubstituted-hydrocarbyl radical, provided that when Q is a fluorophenyl group, then $R^{2'}$ is not a $C_1$-$C_{40}$ linear alkyl group, preferably $R^{2'}$ is not an optionally substituted $C_1$-$C_{40}$ linear alkyl group (alternately when *Q* is a substituted phenyl group, then $R^{2'}$ is not a $C_1$-$C_{40}$ linear alkyl group, preferably $R^{2'}$ is not an optionally substituted $C_1$-$C_{40}$ linear alkyl group). Optionally, when *Q* is a fluorophenyl group (alternately when *Q* is a substituted phenyl group), then $R^{2'}$ is a meta- and/or para-substituted phenyl group, where the meta and para substituents are, independently, an optionally substituted $C_1$ to $C_{40}$ hydrocarbyl group (such as a $C_6$ to $C_{40}$ aryl group or linear alkyl group, a $C_{12}$ to $C_{30}$ aryl group or linear alkyl group, or a $C_{10}$ to $C_{20}$ aryl group or linear alkyl group), an optionally substituted alkoxy group, or an optionally substituted silyl group. Optionally, each Q is a fluorinated hydrocarbyl group having 1 to 30 carbon atoms, more preferably each *Q* is a fluorinated aryl (such as phenyl or naphthalen-2-yl) group, and most preferably each *Q* is a perflourinated aryl (such as phenyl or naphthalen-2-yl) group. Examples of suitable $[Mt^{k+}Q_n]^{d-}$ also include diboron compounds as disclosed in US Patent No. 5,447,895. Optionally, at least one *Q* is not substituted phenyl. Optionally all *Q* are not substituted phenyl. Optionally at least one *Q* is not perfluorophenyl. Optionally all *Q* are not perfluorophenyl.

In some embodiments of the invention, $R^{1'}$ is not methyl, $R^{2'}$ is not $C_{18}$ alkyl and $R^{3'}$ is not $C_{18}$ alkyl, alternately $R^{1'}$ is not methyl, $R^{2'}$ is not $C_{18}$ alkyl and $R^{3'}$ is not $C_{18}$ alkyl and at least one *Q* is not substituted phenyl, optionally all *Q* are not substituted phenyl.

Useful cation components in Formulas **(III)** and **(V)** to **(VIII)** include those represented by the formula:

| | | | | | |
|---|---|---|---|---|---|
| **10** | 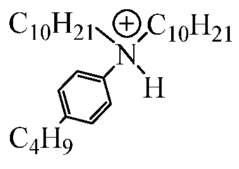 | **11** | 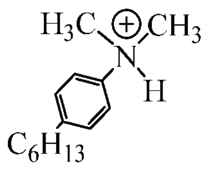 | **12** | 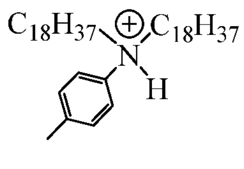 |
| **13** | 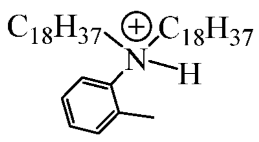 | **14** | 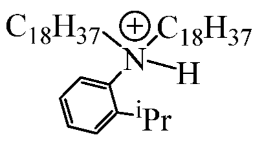 | **15** | 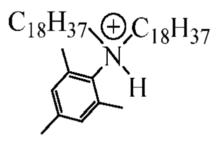 |
| **16** | 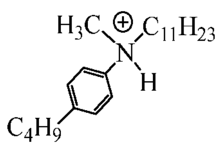 | **17** | 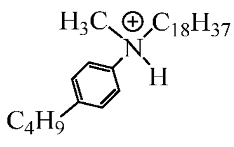 | **18** | 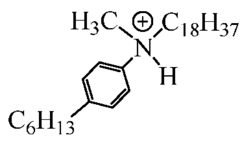 |
| **19** | 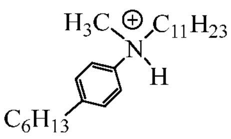 | **20** | 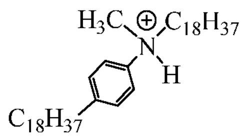 | **21** | 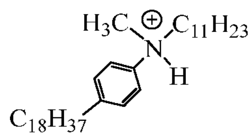 |
| **22** | 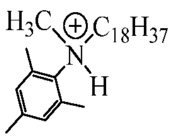 | **23** | 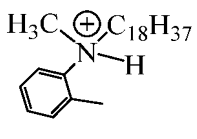 | **24** | 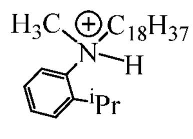 |
| **25** | 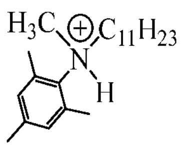 | **26** | 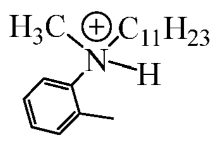 | **27** | 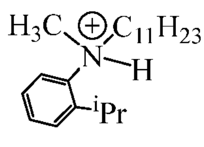 |
| **29** | 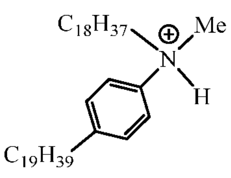 | **28** | 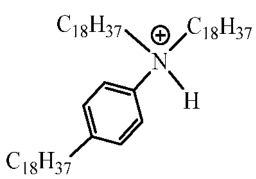 | **30** | 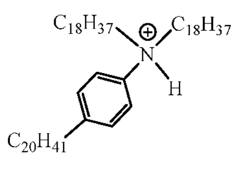 |
| **31** | 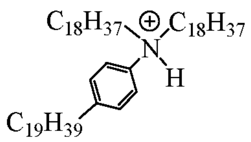 | **32** | 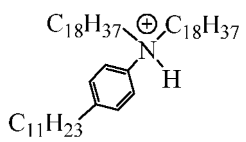 | **33** | 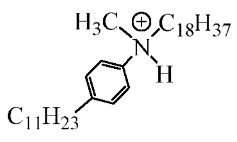 |
| **34** | 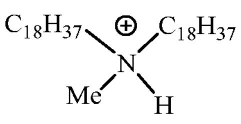 | **35** | 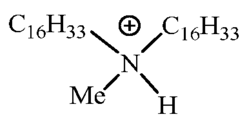 | **36** | 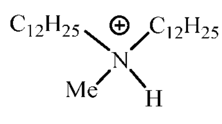 |

Useful cation components in Formulas **(III)** and **(V)** to **(VIII)** include those represented by the formulas:

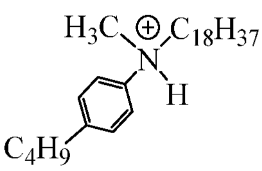 , 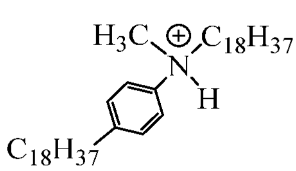 , 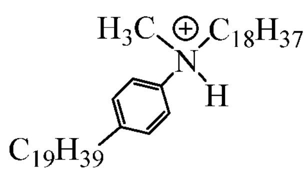

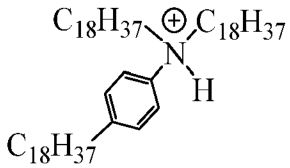 and 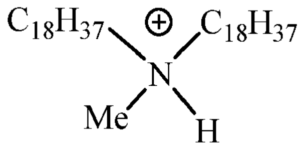 .

The anion component of the activators described herein includes those represented by the formula $[Mt^{k+}Q_n]^-$ wherein *k* is 1, 2, or 3; n is 1, 2, 3, 4, 5, or 6 (preferably 1, 2, 3, or 4), (preferably *k* is 3; n is 4, 5, or 6, preferably when *M* is *B*, n is 4); *Mt* is an element selected from Group 13 of the Periodic Table of the Elements, preferably boron or aluminum, and *Q* is independently a hydride, bridged or unbridged dialkylamido, halide, alkoxide, aryloxide, hydrocarbyl, substituted hydrocarbyl, halocarbyl, substituted halocarbyl, and halosubstituted-hydrocarbyl radicals, said *Q* having up to 20 carbon atoms with the proviso that in not more than 1 occurrence is *Q* a halide. Preferably, each *Q* is a fluorinated hydrocarbyl group, optionally having 1 to 20 carbon atoms, more preferably each *Q* is a fluorinated aryl group, and most preferably each *Q* is a perfluorinated aryl group. Preferably at least one *Q* is not substituted phenyl, such as perfluorophenyl, preferably all *Q* are not substituted phenyl, such as perfluorophenyl.

In one embodiment, the borate activator comprises tetrakis(heptafluoronaphth-2-yl)borate.

In one embodiment, the borate activator comprises tetrakis(pentafluorophenyl)borate.

Anions for use in the non-coordinating anion activators described herein also include those represented by Formula 7, below:

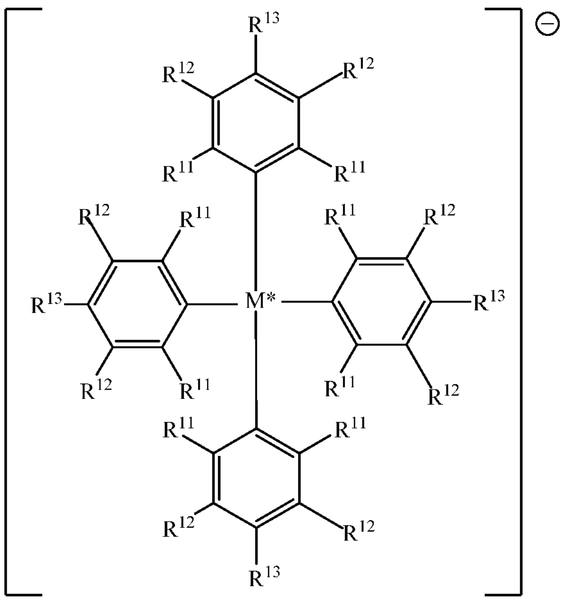

Formula 7

wherein:

M* is a group 13 atom, preferably B or Al, preferably B;

each $R^{11}$ is, independently, a halide, preferably a fluoride;

each $R^{12}$ is, independently, a halide, a $C_6$ to $C_{20}$ substituted aromatic hydrocarbyl group or a siloxy group of the formula -O-Si-$R^a$, where $R^a$ is a $C_1$ to $C_{20}$ hydrocarbyl or hydrocarbylsilyl group, preferably $R^{12}$ is a fluoride or a perfluorinated phenyl group;

each $R^{13}$ is a halide, a $C_6$ to $C_{20}$ substituted aromatic hydrocarbyl group or a siloxy group of the formula -O-Si-$R_a$, where $R^a$ is a $C_1$ to $C_{20}$ hydrocarbyl or hydrocarbylsilyl group, preferably $R^{13}$ is a fluoride or a $C_6$ perfluorinated aromatic hydrocarbyl group;

wherein $R^{12}$ and $R^{13}$ can form one or more saturated or unsaturated, substituted or unsubstituted rings, preferably $R^{12}$ and $R^{13}$ form a perfluorinated phenyl ring. Preferably the anion has a molecular weight of greater than 700 g/mol, and, preferably, at least three of the substituents on the M* atom each have a molecular volume of greater than 180 cubic Å.

"Molecular volume" is used herein as an approximation of spatial steric bulk of an activator molecule in solution. Comparison of substituents with differing molecular volumes allows the substituent with the smaller molecular volume to

be considered "less bulky" in comparison to the substituent with the larger molecular volume. Conversely, a substituent with a larger molecular volume may be considered "more bulky" than a substituent with a smaller molecular volume.

Molecular volume may be calculated as reported in "A Simple "Back of the Envelope" Method for Estimating the Densities and Molecular Volumes of Liquids and Solids," Journal of Chemical Education, Vol. 71(11), Nov. 1994, pp. 962-964. Molecular volume (MV), in units of cubic Å, is calculated using the formula: $MV = 8.3V_s$, where $V_s$ is the scaled volume. $V_s$ is the sum of the relative volumes of the constituent atoms, and is calculated from the molecular formula of the substituent using Table A below of relative volumes. For fused rings, the $V_s$ is decreased by 7.5% per fused ring. The Calculated Total MV of the anion is the sum of the MV per substituent, for example, the MV of perfluorophenyl is 183 $Å^3$, and the Calculated Total MV for tetrakis(perfluorophenyl)borate is four times 183 $Å^3$, or 732 $Å^3$.

**Table A**

| Element | Relative Volume |
|---|---|
| H | 1 |
| $1^{st}$ short period, Li to F | 2 |
| $2^{nd}$ short period, Na to Cl | 4 |
| $1^{st}$ long period, K to Br | 5 |
| $2^{nd}$ long period, Rb to I | 7.5 |
| $3^{rd}$ long period, Cs to Bi | 9 |

Exemplary anions useful herein and their respective scaled volumes and molecular volumes are shown in Table B below. The dashed bonds indicate bonding to boron.

**Table B**

| Ion | Structure of Boron Substituents | Molecular Formula of Each Substituent | $V_s$ | MV Per subst. ($Å^3$) | Calculated Total MV ($Å^3$) |
|---|---|---|---|---|---|
| etrakis(perfluorophenyl)borate | 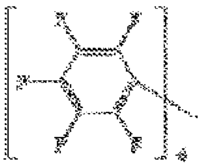 | $C_6F_5$ | 22 | 183 | 732 |
| ris(perfluorophenyl)-(perfluoronaphthalen-2-yl)borate | 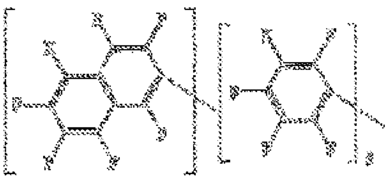 | $C_6F_5$<br>$C_{10}F_7$ | 22<br>34 | 183<br>261 | 810 |
| (perfluorophenyl)tris-(perfluoronaphthalen-2-yl)borate | 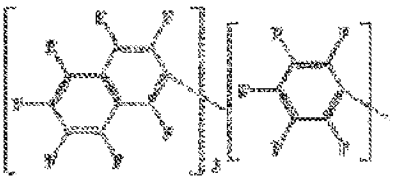 | $C_6F_5$<br>$C_{10}F_7$ | 22<br>34 | 183<br>261 | 966 |
| etrakis(perfluoronaphthalen-2-yl)borate | 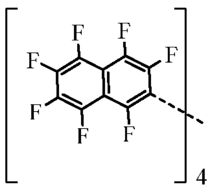 | $C_{10}F_7$ | 34 | 261 | 1044 |

(continued)

| Ion | Structure of Boron Substituents | Molecular Formula of Each Substituent | $V_s$ | MV Per subst. (Å$^3$) | Calculated Total MV (Å$^3$) |
|---|---|---|---|---|---|
| etrakis(perfluorobiphenyl)borate | 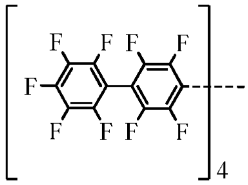 | $C_{12}F_9$ | 42 | 349 | 1396 |
| $[(C_6F_3(C_6F_5)_2)_4B]$ | 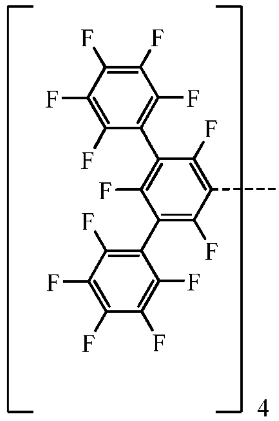 | $C_{18}F_{13}$ | 62 | 515 | 2060. |

The activators may be added to a polymerization in the form of an ion pair using, for example, [M2HTH]+ [NCA]- in which the di(hydrogenated tallow)methylamine ("M2HTH") cation reacts with a basic leaving group on the transition metal complex to form a transition metal complex cation and [NCA]-. Alternatively, the transition metal complex may be reacted with a neutral NCA precursor, such as $B(C_6F_5)_3$, which abstracts an anionic group from the complex to form an activated species. Useful activators include di(hydrogenated tallow)methylammonium[tetrakis(pentafluorophenyl)borate] (i.e., $[M2HTH]B(C_6F_5)_4$) and di(octadecyl)tolylammonium [tetrakis(pentafluorophenyl)borate] (i.e., $[DOdTH]B(C_6F_5)_4$).

Activator compounds that are particularly useful in this invention include one or more of:

*N*,*N*-di(hydrogenated tallow)methylammonium [tetrakis(perfluorophenyl) borate],
*N*-methyl-4-nonadecyl-*N*-octadecylanilinium [tetrakis(perfluorophenyl)borate],
*N*-methyl-4-hexadecyl-*N*-octadecylanilinium [tetrakis(perfluorophenyl)borate],
*N*-methyl-4-tetradecyl-*N*-octadecylanilinium [tetrakis(perfluorophenyl)borate],
*N*-methyl-4-dodecyl-*N*-octadecylanilinium [tetrakis(perfluorophenyl)borate],
*N*-methyl-4-decyl-*N*-octadecylanilinium [tetrakis(perfluorophenyl)borate],
*N*-methyl-4-octyl-*N*-octadecylanilinium [tetrakis(perfluorophenyl)borate],
*N*-methyl-4-hexyl-*N*-octadecylanilinium [tetrakis(perfluorophenyl)borate],
*N*-methyl-4-butyl-*N*-octadecylanilinium [tetrakis(perfluorophenyl)borate],
*N*-methyl-4-octadecyl-*N*-decylanilinium [tetrakis(perfluorophenyl)borate],
*N*-methyl-4-nonadecyl-*N*-dodecylanilinium [tetrakis(perfluorophenyl)borate],
*N*-methyl-4-nonadecyl-*N*-tetradecylanilinium [tetrakis(perfluorophenyl)borate],
*N*-methyl-4-nonadecyl-*N*-hexadecylanilinium [tetrakis(perfluorophenyl)borate],
*N*-ethyl-4-nonadecyl-*N*-octadecylanilinium [tetrakis(perfluorophenyl)borate],
*N*-methyl-*N*,*N*-dioctadecylammonium [tetrakis(perfluorophenyl)borate],
*N*-methyl-*N*,*N*-dihexadecylammonium [tetrakis(perfluorophenyl)borate],
*N*-methyl-*N*,*N*-ditetradecylammonium [tetrakis(perfluorophenyl)borate],
*N*-methyl-*N*,*N*-didodecylammonium [tetrakis(perfluorophenyl)borate],
*N*-methyl-*N*,*N*-didecylammonium [tetrakis(perfluorophenyl)borate],
*N*-methyl-*N*,*N*-dioctylammonium [tetrakis(perfluorophenyl)borate],
*N*-ethyl-*N*,*N*-dioctadecylammonium [tetrakis(perfluorophenyl)borate],
*N*,*N*-di(octadecyl)tolylammonium [tetrakis(perfluorophenyl)borate],

*N*,*N*-di(hexadecyl)tolylammonium [tetrakis(perfluorophenyl)borate],
*N*,*N*-di(tetradecyl)tolylammonium [tetrakis(perfluorophenyl)borate],
*N*,*N*-di(dodecyl)tolylammonium [tetrakis(perfluorophenyl)borate],
*N*-octadecyl-N-hexadecyl-tolylammonium [tetrakis(perfluorophenyl)borate],
*N*-octadecyl-N-hexadecyl-tolylammonium [tetrakis(perfluorophenyl)borate],
*N*-octadecyl-N-tetradecyl-tolylammonium [tetrakis(perfluorophenyl)borate],
*N*-octadecyl-N-dodecyl-tolylammonium [tetrakis(perfluorophenyl)borate],
*N*-octadecyl-N-decyl-tolylammonium [tetrakis(perfluorophenyl)borate],
*N*-hexadecyl-N-tetradecyl-tolylammonium [tetrakis(perfluorophenyl)borate],
*N*-hexadecyl-N-dodecyl-tolylammonium [tetrakis(perfluorophenyl)borate],
*N*-hexadecyl-N-decyl-tolylammonium [tetrakis(perfluorophenyl)borate],
*N*-tetradecyl-N-dodecyl-tolylammonium [tetrakis(perfluorophenyl)borate],
*N*-tetradecyl-N-decyl-tolylammonium [tetrakis(perfluorophenyl)borate],
*N*-dodecyl-N-decyl-tolylammonium [tetrakis(perfluorophenyl)borate],
*N*-methyl-N-octadecylanilinium [tetrakis(perfluorophenyl)borate],
*N*-methyl-N-hexadecylanilinium [tetrakis(perfluorophenyl)borate],
*N*-methyl-N-tetradecylanilinium [tetrakis(perfluorophenyl)borate],
*N*-methyl-N-dodecylanilinium [tetrakis(perfluorophenyl)borate],
*N*-methyl-N-decylanilinium [tetrakis(perfluorophenyl)borate], and
*N*-methyl-N-octylanilinium [tetrakis(perfluorophenyl)borate].

Additional useful activators and the synthesis non-aromatic-hydrocarbon soluble activators, are described in USSN 16/394,166 filed April 25, 2019, USSN 16/394,186, filed April 25, 2019, and USSN 16/394,197, filed April 25, 2019.

Likewise, particularly useful activators also include dimethylaniliniumtetrakis (pentafluorophenyl) borate and dimethyl anilinium tetrakis(heptafluoronaphthalen-2-yl) borate. For a more detailed description of useful activators please see WO 2004/026921 page 72, paragraph [00119] to page 81 paragraph [00151]. A list of additionally particularly useful activators that can be used in the practice of this invention may be found at page 72, paragraph [00177] to page 74, paragraph [00178] of WO 2004/046214.

For descriptions of useful activators please see US 8,658,556 and US 6,211,105.

Preferred activators for use herein also include N-methyl-4-nonadecyl-N-octadecylbenzenaminium tetrakis(pentafluorophenyl)borate, N-methyl-4-nonadecyl-N-octadecylbenzenaminium tetrakis(perfluoronaphthalen-2-yl)borate, N,N-dimethylanilinium tetrakis(perfluoronaphthalen-2-yl)borate, N,N-dimethylanilinium tetrakis(perfluorobiphenyl) borate, N,N-dimethylanilinium tetrakis(perfluorophenyl)borate, N,N-dimethylanilinium tetrakis(3,5-bis(trifluoromethyl) phenyl)borate, triphenylcarbenium tetrakis(perfluoronaphthalen-2-yl)borate, triphenylcarbenium tetrakis(perfluorobiphenyl)borate, triphenylcarbenium tetrakis(3,5-bis(trifluoromethyl)phenyl)borate, triphenylcarbenium tetrakis(perfluorophenyl)borate, $[Me_3NH^+][B(C_6F_5)_4^-]$; 1-(4-(tris(pentafluorophenyl)borate)-2,3,5,6-tetrafluorophenyl)pyrrolidinium; and tetrakis(pentafluorophenyl)borate, 4-(tris(pentafluorophenyl)borate)-2,3,5,6-tetrafluoropyridine.

In a preferred embodiment, the activator comprises a triaryl carbenium (such as triphenylcarbenium tetraphenylborate, triphenylcarbenium tetrakis(pentafluorophenyl)borate, triphenylcarbenium tetrakis-(2,3,4,6-tetrafluorophenyl)borate, triphenylcarbenium tetrakis(perfluoronaphthalen-2-yl)borate, triphenylcarbenium tetrakis(perfluorobiphenyl)borate, triphenylcarbenium tetrakis(3,5-bis(trifluoromethyl)phenyl)borate).

In another embodiment, the activator comprises one or more of trialkylammonium tetrakis(pentafluorophenyl) borate, N,N-dialkylanilinium tetrakis(pentafluorophenyl)borate, dioctadecylmethylammonium tetrakis(pentafluorophenyl)borate, dioctadecylmethylammonium tetrakis(perfluoronaphthalen-2-yl)borate, N,N-dimethyl-(2,4,6-trimethylanilinium) tetrakis(pentafluorophenyl)borate, trialkylammonium tetrakis-(2,3,4,6-tetrafluorophenyl) borate, N,N-dialkylanilinium tetrakis-(2,3,4,6-tetrafluorophenyl)borate, trialkylammonium tetrakis(perfluoronaphthalen-2-yl)borate, N,N-dialkylanilinium tetrakis(perfluoronaphthalen-2-yl)borate, trialkylammonium tetrakis(perfluorobiphenyl)borate, N,N-dialkylanilinium tetrakis(perfluorobiphenyl)borate, trialkylammonium tetrakis(3,5-bis(trifluoromethyl)phenyl)borate, N,N-dialkylanilinium tetrakis(3,5-bis(trifluoromethyl)phenyl)borate, N,N-dialkyl-(2,4,6-trimethylanilinium) tetrakis(3,5-bis(trifluoromethyl)phenyl)borate, di-(i-propyl)ammonium tetrakis(pentafluorophenyl)borate, (where alkyl is methyl, ethyl, propyl, n-butyl, sec-butyl, or t-butyl).

The typical activator-to-catalyst ratio, e.g., all NCA activators-to-catalyst ratio is about a 1:1 molar ratio. Alternate preferred ranges include from 0.1:1 to 100:1, alternately from 0.5:1 to 200:1, alternately from 1:1 to 500:1 alternately from 1:1 to 1000:1. A particularly useful range is from 0.5:1 to 10:1, preferably 1:1 to 5:1.

It is also within the scope of the present disclosure that the catalyst compounds can be combined with combinations of alumoxanes and NCA's (see for example, US 5,153,157; US 5,453,410; EP 0 573 120 B1; WO 1994/007928; and WO 1995/014044 which discuss the use of an alumoxane in combination with an ionizing activator).

Optional Scavengers, Co-Activators, Chain Transfer Agents

In addition to activator compounds, scavengers or co-activators may be used. A scavenger is a compound that is typically added to facilitate polymerization by scavenging impurities. Some scavengers may also act as activators and may be referred to as co-activators. A co-activator, that is not a scavenger, may also be used in conjunction with an activator in order to form an active catalyst. In some embodiments a co-activator can be pre-mixed with the transition metal compound to form an alkylated transition metal compound.

Co-activators can include alumoxanes such as methylalumoxane, modified alumoxanes such as modified methylalumoxane, and aluminum alkyls such trimethylaluminum, tri-isobutylaluminum, triethylaluminum, and tri-isopropylaluminum, tri-n-hexylaluminum, tri-n-octylaluminum, tri-n-decylaluminum or tri-n-dodecylaluminum. Co-activators are typically used in combination with Lewis acid activators and ionic activators when the pre-catalyst is not a dihydrocarbyl or dihydride complex. Sometimes co-activators are also used as scavengers to deactivate impurities in feed or reactors.

Aluminum alkyl or organoaluminum compounds which may be utilized as scavengers or co-activators include, for example, trimethylaluminum, triethylaluminum, triisobutylaluminum, tri-n-hexylaluminum, tri-n-octylaluminum, and dialkyl zinc, such as diethyl zinc.

Chain transfer agents may be used in the compositions and or processes described herein. Useful chain transfer agents are typically hydrogen, alkylalumoxanes, a compound represented by the formula $AlR_3$, $ZnR_2$ (where each R is, independently, a $C_1$-$C_8$ aliphatic radical, preferably methyl, ethyl, propyl, butyl, pentyl, hexyl octyl or an isomer thereof) or a combination thereof, such as diethyl zinc, trimethylaluminum, triisobutylaluminum, trioctylaluminum, or a combination thereof.

**Polymerization Processes**

Solution polymerization processes may be used to carry out the polymerization reactions disclosed herein in any suitable manner known to one having ordinary skill in the art. In particular embodiments, the polymerization processes may be carried out in continuous polymerization processes. The term "batch" refers to processes in which the complete reaction mixture is withdrawn from the polymerization reactor vessel at the conclusion of the polymerization reaction. In contrast, in a continuous polymerization process, one or more reactants are introduced continuously to the reactor vessel and a solution comprising the polymer product is withdrawn concurrently or near concurrently. A solution polymerization means a polymerization process in which the polymer produced is soluble in a liquid polymerization medium, such as an inert solvent or monomer(s) or their blends. A solution polymerization is typically homogeneous. A homogeneous polymerization is one where the polymer product is dissolved in the polymerization medium. Such systems are preferably not turbid as described in J. Vladimir Oliveira, et al., Ind. Eng. Chem. Res., v.29, 2000, pg. 4627.

In a typical solution process, catalyst components, solvent, monomers and hydrogen (when used) are fed under pressure to one or more reactors. Temperature control in the reactor can generally be obtained by balancing the heat of polymerization and with reactor cooling by reactor jackets or cooling coils to cool the contents of the reactor, auto refrigeration, pre-chilled feeds, vaporization of liquid medium (diluent, monomers or solvent) or combinations of all three. Adiabatic reactors with pre-chilled feeds can also be used. The monomers are dissolved/dispersed in the solvent either prior to being fed to the first reactor or dissolve in the reaction mixture. The solvent and monomers are generally purified to remove potential catalyst poisons prior entering the reactor. The feedstock may be heated or cooled prior to feeding to the first reactor. Additional monomers and solvent may be added to the second reactor, and it may be heated or cooled. The catalysts/activators can be fed in the first reactor or split between two reactors. In solution polymerization, polymer produced is molten and remains dissolved in the solvent under reactor conditions, forming a polymer solution (also referred as to effluent).

The solution polymerization process of this invention uses stirred tank reactor system comprising one or more stirred polymerization reactors. Generally, the reactors should be operated under conditions to achieve a thorough mixing of the reactants. In a multiple reactor system, the first polymerization reactor preferably operates at lower temperature. The residence time in each reactor will depend on the design and the capacity of the reactor. The catalysts/activators can be fed into the first reactor only or split between two reactors. In an alternative embodiment, a loop reactor and plug flow reactors are can be employed for current invention.

The polymer solution is then discharged from the reactor as an effluent stream and the polymerization reaction is quenched, typically with coordinating polar compounds, to prevent further polymerization. On leaving the reactor system the polymer solution is passed through a heat exchanger system on route to a devolatilization system and polymer finishing process. The lean phase and volatiles removed downstream of the liquid phase separation can be recycled to be part of the polymerization feed.

A polymer can be recovered from the effluent of either reactor or the combined effluent, by separating the polymer from other constituents of the effluent. Conventional separation means may be employed. For example, polymer can be recovered from effluent by coagulation with a non-solvent such as isopropyl alcohol, acetone, or n-butyl alcohol, or the

polymer can be recovered by heat and vacuum stripping the solvent or other media with heat or steam. One or more conventional additives such as antioxidants can be incorporated in the polymer during the recovery procedure. Other methods of recovery such as by the use of lower critical solution temperature (LCST) followed by devolatilization are also envisioned.

Suitable diluents/solvents for conducting the polymerization reaction include non-coordinating, inert liquids. In particular embodiments, the reaction mixture for the solution polymerization reactions disclosed herein may include at least one hydrocarbon solvent. Examples include straight and branched-chain hydrocarbons, such as isobutane, butane, pentane, isopentane, hexanes, isohexane, heptane, octane, dodecane, and mixtures thereof; cyclic and alicyclic hydrocarbons, such as cyclohexane, cycloheptane, methylcyclohexane, methylcycloheptane, and mixtures thereof, such as can be found commercially (Isopar™); halogenated and perhalogenated hydrocarbons, such as perfluorinated $C_4$ to $C_{10}$ alkanes, chlorobenzene, and mixtures thereof; and aromatic and alkyl-substituted aromatic compounds, such as benzene, toluene, mesitylene, ethylbenzene, xylene, and mixtures thereof. Mixtures of any of the foregoing hydrocarbon solvents may also be used. Suitable solvents also include liquid olefins which may act as monomers or co-monomers including ethylene, propylene, 1-butene, 1-hexene, 1-pentene, 3-methyl-1-pentene, 4-methyl-1-pentene, 1-octene, 1-decene, and mixtures thereof. In another embodiment, the solvent is not aromatic, preferably aromatics are present in the solvent at less than 1 wt%, preferably less than 0.5 wt%, preferably less than 0 wt% based upon the weight of the solvents.

Any olefinic feed can be polymerized using polymerization methods and solution polymerization conditions disclosed herein. Suitable olefinic feeds include at least one cyclic olefin or substituted cyclic olefin and may include any $C_2$-$C_{40}$ alkene, which may be straight chain or branched, cyclic or acyclic, and terminal or non-terminal, optionally containing heteroatom substitution. In more specific embodiments, the olefinic feed may comprise a $C_2$-$C_{20}$ alkene, particularly linear alpha olefins, such as, for example, ethene, propene, 1-butene, 1-pentene, 1-hexene, 1-octene, 1-decene, or 1-dodecene in combination with cyclic olefins such as but not limited to cyclobutene, cyclopentene, cyclohexene, cycloheptene, cyclononene, cyclodecene, and 2-norbomene. Other suitable olefinic monomers may include ethylenically unsaturated monomers, diolefins having 4 to 18 carbon atoms, conjugated or nonconjugated dienes, polyenes, and vinyl monomers. Non-limiting olefinic monomers may also include norbornadiene, isobutylene, isoprene, vinylbenzocyclobutane, styrene, alkyl substituted styrene, ethylidene norbornene, and dicyclopentadiene. Any single olefinic monomer or any mixture of olefinic monomers may undergo polymerization according to the disclosure herein.

In any embodiment, the cyclic olefin is selected from substituted or unsubstituted $C_4$ to $C_{20}$ cyclic olefins preferably comprising at least one $C_4$ to $C_8$ cyclic structure. In any embodiment, the cyclic olefin is cyclopentene or $C_1$ to $C_{10}$ alkyl-substituted cyclopentene, preferably provided that the substitution(s) is not at a $sp^2$ carbon atom.

In any embodiment the cyclic olefin is a substituted or unsubstituted $C_6$ to $C_{20}$ multicyclic olefin which includes bicyclic olefins which are cyclic olefins containing a bridging hydrocarbon group that forms multiple rings in the overall structure. In any embodiment the cyclic olefin is norbornene or $C_1$ to $C_{10}$ alkyl-substituted norbornene, provided that the substitution(s) is preferably not at a $sp^2$ carbon atom.

Preferred cyclic olefins include cyclopentene and 2-norbornene.

Preferred diolefin monomers useful in this invention include any hydrocarbon structure, preferably $C_5$ to $C_{30}$, having at least two unsaturated bonds wherein at least two unsaturated bonds that can readily be incorporated into polymers to form cross-linked polymers. Examples of such polyenes include alpha,omega-dienes (such as butadiene, 1,4-pentadiene, 1,5-hexadiene, 1,6-heptadiene, 1,7-octadiene, 1,8-nonadiene, 1,9-decadiene, 1,10-undecadiene, 1,11-dodecadiene, 1,12-tridecadiene, and 1,13-tetradecadiene) and certain multi-ring alicyclic fused and bridged ring dienes (such as tetrahydroindene; divinylbenzene, norbornadiene; methyl-tetrahydroindene; dicyclopentadiene; bicyclo-(2.2.1)-hepta-2,5-diene; and alkenyl-, alkylidene-, cycloalkenyl-, and cylcoalkyliene norbornenes [including, e.g., 5-methylene-2-norbornene, 5-ethylidene-2-norbomene, 5-propentyl-2-norbornene, 5-isopropylidene-2-norbornene, 5-(4-cyclopentenyl)-2-norbomene, 5-cyclohexylidene-2-norbornene, and 5-vinyl-2-norbornene]).

Alternately, diene is absent from the copolymers produced herein.

Combinations of monomers useful herein include ethylene and cyclic olefins; propylene with cyclic olefins; and ethylene and propylene with cyclic olefins.

Preferred polymerizations can be run at any temperature and/or pressure suitable to obtain the desired polymers. Solution polymerization conditions suitable for use in the polymerization processes disclosed herein include temperatures ranging from about 0°C to about 300°C, or from about 50°C to about 250°C, or from about 70°C to about 200°C, or from about 90°C to about 180°C, or from about 90°C to about 140°C, or from about 120°C to about 140°C. Pressures may range from about 0.1 MPa to about 15 MPa, or from about 0.2 MPa to about 12 MPa, or from about 0.5 MPa to about 10 MPa, or from about 1 MPa to about 7 MPa. Polymerization run times (residence time) may range up to about 300 minutes, particularly in a range from about 5 minutes to about 250 minutes, or from about 10 minutes to about 120 minutes.

Small amounts of hydrogen, for example 1-5,000 parts per million (ppm) by weight, based on the total solution fed to the reactor may be added to one or more of the feed streams of the reactor system in order to improve control of the melt index and/or molecular weight distribution. In some embodiments, hydrogen may be included in the reactor vessel in the

solution polymerization processes. According to various embodiments, the concentration of hydrogen gas in the reaction mixture may range up to about 5,000 ppm, or up to about 4,000 ppm, or up to about 3,000 ppm, or up to about 2,000 ppm, or up to about 1,000 ppm, or up to about 500 ppm, or up to about 400 ppm, or up to about 300 ppm, or up to about 200 ppm, or up to about 100 ppm, or up to about 50 ppm, or up to about 10 ppm, or up to about 1 ppm. In some or other embodiments, hydrogen gas may be present in the reactor vessel at a partial pressure of about 0.007 to 345 kPa, or about 0.07 to 172 kPa, or about 0.7 to 70 kPa. In some embodiments, the process will exclude the addition of hydrogen.

In a preferred embodiment, the polymerization: 1) is conducted at temperatures of 100°C or higher (preferably 120°C or higher, preferably 140°C or higher); 2) is conducted at a pressure of atmospheric pressure to 18 MPa (preferably from 0.35 to 18 MPa, preferably from 0.35 to 10 MPa, preferably from 0.45 to 6 MPa, preferably from 0.5 to 4 MPa); 3) is conducted in an aliphatic hydrocarbon solvent (such as, isobutane, butane, pentane, isopentane, hexanes, isohexane, heptane, octane, dodecane, and mixtures thereof; cyclic and alicyclic hydrocarbons, such as cyclohexane, cycloheptane, methylcyclohexane, methylcycloheptane, and mixtures thereof; preferably where aromatics (such as toluene) are preferably present in the solvent at less than 1 wt%, preferably less than 0.5 wt%, preferably less than 0.1 wt%, preferably at 0 wt% based upon the weight of the solvents); 4) if used ethylene is present in the polymerization reactor at a concentration of 6 mole/liter or less); 5) the polymerization preferably occurs in one reaction zone; 6) the productivity of the catalyst compound is 50,000 kg of polymer per kg of catalyst or more (preferably 100,000 kg of polymer per kg of catalyst or more, such as 150,000 kg of polymer per kg of catalyst or more, such as 200,000 kg of polymer per kg of catalyst or more).

In more particular embodiments, the one or more olefinic monomers present in the reaction mixtures disclosed herein comprise at least a cyclic olefin and optionally ethylene and/or propylene, and optionally one or more alpha olefin such as butene, hexene and octene. In still more specific embodiments, the one or more olefinic monomers may comprise a cyclic olefin and ethylene and/or propylene. In still more specific embodiments, the one or more olefinic monomers may comprise ethylene and one or more cyclic olefin such as cyclopentene and/or 2-norbomene. In still more specific embodiments, the one or more olefinic monomers may comprise propylene and one or more cyclic olefin such as cyclopentene and/or 2-norbomene.

The molecular weight distribution of the polymer made by a solution process can be advantageously controlled by preparing the polymers in multiple reactors which are operated under different conditions, most frequently at different temperatures and/or monomer concentration. These conditions determine the molecular weight and density of the polymer fractions that are produced. The relative amounts of the different fractions are controlled by adjusting the process condition in each of the reactors. The process condition typically used include the catalyst type and concentration in each reactor, and the reactor residence time. In one embodiment, the polymerization process include at least two reactors connected either in series and parallel configuration.

In embodiments herein, the invention relates to polymerization processes where monomers, and optionally comonomer, are contacted with a catalyst system comprising an activator and at least one catalyst compound, as described above. The catalyst compound and activator may be combined in any order, and are combined typically prior to contacting with the monomers. In one embodiment, the catalyst and the activator can be fed into the polymerization reactor in form of dry powder or slurry without the need of preparing a homogenous catalyst solution by dissolving the catalyst into a carrying solvent.

Polymerization processes of this invention can be carried out in any manner known in the art. Any suspension, homogeneous, bulk, solution, slurry, or gas phase polymerization process known in the art can be used. Such processes can be run in a batch, semi-batch, or continuous mode. Homogeneous polymerization processes are preferred. (A homogeneous polymerization process is preferably a process where at least 90 wt% of the product is soluble in the reaction media.) In useful embodiments the process is a solution process.

A "reaction zone" also referred to as a "polymerization zone" is a vessel where polymerization takes place, for example a batch reactor. When multiple reactors are used in either series or parallel configuration, each reactor is considered as a separate polymerization zone. For a multi-stage polymerization in both a batch reactor and a continuous reactor, each polymerization stage is considered as a separate polymerization zone. In a preferred embodiment, the polymerization occurs in one reaction zone. In one embodiment, multiple reactors are used in the polymerization processes.

Other additives may also be used in the polymerization, as desired, such as one or more scavengers, hydrogen, aluminum alkyls, silanes, or chain transfer agents (such as alkylalumoxanes, a compound represented by the formula $AlR_3$ or $ZnR_2$ (where each R is, independently, a $C_1$-$C_8$ aliphatic radical, preferably methyl, ethyl, propyl, butyl, pentyl, hexyl octyl or an isomer thereof) or a combination thereof, such as diethyl zinc, methylalumoxane, trimethylaluminum, triisobutylaluminum, trioctylaluminum, or a combination thereof).

The process of the present invention may be used to prepare homopolymers of cyclic olefins and copolymers of ethylene and a cyclic olefin, propylene and a cyclic olefin, and may optionally comprise additional alpha-olefins to produce polymers having densities in the range of, for example, about 0.900-0.970 g/cm$^3$ and especially 0.915-0.965 g/cm$^3$. Such polymers may have a melt index, as measured by the method of ASTM D-1238, in the range of, for example, about 0.1-200, and especially in the range of about 0.5-120 dg/min. The polymers may be manufactured with narrow or broad molecular

weight distribution. For example, the polymers may have a MWD in the range of about 1.5-10 and especially in the range of about 2 to 7. The process of the invention is believed to be particularly useful in the manufacture of narrow molecular distribution polymers.

The process of the present invention may be used to prepare cyclic olefin copolymers of ethylene and/or propylene, and copolymers of cyclic olefins and ethylene and/or propylene and additional alpha-olefins to produce polymers having densities in the range of, for example, about 0.84-0.970 g/cm$^3$ and especially 0.88-0.965 g/cm$^3$. Such polymers may have a melt index, as measured by the method of ASTM D-1238, of 0.1 or less, and in the range of about 0.5-120 dg/min.

Polyolefin Products

This invention also relates to compositions of matter produced by the methods described herein. The processes described herein may be used to produce polymers and copolymers of cyclic olefins. Polymers that may be prepared include homopolymers of cyclic monomers, and copolymers of cyclic olefins with $C_2$-$C_{20}$ olefins. Polymers that may be prepared herein include copolymers of cyclic olefin and ethylene with optional $C_4$-$C_{20}$ olefins; copolymers of cyclic olefin and propylene with optional $C_4$-$C_{20}$ olefin; and copolymers of cyclic olefin, ethylene, and propylene with optional $C_4$-$C_{20}$ olefin.

Preferably, diene is absent from the polymer compositions produced herein.

In a preferred embodiment, the process described herein polymer containing 0.1 mol% cyclic olefin monomer or greater, alternatively 0.2 mol% cyclic olefin monomer or greater, alternatively 0.5 mol% cyclic olefin monomer or greater, alternatively 1.0 mol% cyclic olefin monomer or greater, alternatively 2.0 mol% cyclic olefin monomer or greater, alternatively 3.0 mol% cyclic olefin monomer or greater, alternatively 5 mol% cyclic olefin monomer or greater, alternatively 10 mol% cyclic olefin monomer or greater, alternatively 15 mol% cyclic olefin monomer or greater, alternatively 20 mol% cyclic olefin monomer or greater, alternatively 30 mol% cyclic olefin monomer or greater, alternatively 40 mol% cyclic olefin monomer or greater, alternatively 50 mol% cyclic olefin monomer or greater, alternatively 60 mol% cyclic olefin monomer or greater, alternatively 70 mol% cyclic olefin monomer or greater, alternatively 80 mol% cyclic olefin monomer or greater, alternatively 90 mol% cyclic olefin monomer or greater, alternatively 100 mol% cyclic olefin.

Molecular weights (weight average molecular weight (Mw), number average molecular weight (Mn), z-average molecular weight (Mz)) and molecular weight distribution (PDI = MWD = Mw/Mn), which is also sometimes referred to as the polydispersity (PDI) of the polymer, as measured by Gel Permeation Chromatography discussed below are relative to linear polystyrene standards.

In a preferred embodiment, the process described herein produces a copolymer comprising ethylene and cyclic olefin wherein the cyclic olefin is a $C_5$ to $C_{20}$ cyclic olefin, preferably cyclopentene and/or 2-norbornene, said copolymer having a Mn of 3,000 g/mole or more, alternatively 5,000 g/mol or more, alternatively 10,000 g/mol or more, alternatively 50,000 g/mol or more, alternatively 75,000 g/mol or more, alternatively 100,000 g/mole or more, alternatively 200,000 g/mole or more, and an Mw/Mn between 1.0 to 10, alternatively between 1.5 to 5.0, alternatively between 1.8 and 3.0, and the cyclic olefin content is 0.05 to 99 mol%, alternatively 0.1 to 50 mol%, alternatively 0.2 and 40 mole%, alternatively 0.3 and 30 mol%, alternatively 0.5 and 20 mol%. The cyclic olefin may be incorporated by 1,2 linkages (across the double bond) or 1,3 linkages (from rearrangement) or a combination of both.

In a preferred embodiment, the process described herein produces a copolymer comprising ethylene, cyclic olefin and one or more additional $C_3$ to $C_{12}$ alpha olefins wherein the cyclic olefin is a $C_5$ to $C_{20}$ cyclic olefin, preferably cyclopentene and/or 2-norbornene, and the copolymer has a Mn of 3,000 g/mole or more, alternatively 5,000 g/mol or more, alternatively 10,000 g/mol or more, alternatively 50,000 g/mol or more, alternatively 75,000 g/mol or more, alternatively 100,000 g/mole or more, alternatively 200,000 g/mole or more, and a Mw/Mn between 1.0 to 10, alternatively between 1.5 to 5.0, alternatively between 1.8 and 3.0, where the cyclic olefin content is 0.05 to 99 mol%, alternatively 0.1 to 50 mol%, alternatively 0.2 and 40 mole%, alternatively 0.3 and 30 mol%, alternatively 0.5 and 20 mol%. The cyclic olefin may be incorporated by 1,2 linkages (across the double bone) or 1,3 linkages (from rearrangement) or a combination of both.

In some embodiments, an ethylene cyclopentene copolymer has a Mn from about 2,000 to 2,000,000 g/mole, alternatively from about 5,000 to 1,500,000 g/mole, alternatively from about 10,000 to 1,000,000 g/mole, alternatively from about 50,000 to 800,000, alternatively from about 100,000 to 500,000 g/mole.

In some embodiments, an ethylene cyclopentene copolymer has a Mw from about 5,000 to 4,000,000 g/mole, alternatively from about 10,000 to 3,000,000 g/mole, alternatively from about 20,000 to 2,000,000 g/mole, alternatively from about 100,000 to 1,500,000 g/mole, alternatively form about 200,000 to 1,000,000 g/mole.

In some embodiments, an ethylene cyclopentene copolymer has a Mz from about 100,000 to 10,000,000 g/mole, alternatively from about 200,000 to 8,000,000 g/mole, alternatively from about 300,000 to 6,000,000 g/mole, alternatively from about 400,000 to 3,000,000 g/mole, alternatively form about 500,000 to 2,000,000 g/mole.

In some embodiments, an ethylene cyclopentene copolymer has a Mw/Mn from about 1.0 to 10, alternatively

from about 1.5 to 5.0, alternatively from about 1.8 and 3.0, alternatively from about 2.0 to 4.0.

In some embodiments, an ethylene cyclopentene copolymer has a cyclopentene content from about 0.05 to 99 mol%, alternatively from about 0.1 to 50 mol%, alternatively from about 0.2 and 40 mole%, alternatively from about 0.3 and 30 mol%, alternatively from about 0.5 and 20 mol%. In some embodiments, an ethylene cyclopentene copolymer has a cyclopentene content of less than 50 mole%, alternatively less than 45 mole%, alternatively less than 40 mole%.

The cyclopentene monomer may be incorporated by 1,2 linkages (across the double bone) or 1,3 linkages (from rearrangement) or a combination of both. In some embodiments, the ethylene cyclopentene copolymer has predominately 1,2 linkages. Preferably, the 1,2 linkages are 90% or greater of the total cyclopentene incorporated into the ethylene backbone, alternatively 95% or greater, alternatively 98% or greater, alternatively 99% or greater. In some embodiments, the ethylene cyclopentene copolymer has 5% or less 1,3 linkages, alternatively 3% or less, alternatively 2% or less, alternatively 1% or less, alternatively 0.5% or less. In some embodiments, the triad sequence distribution (ccc, ece and cce) has the percentage of ccc 12% or greater, alternatively 15% or greater, alternatively 20% or greater, alternatively 30% or greater, which indicates a clustering of cyclopentene units. In some embodiments, the triad sequence distribution has a percentage of ece of 86% or less, alternatively 84% or less, alternatively 80% or less, alternatively 70% or less, alternatively 60% or less, alternatively 50% or less, which indicates isolated cyclopentene units.

In some embodiments of the invention the ethylene cyclopentene copolymer has a cyclopentene content greater than 5 mole%, 1,2-linkages of 90% or greater, a ccc sequence distribution of 12% or greater, and an ece sequence distribution of 86% or less.

In some embodiments of the invention the ethylene cyclopentene copolymer has a cyclopentene content less than 50 mole%, 1,2-linkages of 90% or greater, a ccc sequence distribution of 12% or greater, and an ece sequence distribution of 86% or less.

In a preferred embodiment, the ethylene cyclopentene copolymer has:

a. a Mn greater than 5,000 g/mole, alternatively greater than 10,000 g/mole, alternatively greater than 100,000 g/mole, alternatively greater than 150,000 g/mole;
b. a Mw greater than 10,000 g/mole, alternatively greater than 20,000 g/mole, alternatively greater than 200,000 g/mole, alternatively greater than 300,000 g/mole;
c. a Mw/Mn of about 1 to 10, alternatively of about 1.5 to 5.0, alternatively of about 1.8 to 3.0, alternatively of about 2.0-4.0;
d. a cyclopentene content of 0.1 mole% or greater, with an upper limit of 50 mole% or less, alternately 45 mole% or less;
e. and having cyclopentene 1,2 linkages at about 90% or greater of the total cyclopentene units incorporated into the polymer.

In some embodiments, an ethylene norbornene copolymer has a Mn from about 2,000 to 1,500,000 g/mole, alternatively from about 5,000 to 1,000,000 g/mole, alternatively from about 10,000 to 800,000 g/mole, alternatively from about 20,000 to 500,000, alternatively from about 30,000 to 300,000 g/mole.

In some embodiments, an ethylene norbornene copolymer has a Mw from about 5,000 to 3,000,000 g/mole, alternatively from about 10,000 to 2,000,000 g/mole, alternatively from about 20,000 to 1,000,000 g/mole, alternatively from about 50,000 to 800,000 g/mole, alternatively form about 100,000 to 500,000 g/mole.

In some embodiments, an ethylene norbornene copolymer has a Mz from about 10,000 to 3,000,000 g/mole, alternatively from about 20,000 to 2,000,000 g/mole, alternatively from about 50,000 to 1,000,000 g/mole, alternatively from about 100,000 to 800,000 g/mole, alternatively form about 200,000 to 500,000 g/mole.

In some embodiments, an ethylene norbornene copolymer has a Mw/Mn from about 1.0 to 10, alternatively from about 1.2 to 5.0, alternatively from about 1.5 and 4.0, alternatively from about 2.0 to 3.0.

In some embodiments, an ethylene norbornene copolymer has a norbornene content from about 0.1 to 80 mol%, alternatively from about 1 to 70 mol%, alternatively from about 2 to 60 mol%, alternatively from about 2 and 50 mole%, alternatively from about 3 to 50 mol%, alternatively from about 3 and 45 mol%, alternatively from about 4 and 40 mol%.

In some embodiments, an ethylene norbornene copolymer has a norbornene content of 10 mole% or greater, alternatively, 20 mole% or greater, alternatively 30 mole% or greater, alternatively 40 mole% or greater, with an upper limit of 90 mole% or less, alternatively, 80 mol% or less.

The norbornene units within the polymer may be isolated, alternating or blocked. Preferably, the norbornene units are from 10 to 80% isolated, from 10 to 80% alternating, and from 1 to 50% blocked wherein the total of isolated, alternating and blocked equals 100%. Alternatively, the norbornene units are from 20 to 80% isolated, from 20 to 80% alternation, and from 1 to 45% blocked.

In some embodiments of the invention, the ethylene norbornene copolymer has a norbornene content of 20 mole% or greater, alternatively 40 mole% or greater alternatively 45 mole% or greater, alternatively 50 mole% or greater, alternatively 60 mole% or greater, alternatively 70 mole% or greater.

In some embodiments, an ethylene norbornene copolymer has a norbornene content from about 10 mole% to 90 mole%, alternatively from about 15 mole% to about 80 mole%, alternatively from about 20 mole% to about 70 mole%, alternatively from about 20 mole% to about 60 mole%.
In some embodiments, an ethylene norbornene copolymer has a Tg (°C) of 30°C or greater, alternatively 40°C or greater, alternatively 50°C or greater, alternatively 60°C or greater with an upper limit of 200°C or less.
In a preferred embodiment, the ethylene norbornene copolymer has:

a. a Mn greater than 50,000 g/mole, alternatively greater than 100,000 g/mole, alternatively greater than 150,000 g/mole, alternatively greater than 200,000 g/mole;
b. a Mw greater than 100,000 g/mole, alternatively greater than 200,000 g/mole, alternatively greater than 300,000 g/mole, alternatively greater than 400,000 g/mole;
c. a Mw/Mn of about 1.2 to 5.0, alternatively of about 1.5 to 4.0, alternatively of about 2.0 to 3.0;
d. a norbornene content of 20 mole% or greater, with an upper limit of 80 mole% or less;
e. and having norbornene units that are from 10 to 80% isolated, from 10 to 80% alternating, and from 1 to 50% blocked wherein the total of isolated, alternating and blocked equals 100%.

In a preferred embodiment, the process described herein produces a copolymer comprising propylene and cyclic olefin wherein the cyclic olefin is a $C_5$ to $C_{20}$ cyclic olefin, preferably cyclopentene and/or 2-norbornene and the copolymer has a Mn from 3,000 g/mole or more, alternatively 5,000 g/mol or more, alternatively 10,000 g/mol or more, alternatively 50,000 g/mol or more, alternatively 75,000 g/mol or more, alternatively 100,000 g/mole or more, and a Mw/Mn of 1.0 to 10, alternatively of 1.5 to 5.0, alternatively of 1.8 and 3.0, and a cyclic olefin content between 0.05 to 99 mol%, alternatively between 0.1 to 50 mol%, alternatively between 0.2 and 40 mole%, alternatively between 0.3 and 30 mol%, alternatively between 0.5 and 20 mol%. The cyclopentene may be incorporated by 1,2 linkages or 1,3 linkages or a combination of both.
In a preferred embodiment, the process described herein produces a copolymer comprising propylene and cyclic olefin, optionally further comprising one or more additional $C_4$ to $C_{12}$ alpha olefins where the cyclic olefin is a $C_5$ to $C_{20}$ cyclic olefin, preferably cyclopentene and/or 2-norbornene and the copolymer has a Mn of 3,000 g/mole or more, alternatively 5,000 g/mol or more, alternatively 10,000 g/mol or more, alternatively 50,000 g/mol or more, alternatively 75,000 g/mol or more, alternatively 100,000 g/mole or more, and a Mw/Mn of 1.0 to 10, alternatively of 1.5 to 5.0, alternatively of 1.8 and 3.0, and a cyclic olefin content of 0.05 to 99 mol%, alternatively of 0.1 to 50 mol%, alternatively of 0.2 and 40 mole%, alternatively of 0.3 and 30 mol%, alternatively of 0.5 and 20 mol%. The cyclopentene may be incorporated by 1,2 linkages or 1,3 linkages or a combination of both.
In some embodiments, the propylene cyclopentene copolymer has a Mn from about 1,000 to 1,000,000 g/mole, alternatively from about 2,000 to 800,000 g/mole, alternatively from about 3,000 to 500,000 g/mole, alternatively from about 4,000 to 100,000, alternatively from about 5,000 to 50,000 g/mole.
In some embodiments, the propylene cyclopentene copolymer has a Mw from about 2,000 to 2,000,000 g/mole, alternatively from about 4,000 to 1,500,000 g/mole, alternatively from about 5,000 to 2,000,000 g/mole, alternatively from about 8,000 to 500,000 g/mole, alternatively from about 10,000 to 200,000 g/mole.
In some embodiments, the propylene cyclopentene copolymer has a Mz from about 5,000 to 4,000,000 g/mole, alternatively from about 10,000 to 2,000,000 g/mole, alternatively from about 20,000 to 1,000,000 g/mole, alternatively from about 25,000 to 500,000 g/mole, alternatively from about 30,000 to 200,000 g/mole.
In some embodiments, the propylene cyclopentene copolymer has a Mw/Mn from about 1.0 to 10, alternatively from about 1.5 to 5.0, alternatively from about 1.8 and 3.0, alternatively from about 2.0 to 4.0.
In some embodiments, the propylene cyclopentene copolymer has cyclopentene content from about 0.05 to 99 mole%, alternatively from about 0.1 to 50 mole%, alternatively from about 0.2 and 40 mole%, alternatively from about 0.3 and 30 mole%, alternatively from about 0.5 and 20 mole%, alternatively from about 1.0 mole% to about 10 mole%. The cyclopentene monomer may be incorporated by 1,2 linkages (across the double bond) or 1,3 linkages (from rearrangement) or a combination of both. In some embodiments, the propylene cyclopentene copolymer has predominately 1,2 linkages. Preferably, the 1,2 linkages are 90% or greater of the total cyclopentene incorporated into the propylene backbone, alternatively 95% or greater, alternatively 98% or greater, alternatively 99% or greater. In some embodiments, the propylene cyclopentene copolymer has 5% or less 1,3 linkages, alternatively 3% or less, alternatively 2% or less, alternatively 1% or less, alternatively 0.5% or less.
In a preferred embodiment, the propylene cyclopentene copolymer has:

a. a Mn greater than 3,000 g/mole, alternatively greater than 5,000 g/mole, alternatively greater than 10,000 g/mole;
b. a Mw greater than 6,000 g/mole, alternatively greater than 10,000 g/mole, alternatively greater than 20,000 g/mole;
c. a Mw/Mn of about 1 to 10, alternatively of about 1.5 to 5.0, alternatively of about 1.8 to 3.0, alternatively of about 2.0-4.0;
d. a cyclopentene content of 0.1 mole% or greater, with an upper limit of 50 mole% or less, alternately 45 mole% or

less;

e. and having cyclopentene 1,2 linkages at about 90% or greater of the total cyclopentene units incorporated into the polymer.

In some embodiments, the propylene norbornene copolymer has a Mn from about 1,000 to 1,000,000 g/mole, alternatively from about 2,000 to 800,000 g/mole, alternatively from about 3,000 to 500,000 g/mole, alternatively from about 4,000 to 200,000, alternatively from about 5,000 to 100,000 g/mole.

In some embodiments, the propylene norbornene copolymer has a Mw from about 2,000 to 2,000,000 g/mole, alternatively from about 4,000 to 1,500,000 g/mole, alternatively from about 5,000 to 1,000,000 g/mole, alternatively from about 8,000 to 500,000 g/mole, alternatively form about 10,000 to 300,000 g/mole.

In some embodiments, the propylene norbornene copolymer has a Mz from about 4,000 to 3,000,000 g/mole, alternatively from about 5,000 to 2,000,000 g/mole, alternatively from about 6,000 to 1,500,000 g/mole, alternatively from about 10,000 to 800,000 g/mole, alternatively form about 10,000 to 500,000 g/mole.

In some embodiments, the propylene norbornene copolymer has a Mw/Mn from about 1.0 to 10, alternatively from about 1.2 to 5.0, alternatively from about 1.5 and 4.0, alternatively from about 2.0 to 3.0.

In some embodiments, the propylene norbornene copolymer has norbornene content from about 0.1 to 60 mol%, alternatively from about 1 to 50 mol%, alternatively from about 2 and 40 mole%, alternatively from about 3 and 35 mol%, alternatively from about 4 and 30 mol%.

In some embodiments, the propylene norbornene copolymer has a Tm (°C) from about 90 to about 130°C. In other embodiments, the propylene norbornene copolymer is amorphous and exhibits no polymer crystallinity.

In a preferred embodiment, the propylene norbornene copolymer has:

a. a Mn greater than 3,000 g/mole, alternatively greater than 5,000 g/mole, alternatively greater than 10,000 g/mole;
b. a Mw greater than 6,000 g/mole, alternatively greater than 10,000 g/mole, alternatively greater than 20,000 g/mole;
c. a Mw/Mn of about 1.2 to 5.0, alternatively of about 1.5 to 4.0, alternatively of about 2.0 to 3.0;
d. a norbornene content of 1 mole% or greater, with an upper limit of 50 mole% or less.

In some embodiments, the polymer produced is a homopolymer of cyclopentene (polycyclopentene) having a Mn from about 100 to 5,000 g/mole, alternatively from about 200 to 2,000 g/mole, alternatively from about 250 to 1,200 g/mole, alternatively from about 300 to 1,000 g/mole.

In some embodiments, the polymer produced is a homopolymer of cyclopentene having a Mw from about 200 to 10,000 g/mole, alternatively from about 300 to 5,000 g/mole, alternatively from about 350 to 2,000 g/mole, alternatively from about 300 to 1,000 g/mole.

In some embodiments, the polymer produced is a homopolymer of cyclopentene having a Mz from about 400 to 20,000 g/mole, alternatively from about 500 to 10,000 g/mole, alternatively from about 600 to 5,000 g/mole, alternatively from about 700 to 1,000 g/mole.

In some embodiments, the Mn of the polycyclopentene is less than 1000 g/mole, alternatively less than 800 g/mole, alternatively less than 600 g/mole, alternatively less than 500 g/mole, and the Mn is 200 g/mole or greater, alternatively 250 g/mole or greater, alternatively 300 g/mole or greater.

In a preferred embodiment the polymer produced herein has a unimodal or multimodal molecular weight distribution as determined by Gel Permeation Chromatography (GPC). By "unimodal" is meant that the GPC chromatograph has one peak or inflection point. By "multimodal" is meant that the GPC chromatograph has at least two peaks or inflection points. An inflection point is that point where the second derivative of the curve changes in sign (e.g., from negative to positive or vice versus).

## Blends

In another embodiment, the polymer compositions produced herein is combined with one or more additional polymers prior to being formed into a film, molded part or other article. Other useful polymers include polyethylene, polypropylene, random copolymer of propylene and ethylene, and/or butene, and/or hexene, polybutene, ethylene vinyl acetate, LDPE, LLDPE, HDPE, ethylene vinyl acetate, ethylene methyl acrylate, copolymers of acrylic acid, polymethylmethacrylate or any other polymers polymerizable by a high-pressure free radical process, polyvinylchloride, polybutene-1, isotactic polybutene, ABS resins, ethylene-propylene rubber (EPR), vulcanized EPR, EPDM, block copolymer, styrenic block copolymers, polyamides, polycarbonates, PET resins, cross linked polyethylene, copolymers of ethylene and vinyl alcohol (EVOH), polymers of aromatic monomers such as polystyrene, poly-1 esters, polyacetal, polyvinylidine fluoride, polyethylene glycols, and/or polyisobutylene.

In a preferred embodiment, the polymer produced herein is present in the above blends, at from 10 to 99 wt%, based upon the weight of the polymers in the blend, preferably 20 to 95 wt%, even more preferably at least 30 to 90 wt%,

even more preferably at least 40 to 90 wt%, even more preferably at least 50 to 90 wt%, even more preferably at least 60 to 90 wt%, even more preferably at least 70 to 90 wt%.

The blends described above may be produced by mixing the polymers of the invention with one or more polymers (as described above), by connecting reactors together in series to make reactor blends or by using more than one catalyst in the same reactor to produce multiple species of polymer. The polymers can be mixed together prior to being put into the extruder or may be mixed in an extruder. Alternatively, the blends described above may be produced by mixing the polymers of the invention with one or more polymers (as described above), by connecting reactors together in parallel or in series to make reactor blends.

The blends may be formed using conventional equipment and methods, such as by dry blending the individual components and subsequently melt mixing in a mixer, or by mixing the components together directly in a mixer, such as, for example, a Banbury mixer, a Haake mixer, a Brabender internal mixer, or a single or twin-screw extruder, which may include a compounding extruder and a side-arm extruder used directly downstream of a polymerization process, which may include blending powders or pellets of the resins at the hopper of the film extruder. Additionally, additives may be included in the blend, in one or more components of the blend, and/or in a product formed from the blend, such as a film, as desired. Such additives are well known in the art, and can include, for example: fillers; antioxidants (e.g., hindered phenolics such as IRGANOX™ 1010 or IRGANOX™ 1076 available from BASF); phosphites (e.g., IRGAFOS™ 168 available from BASF); anti-cling additives; tackifiers, such as polybutenes, terpene resins, aliphatic and aromatic hydrocarbon resins, alkali metal and glycerol stearates, and hydrogenated rosins; UV stabilizers; heat stabilizers; anti-blocking agents; release agents; anti-static agents; pigments; colorants; dyes; waxes; silica; fillers; talc; and the like.

## Films

Specifically, any of the foregoing polymers, such as the foregoing polymers or blends thereof, may be used in a variety of end-use applications. Such applications include, for example, mono- or multi-layer blown, extruded, and/or shrink films. These films may be formed by any number of well-known extrusion or coextrusion techniques, such as a blown bubble film processing technique, wherein the composition can be extruded in a molten state through an annular die and then expanded to form a uni-axial or biaxial orientation melt prior to being cooled to form a tubular, blown film, which can then be axially slit and unfolded to form a flat film. Films may be subsequently unoriented, uniaxially oriented, or biaxially oriented to the same or different extents. One or more of the layers of the film may be oriented in the transverse and/or longitudinal directions to the same or different extents. The uniaxially orientation can be accomplished using typical cold drawing or hot drawing methods. Biaxial orientation can be accomplished using tenter frame equipment or a double bubble processes and may occur before or after the individual layers are brought together. For example, a polyethylene layer can be extrusion coated or laminated onto an oriented polypropylene layer or the polyethylene and polypropylene can be coextruded together into a film then oriented. Likewise, oriented polypropylene could be laminated to oriented polyethylene or oriented polyethylene could be coated onto polypropylene then optionally the combination could be oriented even further. Typically, the films are oriented in the Machine Direction (MD) at a ratio of up to 15, preferably between 5 and 7, and in the Transverse Direction (TD) at a ratio of up to 15, preferably 7 to 9. However, in another embodiment the film is oriented to the same extent in both the MD and TD directions.

The films may vary in thickness depending on the intended application; however, films of a thickness from 1 to 50 μm are usually suitable. Films intended for packaging are usually from 10 to 50 μm thick. The thickness of the sealing layer is typically 0.2 to 50 μm. There may be a sealing layer on both the inner and outer surfaces of the film or the sealing layer may be present on only the inner or the outer surface.

In another embodiment, one or more layers may be modified by corona treatment, electron beam irradiation, gamma irradiation, flame treatment, or microwave. In a preferred embodiment, one or both of the surface layers is modified by corona treatment.

Any of the foregoing polymers and compositions in combination with optional additives (*see, for example,* US Patent Application Publication No. 2016/0060430, paragraphs [0082]-[0093]) may be used in a variety of end-use applications. Such end uses may be produced by methods known in the art. End uses include polymer products and products having specific end-uses. Exemplary end uses are films, film-based products, diaper backsheets, housewrap, wire and cable coating compositions, articles formed by molding techniques, e.g., injection or blow molding, extrusion coating, foaming, casting, and combinations thereof. End uses also include products made from films, e.g., bags, packaging, and personal care films, pouches, medical products, such as for example, medical films and intravenous (IV) bags.

## Lubricants and Viscosity Modifiers

The present invention also provides a lubricant composition comprising a blend of the ethylene-cyclic monomer copolymers described herein and a lubrication oil. The concentration of the ethylene cyclic monomer copolymer in the

lubrication oil is of 5 wt% or less. The shear stability index (at 30 cycles) of the branched ethylene copolymer in lubricating oil is from about 10% to about 60%, and the kinematic viscosity at 100°C is from about 5 cSt to about 20 cSt. Shear stability index (SSI) is determined according to ASTM D6278 at 30 cycles using a Kurt Orbahn diesel injection apparatus. Kinematic viscosity (KV) is determined according to ASTM D445.

Test Methods for Large Scale polymerizations

**Molecular weight and composition distribution (GPC-IR):** The distribution and the moments of molecular weight (e.g., Mn, Mw, Mz ) and the comonomer distribution ($C_2$, $C_3$, $C_6$, etc.), are determined with a high temperature Gel Permeation Chromatography (PolymerChar GPC-IR) equipped with a multiple-channel band filter based infrared detector ensemble IR5, in which a broad-band channel is used to measure the polymer concentration while two narrow-band channels are used for characterizing composition. Three Agilent PLgel 10μm Mixed-B LS columns are used to provide polymer separation. Aldrich reagent grade 1,2,4-trichlorobenzene (TCB) with 300 ppm antioxidant butylated hydroxytoluene (BHT) is used as the mobile phase. The TCB mixture is filtered through a 0.1 micrometer Teflon filter and degassed with an online degasser before entering the GPC instrument. The nominal flow rate is 1.0 mL/min and the nominal injection volume is 200 microliter. The whole system including transfer lines, columns, detectors are contained in an oven maintained at 145°C. Given amount of polymer sample is weighed and sealed in a standard vial with 10 microliter flow marker (Heptane) added to it. After loading the vial in the autosampler, polymer is automatically dissolved in the instrument with 8 mL added TCB solvent. The polymer is dissolved at 160°C with continuous shaking for about 1 hour for most PE samples or 2 hour for PP samples. The TCB densities used in concentration calculation are 1.463 g/ml at room temperature and 1.284 g/ml at 145°C. The sample solution concentration is from 0.2 to 2.0 mg/ml, with lower concentrations being used for higher molecular weight samples.

The concentration, c, at each point in the chromatogram is calculated from the baseline-subtracted IR5 broadband signal, I, using the following equation:

$$c = \alpha I$$

where α is the mass constant determined with PE standard NBS1475. The mass recovery is calculated from the ratio of the integrated area of the concentration chromatography over elution volume and the injection mass which is equal to the predetermined concentration multiplied by injection loop volume.

The molecular weight is determined by combining universal calibration relationship with the column calibration which is performed with a series of mono-dispersed polystyrene (PS) standards. The molecular weight is calculated at each elution volume with following equation;

$$\log M_X = \frac{\log(K_X / K_{PS})}{a_X + 1} + \frac{a_{PS} + 1}{a_X + 1} \log M_{PS}$$

where K and α are the coefficients in the Mark-Houwink equation. The variables with subscript "X" stand for the test sample while those with subscript "PS" stand for polystyrene. In this method, $a_{PS}$ = 0.67 and $K_{PS}$ = 0.000175 while $a_X$ and $K_X$ are determined based on the composition of linear ethylene/propylene copolymer and linear ethylene-propylene-diene terpolymers using a standard calibration procedure. The comonomer composition is determined by the ratio of the IR detector intensity corresponding to $CH_2$ and $CH_3$ channel calibrated with a series of PE and PP homo/copolymer standards whose nominal value are predetermined by NMR.

The LS detector is the 18-angle Wyatt Technology High Temperature DAWN HELEOSII. The LS molecular weight (*M*) at each point in the chromatogram is determined by analyzing the LS output using the Zimm model for static light scattering (Light Scattering from Polymer Solutions; Huglin, M. B., Ed.; Academic Press, 1972.):

$$\frac{K_o c}{\Delta R(\theta)} = \frac{1}{MP(\theta)} + 2A_2 c$$

Here, ΔR(θ) is the measured excess Rayleigh scattering intensity at scattering angle θ, c is the polymer concentration determined from the IR5 analysis, $A_2$ is the second virial coefficient, P(θ) is the form factor for a monodisperse random coil, and $K_o$ is the optical constant for the system:

$$K_o = \frac{4\pi^2 n^2 (dn/dc)^2}{\lambda^4 N_A}$$

where $N_A$ is Avogadro's number, and (dn/dc) is the refractive index increment for the system. The refractive index, n=1.500 for TCB at 145°C and $\lambda$=665 nm. For analyzing polyethylene homopolymers, ethylene-hexene copolymers, and ethylene-octene copolymers, dn/dc=0.1048 ml/mg and $A_2$=0.0015; for analyzing ethylene-butene copolymers, dn/dc=0.1048*(1-0.00126*w2) ml/mg and $A_2$=0.0015 where w2 is weight percent butene comonomer.

A high temperature Agilent (or Viscotek Corporation) viscometer, which has four capillaries arranged in a Wheatstone bridge configuration with two pressure transducers, is used to determine specific viscosity. One transducer measures the total pressure drop across the detector, and the other, positioned between the two sides of the bridge, measures a differential pressure. The specific viscosity, $\eta_S$ for the solution flowing through the viscometer is calculated from their outputs. The intrinsic viscosity, [$\eta$], at each point in the chromatogram is calculated from the equation [$\eta$]= $\eta_S$/c, where c is concentration and is determined from the IR5 broadband channel output. The viscosity MW at each point is calculated as

$$M = K_{PS} M^{\alpha_{PS}+1} / [\eta],$$

where $\alpha_{ps}$ is 0.67 and $K_{PS}$ is 0.000175.

The branching index ($g'_{vis}$) is calculated using the output of the GPC-IR5-LS-VIS method as follows. The average intrinsic viscosity, $[\eta]_{avg}$, of the sample is calculated by:

$$[\eta]_{avg} = \frac{\sum c_i [\eta]_i}{\sum c_i}$$

where the summations are over the chromatographic slices, i, between the integration limits.

The branching index $g'_{vis}$ is defined as

$$g'_{vis} = \frac{[\eta]_{avg}}{K M_v^{\alpha}},$$

where $M_V$ is the viscosity-average molecular weight based on molecular weights determined by LS analysis and the K and $\alpha$ are for the reference linear polymer, which are, for purposes of the present disclosure, $\alpha$ = 0.695 and K = 0.000579 for linear ethylene polymers, $\alpha$ = 0.705 and K = 0.0002288 for linear propylene polymers, $\alpha$ = 0.695 and K = 0.000181 for linear butene polymers, $\alpha$ is 0.695 and K is 0.000579*(1-0.0087*w2b+0.000018*(w2b)^2) for ethylene butene copolymer where w2b is a bulk weight percent of butene comonomer, $\alpha$ is 0.695 and K is 0.000579*(1-0.0075*w2b) for ethylene-hexene copolymer where w2b is a bulk weight percent of hexene comonomer, and $\alpha$ is 0.695 and K is 0.000579*(1-0.0077*w2b) for ethylene octene copolymer where w2b is a bulk weight percent of octene comonomer. Concentrations are expressed in $g/cm^3$, molecular weight is expressed in g/mole, and intrinsic viscosity (hence K in the Mark-Houwink equation) is expressed in dL/g unless otherwise noted. Calculation of the w2b values is as discussed above.

Experimental and analysis details not described above, including how the detectors are calibrated and how to calculate the composition dependence of Mark-Houwink parameters and the second-virial coefficient, are described by T. Sun, P. Brant, R. R. Chance, and W. W. Graessley (Macromolecules, 2001, v.34(19), pp. 6812-6820).

Peak melting point, Tm, (also referred to as melting point), peak crystallization temperature, Tc, (also referred to as crystallization temperature), glass transition temperature (Tg), heat of fusion ($\Delta$Hf or Hf), and percent crystallinity were determined using the following DSC procedure according to ASTM D3418-03. Differential scanning calorimetric (DSC) data were obtained using a TA Instruments model DSC2500 machine. Samples weighing approximately 5-10 mg were sealed in an aluminum hermetic sample pan. The DSC data were recorded by first gradually heating the sample to 200°C at a rate of 10°C/minute. The sample was kept at 200°C for 2 minutes, then cooled to -90°C at a rate of 10°C/minute, followed by an isothermal for 2 minutes and heating to 200°C at 10°C/minute. Both the first and second cycle thermal events were recorded. Areas under the endothermic peaks were measured and used to determine the heat of fusion and the percent of crystallinity. The percent crystallinity is calculated using the formula, [area under the melting peak (Joules/gram) / B (Joules/gram)] * 100, where B is the heat of fusion for the 100% crystalline homopolymer of the major monomer component. These values for B are to be obtained from the Polymer Handbook, Fourth Edition, published by John Wiley and Sons, New York 1999, provided; however, that a value of 189 J/g (B) is used as the heat of fusion for 100% crystalline polypropylene, a value of 290 J/g is used for the heat of fusion for 100% crystalline polyethylene. The melting and

crystallization temperatures reported here were obtained during the second heating/cooling cycle unless otherwise noted.

For polymers displaying multiple endothermic and exothermic peaks, all the peak crystallization temperatures and peak melting temperatures were reported. The heat of fusion for each endothermic peak was calculated individually. The percent crystallinity is calculated using the sum of heat of fusions from all endothermic peaks. Some of the polymer blends produced show a secondary melting/cooling peak overlapping with the principal peak, which peaks are considered together as a single melting/cooling peak. The highest of these peaks is considered the peak melting temperature/-crystallization point. For the amorphous polymers, having comparatively low levels of crystallinity, the melting temperature is typically measured and reported during the first heating cycle. Prior to the DSC measurement, the sample was aged (typically by holding it at ambient temperature for a period of 2 days) or annealed to maximize the level of crystallinity.

Melt index ($I_2$) was determined according to ASTM D1238 using a load of 2.16 kg at a temperature of 190°C. The melt index at the high load condition ($I_{21}$) was determined according to ASTM D1238 using a load of 21.6 kg at a temperature of 190°C.

Density is determined according to ASTM D1505 using a density-gradient column, as described in ASTM D 1505, on a compression-molded specimen that has been slowly cooled to room temperature (i.e., over a period of 10 minutes or more) and allowed to age for a sufficient time that the density is constant within +/- 0.001 g/cm$^3$.

Experimental

Catalyst used in the polymerization reported herein were synthesized according to procedures reported in US 2020-0255553, USSN 62/972953, USSN 62/972936, US 2020-0255555, US 2020-0254431, and US 2020-0255556.

Cat-Hf (Complex 5) and Cat-Zr (Complex 6) and complex 66 were prepared as follows:

Starting materials

2-Isopropoxy-4,4,5,5-tetramethyl-1,3,2-dioxaborolane (Aldrich), 2,6-dibromopyridine (Aldrich), 2-bromoiodobenzene (Acros), 2.5 M $^n$BuLi in hexanes (Chemetall GmbH), $Pd(PPh_3)_4$ (Aldrich), methoxymethyl chloride (Aldrich), NaH (60% wt. in mineral oil, Aldrich), THF (Merck), ethyl acetate (Merck), methanol (Merck), toluene (Merck), hexanes (Merck), dichloromethane (Merck), $HfCl_4$ (<0.05% Zr, Strem), $ZrCl_4$ (Strem), $Cs_2CO_3$ (Merck), $K_2CO_3$ (Merck), $Na_2SO_4$ (Akzo Nobel), silica gel 60 (40-63 um; Merck), $CDCl_3$ (Deutero GmbH) were used as received. Benzene-$d_6$ (Deutero GmbH) and dichloromethane-$d_2$ (Deutero GmbH) were dried over MS 4A prior use. THF for organometallic synthesis was freshly distilled from sodium benzophenone ketyl. Toluene and hexanes for organometallic synthesis were dried over MS 4A. 2-(Adamantan-1-yl)-4-(*tert*-butyl)phenol was prepared from 4-tert-butylphenol (Merck) and adamantanol-1 (Aldrich) as described in Organic Letters, 2015, 17(9), 2242-2245.

**2-(Adamantan-1-yl)-6-bromo-4-(*tert*-butyl)phenol**

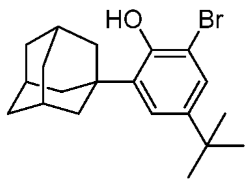

To a solution of 57.6 g (203 mmol) of 2-(adamantan-1-yl)-4-(tert-butyl)phenol in 400 mL of chloroform a solution of 10.4 mL (203 mmol) of bromine in 200 mL of chloroform was added dropwise for 30 minutes at room temperature. The resulting mixture was diluted with 400 mL of water. The obtained mixture was extracted with dichloromethane (3 x 100 mL), the combined organic extract was washed with 5% $NaHCO_3$, dried over $Na_2SO_4$, and then evaporated to dryness. Yield 71.6 g (97%) of a white solid. $^1$H NMR ($CDCl_3$, 400 MHz): $\delta$ 7.32 (d, J = 2.3 Hz, 1 H), 7.19 (d, J = 2.3 Hz, 1 H), 5.65 (s, 1 H), 2.18 - 2.03 (m, 9 H), 1.78 (m, 6 H), 1.29 (s, 9 H). $^{13}$C NMR ($CDCl_3$, 100 MHz): $\delta$ 148.07, 143.75, 137.00, 126.04, 123.62, 112.11, 40.24, 37.67, 37.01, 34.46, 31.47, 29.03.

**1-(3-bromo-5-(tert-butyl)-2-(methoxymethoxy)phenyl)adamantane**

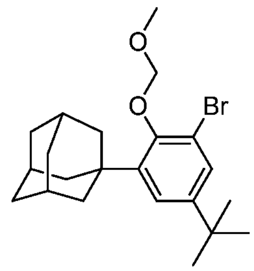

To a solution of 71.6 g (197 mmol) of 2-(adamantan-1-yl)-6-bromo-4-(*tert*-butyl)phenol in 1000 mL of THF 8.28 g (207 mmol, 60% wt. in mineral oil) of sodium hydride was added portionwise at room temperature. To the resulting suspension 16.5 mL (217 mmol) of methoxymethyl chloride was added dropwise for 10 minutes at room temperature. The obtained mixture was stirred overnight, then poured into 1,000 mL of water. The obtained mixture was extracted with dichloromethane (3 x 300 mL), the combined organic extract was washed with 5% $NaHCO_3$, dried over $Na_2SO_4$ and then evaporated to dryness. Yield 80.3 g (~quant.) of a white solid. $^1H$ NMR ($CDCl_3$, 400 MHz): $\delta$ 7.39 (d, J = 2.4 Hz, 1 H), 7.27 (d, J = 2.4 Hz, 1 H), 5.23 (s, 2 H), 3.71 (s, 3 H), 2.20 - 2.04 (m, 9 H), 1.82 - 1.74 (m, 6 H), 1.29 (s, 9 H). $^{13}C$ NMR ($CDCl_3$, 100 MHz): $\delta$ 150.88, 147.47, 144.42, 128.46, 123.72, 117.46, 99.53, 57.74, 41.31, 38.05, 36.85, 34.58, 31.30, 29.08.

**(2-(3-Adamantan-1-yl)-5-(*tert*-butyl)-2-(methoxymethoxy)phenyl)-4,4,5,5-tetramethyl-1,3,2-dioxaborolane**

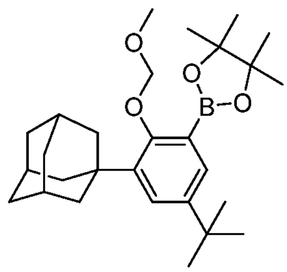

To a solution of 22.5 g (55.0 mmol) of 1-(3-bromo-5-(tert-butyl)-2-(methoxymethoxy)phenyl)adamantane in 300 mL of dry THF 23.2 mL (57.9 mmol, 2.5 M) of $^nBuLi$ in hexanes was added dropwise for 20 minutes at -80°C. The reaction mixture was stirred at this temperature for 1 hour followed by addition of 14.5 mL (71.7 mmol) of 2-isopropoxy-4,4,5,5-tetramethyl-1,3,2-dioxaborolane. The obtained suspension was stirred at room temperature for 1 hour, then poured into 300 mL of water. The obtained mixture was extracted with dichloromethane (3 x 300 mL), the combined organic extract was dried over $Na_2SO_4$, and then evaporated to dryness. Yield 25.0 g (~quant.) of a colorless viscous oil. $^1H$ NMR ($CDCl_3$, 400 MHz): $\delta$ 7.54 (d, J = 2.5 Hz, 1 H), 7.43 (d, J = 2.6 Hz, 1 H), 5.18 (s, 2 H), 3.60 (s, 3 H), 2.24 - 2.13 (m, 6 H), 2.09 (br. s., 3 H), 1.85 - 1.75 (m, 6 H), 1.37 (s, 12 H), 1.33 (s, 9 H). $^{13}C$ NMR ($CDCl_3$, 100 MHz): $\delta$ 159.64, 144.48, 140.55, 130.58, 127.47, 100.81, 83.48, 57.63, 41.24, 37.29, 37.05, 34.40, 31.50, 29.16, 24.79.

**1-(2'-Bromo-5-(tert-butyl)-2-(methoxymethoxy)-[1,1'-biphenyl]-3-yl)adamantane**

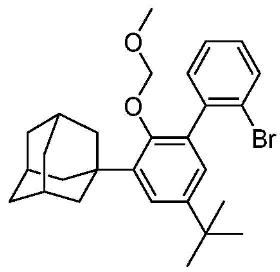

To a solution of 25.0 g (55.0 mmol) of (2-(3-adamantan-1-yl)-5-(tert-butyl)-2-(methoxymethoxy)phenyl)-4,4,5,5-tetramethyl-1,3,2-dioxaborolane in 200 mL of dioxane 15.6 g (55.0 mmol) of 2-bromoiodobenzene, 19.0 g (137 mmol) of

potassium carbonate, and 100 mL of water were subsequently added. The mixture obtained was purged with argon for 10 minutes followed by addition of 3.20 g (2.75 mmol) of $Pd(PPh_3)_4$. Thus obtained mixture was stirred for 12 hours at 100°C, then cooled to room temperature and diluted with 100 mL of water. The obtained mixture was extracted with dichloromethane (3 x 100 mL), the combined organic extract was dried over $Na_2SO_4$ and then evaporated to dryness. The residue was purified by flash chromatography on silica gel 60 (40-63 um, eluent: hexane-dichloromethane = 10:1, vol.). Yield 23.5 g (88%) of a white solid. $^1H$ NMR ($CDCl_3$, 400 MHz): $\delta$ 7.68 (dd, J = 1.0, 8.0 Hz, 1 H), 7.42 (dd, J = 1.7, 7.6 Hz, 1 H), 7.37 - 7.32 (m, 2 H), 7.20 (dt, J = 1.8, 7.7 Hz, 1 H), 7.08 (d, J = 2.5 Hz, 1 H), 4.53 (d, J = 4.6 Hz, 1 H), 4.40 (d, J = 4.6 Hz, 1 H), 3.20 (s, 3 H), 2.23 - 2.14 (m, 6 H), 2.10 (br. s., 3 H), 1.86 - 1.70 (m, 6 H), 1.33 (s, 9 H). $^{13}C$ NMR ($CDCl_3$, 100 MHz): $\delta$ 151.28, 145.09, 142.09, 141.47, 133.90, 132.93, 132.41, 128.55, 127.06, 126.81, 124.18, 123.87, 98.83, 57.07, 41.31, 37.55, 37.01, 34.60, 31.49, 29.17.

**2-(3'-(Adamantan-1-yl)-5'-(*tert*-butyl)-2'-(methoxymethoxy)-[1,1'-biphenyl]-2-yl)-4,4,5,5-tetramethyl-1,3,2-dioxaborolane**

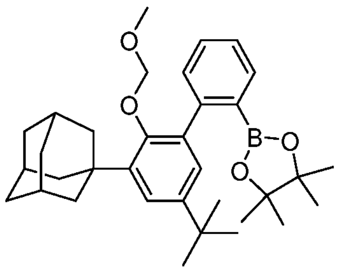

To a solution of 30.0 g (62.1 mmol) of 1-(2'-bromo-5-(tert-butyl)-2-(methoxymethoxy)-[1,1'-biphenyl]-3-yl)adamantane in 500 mL of dry THF 25.6 mL (63.9 mmol, 2.5 M) of $^nBuLi$ in hexanes was added dropwise for 20 minutes at -80°C. The reaction mixture was stirred at this temperature for 1 hour followed by addition of 16.5 mL (80.7 mmol) of 2-isopropoxy-4,4,5,5-tetramethyl-1,3,2-dioxaborolane. The obtained suspension was stirred at room temperature for 1 hour, then poured into 300 mL of water. The obtained mixture was extracted with dichloromethane (3 x 300 mL), the combined organic extract was dried over $Na_2SO_4$ and then evaporated to dryness. Yield 32.9 g (~quant.) of a colorless glassy solid. $^1H$ NMR ($CDCl_3$, 400 MHz): $\delta$ 7.75 (d, J = 7.3 Hz, 1 H), 7.44 - 7.36 (m, 1 H), 7.36 - 7.30 (m, 2 H), 7.30 - 7.26 (m, 1 H), 6.96 (d, J = 2.4 Hz, 1 H), 4.53 (d, J = 4.7 Hz, 1 H), 4.37 (d, J = 4.7 Hz, 1 H), 3.22 (s, 3 H), 2.26 - 2.14 (m, 6 H), 2.09 (br. s., 3 H), 1.85 - 1.71 (m, 6 H), 1.30 (s, 9 H), 1.15 (s, 6 H), 1.10 (s, 6 H). $^{13}C$ NMR ($CDCl_3$, 100 MHz): $\delta$ 151.35, 146.48, 144.32, 141.26, 136.15, 134.38, 130.44, 129.78, 126.75, 126.04, 123.13, 98.60, 83.32, 57.08, 41.50, 37.51, 37.09, 34.49, 31.57, 29.26, 24.92, 24.21.

**(2',2'''-(Pyridine-2,6-diyl)bis((3-adamantan-1-yl)-5-(tert-butyl)-[1,1'-biphenyl]-2-ol))**

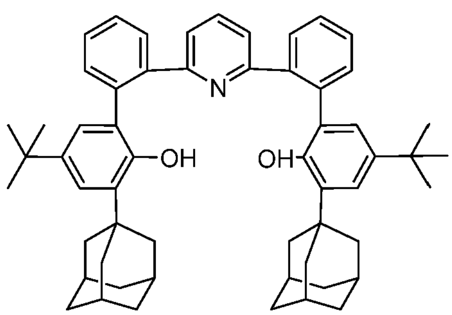

To a solution of 32.9 g (62.0 mmol) of 2-(3'-(adamantan-1-yl)-5'-(tert-butyl)-2'-(methoxymethoxy)-[1,1'-biphenyl]-2-yl)-4,4,5,5-tetramethyl-1,3,2-dioxaborolane in 140 mL of dioxane 7.35 g (31.0 mmol) of 2,6-dibromopyridine, 50.5 g (155 mmol) of cesium carbonate and 70 mL of water were subsequently added. The mixture obtained was purged with argon for 10 minutes followed by addition of 3.50 g (3.10 mmol) of $Pd(PPh_3)_4$. This mixture was stirred for 12 hours at 100°C, then cooled to room temperature and diluted with 50 mL of water. The obtained mixture was extracted with

dichloromethane (3 x 50 mL), the combined organic extract was dried over $Na_2SO_4$ and then evaporated to dryness. To the resulting oil 300 mL of THF, 300 mL of methanol, and 21 mL of 12 N HCl were subsequently added. The reaction mixture was stirred overnight at 60°C and then poured into 500 mL of water. The obtained mixture was extracted with dichloromethane (3 x 350 mL), the combined organic extract was washed with 5% $NaHCO_3$, dried over $Na_2SO_4$, and then evaporated to dryness. The residue was purified by flash chromatography on silica gel 60 (40-63 um, eluent: hexane-ethyl acetate = 10:1, vol.). The obtained glassy solid was triturated with 70 mL of n-pentane, the precipitate obtained was filtered off, washed with 2 x 20 mL of n-pentane, and dried in vacuo. Yield 21.5 g (87%) of a mixture of two isomers as a white powder. $^1H$ NMR ($CDCl_3$, 400 MHz): $\delta$ 8.10 + 6.59 (2s, 2H), 7.53 - 7.38 (m, 10H), 7.09 + 7.08 (2d, J = 2.4 Hz, 2H), 7.04 + 6.97 (2d, J = 7.8 Hz, 2H), 6.95 + 6.54 (2d, J = 2.4 Hz), 2.03 - 1.79 (m, 18H), 1.74 - 1.59 (m, 12H), 1.16 + 1.01 (2s, 18H). $^{13}C$ NMR ($CDCl_3$, 100 MHz, minor isomer shifts labeled with *): $\delta$ 157.86, 157.72*, 150.01, 149.23*, 141.82*, 141.77, 139.65*, 139.42, 137.92, 137.43, 137.32*, 136.80, 136.67*, 136.29*, 131.98*, 131.72, 130.81, 130.37*, 129.80, 129.09*, 128.91, 128.81*, 127.82*, 127.67, 126.40, 125.65*, 122.99*, 122.78, 122.47, 122.07*, 40.48, 40.37*, 37.04, 36.89*, 34.19*, 34.01, 31.47, 29.12, 29.07*.

**Dimethylhafnium(2',2'''-(pyridine-2,6-diyl)bis((3-adamantan-1-yl)-5-(tert-butyl)-[1,1'-biphenyl]-2-olate)) (Cat-Hf; Complex 5)**

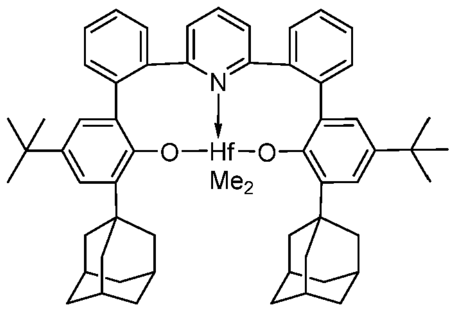

To a suspension of 3.22 g (10.05 mmol) of hafnium tetrachloride (<0.05% Zr) in 250 mL of dry toluene 14.6 mL (42.2 mmol, 2.9 M) of MeMgBr in diethyl ether was added in one portion via syringe at 0°C. The resulting suspension was stirred for 1 minute, and 8.00 g (10.05 mmol) of (2',2'''-(pyridine-2,6-diyl)bis((3-adamantan-1-yl)-5-(tert-butyl)-[1,1'-biphenyl]-2-ol)) was added portionwise for 1 minute. The reaction mixture was stirred for 36 hours at room temperature and then evaporated to near dryness. The solid obtained was extracted with 2 x 100 mL of hot toluene, and the combined organic extract was filtered through a thin pad of Celite 503. Next, the filtrate was evaporated to dryness. The residue was triturated with 50 mL of n-hexane, the obtained precipitate was filtered off (G3), washed with 20 mL of n-hexane (2 x 20 mL), and then dried *in vacuo.* Yield 6.66 g (61%, ~1:1 solvate with n-hexane) of a light-beige solid. Anal. Calc. for $C_{59}H_{69}HfNO_2 \times 1.0(C_6H_{14})$: C, 71.70; H, 7.68; N, 1.29. Found: C 71.95; H, 7.83; N 1.18. $^1H$ NMR ($C_6D_6$, 400 MHz): $\delta$ 7.58 (d, J = 2.6 Hz, 2 H), 7.22 - 7.17 (m, 2 H), 7.14 - 7.08 (m, 4 H), 7.07 (d, J = 2.5 Hz, 2 H), 7.00 - 6.96 (m, 2 H), 6.48 - 6.33 (m, 3 H), 2.62 - 2.51 (m, 6H), 2.47 - 2.35 (m, 6H), 2.19 (br.s, 6H), 2.06 - 1.95 (m, 6H), 1.92 - 1.78 (m, 6H), 1.34 (s, 18 H), -0.12 (s, 6 H). $^{13}C$ NMR ($C_6D_6$, 100 MHz): $\delta$ 159.74, 157.86, 143.93, 140.49, 139.57, 138.58, 133.87, 133.00, 132.61, 131.60, 131.44, 127.98, 125.71, 124.99, 124.73, 51.09, 41.95, 38.49, 37.86, 34.79, 32.35, 30.03.

**Dimethylzirconium(2',2'''-(pyridine-2,6-diyl)bis((3-adamantan-1-yl)-5-(tert-butyl)-[1,1'-biphenyl]-2-olate)) (Cat-Zr; Complex 6)**

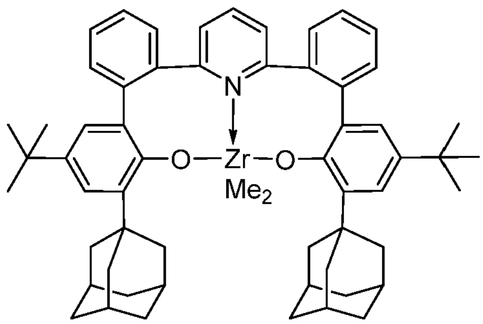

To a suspension of 2.92 g (12.56 mmol) of zirconium tetrachloride in 300 mL of dry toluene 18.2 mL (52.7 mmol, 2.9 M) of MeMgBr in diethyl ether was added in one portion via syringe at 0°C. To the resulting suspension 10.00 g (12.56 mmol) of (2',2'''-(pyridine-2,6-diyl)bis((3-adamantan-1-yl)-5-(tert-butyl)-[1,1'-biphenyl]-2-ol)) was immediately added in one portion. The reaction mixture was stirred for 2 hours at room temperature and then evaporated to near dryness. The solid obtained was extracted with 2 x 100 mL of hot toluene, and the combined organic extract was filtered through a thin pad of Celite 503. Next, the filtrate was evaporated to dryness. The residue was triturated with 50 mL of n-hexane, the obtained precipitate was filtered off (G3), washed with n-hexane (2 x 20 mL), and then dried *in vacuo.* Yield 8.95 g (74%, ~1:0.5 solvate with n-hexane) of a beige solid. Anal. Calc. for $C_{59}H_{69}ZrNO_2 \times 0.5(C_6H_{14})$: C, 77.69; H, 7.99; N, 1.46. Found: C 77.90; H, 8.15; N 1.36. $^1H$ NMR ($C_6D_6$, 400 MHz): $\delta$ 7.56 (d, J = 2.6 Hz, 2 H), 7.20 - 7.17 (m, 2 H), 7.14 - 7.07 (m, 4 H), 7.07 (d, J = 2.5 Hz, 2 H), 6.98 - 6.94 (m, 2 H), 6.52 - 6.34 (m, 3 H), 2.65 - 2.51 (m, 6H), 2.49 - 2.36 (m, 6H), 2.19 (br.s., 6H), 2.07 - 1.93 (m, 6H), 1.92 - 1.78 (m, 6H), 1.34 (s, 18 H), 0.09 (s, 6 H). $^{13}C$ NMR ($C_6D_6$, 100 MHz): $\delta$ 159.20, 158.22, 143.79, 140.60, 139.55, 138.05, 133.77, 133.38, 133.04, 131.49, 131.32, 127.94, 125.78, 124.65, 124.52, 42.87, 41.99, 38.58, 37.86, 34.82, 32.34, 30.04.

**(3-(adamantan-1-yl)-2-(methoxymethoxy)-5-(2,4,4-trimethylpentan-2-yl)phenyl)lithium**

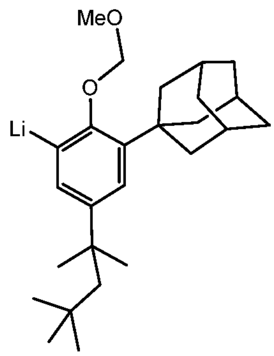

Hexane (100 mL) was added to 1-(2-(methoxymethoxy)-5-(2,4,4-trimethylpentan-2-yl)phenyl)adamantane (12.15 g, 31.59 mmol) to form a clear pale yellow solution. BuLi (12.69 mL, 31.59 mmol) was added dropwise to form a yellow solution. DME (3.284 mL, 31.59 mmol) was added quickly. After stirring overnight white solid was collected on a frit and washed with hexane (3 x 10 mL). The solid was dried under reduced pressure. HNMR analysis indicated the presence of 0.88 equiv. of DME. Used without further purification. Yield: 8.36 g, 56.3 %.

**1-(2'-bromo-2-(methoxymethoxy)-5-(2,4,4-trimethylpentan-2-yl)-[1,1'-biphenyl]-3-yl)adamantane.**

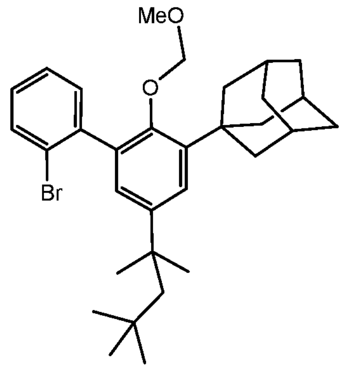

Toluene (120 mL) was added to the (3-(adamantan-1-yl)-2-(methoxymethoxy)-5-(2,4,4-trimethylpentan-2-yl) phenyl)lithium(dme)$_{0.88}$ (8.36 g, 17.79 mmol) to form a suspension. A toluene solution (25 mL) of 1-bromo-2-chlorobenzene (3.747 g, 19.57 mmol) was added dropwise over 3.5 hours. After stirring overnight the cloudy mixture was transferred to a separatory funnel and extracted with water (5 x 50 mL), then brine (2 x 10 mL). The organics were dried over $MgSO_4$, filtered, and evaporated to a pale yellow oil. HNMR indicates the presence of 0.5 equiv. of toluene in the crude product. Used without further purification. Yield: 9.92 g, 95.2%.

**2-(3'-(adamantan-1-yl)-2'-(methoxymethoxy)-5'-(2,4,4-trimethylpentan-2-yl)-[1,1'-biphenyl]-2-yl)-4,4,5,5-tetramethyl-1,3,2-dioxaborolane.**

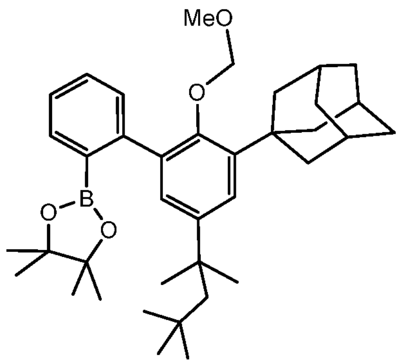

Hexane (200 mL) was added to 1-(2'-bromo-2-(methoxymethoxy)-5-(2,4,4-trimethylpentan-2-yl)-[1,1'-biphenyl]-3-yl)adamantane (9.92 g, 16.94 mmol) to form a clear solution. The mixture was cooled to -40°C and BuLi (6.84 mL, 17.79 mmol) was added dropwise. After stirring for 20 minutes the mixture was removed from the cold bath and allowed to warm to near ambient temperature over 25 minutes. The mixture was then cooled to -40°C and a cold hexane solution (2 mL) of 2-isopropoxy-4,4,5,5-tetramethyl-1,3,2-dioxaborolane (4.964 g, 26.68 mmol) was added in one portion. The mixture was allowed to warm to ambient temperature slowly then stirred at ambient temperature. After 1 hour the cloudy mixture was poured into a separatory funnel and extracted with water (6 x 100 mL) until the aqueous layer was neutral. The organics were the extracted with brine (2 x 20 mL). The organics were dried over MgSO4, filtered, and dried for several days under reduced pressure to afford the product as an amorphous solid. Used without further purification. Yield: 9.197 g, 92.6%.

**2',2'''-(pyridine-2,6-diyl)bis(3-((3r,5r,7r)-adamantan-1-yl)-5-(2,4,4-trimethylpentan-2-yl)-[1",1'''-biphenyl]-2-ol).**

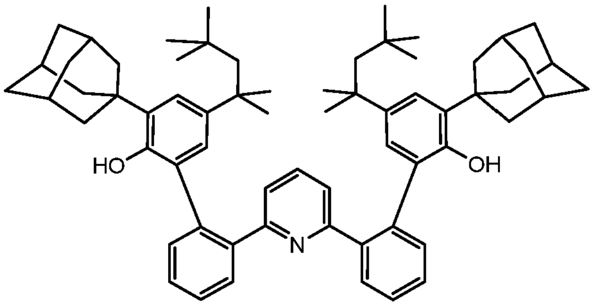

A 500 mL round-bottomed flask was loaded with 2-(3'-(adamantan-1-yl)-2'-(methoxymethoxy)-5'-(2,4,4-trimethylpentan-2-yl)-[1,1'-biphenyl]-2-yl)-4,4,5,5-tetramethyl-1,3,2-dioxaborolane (9.197 g, 15.68 mmol), 2,6-dibromopyridine (1.783 g, 7.525 mol), $Na_2CO_3$ (4.154 g, 39.19 mmol), dioxane (180 mL) and water (90 mL). The mixture was sparged with nitrogen for 50 minutes then solid $Pd(PPh_3)_4$ (0.906 g, 0.784 mmol) was added. The mixture was sparged for an additional 40 minutes, then stirred rapidly and heated in an oil bath maintained at 100°C. After 20 hours the volatiles were evaporated to afford a yellow foamy solid. The solid was broken up and stirred with water (200 mL) for several minutes. The solid was then collected on a frit and washed with water (3 x 200 mL). The yellow solid was then dried under reduced pressure. Methanol (100 mL), thf (100 mL), and concentrated HCl (7 mL) were added and the mixture was heated to 60°C overnight. The volatiles were then evaporated and the residue was extracted with ether (200 mL) and loaded into a separatory funnel. The organics were extracted with dilute $NaHCO_3$ (100 mL), water (4 x 150 mL) and then brine (20 mL). The organics were dried over $MgSO_4$ then evaporated to a foamy yellow solid (8.4 g). Crude product was purified on SiO2, eluted with 1-5% EtOAc in isohexane. Yield: 4.92 g, 72.0%.

**Dichloroziconium(2',2'''-(pyridine-2,6-diyl)bis(3-((3r,5r,7r)-adamantan-1-yl)-5-(2,4,4-trimethylpentan-2-yl)-[1",1'''-biphenyl]-2-olate)) (Complex 66-dichloride).**

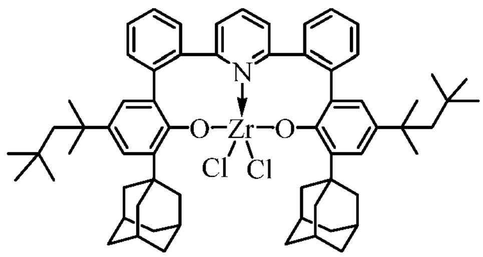

Benzene (4 mL) was added to $ZrCl_2(NMe_2)_2(dme)$ (0.0374 g, 0.110 mmol) to form a slightly cloudy solution. Then 2',2'''-(pyridine-2,6-diyl)bis(3-((3r,5r,7r)-adamantan-1-yl)-5-(2,4,4-trimethylpentan-2-yl)-[1",1'''-biphenyl]-2-ol) (0.0998 g, 0.110 mmol) and a little toluene (2 mL) were added and the mixture was stirred at 35°C. After 30 minutes an aliquot was taken for HNMR analysis, which showed fairly clean formation of the presumed dichloride. The solution was then heated to 80°C for 25 minutes. The volatiles were evaporated and the residue was dried under reduced pressure. The residue was extracted with hot isohexane (8 mL) and filtered. The volatiles were evaporated to afford a white solid that was dried under reduced pressure at 80°C for about 5 minutes. Yield: 0.0948 g, 80.7%.

**Dimethylziconium(2',2'''-(pyridine-2,6-diyl)bis(3-((3r,5r,7r)-adamantan-1-yl)-5-(2,4,4-trimethylpentan-2-yl)-[1",1'''-biphenyl]-2-olate)) (Complex 66).**

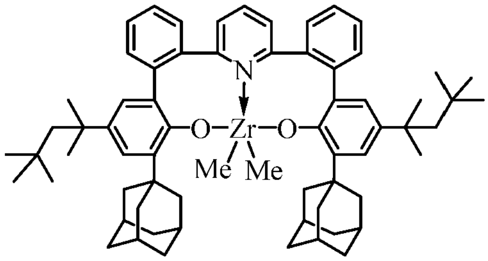

Toluene (6 mL) was added to complex 33-dichloride (0.0948 g, 0.0887 mmol) to form a clear colorless solution. The mixture was cooled to -15°C and MeMgBr (0.0995 mL, 0.326 mmol) was added. The mixture was allowed to warm to ambient temperature over about 15 minutes. After an hour the solution was evaporated to a residue and a little isohexane (1 mL) was added. The mixture was stirred and evaporated. A little isohexane (1 mL) was added to dissolve the residue and the volatiles were then evaporated again. Then the residue was dried under reduced pressure. The residue was then extracted with isohexane (10 mL), filtered through Celite 503, evaporated to a residue and dried under reduced pressure. Scraping the vial afforded complex 33 as a pale brown solid. Yield: 0.0819 g, 90.0%.

The following complexes were used in the small and large scale polymerization runs. Complex numbers indicated correspond to the Cat-ID number.

| | | |
|---|---|---|
| 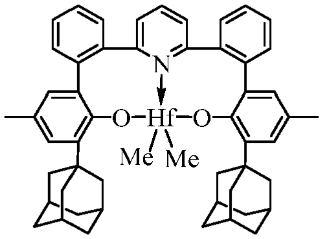 Complex 1 | 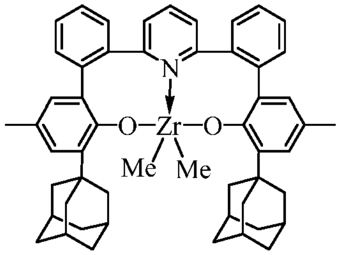 Complex 3 | 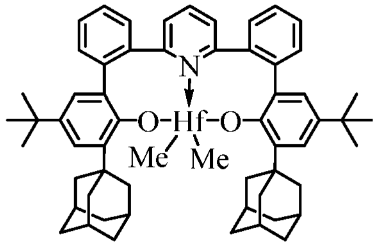 Complex 5 |
| 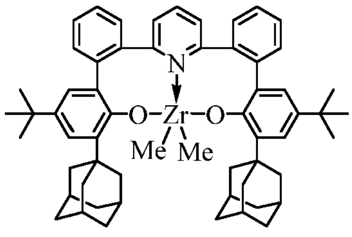 Complex 6 | 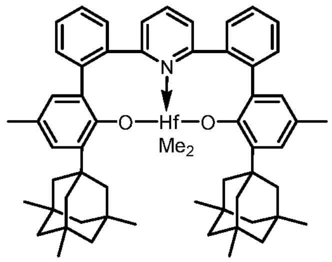 Complex 48 | 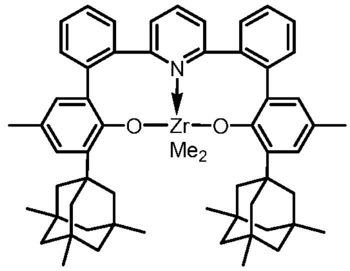 Complex 49 |
| 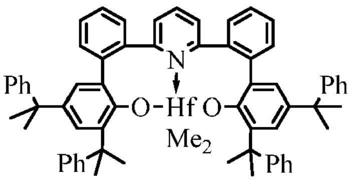 Complex 33 | 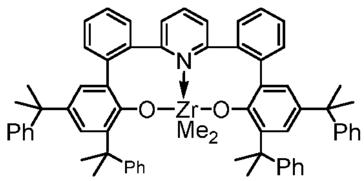 Complex 65 | 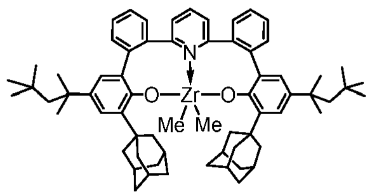 Complex 66 |

The following comparative complexes were used in the following small scale polymerization runs. C-# indicates the catalyst ID (Cat-ID).

| | | |
|---|---|---|
| 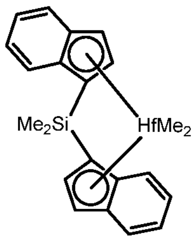 C-1 | 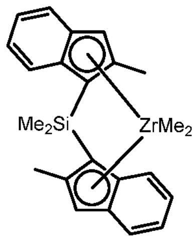 C-2 | 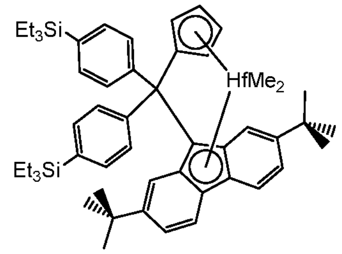 C-3 |
| 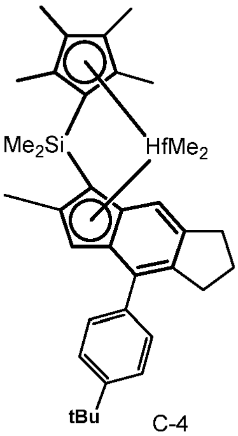 C-4 | 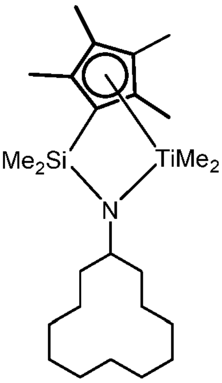 C-5 | 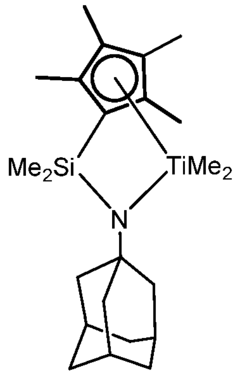 C-6 |
| 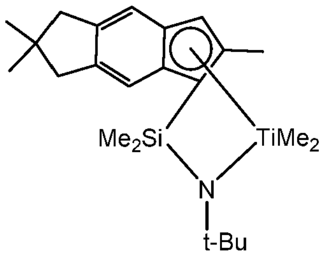 C-7 | 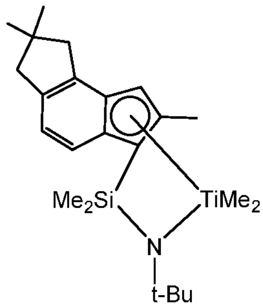 C-8 | |

***Small Scale Polymerization Examples.***

Solvents, polymerization grade toluene and/or isohexanes were supplied by ExxonMobil Chemical Company and were purified by passing through a series of columns: two 500 $cm^3$ Oxyclear cylinders in series from Labclear (Oakland, California), followed by two 500 $cm^3$ columns in series packed with dried 3 Å molecular sieves (8 mesh - 12 mesh; Aldrich Chemical Company), and two 500 $cm^3$ columns in series packed with dried 5 Å molecular sieves (8-12 mesh; Aldrich Chemical Company).

2-Norbornene (NB, Aldrich Chemical Company) was diluted with toluene, sparged with nitrogen and then passed down a column of Brockman basic alumina (Aldrich Chemical Company). The final solution concentrations were 42 wt% or 78 wt% in toluene. Cyclopentene (cP, Aldrich Chemical Company) was sparged with nitrogen and passed down a column of neutral alumina and stored over mole sieves. Tri-(n-octyl)aluminum (TNOA or TnOAl) was purchased from either Aldrich Chemical Company or Akzo Nobel and used as received.

Polymerization grade ethylene was further purified by passing it through a series of columns: 500 $cm^3$ Oxyclear cylinder from Labclear (Oakland, California) followed by a 500 $cm^3$ column packed with dried 3 Å molecular sieves (8 mesh - 12 mesh; Aldrich Chemical Company), and a 500 $cm^3$ column packed with dried 5 Å molecular sieves (8 mesh - 12 mesh; Aldrich Chemical Company).

Polymerization grade propylene was further purified by passing it through a series of columns: 2,250 $cm^3$ Oxyclear cylinder from Labclear followed by a 2,250 $cm^3$ column packed with 3 Å molecular sieves (8 mesh - 12 mesh; Aldrich Chemical Company), then two 500 $cm^3$ columns in series packed with 5 Å molecular sieves (8 mesh - 12 mesh; Aldrich Chemical Company), a 500 $cm^3$ column packed with Selexsorb CD (BASF), and finally a 500 $cm^3$ column packed

with Selexsorb COS (BASF).

N,N-Dimethyanilinium tetrakis(pentafluorophenyl)borate was purchased from Boulder Scientific or W.R. Grace. N,N-dimethylanilinium tetrakis(perfluoronaphthalen-2-yl)borate was purchased from W.R. Grace. All complexes and the activators were added to the reactor as dilute solutions in toluene. The concentrations of the solutions of activator, scavenger, and complexes that were added to the reactor were chosen so that between 40 microliters - 200 microliters of the solution were added to the reactor to ensure accurate delivery.

Reactor Description and Preparation. Polymerizations were conducted in an inert atmosphere ($N_2$) drybox using autoclaves equipped with an external heater for temperature control, glass inserts (internal volume of reactor = 23.5 mL for $C_2$ containing runs; 22.5 mL for $C_3$ containing runs), septum inlets, regulated supply of nitrogen, ethylene and propylene, and equipped with disposable polyether ether ketone mechanical stirrers (800 RPM). The autoclaves were prepared by purging with dry nitrogen at 110°C or 115°C for 5 hours and then at 25°C for 5 hours.

Ethylene Polymerization (PE, comparative), Ethylene/Cyclic Olefin Copolymerizations (E-cP or E-NB) and Cyclic Olefin Homopolymerizations (p-cP). The reactor was prepared as described above, and then purged with ethylene, or alternatively nitrogen for reactors not utilizing ethylene. Isohexane (solvent unless stated otherwise), and cyclic comonomer were added via syringe at room temperature and atmospheric pressure. The reactor was then brought to process temperature (typically 100°C) and charged with ethylene (if used) while stirring at 800 RPM. A scavenger solution (e.g., TNOA in isohexane or toluene) was then added via syringe to the reactor at process conditions. Non-coordinating activator (e.g. N,N-dimethylanilinium tetrakis(pentafluorophenyl)borate) solution (in toluene) was added via syringe to the reactor at process conditions, followed by a pre-catalyst (i.e., complex or catalyst, identified by Cat ID) solution (in toluene) via syringe to the reactor at process conditions. If used, ethylene was allowed to enter (through the use of computer controlled solenoid valves) the autoclaves during polymerization to maintain reactor gauge pressure (+/-2 psi). Reactor temperature was monitored and typically maintained within +/-1°C. Polymerizations were halted by addition of approximately 50 psi compressed dry air gas mixture to the autoclaves for approximately 30 seconds. The polymerizations were quenched after either a predetermined cumulative amount of ethylene had been added (when used) or for a maximum number of minutes of polymerization time. The reactors were cooled and vented. The polymer was isolated after the solvent was removed *in-vacuo.* Yields reported include total weight of polymer and residual catalyst. Catalyst activity is reported as grams of polymer per mmol transition metal compound per hour of reaction time (g/mmol/hr). A "C#" indicates a comparative example. Microliters ($\mu$l or $\mu$L) are reported as uL or ul in the tables below.

Propylene Polymerization (PP, comparative) and Propylene/Cyclic Olefin Copolymerization (P-cP or P-NB). The reactor was prepared as described above, then heated to 40°C and purged with propylene gas at atmospheric pressure. Isohexane (solvent unless stated otherwise), cyclic comonomer, and liquid propylene were added via syringe. The reactor was then heated to process temperature (typically 100°C) while stirring at 800 RPM. Then scavenger solution (e.g., TNOA in isohexane or toluene) was added via syringe to the reactor at process conditions. Non-coordinating activator (e.g., N,N-dimethylanilinium tetrakis(pentafluorophenyl)borate or N,N-dimethylanilinium tetrakis(perfluoronaphthalen-2-yl)borate) solution (in toluene) was then added via syringe to the reactor at process conditions, followed by a pre-catalyst (i.e., complex or catalyst, identified by Cat ID) solution (in toluene) via syringe to the reactor at process conditions. Reactor temperature was monitored and typically maintained within +/-1°C. Polymerizations were halted by addition of approximately 50 psi compressed dry air unless mentioned otherwise (alternatively, when mentioned, $CO_2$) gas mixture to the autoclaves for approximately 30 seconds. The polymerizations were quenched based on a predetermined pressure loss of approximately 8 psi (unless mentioned otherwise) or for a maximum of 30 minutes polymerization time (unless mentioned otherwise). The reactors were cooled and vented. The polymer was isolated after the solvent was removed *in-vacuo.* Yields reported include total weight of polymer and residual catalyst. Catalyst activities are typically reported as grams of polymer per mmol transition metal compound per hour of reaction time (g/mmol/hr).

Quench time (s, seconds) is the actual time of the polymerization, and is determined by maximum uptake (quench value) as indicated or by maximum quench time. Quench value (psi) is the set value for ethylene uptake for polymerization using ethylene, or the total pressure loss for polymerizations not using ethylene. Maximum reaction (rxn) time is the set value for the maximum time a polymerization can run, if it has not already quenched by uptake.

Small Scale Polymer Characterization. For analytical testing, polymer sample solutions were prepared by dissolving the polymer in 1,2,4-trichlorobenzene (TCB, 99+% purity from Sigma-Aldrich) containing 2,6-di-tert-butyl-4-methylphenol (BHT, 99% from Aldrich) at 165°C in a shaker oven for approximately 3 hours. The typical concentration of polymer in solution was between 0.1 to 0.9 mg/mL with a BHT concentration of 1.25 mg BHT/mL of TCB. Samples were cooled to 135°C for testing.

High temperature size exclusion chromatography was performed using an automated "Rapid GPC" system as described in US Patents 6,491,816; 6,491,823; 6,475,391; 6,461,515; 6,436,292; 6,406,632; 6,175,409; 6,454,947; 6,260,407; and 6,294,388. Molecular weights (weight average molecular weight (Mw), number average molecular weight (Mn), z-average molecular weight (Mz)) and molecular weight distribution (PDI = MWD = Mw/Mn), which is also sometimes referred to as the polydispersity (PDI) of the polymer, were measured by Gel Permeation Chromatography using a Symyx Technology GPC equipped with evaporative light scattering detector (ELSD) and calibrated using polystyrene standards

(Polymer Laboratories: Polystyrene Calibration Kit S-M-10: Mp (peak Mw) between 5,000 and 3,390,000). Alternatively, samples were measured by Gel Permeation Chromatography using a Symyx Technology GPC equipped with dual wavelength infrared detector and calibrated using polystyrene standards (Polymer Laboratories: Polystyrene Calibration Kit S-M-10: Mp (peak Mw) between 580 and 3,039,000). Samples (250 μL of a polymer solution in TCB were injected into the system) were run at an eluent flow rate of 2.0 ml/minute (135°C sample temperatures, 165°C oven/columns) using three Polymer Laboratories: PLgel 10μm Mixed-B 300 x 7.5mm columns in series. No column spreading corrections were employed. Numerical analyses were performed using Epoch® software available from Symyx Technologies or Automation Studio software available from Freeslate. The molecular weights obtained are relative to linear polystyrene standards. Molecular weight data is reported in the Tables below under the headings Mn, Mw, Mz and PDI as defined above.

Differential Scanning Calorimetry (DSC) measurements were performed on a TA-Q100 instrument to determine the melting point of the polymers. Samples were pre-annealed at 220°C for 15 minutes (first melt) and then allowed to cool to room temperature overnight. The samples were then heated to 220°C at a rate of 100°C/minute ($2^{nd}$ melt) and then cooled at a rate of 50°C/minute. Melting points were collected during the heating period. Values reported are the peak melting temperatures and for the purposes of this disclosure referred to as $2^{nd}$ melts. The results are reported in the Tables under the heading, $T_m$.

**$^1$H NMR measurements ethylene-cyclopentene copolymers:** Unless otherwise indicated the ethylene-cyclopentene (E-Cp) samples for $^1$H NMR spectroscopy were dissolved in 1,1,2,2-tetrachloroethane-d2 (tc-d2) at 140°C with a concentration of 30 mg/mL and the samples were recorded at 120°C using a Bruker NMR spectrometer with a $^1$H NMR frequency of 600 MHz or greater with a 10mm cryoprobe using a 30° pulse with at least 512 scans with a 5 second delay. Chemical shift for E-Cp was referenced to the solvent tc-d2 at 5.98 ppm.

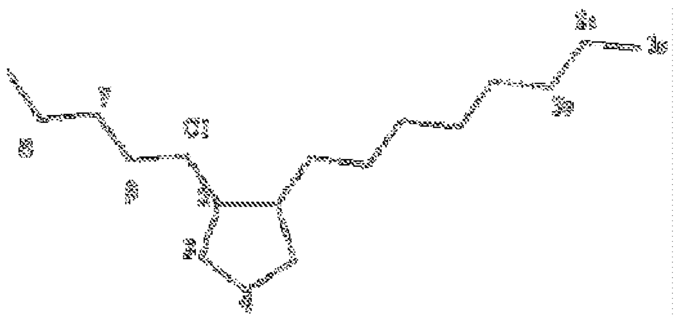

| Assignment | Chemical Shift (ppm) | Calculation |
|---|---|---|
| Cp calculated from the 2 positions of the cyclopentene | 1.90-1.80 | Cp = C2/2 |
| Aliphatic region | 1.55-0.85 | E = [aliphatic-(8*Cp)]/2 |
| Backbone carbons (total) | | Backbone carbons = E+Cp |
| | | Branches/1000C = Cp*1000/(E+Cp) |
| | | Mole% Cp = (Branches/1000C*2*100)/1000 |
| E=ethylene, Cp=cyclopentene, 1000C=1000 backbone carbons<br>This calculation holds for a predominately 1,2 addition of the Cp. | | |

**$^1$H NMR measurements of polycyclopentene:** Unless otherwise indicated the polycyclopentene (polyCp) samples for $^1$H NMR spectroscopy were dissolved in 1,1,2,2-tetrachloroethane-d2 (tc-d2) at 140°C with a concentration of 30 mg/mL and the samples were recorded at 120°C using a Bruker NMR spectrometer with a $^1$H NMR frequency of 500 MHz or greater using a 30° pulse with at least 512 scans with a 5 second delay. Chemical shift for polyCp was referenced to the solvent tc-d2 at 5.98 ppm.

| Assignment | Chemical Shift Region (ppm) | Number of hydrogens per structure | Calculation |
|---|---|---|---|
| Vinyl | 4,95-5.10 | 2 | (Vinyl/2)/ Total |
| Vinylidene | 4.70-4.76 | 2 | (Vinylidene/2)/Total |

(continued)

| Assignment | Chemical Shift Region (ppm) | Number of hydrogens per structure | Calculation |
|---|---|---|---|
| Vinylene | 5.76-5.55 | 2 | (Vinylene/2)/Total |
| Trisubstituted | 5.37-5.21 | 1 | (trisub/1)/Total |
| Aliphatic | 0-3 | 2 | |
| Total | | | (Vinyl/2)+(vinylidene/2)+(vinylene/2)+tri-sub |
| A | | | Vinyl+vinylidene+ vinylene+(trisub*2) |
| B | | | Aliphatic |
| Mn | | | ((A+B)/A)*68 |

**$^1$H NMR measurements for ethylene-norbornene (E-NB) polymers:** Unless otherwise indicated the Ethylene-norbornene copolymer (E-NB) samples for $^1$H NMR spectroscopy were dissolved in 1,1,2,2-tetrachloroethane-d2 at 140°C with a concentration of 30mg/mL and the samples were recorded at 120°C using a Bruker NMR spectrometer with a $^1$H NMR frequency of 600 MHz or greater with a 10mm cryoprobe using a 3° pulse with 512 scans and a 15 second delay.

| Assignment | Chemical Shift (ppm) | Calculation |
|---|---|---|
| NB region | 1.92-2.4 | |
| aliphatic region | 0.5-2.4 | |
| | | E = aliphatic region-(10*NB)]/4 |
| | | NB = NB region/2 |
| | | Total = NB+E |
| | | Mole% NB = NB* 100/Total |
| | | Mole% E = E*100/Total |
| | | Wt% NB = NB*94*100/(NB*94+E*28) |
| | | Wt% E = E*28*100/(NB*94+E*28) |

**$^{13}$C NMR measurements for copolymers:** Unless otherwise indicated the copolymer samples (E-Cp, PP-Cp, E-NB, and PP-NB) for $^{13}$C NMR spectroscopy were dissolved in 1,1,2,2-tetrachloroethane-d2 (tc-d2) at 140°C with a concentration between 33- 67 mg/mL and the samples were recorded at 120°C using a Bruker NMR spectrometer with a $^{13}$C frequency of 150MHz or greater, a 10mm cryoprobe using a gated decoupling experiment with a 90° pulse, 512 transients or greater and a 10 second delay. For ethylene based polymers the chemical shift was referenced to the main PE peak at 29.98 ppm, for propylene based polymers the chemical shift was referenced to the main isotactic $CH_3$ peak at 21.83ppm.

**Ethylene-cyclopentene copolymers (E-Cp):** Assignments and basic calculations for 1,3 *cis* and 1,3 *trans* addition of cyclopentene and 1,2 addition of cyclopentene for ethylene-cyclopentene copolymers were from M. Napoli et.al. "Copolymerization of Ethylene with Cyclopentene or 2-butene with Half Titanocenes-Based Catalysts" Journal of Polymer Science A: Polymer Chemistry, v.46, pp. 4725-4733, (2008).

Sequence assignments and nomenclature for 1,2 addition of cyclopentene-ethylene copolymers was from A. Jerschow et.al. "Nuclear Magnetic Resonance Evidence for a new Microstructure in Ethene-Cyclopentene Copolymers" Macromolecules, v.28, pp. 7095-7099, (1995). c=Cp, e=Ethylene

| Assignment | Chemical Shift (ppm) | Calculation |
|---|---|---|
| 1,2-Cp addition | 46.6-41.8 | 1,2-Cp=[(ccc/2)+(ece/2)+(cce/2)] |
| ccc | 46.6-45.3 | ccc/2 |
| ece | 44.0-42.6 | ece/2 |

(continued)

| Assignment | Chemical Shift (ppm) | Calculation |
|---|---|---|
| cce | 42.5-41.8 | cce/2 |
| 1,3-cis Cp addition | 41.40-40.2 | cis= (1,3-cis)/3 |
| 1,3-trans Cp addition | 40.0-38.3 | trans= (1,3-trans)/3 |
| aliphatic | 0-50 | 2*E+5*(1,2)+5*(cis+trans) |
| Ethylene (E) | | E=[aliphatic-(5*(1,2-Cp))-5*(cis+trans)]/2 |
| Total Cp | | 1,2-Cp+cis+trans |
| Total | | E+1,2-Cp+cis+trans |
| | | Mole% 1,2 =(1,2-Cp)*100/total |
| | | Mole% 1,3-cis =cis*100/total |
| | | Mole% 1,3-trans =trans*100/total |
| | | Mole% Ethylene =E*100/total |

1,2 addition sequence distribution where triad distributions are noted by ccc, ece and cce.

| Assignment | Chemical Shift (ppm) | Calculation |
|---|---|---|
| ccc | 46.6-45.3 | ccc/2 |
| ece | 44.0-42.6 | ece/2 |
| cce | 42.5-41.8 | cce/2 |
| Total 1,2- Cp addition | 46.6-41.8 | Total =[(ccc/2)+(ece/2)+(cce/2)] |
| | | **%ccc** = ccc* 100/total |
| | | **%ece** = ece* 100/total |
| | | **%cce** = cce* 100/total |

**Propylene-cyclopentene copolymers (P-Cp):** Assignments and nomenclature for Propylene-cyclopentene (P-Cp) were based on based on N. Naga, Y. Imanishi, "Structure of cyclopentene unit in the copolymer with propylene obtained by stereospecific zirconocene catalysts" Polymer, v.43, pp. 2133-2139, (2002). These assignments are for 1,2 additions only.

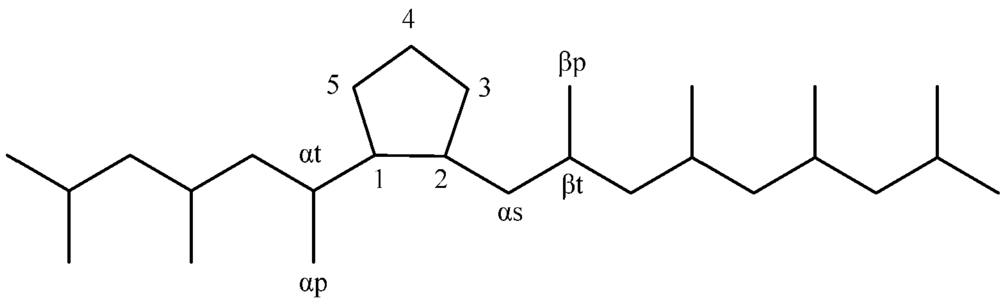

| Assignment | Chemical shift (ppm) | Calculation |
|---|---|---|
| 1 | 52.4 | |
| 2 | 38.6 | |
| αs | 35 | |
| αt | 31.8 | |

(continued)

| Assignment | Chemical shift (ppm) | Calculation |
|---|---|---|
| 3 | 31.1 | |
| βt | 29.6 | |
| 5 | 28.1 | |
| 4 | 22.23 | |
| αp | 19.7 | |
| P | 46, 28.5, 21.83 | P = ($CH_2$+CH+$CH_3$)/3 |
| ED - erythro defects $CH_3$ | 17.3, 16.9 | Erythro=ED/2 |
| Total Cp | | Cp = (1+2+3+ αs + αt +3+ βt +5+4+ αp)/10 |
| Total | | Total = Cp+P+Erythro |
| | | **Cp mole%** = Cp*100/Total |
| | | **Erythro mole%** = erythro*100/Total |

**Ethylene-norbornene copolymers (E-NB):** Calculations for E-NB (ethylene-norbornene) composition (mole %) as well as composition distribution (isolated, alternating, and blocky) assignments and quantification were based on Bergstrom et.al. "Influence of Polymerization Conditions on Microstructure of Norbomene-Ethylene Copolymers Made Using Metallocene Catalysts and MAO" Journal of Applied Polymer Science, v.63, pp. 1071-1076, (1997).

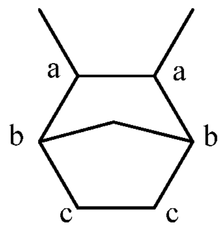

| Assignment | Chemical shift (ppm) | Calculation |
|---|---|---|
| Backbone CH's NB[a] | 49.80-46 | backbone |
| Bridgehead CH's NB[b] | 43.80-40.20 | bridgehead |
| NB[c] $CH_2$+Ethylene | 28-31 | NB[c]+E |
| | | Mole% NB = 100* [(backbone+bridgehead)/2]/(NB[c]+E) |
| Isolated E-NB[a]-E | 47.50-46.30 | **%isolated** = Isolated* 100/Total |
| Alternating E-NB[a]-E-NB | 48.25-47.50 | **%alternating** = Alternating* 100/Total |
| Blocky NB[a]-NB[a] | 49.60-48.25 | **%blocky** = Blocky*100/Total |
| Total | | Isolated+ Alternating+ Blocky |

**Propylene-norbornene copolymers (P-NB):** P-NB (propylene-norbomene) assignments and numbering were based on I. Tritto et.al. "Propene-Norbomene Copolymers: Synthesis and Analysis of Polymer Structure by 13C NMR Spectroscopy and ab Initio Chemical Shift Computations" Macromolecules, v.36, pp. 882-890 (2003). The calculation of composition (mole %) was determined as shown below.

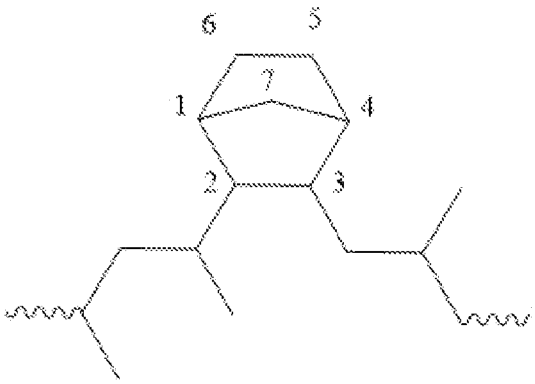

| Assignment | Chemical shift (ppm) | Calculation |
|---|---|---|
| NB C2 | 54.97 | |
| NB C3 | 46.70 | |
| NB C4 | 42.91 | |
| NB C1 | 38.98 | |
| NB C6 | 34.1 | |
| NB C5 | 29.5 | |
| P + defects + Chain ends | 22-14 | P |
| Total NB | | NB = (C2+C3+C4+C5+C1+C6+C7)/7 |
| Total | | Total = NB+P |
| | | **NB mole%**=NB*100/Total |

**Table 1.** Polyethylene (comparative) and ethylene-cyclopentene copolymerizations.

Standard polymerization conditions include 0.020 umol catalyst complex, 1.1 equivalence of N,N-dimethylanilinium tetrakis(pentafluorophenyl)borate activator, 0.625 umol TNOA scavenger, 105 uL of toluene, 100°C polymerization temperature, 100 psig ethylene pressure, with 20 psi of ethylene uptake or a maximum reaction time of 30 minutes. This particular set of runs used $CO_2$ as the quench gas. Mol% cyclopentene (cP) was measured by $^1H$ NMR.

| Ex# | Cat ID | cP (uL) | Isohexane (uL) | quench time (s) | yield (g) | Activity (g P/ mmol cat.hr) | Mn | Mw | Mz | PDI | Tm (°C) | cP (mol%) |
|---|---|---|---|---|---|---|---|---|---|---|---|---|
| 1 | 5 | 0 | 4895 | 56 | 0.0816 | 262,286 | 263,087 | 598,878 | 1,523,437 | 2.28 | 136.6 | |
| 2 | 5 | 0 | 4895 | 57 | 0.0755 | 238,421 | | | | | | 0.1 |
| 3 | 5 | 0 | 4895 | 37 | 0.0719 | 349,784 | | | | | | 0.1 |
| 4 | 5 | 10 | 4885 | 50 | 0.0752 | 270,720 | 236,797 | 485,302 | 1,089,824 | 2.05 | 132.0 | |
| 5 | 5 | 10 | 4885 | 37 | 0.0797 | 387,730 | | | | | | 0.2 |
| 6 | 5 | 10 | 4885 | 36 | 0.0746 | 373,000 | 185,025 | 417,034 | 1,134,033 | 2.25 | 131.3 | 0.2 |
| 7 | 5 | 20 | 4875 | 41 | 0.0716 | 314,341 | 226,345 | 524,170 | 1,318,501 | 2.32 | 129.7 | |
| 8 | 5 | 20 | 4875 | 34 | 0.0675 | 357,353 | 245,620 | 475,350 | 1,060,945 | 1.94 | 130.2 | 0.4 |
| 9 | 5 | 20 | 4875 | 38 | 0.0671 | 317,842 | | | | | | 0.4 |
| 10 | 5 | 30 | 4865 | 60 | 0.0759 | 227,700 | 220,348 | 571,018 | 1,604,923 | 2.59 | 126.8 | |
| 11 | 5 | 30 | 4865 | 37 | 0.0692 | 336,649 | | | | | | 0.5 |
| 12 | 5 | 30 | 4865 | 42 | 0.0710 | 304,286 | 259,067 | 532,692 | 1,383,194 | 2.06 | 128.1 | 0.5 |
| 13 | 5 | 40 | 4855 | 47 | 0.0768 | 294,128 | 233,451 | 628,006 | 1,718,268 | 2.69 | 126.1 | |
| 14 | 5 | 40 | 4855 | 41 | 0.0612 | 268,683 | | | | | | 0.6 |
| 15 | 5 | 40 | 4855 | 37 | 0.0835 | 406,216 | 242,859 | 625,376 | 1,732,274 | 2.58 | 126.9 | 0.6 |
| 16 | 5 | 50 | 4845 | 41 | 0.0772 | 338,927 | 246,825 | 601,118 | 1,545,104 | 2.44 | 124.3 | |
| 17 | 5 | 50 | 4845 | 40 | 0.0743 | 334,350 | | | | | | |
| 18 | 5 | 50 | 4845 | 40 | 0.0742 | 333,900 | 241,079 | 498,849 | 1,179,321 | 2.07 | 123.3 | |
| 19 | 6 | 0 | 4895 | 29 | 0.0779 | 483,517 | 337,940 | 703,868 | 1,710,776 | 2.08 | 136.6 | |
| 20 | 6 | 0 | 4895 | 33 | 0.0831 | 453,273 | 475,278 | 1,221,092 | 3,773,640 | 2.57 | 136.9 | 0.1 |
| 21 | 6 | 0 | 4895 | 19 | 0.0871 | 825,158 | | | | | 137.5 | 0.1 |
| 22 | 6 | 10 | 4885 | 32 | 0.0772 | 434,250 | 328,267 | 780,648 | 2,494,218 | 2.38 | 131.1 | 0.3 |
| 23 | 6 | 10 | 4885 | 34 | 0.0804 | 425,647 | 486,188 | 995,492 | 2,661,203 | 2.05 | 130.9 | 0.3 |

(continued)

| Standard polymerization conditions include 0.020 umol catalyst complex, 1.1 equivalence of N,N-dimethylanilinium tetrakis(pentafluorophenyl)borate activator, 0.625 umol TNOA scavenger, 105 uL of toluene, 100°C polymerization temperature, 100 psig ethylene pressure, with 20 psi of ethylene uptake or a maximum reaction time of 30 minutes. This particular set of runs used $CO_2$ as the quench gas. Mol% cyclopentene (cP) was measured by $^1H$ NMR. | | | | | | | | | | | | |
|---|---|---|---|---|---|---|---|---|---|---|---|---|
| Ex# | Cat ID | cP (uL) | Isohexane (uL) | quench time (s) | yield (g) | Activity (g P/ mmol cat.hr) | Mn | Mw | Mz | PDI | Tm (°C) | cP (mol%) |
| 24 | 6 | 20 | 4875 | 43 | 0.0917 | 383,860 | 358,673 | 801,857 | 1,940,653 | 2.24 | 128.1 | 0.6 |
| 25 | 6 | 30 | 4865 | 33 | 0.0799 | 435,818 | 243,368 | 754,668 | 3,058,476 | 3.10 | 125.5 | |
| 26 | 6 | 30 | 4865 | 44 | 0.0893 | 365,318 | | | | | 142.1 | 0.7 |
| 27 | 6 | 30 | 4865 | 28 | 0.0764 | 491,143 | 350,270 | 780,243 | 1,967,464 | 2.23 | 125.4 | 0.7 |
| 28 | 6 | 40 | 4855 | 33 | 0.0883 | 481,636 | 339,987 | 912,778 | 2,785,601 | 2.69 | 124.3 | |
| 29 | 6 | 40 | 4855 | 401 | 0.0569 | 25,541 | 1,592,626 | 2,629,736 | 5,042,981 | 1.65 | 123.4 | 0.7 |
| 30 | 6 | 40 | 4855 | 31 | 0.0801 | 465,097 | 385,955 | 884,157 | 2,342,753 | 2.29 | 124.1 | 0.7 |
| 31 | 6 | 50 | 4845 | 38 | 0.0958 | 453,789 | 324,489 | 841,628 | 2,968,821 | 2.59 | 131.6 | |
| 32 | 6 | 50 | 4845 | 28 | 0.0820 | 527,143 | 618,368 | 1,274,387 | 3,519,022 | 2.06 | 123.3 | 1.1 |
| C1 | C-1 | 0 | 4895 | 61 | 0.0621 | 183,246 | 225,421 | 451,505 | 1,026,439 | 2.00 | 134.5 | |
| C2 | C-1 | 10 | 4885 | 60 | 0.0665 | 199,500 | 284,909 | 499,743 | 1,070,252 | 1.75 | 131.9 | |
| C3 | C-1 | 20 | 4875 | 52 | 0.0636 | 220,154 | 222,932 | 407,042 | 855,210 | 1.83 | 130.0 | |
| C4 | C-1 | 30 | 4865 | 52 | 0.0678 | 234,692 | 244,559 | 439,503 | 914,158 | 1.80 | 128.4 | |
| C5 | C-1 | 40 | 4855 | 51 | 0.0658 | 232,235 | 226,624 | 446,009 | 1,025,468 | 1.97 | 127.3 | |
| C6 | C-1 | 50 | 4845 | 52 | 0.0728 | 252,000 | 212,212 | 427,243 | 970,163 | 2.01 | 126.1 | |
| C7 | C-3 | 0 | 4895 | 133 | 0.0799 | 108,135 | 795,734 | 2,040,751 | 5,182,286 | 2.56 | 134.0 | |
| C8 | C-3 | 10 | 4885 | 260 | 0.0771 | 53,377 | 580,311 | 1,575,758 | 4,029,447 | 2.72 | 130.8 | |
| C9 | C-3 | 20 | 4875 | 333 | 0.0778 | 42,054 | 519,078 | 1,334,984 | 3,555,592 | 2.57 | 129.6 | |
| C10 | C-3 | 30 | 4865 | 213 | 0.0762 | 64,394 | 397,853 | 1,078,787 | 3,122,504 | 2.71 | 127.1 | |
| C11 | C-3 | 40 | 4855 | 237 | 0.0819 | 62,203 | 788,995 | 1,668,083 | 4,058,948 | 2.11 | 127.6 | |
| C12 | C-3 | 50 | 4845 | 231 | 0.0815 | 63,506 | 403,882 | 1,170,413 | 3,384,516 | 2.90 | 125.3 | |

**Table 2 - Part 1.** Poly-cyclopentene and ethylene-cyclopentene copolymerizations.

Standard polymerization conditions include 1.1 equivalence of N,N-dimethylanilinium tetrakis(pentafluorophenyl)borate activator, 0.50 mL cyclopentene, 0.50 umol TNOA scavenger, 100°C polymerization temperature.

| EX# | Cat ID | Cat (umol) | Isohexane (uL) | Toluene (uL) | C2 (psi) | Quench Value (psi) | Max Rxn Time (min) | quench time (s) | yield (g) | Activity (g P /mmol cat.hr) | Mn | Mw | Mz | PDI | Tm (°C) |
|---|---|---|---|---|---|---|---|---|---|---|---|---|---|---|---|
| 33 | 1 | 0.120 | 4085 | 415 | 0 | 30 | 30 | 1800 | 0.0007 | 12 | | | | | |
| 34 | 1 | 0.120 | 4085 | 415 | 0 | 30 | 30 | 1801 | 0.0006 | 10 | | | | | |
| 35 | 1 | 0.080 | 4190 | 310 | 50 | 20 | 30 | 87 | 0.0678 | 35,069 | 32,986 | 113,088 | 435,887 | 3.43 | |
| 36 | 1 | 0.080 | 4190 | 310 | 50 | 20 | 30 | 73 | 0.0602 | 37,110 | 31,628 | 106,363 | 426,273 | 3.36 | |
| 37 | 1 | 0.080 | 4190 | 310 | 100 | 20 | 30 | 17 | 0.0817 | 216,265 | 57,943 | 353,538 | 1,515,571 | 6.10 | 87.4 |
| 38 | 1 | 0.080 | 4190 | 310 | 100 | 20 | 30 | 28 | 0.0964 | 154,929 | 40,815 | 370,454 | 1,459,712 | 9.08 | 78.8 |
| 39 | 3 | 0.120 | 4085 | 415 | 0 | 30 | 30 | 1802 | 0.0106 | 176 | 567 | 642 | 811 | 1.13 | |
| 40 | 3 | 0.120 | 4085 | 415 | 0 | 30 | 30 | 1800 | 0.0098 | 163 | | | | | |
| 41 | 3 | 0.080 | 4190 | 310 | 50 | 20 | 30 | 262 | 0.2164 | 37,168 | 41,973 | 96,704 | 338,799 | 2.30 | |
| 42 | 3 | 0.080 | 4190 | 310 | 50 | 20 | 30 | 58 | 0.0898 | 69,672 | 48,416 | 114,331 | 319,177 | 2.36 | |
| 43 | 3 | 0.080 | 4190 | 310 | 100 | 20 | 30 | 28 | 0.1211 | 194,625 | 44,402 | 293,392 | 1,290,280 | 6.61 | 52.0 |
| 44 | 3 | 0.080 | 4190 | 310 | 100 | 20 | 30 | 31 | 0.1180 | 171,290 | 48,094 | 360,171 | 1,742,765 | 7.49 | 71.0 |
| 45 | 5 | 0.120 | 4085 | 415 | 0 | 30 | 30 | 1802 | 0.0035 | 58 | | | | | |
| 46 | 5 | 0.120 | 4085 | 415 | 0 | 30 | 30 | 1801 | 0.0027 | 45 | | | | | |
| 47 | 5 | 0.080 | 4190 | 310 | 50 | 20 | 30 | 71 | 0.0664 | 42,085 | 25,785 | 82,142 | 338,535 | 3.19 | |
| 48 | 5 | 0.080 | 4190 | 310 | 50 | 20 | 30 | 36 | 0.0535 | 66,875 | 58,086 | 159,227 | 474,945 | 2.74 | 95.8 |
| 49 | 5 | 0.080 | 4190 | 310 | 100 | 20 | 30 | 31 | 0.0992 | 144,000 | 37,290 | 324,973 | 1,167,898 | 8.71 | 79.9 |
| 50 | 5 | 0.080 | 4190 | 310 | 100 | 20 | 30 | 20 | 0.0879 | 197,775 | 32,707 | 291,168 | 1,151,406 | 8.90 | 84.1 |
| 51 | 6 | 0.120 | 4085 | 415 | 0 | 30 | 30 | 1801 | 0.0122 | 203 | 599 | 682 | 885 | 1.14 | |
| 52 | 6 | 0.120 | 4085 | 415 | 0 | 30 | 30 | 1800 | 0.0114 | 190 | 556 | 636 | 806 | 1.14 | |
| 53 | 6 | 0.240 | 3770 | 729 | 0 | 60 | 60 | 3602 | 0.0362 | 151 | 397 | 591 | 1,355 | 1.49 | |
| 54 | 6 | 0.240 | 3770 | 729 | 0 | 60 | 60 | 3601 | 0.0406 | 169 | 348 | 456 | 749 | 1.31 | |

(continued)

Standard polymerization conditions include 1.1 equivalence of N,N-dimethylanilinium tetrakis(pentafluorophenyl)borate activator, 0.50 mL cyclopentene, 0.50 umol TNOA scavenger, 100°C polymerization temperature.

| EX# | Cat ID | Cat (umol) | Isohexane (uL) | Toluene (uL) | C2 (psi) | Quench Value (psi) | Max Rxn Time (min) | quench time (s) | yield (g) | Activity (g P /mmol cat.hr) | Mn | Mw | Mz | PDI | Tm (°C) |
|---|---|---|---|---|---|---|---|---|---|---|---|---|---|---|---|
| 55 | 6 | 0.080 | 4190 | 310 | 50 | 20 | 30 | 45 | 0.0914 | 91,400 | 61,631 | 145,686 | 520,313 | 2.36 | |
| 56 | 6 | 0.080 | 4190 | 310 | 50 | 20 | 30 | 42 | 0.0853 | 91,393 | 39,024 | 136,818 | 707,164 | 3.51 | |
| 57 | 6 | 0.120 | 4085 | 415 | 50 | 20 | 30 | 37 | 0.0740 | 60,000 | 39,518 | 159,677 | 591,623 | 4.04 | 86.4 |
| 58 | 6 | 0.120 | 4085 | 415 | 50 | 20 | 30 | 25 | 0.0578 | 69,360 | 144,369 | 376,715 | 1,140,428 | 2.61 | 99.3 |
| 59 | 6 | 0.080 | 4190 | 310 | 100 | 20 | 30 | 16 | 0.1273 | 358,031 | 75,182 | 400,733 | 1,455,968 | 5.33 | 51.4 |
| 60 | 6 | 0.120 | 4085 | 415 | 100 | 20 | 30 | 90 | 0.1314 | 43,800 | 271,804 | 756,307 | 2,320,936 | 2.78 | 84.4 |
| 61 | 6 | 0.120 | 4085 | 415 | 100 | 20 | 30 | 11 | 0.0903 | 246,273 | 315,751 | 853,532 | 3,250,472 | 2.70 | 110.3 |
| 62 | 65 | 0.120 | 4085 | 415 | 0 | 30 | 30 | 1801 | 0.0017 | 28 | | | | | |
| 63 | 65 | 0.120 | 4085 | 415 | 0 | 30 | 30 | 1801 | 0.0009 | 15 | | | | | |
| 64 | 65 | 0.080 | 4190 | 310 | 50 | 20 | 30 | 1801 | 0.0670 | 1,674 | 78,034 | 195,492 | 564,671 | 2.51 | |
| 65 | 65 | 0.080 | 4190 | 310 | 50 | 20 | 30 | 894 | 0.0769 | 3,871 | 81,979 | 197,366 | 575,633 | 2.41 | |
| 66 | 65 | 0.080 | 4190 | 310 | 100 | 20 | 30 | 21 | 0.1038 | 222,429 | 91,723 | 248,085 | 679,041 | 2.70 | 51.2 |
| 67 | 65 | 0.080 | 4190 | 310 | 100 | 20 | 30 | 22 | 0.1082 | 221,318 | 111,230 | 301,306 | 850,100 | 2.71 | 51.0 |
| 68 | 48 | 0.120 | 4085 | 415 | 0 | 30 | 30 | 1801 | 0.0027 | 45 | | | | | |
| 69 | 48 | 0.120 | 4085 | 415 | 0 | 30 | 30 | 1800 | 0.0025 | 42 | | | | | |
| 70 | 48 | 0.080 | 4190 | 310 | 50 | 20 | 30 | 102 | 0.0543 | 23,956 | 38,608 | 103,211 | 364,215 | 2.67 | 73.1 |
| 71 | 48 | 0.080 | 4190 | 310 | 50 | 20 | 30 | 93 | 0.0577 | 27,919 | 24,694 | 91,856 | 330,398 | 3.72 | |
| 72 | 48 | 0.080 | 4190 | 310 | 100 | 20 | 30 | 26 | 0.0888 | 153,692 | 80,347 | 279,031 | 872,616 | 3.47 | 91.8 |
| 73 | 48 | 0.080 | 4190 | 310 | 100 | 20 | 30 | 23 | 0.0902 | 176,478 | 89,803 | 344,561 | 1,095,233 | 3.84 | 92.3 |
| 74 | 49 | 0.120 | 4085 | 415 | 0 | 30 | 30 | 1801 | 0.0271 | 451 | 736 | 976 | 1,556 | 1.33 | |
| 75 | 49 | 0.120 | 4085 | 415 | 0 | 30 | 30 | 1800 | 0.0269 | 448 | 797 | 1,024 | 1,611 | 1.28 | |
| 76 | 49 | 0.080 | 4190 | 310 | 50 | 20 | 30 | 88 | 0.1184 | 60,545 | 77,482 | 190,362 | 715,051 | 2.46 | |

(continued)

| Standard polymerization conditions include 1.1 equivalence of N,N-dimethylanilinium tetrakis(pentafluorophenyl)borate activator, 0.50 mL cyclopentene, 0.50 umol TNOA scavenger, 100°C polymerization temperature. | | | | | | | | | | | | | | | |
|---|---|---|---|---|---|---|---|---|---|---|---|---|---|---|---|
| EX# | Cat ID | Cat (umol) | Isohexane (uL) | Toluene (uL) | C2 (psi) | Quench Value (psi) | Max Rxn Time (min) | quench time (s) | yield (g) | Activity (g P /mmol cat.hr) | Mn | Mw | Mz | PDI | Tm (°C) |
| 77 | 49 | 0.080 | 4190 | 310 | 50 | 20 | 30 | 54 | 0.0977 | 81,417 | 66,229 | 145,910 | 413,187 | 2.20 | |
| 78 | 49 | 0.080 | 4190 | 310 | 100 | 20 | 30 | 18 | 0.1153 | 288,250 | 83,104 | 339,073 | 1,326,694 | 4.08 | |
| 79 | 49 | 0.080 | 4190 | 310 | 100 | 20 | 30 | 16 | 0.1387 | 390,094 | 108,122 | 395,383 | 1,491,951 | 3.66 | |
| 80 | 66 | 0.240 | 3770 | 729 | 0 | 60 | 60 | 3601 | 0.0304 | 127 | 478 | 685 | 1,192 | 1.43 | |
| 81 | 66 | 0.240 | 3770 | 729 | 0 | 60 | 60 | 3600 | 0.0335 | 140 | 711 | 930 | 1,456 | 1.31 | |
| 82 | 66 | 0.120 | 4085 | 415 | 50 | 20 | 30 | 41 | 0.0739 | 54,073 | 79,718 | 187,349 | 635,625 | 2.35 | |
| 83 | 66 | 0.120 | 4085 | 415 | 50 | 20 | 30 | 45 | 0.0624 | 41,600 | 336,310 | 640,715 | 1,559,724 | 1.91 | 100.7 |
| 84 | 66 | 0.120 | 4085 | 415 | 100 | 20 | 30 | 23 | 0.1007 | 131,348 | 82,270 | 400,578 | 1,506,427 | 4.87 | 84.6 |
| 85 | 66 | 0.120 | 4085 | 415 | 100 | 20 | 30 | 18 | 0.0868 | 144,667 | 286,599 | 793,596 | 2,181,326 | 2.77 | 109.5 |
| C13 | C-1 | 0.240 | 3770 | 729 | 0 | 60 | 60 | 3601 | 0.0277 | 115 | 1,047 | 2,157 | 5,131 | 2.06 | |
| C14 | C-1 | 0.240 | 3770 | 729 | 0 | 60 | 60 | 3601 | 0.0261 | 109 | 1,031 | 1,864 | 3,970 | 1.81 | |
| C15 | C-1 | 0.120 | 4085 | 415 | 50 | 20 | 30 | 46 | 0.0774 | 50,478 | 15,948 | 42,884 | 168,056 | 2.69 | 74.6 |
| C16 | C-1 | 0.120 | 4085 | 415 | 50 | 20 | 30 | 47 | 0.0733 | 46,787 | 16,405 | 42,892 | 158,490 | 2.61 | 82.4 |
| C17 | C-1 | 0.120 | 4085 | 415 | 100 | 20 | 30 | 15 | 0.1011 | 202,200 | 26,266 | 143,658 | 578,099 | 5.47 | 99.4 |
| C18 | C-1 | 0.120 | 4085 | 415 | 100 | 20 | 30 | 10 | 0.1162 | 348,600 | 19,262 | 131,255 | 626,734 | 6.81 | 97.9 |
| C19 | C-3 | 0.240 | 3770 | 729 | 0 | 60 | 60 | 3600 | 0.0106 | 44 | 9,683 | 18,183 | 46,741 | 1.88 | |
| C20 | C-3 | 0.240 | 3770 | 729 | 0 | 60 | 60 | 3600 | 0.0156 | 65 | 12,566 | 25,242 | 63,521 | 2.01 | |
| C21 | C-3 | 0.120 | 4085 | 415 | 50 | 20 | 30 | 46 | 0.0645 | 42,065 | 72,606 | 131,621 | 318,693 | 1.81 | 95.7 |
| C22 | C-3 | 0.120 | 4085 | 415 | 50 | 20 | 30 | 43 | 0.0638 | 44,512 | 76,017 | 147,538 | 447,161 | 1.94 | 94.8 |
| C23 | C-3 | 0.120 | 4085 | 415 | 100 | 20 | 30 | 24 | 0.0944 | 118,000 | 104,782 | 302,570 | 1,440,712 | 2.89 | 103.9 |
| C24 | C-3 | 0.120 | 4085 | 415 | 100 | 20 | 30 | 23 | 0.1011 | 131,870 | 106,616 | 309,027 | 1,051,606 | 2.90 | 103.5 |
| C25 | C-5 | 0.240 | 3770 | 729 | 0 | 60 | 60 | 3600 | 0.0023 | 10 | | | | | |

(continued)

| Standard polymerization conditions include 1.1 equivalence of N,N-dimethylanilinium tetrakis(pentafluorophenyl)borate activator, 0.50 mL cyclopentene, 0.50 umol TNOA scavenger, 100°C polymerization temperature. | | | | | | | | | | | | | | | |
|---|---|---|---|---|---|---|---|---|---|---|---|---|---|---|---|
| EX# | Cat ID | Cat (umol) | Isohexane (uL) | Toluene (uL) | C2 (psi) | Quench Value (psi) | Max Rxn Time (min) | quench time (s) | yield (g) | Activity (g P /mmol cat.hr) | Mn | Mw | Mz | PDI | Tm (°C) |
| C26 | C-5 | 0.240 | 3770 | 729 | 0 | 60 | 60 | 3600 | 0.0035 | 15 | | | | | |
| C27 | C-5 | 0.120 | 4085 | 415 | 50 | 20 | 30 | 1801 | 0.0680 | 1,133 | 76,303 | 128,456 | 277,057 | 1.68 | |
| C28 | C-5 | 0.120 | 4085 | 415 | 50 | 20 | 30 | 1801 | 0.0555 | 924 | 82,368 | 176,130 | 518,282 | 2.14 | |
| C29 | C-5 | 0.120 | 4085 | 415 | 100 | 20 | 30 | 23 | 0.0898 | 117,130 | 69,012 | 133,824 | 308,213 | 1.94 | |
| C30 | C-5 | 0.120 | 4085 | 415 | 100 | 20 | 30 | 26 | 0.0810 | 93,462 | 104,308 | 172,627 | 372,103 | 1.65 | |
| C31 | C-6 | 0.240 | 3770 | 729 | 0 | 60 | 60 | 3601 | 0.0007 | 3 | | | | | |
| C32 | C-6 | 0.240 | 3770 | 729 | 0 | 60 | 60 | 3600 | 0.0005 | 2 | | | | | |
| C33 | C-6 | 0.120 | 4085 | 415 | 50 | 20 | 30 | 46 | 0.0514 | 33,522 | 46,871 | 124,052 | 459,449 | 2.65 | 123.1 |
| C34 | C-6 | 0.120 | 4085 | 415 | 50 | 20 | 30 | 62 | 0.0472 | 22,839 | 30,903 | 90,459 | 321,312 | 2.93 | 115.9 |
| C35 | C-6 | 0.120 | 4085 | 415 | 100 | 20 | 30 | 26 | 0.0823 | 94,962 | 59,114 | 247,184 | 854,135 | 4.18 | 123.5 |
| C36 | C-6 | 0.120 | 4085 | 415 | 100 | 20 | 30 | 24 | 0.0829 | 103,625 | 61,066 | 256,945 | 876,114 | 4.21 | 123.3 |
| C37 | C-7 | 0.240 | 3770 | 729 | 0 | 60 | 60 | 3602 | 0.0030 | 12 | | | | | |
| C38 | C-7 | 0.240 | 3770 | 729 | 0 | 60 | 60 | 3600 | 0.0004 | 2 | | | | | |
| C39 | C-7 | 0.120 | 4085 | 415 | 50 | 20 | 30 | 54 | 0.0603 | 33,500 | 75,349 | 166,588 | 463,290 | 2.21 | |
| C40 | C-7 | 0.120 | 4085 | 415 | 50 | 20 | 30 | 68 | 0.0602 | 26,559 | 66,208 | 141,403 | 407,833 | 2.14 | |
| C41 | C-7 | 0.120 | 4085 | 415 | 100 | 20 | 30 | 26 | 0.0643 | 74,192 | 167,584 | 572,816 | 1,894,316 | 3.42 | 115.8 |
| C42 | C-7 | 0.120 | 4085 | 415 | 100 | 20 | 30 | 30 | 0.0824 | 82,400 | 104,982 | 473,560 | 1,748,927 | 4.51 | 109.2 |
| C43 | C-8 | 0.240 | 3770 | 729 | 0 | 60 | 60 | 3601 | -0.0005 | -2 | | | | | |
| C44 | C-8 | 0.240 | 3770 | 729 | 0 | 60 | 60 | 3600 | -0.0001 | 0 | | | | | |
| C45 | C-8 | 0.120 | 4085 | 415 | 50 | 20 | 30 | 77 | 0.0691 | 26,922 | 46,588 | 116,698 | 356,760 | 2.50 | |
| C46 | C-8 | 0.120 | 4085 | 415 | 50 | 20 | 30 | 67 | 0.0685 | 30,672 | 54,640 | 129,683 | 378,333 | 2.37 | |
| C47 | C-8 | 0.120 | 4085 | 415 | 100 | 20 | 30 | 30 | 0.0975 | 97,500 | 84,887 | 333,015 | 1,264,657 | 3.92 | 101.1 |

(continued)

Standard polymerization conditions include 1.1 equivalence of N,N-dimethylanilinium tetrakis(pentafluorophenyl)borate activator, 0.50 mL cyclopentene, 0.50 umol TNOA scavenger, 100°C polymerization temperature.

| EX# | Cat ID | Cat (umol) | Isohexane (uL) | Toluene (uL) | C2 (psi) | Quench Value (psi) | Max Rxn Time (min) | quench time (s) | yield (g) | Activity (g P /mmol cat.hr) | Mn | Mw | Mz | PDI | Tm (°C) |
|---|---|---|---|---|---|---|---|---|---|---|---|---|---|---|---|
| C48 | C-8 | 0.120 | 4085 | 415 | 100 | 20 | 30 | 31 | 0.0966 | 93,484 | 89,725 | 355,556 | 1,129,054 | 3.96 | 100.9 |

**Table 2** - **Part 2.** $^{13}C$ NMR characterization of select ethylene-cyclopentene copolymerization products from Table 1 - Part 1.

| Cp and c represent a cyclopentene, E and e represent an ethylene unit. | | | | | | | | | | |
|---|---|---|---|---|---|---|---|---|---|---|
| **EX#** | **Cat ID** | **1,2-Cp (mol%)** | **1,3-cis Cp (mol%)** | **1,3-trans Cp (mol%)** | **total Cp (mol%)** | **%1,2-Cp insertions relative to all Cp insertions** | **E (mol%)** | **ccc (%)** | **ece (%)** | **cce (%)** |
| 37-38 | 1 | 8.8 | 0.1 | 0.0 | 8.8 | 99.2 | 91.2 | 23.1 | 57.2 | 19.7 |
| 41 | 3 | 32.5 | 0.2 | 0.1 | 32.8 | 99.0 | 67.2 | 43.1 | 26.6 | 30.3 |
| 43-44 | 3 | 19.6 | 0.3 | 0.1 | 20.0 | 98.0 | 80.0 | 37.6 | 35.3 | 27.1 |
| 49-50 | 5 | 10.0 | 0.1 | 0.0 | 10.1 | 99.3 | 89.9 | 21.9 | 58.9 | 19.3 |
| 55-56 | 6 | 29.6 | 0.2 | 0.1 | 29.9 | 99.1 | 70.1 | 40.1 | 31.6 | 28.3 |
| 59 | 6 | 20.3 | 0.1 | 0.0 | 20.4 | 99.6 | 79.6 | 34.2 | 40.0 | 25.8 |
| 60 | 6 | 13.9 | 0.1 | 0.0 | 14.1 | 99.1 | 85.9 | 28.7 | 50.1 | 21.2 |
| 66-67 | 65 | 11.9 | 0.0 | 0.0 | 11.9 | 99.5 | 88.1 | 17.8 | 80.9 | 1.4 |
| 72-73 | 48 | 7.4 | 0.1 | 0.0 | 7.5 | 99.1 | 92.5 | 34.4 | 38.5 | 27.1 |
| 76-77 | 49 | 37.7 | 0.1 | 0.1 | 37.9 | 99.3 | 62.1 | 48.6 | 25.1 | 26.3 |
| 78-79 | 49 | 21.3 | 0.1 | 0.1 | 21.5 | 99.1 | 78.5 | 43.4 | 28.3 | 28.3 |
| 84-85 | 66 | 9.8 | 0.1 | 0.0 | 9.9 | 98.7 | 90.1 | 32.7 | 40.8 | 26.5 |
| C17-18 | C-1 | 5.7 | 4.9 | 0.6 | 11.2 | 50.8 | 88.8 | 11.4 | 87.0 | 1.6 |
| C23-24 | C-3 | 2.2 | 7.1 | 0.5 | 9.8 | 22.7 | 90.2 | 3.4 | 94.3 | 2.3 |
| C29-30 | C-5 | 24.2 | 0.1 | 0.1 | 24.4 | 99.3 | 75.6 | 0.9 | 98.9 | 0.2 |
| C35-36 | C-6 | 1.5 | 0.0 | 0.2 | 1.8 | 84.5 | 98.2 | 5.2 | 94.8 | 0.0 |
| C41-42 | C-7 | 5.7 | 0.1 | 0.1 | 5.8 | 97.6 | 94.2 | 0.8 | 99.0 | 0.2 |
| C47-48 | C-8 | 11.5 | 0.2 | 0.2 | 11.8 | 97.0 | 88.2 | 1.0 | 98.5 | 0.5 |

**Table 2** - **Part 3.** $^{1}H$ NMR end-group unsaturation and calculated polymer Mn of select poly-cyclopentene polymerization products from Table 1 - Part 1.

| EX# | Cat ID | vinylene (%) | trisubstituted (%) | vinyl (%) | vinylidene (%) | Mn by NMR |
|---|---|---|---|---|---|---|
| 54 | 6 | 92.7 | 7.3 | 0.0 | 0.0 | 1981 |
| 81 | 66 | 92.6 | 7.4 | 0.0 | 0.0 | 2641 |
| C13 | C-1 | 87.7 | 12.3 | 0.0 | 0.0 | 3036 |

**Table 3** - **part 1.** Ethylene-norbornene copolymerizations.

| Standard polymerization conditions include 1.1 equivalence of N,N-dimethylanilinium tetrakis(pentafluorophenyl) borate activator, 0.50 umol TNOA scavenger, 100 °C polymerization temperature, 209 uL neat norbornene, with 20 psi of ethylene (C2) uptake or a maximum reaction time of 30 minutes. 2-Norbornene values reported are for neat norbornene amounts; norbornene was added to the reactor as 42 wt% solution in toluene. Toluene amounts listed in the table include toluene from the norbornene solution in addition to toluene used as the catalyst and activator diluent. | | | | | | | | |
|---|---|---|---|---|---|---|---|---|
| **EX#** | **Cat ID** | **Cat (umol)** | **C2 (psi)** | **Isohexane (uL)** | **Toluene (uL)** | **quench time (s)** | **yield (g)** | **Activity (g P/mmol cat.hr)** |
| 86 | 1 | 0.08 | 0 | 4085 | 489 | 1802 | 0.0001 | 2 |

(continued)

| Standard polymerization conditions include 1.1 equivalence of N,N-dimethylanilinium tetrakis(pentafluorophenyl) borate activator, 0.50 umol TNOA scavenger, 100 °C polymerization temperature, 209 uL neat norbornene, with 20 psi of ethylene (C2) uptake or a maximum reaction time of 30 minutes. 2-Norbornene values reported are for neat norbornene amounts; norbornene was added to the reactor as 42 wt% solution in toluene. Toluene amounts listed in the table include toluene from the norbornene solution in addition to toluene used as the catalyst and activator diluent. | | | | | | | | |
|---|---|---|---|---|---|---|---|---|
| **EX#** | **Cat ID** | **Cat (umol)** | **C2 (psi)** | **Isohexane (uL)** | **Toluene (uL)** | **quench time (s)** | **yield (g)** | **Activity (g P/mmol cat.hr)** |
| 87 | 1 | 0.08 | 0 | 4085 | 489 | 1801 | -0.0003 | -7 |
| 88 | 1 | 0.08 | 10 | 4085 | 489 | 1800 | 0.0299 | 748 |
| 89 | 1 | 0.08 | 10 | 4085 | 489 | 1801 | 0.0321 | 802 |
| 90 | 1 | 0.08 | 20 | 4085 | 489 | 1801 | 0.0681 | 1,702 |
| 91 | 1 | 0.08 | 25 | 4085 | 489 | 479 | 0.1180 | 11,086 |
| 92 | 1 | 0.08 | 25 | 4085 | 489 | 453 | 0.1447 | 14,374 |
| 93 | 1 | 0.08 | 25 | 4085 | 489 | 502 | 0.1463 | 13,115 |
| 94 | 1 | 0.08 | 50 | 4190 | 384 | 210 | 0.0854 | 18,300 |
| 95 | 1 | 0.08 | 50 | 4190 | 384 | 248 | 0.1376 | 24,968 |
| 96 | 1 | 0.08 | 100 | 4190 | 384 | 32 | 0.0852 | 119,813 |
| 97 | 1 | 0.08 | 100 | 4190 | 384 | 36 | 0.1434 | 179,250 |
| 98 | 3 | 0.08 | 0 | 4085 | 489 | 1801 | 0.0006 | 15 |
| 99 | 3 | 0.08 | 0 | 4085 | 489 | 1802 | -0.0004 | -10 |
| 100 | 3 | 0.08 | 10 | 4085 | 489 | 1800 | 0.0287 | 718 |
| 101 | 3 | 0.08 | 10 | 4085 | 489 | 1801 | 0.0322 | 805 |
| 102 | 3 | 0.08 | 20 | 4085 | 489 | 1800 | 0.0806 | 2,015 |
| 103 | 3 | 0.08 | 25 | 4085 | 489 | 483 | 0.1426 | 13,286 |
| 104 | 3 | 0.08 | 25 | 4085 | 489 | 496 | 0.1413 | 12,820 |
| 105 | 3 | 0.08 | 25 | 4085 | 489 | 545 | 0.1418 | 11,708 |
| 106 | 3 | 0.08 | 50 | 4190 | 384 | 193 | 0.1191 | 27,769 |
| 107 | 3 | 0.08 | 50 | 4190 | 384 | 163 | 0.0831 | 22,942 |
| 108 | 3 | 0.08 | 100 | 4190 | 384 | 21 | 0.1546 | 331,286 |
| 109 | 3 | 0.08 | 100 | 4190 | 384 | 23 | 0.1676 | 327,913 |
| 110 | 5 | 0.08 | 0 | 4085 | 489 | 1802 | 0.0079 | 197 |
| 111 | 5 | 0.08 | 0 | 4085 | 489 | 1801 | 0.0001 | 2 |
| 112 | 5 | 0.08 | 10 | 4085 | 489 | 1801 | 0.0520 | 1,299 |
| 113 | 5 | 0.08 | 10 | 4085 | 489 | 1801 | 0.0493 | 1,232 |
| 114 | 5 | 0.08 | 20 | 4085 | 489 | 1101 | 0.0836 | 3,417 |
| 115 | 5 | 0.08 | 25 | 4085 | 489 | 300 | 0.1538 | 23,070 |
| 116 | 5 | 0.08 | 25 | 4085 | 489 | 328 | 0.1538 | 21,101 |
| 117 | 5 | 0.08 | 25 | 4085 | 489 | 384 | 0.1522 | 17,836 |
| 118 | 5 | 0.08 | 50 | 4190 | 384 | 281 | 0.1636 | 26,199 |
| 119 | 5 | 0.08 | 50 | 4190 | 384 | 279 | 0.1406 | 22,677 |

(continued)

| Standard polymerization conditions include 1.1 equivalence of N,N-dimethylanilinium tetrakis(pentafluorophenyl) borate activator, 0.50 umol TNOA scavenger, 100 °C polymerization temperature, 209 uL neat norbornene, with 20 psi of ethylene (C2) uptake or a maximum reaction time of 30 minutes. 2-Norbornene values reported are for neat norbornene amounts; norbornene was added to the reactor as 42 wt% solution in toluene. Toluene amounts listed in the table include toluene from the norbornene solution in addition to toluene used as the catalyst and activator diluent. | | | | | | | | |
|---|---|---|---|---|---|---|---|---|
| **EX#** | **Cat ID** | **Cat (umol)** | **C2 (psi)** | **Isohexane (uL)** | **Toluene (uL)** | **quench time (s)** | **yield (g)** | **Activity (g P/mmol cat.hr)** |
| 120 | 5 | 0.08 | 50 | 3974 | 600 | 277 | 0.1360 | 22,094 |
| 121 | 5 | 0.08 | 50 | 3974 | 600 | 222 | 0.1380 | 27,973 |
| 122 | 5 | 0.08 | 100 | 4190 | 384 | 33 | 0.1445 | 197,045 |
| 123 | 5 | 0.08 | 100 | 4190 | 384 | 46 | 0.1178 | 115,239 |
| 124 | 5 | 0.08 | 100 | 3974 | 600 | 36 | 0.1724 | 215,500 |
| 125 | 5 | 0.08 | 100 | 3974 | 600 | 35 | 0.1527 | 196,329 |
| 126 | 5 | 0.12 | 35 | 3869 | 705 | 1213 | 0.1680 | 4,155 |
| 127 | 5 | 0.12 | 35 | 3869 | 705 | 1302 | 0.1724 | 3,972 |
| 128 | 6 | 0.08 | 0 | 4085 | 489 | 1801 | 0.0012 | 30 |
| 129 | 6 | 0.08 | 0 | 4085 | 489 | 1800 | -0.0003 | -8 |
| 130 | 6 | 0.08 | 10 | 4085 | 489 | 1801 | 0.0518 | 1,294 |
| 131 | 6 | 0.08 | 10 | 4085 | 489 | 1801 | 0.0484 | 1,209 |
| 132 | 6 | 0.08 | 20 | 4085 | 489 | 963 | 0.1465 | 6,846 |
| 133 | 6 | 0.08 | 25 | 4085 | 489 | 253 | 0.1570 | 27,925 |
| 134 | 6 | 0.08 | 25 | 4085 | 489 | 246 | 0.1443 | 26,396 |
| 135 | 6 | 0.08 | 25 | 4085 | 489 | 305 | 0.1526 | 22,515 |
| 136 | 6 | 0.08 | 50 | 4190 | 384 | 103 | 0.0885 | 38,665 |
| 137 | 6 | 0.08 | 50 | 4190 | 384 | 116 | 0.0867 | 33,634 |
| 138 | 6 | 0.08 | 100 | 4190 | 384 | 16 | 0.1806 | 507,938 |
| 139 | 6 | 0.08 | 100 | 4190 | 384 | 15 | 0.1718 | 515,400 |
| 140 | 33 | 0.08 | 0 | 4085 | 489 | 1801 | 0.0048 | 120 |
| 141 | 33 | 0.08 | 0 | 4085 | 489 | 1800 | -0.0001 | -3 |
| 142 | 33 | 0.08 | 10 | 4085 | 489 | 1800 | 0.0358 | 895 |
| 143 | 33 | 0.08 | 10 | 4085 | 489 | 1800 | 0.0283 | 708 |
| 144 | 33 | 0.08 | 10 | 4085 | 489 | 1801 | 0.0227 | 567 |
| 145 | 33 | 0.08 | 25 | 4085 | 489 | 1034 | 0.0839 | 3,651 |
| 146 | 33 | 0.08 | 25 | 4085 | 489 | 1078 | 0.1399 | 5,840 |
| 147 | 33 | 0.08 | 25 | 4085 | 489 | 1189 | 0.1366 | 5,170 |
| 148 | 33 | 0.08 | 50 | 4190 | 384 | 922 | 0.1465 | 7,150 |
| 149 | 33 | 0.08 | 50 | 4190 | 384 | 815 | 0.1410 | 7,785 |
| 150 | 33 | 0.08 | 100 | 4190 | 384 | 52 | 0.0818 | 70,788 |
| 151 | 33 | 0.08 | 100 | 4190 | 384 | 58 | 0.1126 | 87,362 |
| 152 | 65 | 0.08 | 0 | 4085 | 489 | 1801 | 0.0035 | 87 |

(continued)

| Standard polymerization conditions include 1.1 equivalence of N,N-dimethylanilinium tetrakis(pentafluorophenyl) borate activator, 0.50 umol TNOA scavenger, 100 °C polymerization temperature, 209 uL neat norbornene, with 20 psi of ethylene (C2) uptake or a maximum reaction time of 30 minutes. 2-Norbornene values reported are for neat norbornene amounts; norbornene was added to the reactor as 42 wt% solution in toluene. Toluene amounts listed in the table include toluene from the norbornene solution in addition to toluene used as the catalyst and activator diluent. | | | | | | | | |
|---|---|---|---|---|---|---|---|---|
| **EX#** | **Cat ID** | **Cat (umol)** | **C2 (psi)** | **Isohexane (uL)** | **Toluene (uL)** | **quench time (s)** | **yield (g)** | **Activity (g P/mmol cat.hr)** |
| 153 | 65 | 0.08 | 0 | 4085 | 489 | 1800 | 0.0018 | 45 |
| 154 | 65 | 0.08 | 10 | 4085 | 489 | 1800 | 0.0970 | 2,425 |
| 155 | 65 | 0.08 | 10 | 4085 | 489 | 1800 | 0.0534 | 1,335 |
| 156 | 65 | 0.08 | 10 | 4085 | 489 | 1800 | 0.0511 | 1,278 |
| 157 | 65 | 0.08 | 25 | 4085 | 489 | 391 | 0.1799 | 20,705 |
| 158 | 65 | 0.08 | 25 | 4085 | 489 | 462 | 0.1769 | 17,231 |
| 159 | 65 | 0.08 | 25 | 4085 | 489 | 465 | 0.1724 | 16,684 |
| 160 | 65 | 0.08 | 50 | 4190 | 384 | 209 | 0.1709 | 36,797 |
| 161 | 65 | 0.08 | 50 | 4190 | 384 | 217 | 0.1815 | 37,638 |
| 162 | 65 | 0.08 | 100 | 4190 | 384 | 18 | 0.1708 | 427,000 |
| 163 | 65 | 0.08 | 100 | 4190 | 384 | 20 | 0.1649 | 371,025 |
| 164 | 48 | 0.08 | 0 | 4085 | 489 | 1801 | 0.0031 | 77 |
| 165 | 48 | 0.08 | 0 | 4085 | 489 | 1801 | -0.0005 | -12 |
| 166 | 48 | 0.08 | 10 | 4085 | 489 | 1801 | 0.0224 | 560 |
| 167 | 48 | 0.08 | 10 | 4085 | 489 | 1801 | 0.0238 | 595 |
| 168 | 48 | 0.08 | 20 | 4085 | 489 | 1801 | 0.0545 | 1,362 |
| 169 | 48 | 0.08 | 25 | 4085 | 489 | 836 | 0.1168 | 6,287 |
| 170 | 48 | 0.08 | 25 | 4085 | 489 | 836 | 0.1092 | 5,878 |
| 171 | 48 | 0.08 | 25 | 4085 | 489 | 947 | 0.1084 | 5,151 |
| 172 | 48 | 0.08 | 50 | 4190 | 384 | 372 | 0.1079 | 13,052 |
| 173 | 48 | 0.08 | 50 | 4190 | 384 | 445 | 0.1186 | 11,993 |
| 174 | 48 | 0.08 | 100 | 4190 | 384 | 105 | 0.0983 | 42,129 |
| 175 | 48 | 0.08 | 100 | 4190 | 384 | 126 | 0.0850 | 30,357 |
| 176 | 49 | 0.08 | 0 | 4085 | 489 | 1800 | 0.0024 | 60 |
| 177 | 49 | 0.08 | 0 | 4085 | 489 | 1801 | -0.0002 | -5 |
| 178 | 49 | 0.08 | 10 | 4085 | 489 | 1801 | 0.0190 | 475 |
| 179 | 49 | 0.08 | 10 | 4085 | 489 | 1800 | 0.0137 | 343 |
| 180 | 49 | 0.08 | 20 | 4085 | 489 | 1800 | 0.0292 | 730 |
| 181 | 49 | 0.08 | 25 | 4085 | 489 | 1254 | 0.1037 | 3,721 |
| 182 | 49 | 0.08 | 25 | 4085 | 489 | 286 | 0.1174 | 18,472 |
| 183 | 49 | 0.08 | 25 | 4085 | 489 | 1801 | 0.0959 | 2,396 |
| 184 | 49 | 0.08 | 50 | 4190 | 384 | 212 | 0.1138 | 24,156 |
| 185 | 49 | 0.08 | 50 | 4190 | 384 | 154 | 0.1096 | 32,026 |

(continued)

| Standard polymerization conditions include 1.1 equivalence of N,N-dimethylanilinium tetrakis(pentafluorophenyl) borate activator, 0.50 umol TNOA scavenger, 100 °C polymerization temperature, 209 uL neat norbornene, with 20 psi of ethylene (C2) uptake or a maximum reaction time of 30 minutes. 2-Norbornene values reported are for neat norbornene amounts; norbornene was added to the reactor as 42 wt% solution in toluene. Toluene amounts listed in the table include toluene from the norbornene solution in addition to toluene used as the catalyst and activator diluent. | | | | | | | | |
|---|---|---|---|---|---|---|---|---|
| **EX#** | **Cat ID** | **Cat (umol)** | **C2 (psi)** | **Isohexane (uL)** | **Toluene (uL)** | **quench time (s)** | **yield (g)** | **Activity (g P/mmol cat.hr)** |
| 186 | 49 | 0.08 | 100 | 4190 | 384 | 39 | 0.0847 | 97,731 |
| 187 | 49 | 0.08 | 100 | 4190 | 384 | 42 | 0.1184 | 126,857 |
| C49 | C-1 | 0.08 | 50 | 3974 | 600 | 925 | 0.0822 | 3,999 |
| C50 | C-1 | 0.08 | 50 | 3974 | 600 | 1446 | 0.0822 | 2,558 |
| C51 | C-1 | 0.08 | 100 | 3974 | 600 | 113 | 0.0742 | 29,549 |
| C52 | C-1 | 0.08 | 100 | 3974 | 600 | 125 | 0.0812 | 29,232 |
| C53 | C-1 | 0.12 | 35 | 3869 | 705 | 1800 | 0.0650 | 1,083 |
| C54 | C-1 | 0.12 | 35 | 3869 | 705 | 1801 | 0.0483 | 805 |
| C55 | C-2 | 0.08 | 50 | 3974 | 600 | 195 | 0.0506 | 11,677 |
| C56 | C-2 | 0.08 | 50 | 3974 | 600 | 167 | 0.0480 | 12,934 |
| C57 | C-2 | 0.08 | 100 | 3974 | 600 | 34 | 0.0749 | 99,132 |
| C58 | C-2 | 0.08 | 100 | 3974 | 600 | 36 | 0.0796 | 99,500 |
| C59 | C-2 | 0.12 | 35 | 3869 | 705 | 532 | 0.0517 | 2,915 |
| C60 | C-2 | 0.12 | 35 | 3869 | 705 | 314 | 0.0479 | 4,576 |
| C61 | C-3 | 0.08 | 50 | 3974 | 600 | 279 | 0.1286 | 20,742 |
| C62 | C-3 | 0.08 | 50 | 3974 | 600 | 313 | 0.1258 | 18,086 |
| C63 | C-3 | 0.08 | 100 | 3974 | 600 | 38 | 0.1210 | 143,289 |
| C64 | C-3 | 0.08 | 100 | 3974 | 600 | 41 | 0.1231 | 135,110 |
| C65 | C-3 | 0.12 | 35 | 3869 | 705 | 881 | 0.1340 | 4,563 |
| C66 | C-3 | 0.12 | 35 | 3869 | 705 | 296 | 0.1215 | 12,314 |
| C67 | C-5 | 0.08 | 50 | 3974 | 600 | 406 | 0.1564 | 17,335 |
| C68 | C-5 | 0.08 | 50 | 3974 | 600 | 643 | 0.1416 | 9,910 |
| C69 | C-5 | 0.08 | 100 | 3974 | 600 | 36 | 0.1464 | 183,000 |
| C70 | C-5 | 0.08 | 100 | 3974 | 600 | 33 | 0.1534 | 209,182 |
| C71 | C-5 | 0.12 | 35 | 3869 | 705 | 1800 | 0.1484 | 2,473 |
| C72 | C-5 | 0.12 | 35 | 3869 | 705 | 1802 | 0.1145 | 1,906 |
| C73 | C-6 | 0.08 | 50 | 3974 | 600 | 131 | 0.1218 | 41,840 |
| C74 | C-6 | 0.08 | 50 | 3974 | 600 | 120 | 0.1226 | 45,975 |
| C75 | C-6 | 0.08 | 100 | 3974 | 600 | 12 | 0.1342 | 503,250 |
| C76 | C-6 | 0.08 | 100 | 3974 | 600 | 13 | 0.1427 | 493,962 |
| C77 | C-6 | 0.12 | 35 | 3869 | 705 | 594 | 0.1600 | 8,081 |
| C78 | C-6 | 0.12 | 35 | 3869 | 705 | 1801 | 0.1612 | 2,685 |
| C79 | C-7 | 0.08 | 50 | 3974 | 600 | 89 | 0.1543 | 78,017 |

(continued)

| Standard polymerization conditions include 1.1 equivalence of N,N-dimethylanilinium tetrakis(pentafluorophenyl) borate activator, 0.50 umol TNOA scavenger, 100 °C polymerization temperature, 209 uL neat norbornene, with 20 psi of ethylene (C2) uptake or a maximum reaction time of 30 minutes. 2-Norbornene values reported are for neat norbornene amounts; norbornene was added to the reactor as 42 wt% solution in toluene. Toluene amounts listed in the table include toluene from the norbornene solution in addition to toluene used as the catalyst and activator diluent. | | | | | | | | |
|---|---|---|---|---|---|---|---|---|
| **EX#** | **Cat ID** | **Cat (umol)** | **C2 (psi)** | **Isohexane (uL)** | **Toluene (uL)** | **quench time (s)** | **yield (g)** | **Activity (g P/mmol cat.hr)** |
| C80 | C-7 | 0.08 | 50 | 3974 | 600 | 89 | 0.1523 | 77,006 |
| C81 | C-7 | 0.08 | 100 | 3974 | 600 | 18 | 0.2062 | 515,500 |
| C82 | C-7 | 0.08 | 100 | 3974 | 600 | 20 | 0.2111 | 474,975 |
| C83 | C-7 | 0.12 | 35 | 3869 | 705 | 649 | 0.1494 | 6,906 |
| C84 | C-7 | 0.12 | 35 | 3869 | 705 | 488 | 0.1477 | 9,080 |

**Table 3 - part 2.** Ethylene-norbornene copolymerizations - polymer characterization. Norbornene incorporation in the polymer is from $^{13}C$ NMR where NB is norbornene.

| EX# | Cat ID | Mn | Mw | Mz | PDI | Tm (°C) | NB (mol%) | % isolated | % alternating | % blocked |
|---|---|---|---|---|---|---|---|---|---|---|
| 86 | 1 | | | | | | | | | |
| 87 | 1 | | | | | | | | | |
| 88 | 1 | 23,087 | 40,590 | 80,221 | 1.76 | | | | | |
| 89 | 1 | 24,480 | 39,363 | 78,753 | 1.61 | | | | | |
| 90 | 1 | 37,999 | 69,832 | 145,894 | 1.84 | | | | | |
| 91 | 1 | 72,750 | 135,775 | 286,676 | 1.87 | | 40.6 | 40.0 | 50.4 | 9.6 |
| 92 | 1 | 87,406 | 155,583 | 341,139 | 1.78 | | 40.6 | 40.0 | 50.4 | 9.6 |
| 93 | 1 | 83,650 | 150,497 | 327,966 | 1.80 | | 40.6 | 40.0 | 50.4 | 9.6 |
| 94 | 1 | 150,338 | 269,198 | 614,625 | 1.79 | | 33.6 | 47.5 | 46.0 | 6.5 |
| 95 | 1 | 94,077 | 176,688 | 418,470 | 1.88 | | 33.6 | 47.5 | 46.0 | 6.5 |
| 96 | 1 | 248,455 | 431,399 | 862,620 | 1.74 | | 25.9 | 62.3 | 33.1 | 4.5 |
| 97 | 1 | 201,252 | 354,802 | 783,070 | 1.76 | | 25.9 | 62.3 | 33.1 | 4.5 |
| 98 | 3 | | | | | | | | | |
| 99 | 3 | | | | | | | | | |
| 100 | 3 | 17,361 | 30,988 | 63,058 | 1.78 | | | | | |
| 101 | 3 | 18,590 | 30,384 | 57,844 | 1.63 | | | | | |
| 102 | 3 | 34,906 | 57,146 | 119,590 | 1.64 | | | | | |
| 103 | 3 | 68,169 | 109,023 | 202,282 | 1.60 | | 39.3 | 38.7 | 55.1 | 6.2 |
| 104 | 3 | 75,117 | 121,197 | 249,360 | 1.61 | | 39.3 | 38.7 | 55.1 | 6.2 |
| 105 | 3 | 68,597 | 111,123 | 219,241 | 1.62 | | 39.3 | 38.7 | 55.1 | 6.2 |
| 106 | 3 | 126,504 | 255,982 | 603,588 | 2.02 | | 34.8 | 44.8 | 50.6 | 4.7 |
| 107 | 3 | 135,520 | 242,080 | 505,538 | 1.79 | | 34.8 | 44.8 | 50.6 | 4.7 |
| 108 | 3 | 285,957 | 593,695 | 1,361,166 | 2.08 | | 28.1 | 59.8 | 36.7 | 3.5 |
| 109 | 3 | 245,209 | 499,440 | 1,114,267 | 2.04 | | 28.1 | 59.8 | 36.7 | 3.5 |

(continued)

| EX# | Cat ID | Mn | Mw | Mz | PDI | Tm (°C) | NB (mol%) | % isolated | % alternating | % blocked |
|---|---|---|---|---|---|---|---|---|---|---|
| 110 | 5 | | | | | | | | | |
| 111 | 5 | | | | | | | | | |
| 112 | 5 | 38,309 | 60,884 | 121,550 | 1.59 | | | | | |
| 113 | 5 | 31,099 | 59,663 | 144,488 | 1.92 | | | | | |
| 114 | 5 | 75,373 | 156,134 | 379,484 | 2.07 | | | | | |
| 115 | 5 | 115,248 | 219,527 | 531,657 | 1.90 | | 39.8 | 40.8 | 50.2 | 9.0 |
| 116 | 5 | 110,041 | 206,614 | 505,350 | 1.88 | | 39.8 | 40.8 | 50.2 | 9.0 |
| 117 | 5 | 94,662 | 182,023 | 417,304 | 1.92 | | 39.8 | 40.8 | 50.2 | 9.0 |
| 118 | 5 | 71,597 | 118,554 | 237,862 | 1.66 | | 35.7 | 47.5 | 48.6 | 3.9 |
| 119 | 5 | 42,218 | 70,717 | 143,010 | 1.68 | | 35.7 | 47.5 | 48.6 | 3.9 |
| 120 | 5 | 143,352 | 273,507 | 596,388 | 1.91 | | | | | |
| 121 | 5 | 123,578 | 241,070 | 527,338 | 1.95 | | 34.5 | 49.3 | 47.7 | 3.0 |
| 122 | 5 | 141,163 | 225,812 | 458,279 | 1.60 | | 27.5 | 62.5 | 35.1 | 2.4 |
| 123 | 5 | 99,795 | 173,227 | 361,014 | 1.74 | | 27.5 | 62.5 | 35.1 | 2.4 |
| 124 | 5 | 287,420 | 591,332 | 1,327,815 | 2.06 | | | | | |
| 125 | 5 | 238,433 | 554,041 | 1,340,171 | 2.32 | | 26.8 | 64.1 | 33.4 | 2.5 |
| 126 | 5 | 75,310 | 133,580 | 279,429 | 1.77 | | | | | |
| 127 | 5 | 76,375 | 153,930 | 379,592 | 2.02 | | 38.2 | 40.6 | 55.6 | 3.8 |
| 128 | 6 | | | | | | | | | |
| 129 | 6 | | | | | | | | | |
| 130 | 6 | 34,760 | 57,621 | 118,454 | 1.66 | | | | | |
| 131 | 6 | 28,805 | 47,204 | 92,114 | 1.64 | | | | | |
| 132 | 6 | 73,969 | 124,091 | 269,718 | 1.68 | | | | | |
| 133 | 6 | 104,865 | 196,120 | 487,139 | 1.87 | | 39.4 | 39.2 | 54.1 | 6.6 |
| 134 | 6 | 98,905 | 174,110 | 371,652 | 1.76 | | 39.4 | 39.2 | 54.1 | 6.6 |
| 135 | 6 | 93,117 | 170,118 | 388,214 | 1.83 | | 39.4 | 39.2 | 54.1 | 6.6 |
| 136 | 6 | 66,514 | 109,684 | 228,663 | 1.65 | | 36.0 | 45.4 | 50.8 | 3.8 |
| 137 | 6 | 68,940 | 108,913 | 212,312 | 1.58 | | 36.0 | 45.4 | 50.8 | 3.8 |
| 138 | 6 | 147,427 | 259,637 | 577,752 | 1.76 | | 28.1 | 59.4 | 35.4 | 5.2 |
| 139 | 6 | 109,550 | 210,914 | 469,313 | 1.93 | | 28.1 | 59.4 | 35.4 | 5.2 |
| 140 | 33 | | | | | | | | | |
| 141 | 33 | | | | | | | | | |
| 142 | 33 | 39,806 | 73,337 | 166,494 | 1.84 | | | | | |
| 143 | 33 | 53,603 | 101,425 | 226,686 | 1.89 | | | | | |
| 144 | 33 | 59,450 | 94,649 | 192,521 | 1.59 | | | | | |
| 145 | 33 | 146,619 | 347,374 | 832,623 | 2.37 | | 42.3 | 35.4 | 50.6 | 14.1 |
| 146 | 33 | 157,589 | 329,794 | 762,328 | 2.09 | | 42.3 | 35.4 | 50.6 | 14.1 |
| 147 | 33 | 160,152 | 328,888 | 737,545 | 2.05 | | 42.3 | 35.4 | 50.6 | 14.1 |
| 148 | 33 | 86,279 | 159,481 | 358,105 | 1.85 | | 33.6 | 44.2 | 49.7 | 6.2 |

(continued)

| EX# | Cat ID | Mn | Mw | Mz | PDI | Tm (°C) | NB (mol%) | % isolated | % alternating | % blocked |
|---|---|---|---|---|---|---|---|---|---|---|
| 149 | 33 | 73,757 | 135,687 | 304,440 | 1.84 | | 33.6 | 44.2 | 49.7 | 6.2 |
| 150 | 33 | 127,552 | 226,362 | 504,418 | 1.77 | | 27.1 | 58.1 | 37.2 | 4.7 |
| 151 | 33 | 119,710 | 217,902 | 509,907 | 1.82 | | 27.1 | 58.1 | 37.2 | 4.7 |
| 152 | 65 | | | | | | | | | |
| 153 | 65 | | | | | | | | | |
| 154 | 65 | 43,367 | 72,195 | 145,600 | 1.66 | | | | | |
| 155 | 65 | 35,932 | 60,865 | 127,941 | 1.69 | | | | | |
| 156 | 65 | 35,432 | 61,135 | 135,599 | 1.73 | | | | | |
| 157 | 65 | 67,931 | 164,241 | 396,532 | 2.42 | | 45.5 | 29.3 | 53.4 | 17.3 |
| 158 | 65 | 69,702 | 162,105 | 390,125 | 2.33 | | 45.5 | 29.3 | 53.4 | 17.3 |
| 159 | 65 | 78,045 | 160,910 | 389,462 | 2.06 | | 45.5 | 29.3 | 53.4 | 17.3 |
| 160 | 65 | 119,244 | 227,624 | 512,652 | 1.91 | | 35.8 | 35.1 | 51.7 | 13.2 |
| 161 | 65 | 89,668 | 179,910 | 471,313 | 2.01 | | 35.8 | 35.1 | 51.7 | 13.2 |
| 162 | 65 | 130,122 | 259,839 | 634,460 | 2.00 | | 31.0 | 51.2 | 38.6 | 10.2 |
| 163 | 65 | 122,252 | 278,637 | 684,675 | 2.28 | | 31.0 | 51.2 | 38.6 | 10.2 |
| 164 | 48 | | | | | | | | | |
| 165 | 48 | | | | | | | | | |
| 166 | 48 | 4,891 | 9,126 | 19,506 | 1.87 | | | | | |
| 167 | 48 | 5,389 | 9,710 | 20,908 | 1.80 | | | | | |
| 168 | 48 | 9,446 | 17,132 | 35,865 | 1.81 | | | | | |
| 169 | 48 | 18,180 | 35,535 | 94,958 | 1.95 | | 34.8 | 51.8 | 45.2 | 3.0 |
| 170 | 48 | 16,745 | 34,748 | 105,528 | 2.08 | | 34.8 | 51.8 | 45.2 | 3.0 |
| 171 | 48 | | | | | | 34.8 | 51.8 | 45.2 | 3.0 |
| 172 | 48 | 56,677 | 129,301 | 354,981 | 2.28 | | 29.8 | 59.2 | 35.3 | 5.6 |
| 173 | 48 | 54,410 | 108,958 | 257,686 | 2.00 | | 29.8 | 59.2 | 35.3 | 5.6 |
| 174 | 48 | 134,204 | 310,042 | 728,559 | 2.31 | | 22.3 | 71.0 | 26.5 | 2.6 |
| 175 | 48 | 136,758 | 325,626 | 907,867 | 2.38 | | 22.3 | 71.0 | 26.5 | 2.6 |
| 176 | 49 | | | | | | | | | |
| 177 | 49 | | | | | | | | | |
| 178 | 49 | 3,198 | 6,130 | 14,807 | 1.92 | | | | | |
| 179 | 49 | 3,046 | 5,146 | 10,705 | 1.69 | | | | | |
| 180 | 49 | 4,475 | 8,219 | 18,600 | 1.84 | | | | | |
| 181 | 49 | | | | | | 33.8 | 52.4 | 42.8 | 4.9 |
| 182 | 49 | 9,717 | 20,506 | 49,818 | 2.11 | | 33.8 | 52.4 | 42.8 | 4.9 |
| 183 | 49 | 6,707 | 12,941 | 28,531 | 1.93 | | 33.8 | 52.4 | 42.8 | 4.9 |
| 184 | 49 | 17,348 | 37,608 | 107,078 | 2.17 | | 28.7 | 62.0 | 34.7 | 3.3 |
| 185 | 49 | 17,316 | 37,874 | 134,393 | 2.19 | | 28.7 | 62.0 | 34.7 | 3.3 |
| 186 | 49 | 64,662 | 135,485 | 397,194 | 2.10 | | 23.5 | 69.0 | 23.1 | 7.9 |
| 187 | 49 | 56,954 | 119,067 | 309,417 | 2.09 | | 23.5 | 69.0 | 23.1 | 7.9 |

(continued)

| EX# | Cat ID | Mn | Mw | Mz | PDI | Tm (°C) | NB (mol%) | % isolated | % alternating | % blocked |
|---|---|---|---|---|---|---|---|---|---|---|
| C49 | C-1 | 82,605 | 140,522 | 284,675 | 1.70 | | 23.3 | 69.2 | 23.6 | 7.2 |
| C50 | C-1 | 72,689 | 114,186 | 217,964 | 1.57 | | 23.3 | 69.2 | 23.6 | 7.2 |
| C51 | C-1 | 190,229 | 351,578 | 851,205 | 1.85 | | 16.8 | 80.8 | 16.4 | 2.7 |
| C52 | C-1 | 210,960 | 361,501 | 765,265 | 1.71 | | 16.8 | 80.8 | 16.4 | 2.7 |
| C53 | C-1 | 29,884 | 56,712 | 131,523 | 1.90 | | | | | |
| C54 | C-1 | 25,782 | 41,353 | 79,388 | 1.60 | | | | | |
| C55 | C-2 | 68,786 | 119,860 | 274,964 | 1.74 | 94.3 | | | | |
| C56 | C-2 | 59,791 | 95,325 | 180,808 | 1.59 | 84.4 | | | | |
| C57 | C-2 | 85,534 | 143,562 | 314,538 | 1.68 | 96.4 | 5.2 | 92.2 | 4.4 | 3.4 |
| C58 | C-2 | 63,082 | 132,434 | 327,501 | 2.10 | 98.0 | 5.2 | 92.2 | 4.4 | 3.4 |
| C59 | C-2 | 50,178 | 90,736 | 217,449 | 1.81 | 100.4 | | | | |
| C60 | C-2 | 43,861 | 84,430 | 189,362 | 1.92 | 100.9 | | | | |
| C61 | C-3 | 193,273 | 367,945 | 824,345 | 1.90 | | 32.2 | 59.1 | 30.2 | 10.7 |
| C62 | C-3 | 160,363 | 283,520 | 588,801 | 1.77 | | 32.2 | 59.1 | 30.2 | 10.7 |
| C63 | C-3 | 236,431 | 429,519 | 891,869 | 1.82 | | 22.9 | 74.1 | 19.2 | 6.7 |
| C64 | C-3 | 244,448 | 470,464 | 1,032,258 | 1.92 | | 22.9 | 74.1 | 19.2 | 6.7 |
| C65 | C-3 | 126,023 | 225,567 | 446,774 | 1.79 | | 36.3 | 53.1 | 35.4 | 11.5 |
| C66 | C-3 | 178,940 | 328,698 | 848,187 | 1.84 | | 36.3 | 53.1 | 35.4 | 11.5 |
| C67 | C-5 | 68,281 | 116,890 | 223,585 | 1.71 | | 33.9 | 64.6 | 26.4 | 9.0 |
| C68 | C-5 | 60,808 | 100,888 | 205,414 | 1.66 | | | | | |
| C69 | C-5 | 100,049 | 178,752 | 380,995 | 1.79 | | | | | |
| C70 | C-5 | 159,651 | 297,209 | 681,027 | 1.86 | | 26.7 | 76.4 | 18.9 | 4.7 |
| C71 | C-5 | 45,260 | 82,799 | 161,730 | 1.83 | | 38.4 | 57.9 | 31.4 | 10.6 |
| C72 | C-5 | 54,049 | 94,143 | 203,350 | 1.74 | | | | | |
| C73 | C-6 | 98,801 | 174,000 | 405,430 | 1.76 | | 29.2 | 76.7 | 22.2 | 1.2 |
| C74 | C-6 | 89,577 | 144,882 | 281,251 | 1.62 | | 29.2 | 76.7 | 22.2 | 1.2 |
| C75 | C-6 | 129,334 | 249,476 | 582,450 | 1.93 | | 18.1 | 76.4 | 18.9 | 4.7 |
| C76 | C-6 | 154,881 | 312,389 | 727,313 | 2.02 | | 18.1 | 76.4 | 18.9 | 4.7 |
| C77 | C-6 | 84,338 | 151,127 | 334,627 | 1.79 | | 35.6 | 67.0 | 28.5 | 4.5 |
| C78 | C-6 | 65,250 | 118,951 | 270,871 | 1.82 | | | | | |
| C79 | C-7 | 337,400 | 571,442 | 1,110,189 | 1.69 | | 37.5 | 76.7 | 22.2 | 1.2 |
| C80 | C-7 | 297,461 | 513,644 | 1,020,739 | 1.73 | | | | | |
| C81 | C-7 | 438,100 | 947,323 | 2,325,047 | 2.16 | | | | | |
| C82 | C-7 | 434,853 | 923,060 | 2,302,073 | 2.12 | | 29.1 | 59.7 | 39.1 | 1.2 |
| C83 | C-7 | 303,807 | 428,716 | 754,838 | 1.41 | | 37.6 | 67.0 | 28.5 | 4.5 |
| C84 | C-7 | 473,649 | 913,617 | 2,298,421 | 1.93 | | | | | |

**Table 4.** Propylene-cyclopentene copolymerizations.

Standard polymerization conditions include 0.120 umol catalyst complex, 1.1 equivalence of N,N-dimethylanilinium tetrakis(pentafluorophenyl)borate activator, 0.50 umol TNOA scavenger, 0.50 ml cyclopentene, 415 uL of toluene, 100°C polymerization temperature, 8 psi pressure loss (quench value) or a maximum reaction time of 30 minutes. Cyclopentene incorporation in the polymer from $^{13}C$ NMR where Cp is cyclopentene, P is propylene.

| EX# | Cat ID | C3 (uL) | Isohexane (uL) | quench time (s) | yield (g) | Activity (g P/mmol cat.hr) | Mn | Mw | Mz | PDI | Tm (°C) | Cp (mol%) | P (mol%) | erythro defects (%) |
|---|---|---|---|---|---|---|---|---|---|---|---|---|---|---|
| 188 | 1 | 100 | 4085 | 35 | 0.1130 | 96,857 | 11,916 | 21,321 | 44,401 | 1.79 | 108.8 | | | |
| 189 | 1 | 100 | 4085 | 87 | 0.1506 | 51,931 | 9,165 | 17,726 | 41,007 | 1.93 | | 7.4 | 92.5 | 0.1 |
| 190 | 1 | 300 | 3885 | 19 | 0.1564 | 246,947 | 10,810 | 26,360 | 73,024 | 2.44 | 119.3 | | | |
| 191 | 1 | 300 | 3885 | 22 | 0.1785 | 243,409 | 9,861 | 21,750 | 57,477 | 2.21 | 115.5 | 5.4 | 94.5 | 0.1 |
| 192 | 1 | 500 | 3685 | 9 | 0.1726 | 575,333 | 10,405 | 34,467 | 103,977 | 3.31 | 127.0 | 4.4 | 95.3 | 0.4 |
| 193 | 1 | 500 | 3685 | 11 | 0.1009 | 275,182 | 9,086 | 39,493 | 164,216 | 4.35 | 144.0 | | | |
| 194 | 3 | 100 | 4085 | 60 | 0.1238 | 61,900 | 11,227 | 20,092 | 41,115 | 1.79 | | | | |
| 195 | 3 | 100 | 4085 | 88 | 0.1550 | 52,841 | 11,319 | 18,567 | 37,045 | 1.64 | | 12.0 | 87.3 | 0.6 |
| 196 | 3 | 300 | 3885 | 36 | 0.2026 | 168,833 | 13,696 | 27,439 | 66,519 | 2.00 | | | | |
| 197 | 3 | 300 | 3885 | 25 | 0.2220 | 266,400 | 12,771 | 27,838 | 74,406 | 2.18 | | 9.6 | 89.8 | 0.7 |
| 198 | 3 | 500 | 3685 | 20 | 0.2652 | 397,800 | 9,956 | 27,640 | 77,725 | 2.78 | | | | |
| 199 | 3 | 500 | 3685 | 24 | 0.2677 | 334,625 | 13,411 | 30,425 | 82,437 | 2.27 | | 9.8 | 89.6 | 0.7 |
| 200 | 5 | 100 | 4085 | 43 | 0.1294 | 90,279 | 9,141 | 19,461 | 52,444 | 2.13 | 103.7 | 7.8 | 92.0 | 0.2 |
| 201 | 5 | 100 | 4085 | 37 | 0.1323 | 107,270 | 11,420 | 20,662 | 43,790 | 1.81 | 104.7 | 7.8 | 92.0 | 0.2 |
| 202 | 5 | 300 | 3885 | 15 | 0.1848 | 369,600 | 10,627 | 27,878 | 86,027 | 2.62 | 118.8 | 5.4 | 94.5 | 0.1 |
| 203 | 5 | 300 | 3885 | 12 | 0.1725 | 431,250 | 15,605 | 35,856 | 89,119 | 2.30 | 123.9 | | | |
| 204 | 5 | 500 | 3685 | 19 | 0.2360 | 372,632 | 9,526 | 28,122 | 79,010 | 2.95 | 118.3 | 5.4 | 94.5 | 0.1 |
| 205 | 5 | 500 | 3685 | 8 | 0.1878 | 704,250 | 11,563 | 32,150 | 91,174 | 2.78 | 123.9 | | | |
| 206 | 6 | 100 | 4085 | 63 | 0.1743 | 83,000 | 10,656 | 19,699 | 44,268 | 1.85 | | 12.6 | 86.7 | 0.6 |
| 207 | 6 | 100 | 4085 | 30 | 0.1439 | 143,900 | 13,442 | 26,767 | 62,781 | 1.99 | | | | |
| 208 | 6 | 300 | 3885 | 21 | 0.2270 | 324,286 | 13,078 | 31,383 | 88,661 | 2.40 | | 10.1 | 89.4 | 0.6 |
| 209 | 6 | 300 | 3885 | 10 | 0.1989 | 596,700 | 10,050 | 31,192 | 84,922 | 3.10 | | | | |

(continued)

Standard polymerization conditions include 0.120 umol catalyst complex, 1.1 equivalence of N,N-dimethylanilinium tetrakis(pentafluorophenyl)borate activator, 0.50 umol TNOA scavenger, 0.50 ml cyclopentene, 415 uL of toluene, 100°C polymerization temperature, 8 psi pressure loss (quench value) or a maximum reaction time of 30 minutes. Cyclopentene incorporation in the polymer from $^{13}C$ NMR where Cp is cyclopentene, P is propylene.

| EX# | Cat ID | C3 (uL) | Isohexane (uL) | quench time (s) | yield (g) | Activity (g P/mmol cat.hr) | Mn | Mw | Mz | PDI | Tm (°C) | Cp (mol%) | P (mol%) | erythro defects (%) |
|---|---|---|---|---|---|---|---|---|---|---|---|---|---|---|
| 210 | 6 | 500 | 3685 | 19 | 0.2996 | 473,053 | 8,433 | 25,532 | 71,475 | 3.03 | | | | |
| 211 | 6 | 500 | 3685 | 10 | 0.2525 | 757,500 | 12,687 | 32,267 | 83,773 | 2.54 | | 8.9 | 90.3 | 0.7 |
| 212 | 65 | 100 | 4085 | 168 | 0.0801 | 14,304 | 9,006 | 15,211 | 29,287 | 1.69 | | 11.0 | 86.3 | 2.7 |
| | | 100 | 4085 | 147 | 0.0885 | 18,061 | 9,812 | 17,559 | 36,631 | 1.79 | | 11.0 | 86.3 | 2.7 |
| 214 | 65 | 300 | 3885 | 61 | 0.0947 | 46,574 | 14,982 | 25,296 | 47,893 | 1.69 | | 9.2 | 87.9 | 2.8 |
| 215 | 65 | 300 | 3885 | 78 | 0.1253 | 48,192 | 12,538 | 20,291 | 37,315 | 1.62 | | 9.2 | 87.9 | 2.8 |
| 216 | 65 | 500 | 3685 | 72 | 0.1466 | 61,083 | 12,711 | 22,200 | 44,008 | 1.75 | | 8.6 | 88.5 | 3.0 |
| 217 | 65 | 500 | 3685 | 49 | 0.1323 | 81,000 | 13,168 | 22,161 | 41,664 | 1.68 | | 8.6 | 88.5 | 3.0 |
| 218 | 48 | 100 | 4085 | 139 | 0.0865 | 18,669 | 7,246 | 12,838 | 25,556 | 1.77 | 111.6 | 5.9 | 93.8 | 0.3 |
| 219 | 48 | 100 | 4085 | 252 | 0.1291 | 15,369 | 6,899 | 11,734 | 23,078 | 1.70 | 102.1 | 5.9 | 93.8 | 0.3 |
| 220 | 48 | 300 | 3885 | 62 | 0.1100 | 53,226 | 11,222 | 21,443 | 46,690 | 1.91 | 120.4 | 4.7 | 95.0 | 0.3 |
| 221 | 48 | 300 | 3885 | 53 | 0.1120 | 63,396 | 11,129 | 19,593 | 39,963 | 1.76 | 119.4 | 4.7 | 95.0 | 0.3 |
| 222 | 48 | 500 | 3685 | 53 | 0.1386 | 78,453 | 13,547 | 23,917 | 52,998 | 1.77 | 121.4 | 4.5 | 95.2 | 0.3 |
| 223 | 48 | 500 | 3685 | 53 | 0.1474 | 83,434 | 12,026 | 21,048 | 40,703 | 1.75 | 119.4 | 4.5 | 95.2 | 0.3 |
| 224 | 49 | 100 | 4085 | 116 | 0.1196 | 30,931 | 5,992 | 10,314 | 20,882 | 1.72 | | 11.4 | 87.6 | 1.0 |
| 225 | 49 | 100 | 4085 | 127 | 0.1150 | 27,165 | 4,470 | 8,270 | 17,628 | 1.85 | | 11.4 | 87.6 | 1.0 |
| 226 | 49 | 300 | 3885 | 70 | 0.1664 | 71,314 | 6,838 | 12,580 | 26,769 | 1.84 | | | | |
| 227 | 49 | 300 | 3885 | 48 | 0.1684 | 105,250 | 6,256 | 11,883 | 25,318 | 1.90 | | 7.2 | 92.3 | 0.5 |
| 228 | 49 | 500 | 3685 | 12 | 0.1085 | 271,250 | 8,221 | 42,438 | 194,953 | 5.16 | 133.5 | | | |
| 229 | 49 | 500 | 3685 | 42 | 0.1936 | 138,286 | 8,926 | 15,064 | 31,599 | 1.69 | | 9.9 | 89.4 | 0.6 |

**Table 5.** Additional ethylene-norbornene copolymerizations.

Standard polymerization conditions include 1.1 equivalence of N,N-dimethylanilinium tetrakis(pentafluorophenyl)borate activator, 0.50 umol TNOA scavenger, 100°C polymerization temperature, 659 uL neat norbornene, with 20 psi of ethylene uptake or a maximum reaction time of 30 minutes. 2-Norbornene values reported are for neat norbornene amounts; norbornene was added to the reactor as 78 wt% solution in toluene. Toluene amounts listed in the table include toluene from the norbornene solution in addition to toluene used as the catalyst and activator diluent. Norbornene incorporation in the polymer is from $^{13}C$ NMR where NB is norbornene.

| EX# | Cat ID | Cat (umol) | C2 (psi) | Isohexane (uL) | Toluene (uL) | quench time (s) | yield (g) | Activity (g P/mmol cat.hr) | Mn | Mw | Mz | PDI | NB (mol%) | % isolated | % alternating | % blocked |
|---|---|---|---|---|---|---|---|---|---|---|---|---|---|---|---|---|
| 289 | 5 | 0.16 | 75 | 3630 | 710 | 93 | 0.2024 | 48,968 | 172,739 | 326,382 | 666,786 | 1.89 | | | | |
| 290 | 5 | 0.16 | 75 | 3630 | 710 | 108 | 0.2170 | 45,208 | 183,057 | 326,770 | 702,781 | 1.79 | 53.2 | 30.7 | 45.5 | 23.8 |
| 291 | 5 | 0.16 | 75 | 3630 | 710 | 100 | 0.2130 | 47,925 | 198,966 | 351,600 | 760,872 | 1.77 | | | | |
| 292 | 5 | 0.16 | 100 | 3630 | 710 | 54 | 0.2457 | 102,375 | 221,018 | 469,757 | 1,062,670 | 2.13 | 56.3 | 33.1 | 36.7 | 30.2 |
| 293 | 5 | 0.16 | 100 | 3630 | 710 | 58 | 0.2261 | 87,711 | 237,163 | 462,829 | 950,442 | 1.95 | | | | |
| 294 | 5 | 0.16 | 100 | 3630 | 710 | 43 | 0.2279 | 119,250 | 297,224 | 577,833 | 1,378,917 | 1.94 | | | | |
| 295 | 6 | 0.16 | 75 | 3630 | 710 | 49 | 0.2484 | 114,061 | 213,521 | 369,139 | 764,642 | 1.73 | | | | |
| 296 | 6 | 0.16 | 75 | 3630 | 710 | 46 | 0.2156 | 105,457 | 185,523 | 363,156 | 765,351 | 1.96 | | | | |
| 297 | 6 | 0.16 | 75 | 3630 | 710 | 51 | 0.2504 | 110,471 | 206,076 | 394,810 | 943,345 | 1.92 | 55.3 | 29.2 | 43.2 | 27.6 |
| 298 | 6 | 0.16 | 100 | 3630 | 710 | 21 | 0.3127 | 335,036 | 224,568 | 461,841 | 1,027,260 | 2.06 | 64.6 | 27.0 | 32.5 | 40.4 |
| 299 | 6 | 0.16 | 100 | 3630 | 710 | 36 | 0.2859 | 178,688 | 217,217 | 400,120 | 827,822 | 1.84 | | | | |
| 300 | 6 | 0.16 | 100 | 3630 | 710 | 28 | 0.2836 | 227,893 | 291,203 | 548,906 | 1,141,558 | 1.88 | | | | |
| 301 | 23 | 0.16 | 75 | 3630 | 710 | 1800 | 0.0785 | 981 | 38,253 | 64,389 | 135,373 | 1.68 | 45.0 | 20.1 | 72.1 | 7.8 |
| 302 | 23 | 0.16 | 75 | 3630 | 710 | 1800 | 0.0692 | 865 | 37,368 | 60,903 | 121,767 | 1.63 | 45.0 | 20.1 | 72.1 | 7.8 |
| 303 | 23 | 0.16 | 75 | 3630 | 710 | 1801 | 0.0470 | 587 | 57,010 | 106,950 | 251,929 | 1.88 | | | | |
| 304 | 23 | 0.16 | 100 | 3630 | 710 | 1801 | 0.1090 | 1,362 | 69,164 | 118,656 | 241,944 | 1.72 | 45.0 | 22.3 | 71.5 | 6.1 |
| 305 | 23 | 0.16 | 100 | 3630 | 710 | 1800 | 0.1077 | 1,346 | 60,419 | 105,702 | 221,763 | 1.75 | 45.0 | 22.3 | 71.5 | 6.1 |
| 306 | 23 | 0.16 | 100 | 3630 | 710 | 1801 | 0.0987 | 1,233 | 144,231 | 234,869 | 490,351 | 1.63 | | | | |
| 307 | 24 | 0.16 | 75 | 3630 | 710 | 623 | 0.1791 | 6,468 | 51,896 | 90,393 | 198,440 | 1.74 | 48.5 | 17.3 | 70.3 | 12.3 |
| 308 | 24 | 0.16 | 100 | 3630 | 710 | 270 | 0.1986 | 16,550 | 49,471 | 79,796 | 149,607 | 1.61 | 47.5 | 20.6 | 69.1 | 10.3 |
| 309 | 65 | 0.04 | 75 | 3945 | 395 | 310 | 0.1648 | 47,845 | 198,293 | 412,117 | 999,969 | 2.08 | | | | |
| 310 | 65 | 0.04 | 75 | 3945 | 395 | 367 | 0.1629 | 39,948 | 188,344 | 459,108 | 1,180,100 | 2.44 | | | | |
| 311 | 65 | 0.04 | 75 | 3945 | 395 | 549 | 0.1905 | 31,230 | 251,161 | 529,615 | 1,378,769 | 2.11 | 53.6 | 25.9 | 50.4 | 23.8 |

(continued)

Standard polymerization conditions include 1.1 equivalence of N,N-dimethylanilinium tetrakis(pentafluorophenyl)borate activator, 0.50 umol TNOA scavenger, 100°C polymerization temperature, 659 uL neat norbornene, with 20 psi of ethylene uptake or a maximum reaction time of 30 minutes. 2-Norbornene values reported are for neat norbornene amounts; norbornene was added to the reactor as 78 wt% solution in toluene. Toluene amounts listed in the table include toluene from the norbornene solution in addition to toluene used as the catalyst and activator diluent. Norbornene incorporation in the polymer is from $^{13}C$ NMR where NB is norbornene.

| EX# | Cat ID | Cat (umol) | C2 (psi) | Isohexane (uL) | Toluene (uL) | quench time (s) | yield (g) | Activity (g P/mmol cat.hr) | Mn | Mw | Mz | PDI | NB (mol%) | % isolated | % alternating | % blocked |
|---|---|---|---|---|---|---|---|---|---|---|---|---|---|---|---|---|
| 312 | 65 | 0.04 | 100 | 3945 | 395 | 127 | 0.1639 | 116,150 | 90,536 | 186,224 | 427,094 | 2.06 | 45.9 | 33.0 | 51.5 | 15.6 |
| 313 | 65 | 0.04 | 100 | 3945 | 395 | 111 | 0.1613 | 130,784 | 93,471 | 176,534 | 416,229 | 1.89 | | | | |
| 314 | 65 | 0.04 | 100 | 3945 | 395 | 93 | 0.1643 | 159,000 | 141,090 | 270,006 | 642,973 | 1.91 | | | | |
| 315 | 65 | 0.16 | 75 | 3630 | 710 | 62 | 0.2868 | 104,081 | 120,098 | 308,303 | 863,108 | 2.57 | | | | |
| 316 | 65 | 0.16 | 75 | 3630 | 710 | 52 | 0.2778 | 120,202 | 141,617 | 345,500 | 932,597 | 2.44 | 68.7 | 22.1 | 36.6 | 41.2 |
| 317 | 65 | 0.16 | 75 | 3630 | 710 | 351 | 0.2029 | 13,006 | 208,915 | 443,142 | 1,019,453 | 2.12 | | | | |
| 318 | 65 | 0.16 | 100 | 3630 | 710 | 48 | 0.2908 | 136,313 | 106,703 | 223,659 | 531,936 | 2.10 | 73.4 | 21.9 | 34.3 | 43.8 |
| C97 | C-7 | 0.04 | 75 | 3945 | 395 | 89 | 0.1972 | 199,416 | 97,415 | 185,155 | 421,800 | 1.90 | 46.3 | 33.7 | 56.1 | 10.2 |
| C98 | C-7 | 0.04 | 75 | 3945 | 395 | 117 | 0.1950 | 150,000 | 99,362 | 174,949 | 372,191 | 1.76 | | | | |
| C99 | C-7 | 0.06 | 100 | 3892 | 448 | 45 | 0.2313 | 308,400 | 94,841 | 160,975 | 344,741 | 1.70 | | | | |
| C100 | C-7 | 0.06 | 100 | 3892 | 448 | 65 | 0.2313 | 213,508 | 64,090 | 119,603 | 261,029 | 1.87 | | | | |
| C101 | C-7 | 0.06 | 100 | 3892 | 448 | 75 | 0.2243 | 179,440 | 75,035 | 148,481 | 381,122 | 1.98 | 43.8 | 40.6 | 48.9 | 10.5 |

**Table 6.** Propylene-norbornene copolymerizations.

Standard polymerization conditions include 0.080 umol catalyst complex, 1.1 equivalence of N,N-dimethylanilinium tetrakis(pentafluorophenyl)borate activator, 0.50 umol TNOA scavenger, 209 uL neat norbornene (NB), 378 uL of toluene, 100°C polymerization temperature, 8 psi pressure loss (quench value) or a maximum reaction time of 30 minutes. 2-Norbornene values reported are for neat norbornene amounts; norbornene was added to the reactor as 42 wt% solution in toluene. Toluene amounts listed include toluene from the norbornene solution in addition to toluene used as the catalyst and activator diluent.

| EX# | Cat ID | C3 (uL) | Iso-hexane (uL) | quench time (s) | yield (g) | Activity (g P/ mmol cat.hr) | Mn | Mw | Mz | PDI | Tm (°C) | NB (mol %) |
|---|---|---|---|---|---|---|---|---|---|---|---|---|
| 230 | 1 | 100 | 3896 | 1801 | 0.0327 | 817 | 3,801 | 6,284 | 13,623 | 1.65 | | |
| 231 | 1 | 100 | 3896 | 1801 | 0.0298 | 745 | 3,619 | 6,436 | 13,802 | 1.78 | | |
| 232 | 1 | 300 | 3696 | 1801 | 0.0561 | 1,402 | 5,408 | 9,372 | 21,177 | 1.73 | | |
| 233 | 1 | 300 | 3696 | 1801 | 0.0565 | 1,412 | 5,217 | 8,627 | 16,927 | 1.65 | | |
| 234 | 1 | 500 | 3496 | 1800 | 0.0690 | 1,725 | 5,567 | 9,767 | 19,335 | 1.75 | | |
| 235 | 1 | 500 | 3496 | 1801 | 0.0625 | 1,562 | 5,065 | 9,648 | 24,026 | 1.90 | | |
| 236 | 3 | 100 | 3896 | 1801 | 0.0564 | 1,409 | 5,779 | 11,547 | 24,182 | 2.00 | | |
| 237 | 3 | 100 | 3896 | 1801 | 0.0450 | 1,124 | 7,231 | 12,890 | 25,731 | 1.78 | | |
| 238 | 3 | 300 | 3696 | 1801 | 0.0704 | 1,759 | 10,064 | 16,839 | 31,946 | 1.67 | | |
| 239 | 3 | 300 | 3696 | 1801 | 0.0766 | 1,914 | 11,056 | 18,612 | 36,575 | 1.68 | | |
| 240 | 3 | 500 | 3496 | 1800 | 0.0903 | 2,258 | 10,274 | 19,754 | 42,587 | 1.92 | | |
| 241 | 3 | 500 | 3496 | 1801 | 0.0939 | 2,346 | 12,523 | 20,537 | 38,225 | 1.64 | | |
| 242 | 5 | 100 | 3896 | 1801 | 0.0445 | 1,112 | 3,628 | 6,356 | 13,307 | 1.75 | | |
| 243 | 5 | 100 | 3896 | 1801 | 0.0463 | 1,157 | 3,723 | 6,383 | 12,472 | 1.71 | | |
| 244 | 5 | 300 | 3696 | 1801 | 0.0728 | 1,819 | | | | | | 8.2 |
| 245 | 5 | 300 | 3696 | 1801 | 0.0656 | 1,639 | 5,568 | 8,716 | 16,619 | 1.57 | | 8.2 |
| 246 | 5 | 500 | 3496 | 1801 | 0.0894 | 2,234 | 5,435 | 9,999 | 20,986 | 1.84 | | 7.5 |
| 247 | 5 | 500 | 3496 | 1800 | 0.0760 | 1,900 | 5,168 | 9,700 | 21,078 | 1.88 | | 7.5 |
| 248 | 6 | 100 | 3896 | 1800 | 0.0655 | 1,638 | 7,014 | 12,794 | 26,000 | 1.82 | | |
| 249 | 6 | 100 | 3896 | 1800 | 0.0506 | 1,265 | 6,889 | 12,270 | 24,741 | 1.78 | | |
| 250 | 6 | 300 | 3696 | 1801 | 0.0929 | 2,321 | 9,067 | 18,119 | 41,400 | 2.00 | | 9.9 |
| 251 | 6 | 300 | 3696 | 1800 | 0.0984 | 2,460 | 9,026 | 18,062 | 41,812 | 2.00 | | 9.9 |
| 252 | 6 | 500 | 3496 | 1801 | 0.1168 | 2,918 | 11,632 | 21,994 | 51,354 | 1.89 | | 8.5 |
| 253 | 6 | 500 | 3496 | 1755 | 0.1064 | 2,728 | 10,945 | 18,904 | 36,900 | 1.73 | | 8.5 |
| 254 | 33 | 100 | 3896 | 1801 | 0.0023 | 57 | | | | | | |
| 255 | 33 | 100 | 3896 | 1800 | 0.0016 | 40 | | | | | | |
| 256 | 33 | 300 | 3696 | 1801 | 0.0030 | 75 | | | | | | |
| 257 | 33 | 300 | 3696 | 1801 | 0.0036 | 90 | | | | | | |
| 258 | 33 | 500 | 3496 | 1801 | 0.0034 | 85 | | | | | | |
| 259 | 33 | 500 | 3496 | 1800 | 0.0033 | 83 | | | | | | |
| 260 | 65 | 100 | 3896 | 1800 | 0.0078 | 195 | | | | | | |
| 261 | 65 | 100 | 3896 | 1801 | 0.0068 | 170 | | | | | | |
| 262 | 65 | 300 | 3696 | 1801 | 0.0118 | 295 | 1,444 | 2,299 | 4,446 | 1.59 | | |

(continued)

Standard polymerization conditions include 0.080 umol catalyst complex, 1.1 equivalence of N,N-dimethylanilinium tetrakis(pentafluorophenyl)borate activator, 0.50 umol TNOA scavenger, 209 uL neat norbornene (NB), 378 uL of toluene, 100°C polymerization temperature, 8 psi pressure loss (quench value) or a maximum reaction time of 30 minutes. 2-Norbornene values reported are for neat norbornene amounts; norbornene was added to the reactor as 42 wt% solution in toluene. Toluene amounts listed include toluene from the norbornene solution in addition to toluene used as the catalyst and activator diluent.

| EX# | Cat ID | C3 (uL) | Iso-hexane (uL) | quench time (s) | yield (g) | Activity (g P/ mmol cat.hr) | Mn | Mw | Mz | PDI | Tm (°C) | NB (mol %) |
|---|---|---|---|---|---|---|---|---|---|---|---|---|
| 263 | 65 | 300 | 3696 | 1801 | 0.0127 | 317 | 1,668 | 2,353 | 4,012 | 1.41 | | |
| 264 | 65 | 500 | 3496 | 1800 | 0.0149 | 373 | 1,628 | 2,479 | 4,494 | 1.52 | | |
| 265 | 65 | 500 | 3496 | 1800 | 0.0141 | 353 | 1,342 | 2,377 | 5,249 | 1.77 | | |
| 266 | 48 | 100 | 3896 | 1800 | 0.0476 | 1,190 | 5,382 | 9,635 | 19,452 | 1.79 | 120.7 | |
| 267 | 48 | 100 | 3896 | 1800 | 0.0350 | 875 | 4,955 | 8,981 | 20,554 | 1.81 | 116.9 | 8.7 |
| 268 | 48 | 300 | 3696 | 1801 | 0.0513 | 1,282 | 7,052 | 12,108 | 24,770 | 1.72 | 121.2 | 8.7 |
| 269 | 48 | 300 | 3696 | 1801 | 0.0569 | 1,422 | 6,719 | 12,227 | 24,754 | 1.82 | 120.7 | |
| 270 | 48 | 500 | 3496 | 1801 | 0.0635 | 1,587 | 8,368 | 13,493 | 26,003 | 1.61 | 121.9 | |
| 271 | 48 | 500 | 3496 | 1801 | 0.0600 | 1,499 | 7,585 | 13,283 | 26,279 | 1.75 | 122.7 | |
| 272 | 49 | 100 | 3896 | 1801 | 0.0638 | 1,594 | 5,921 | 9,880 | 19,739 | 1.67 | | |
| 273 | 49 | 100 | 3896 | 1801 | 0.0499 | 1,247 | 4,461 | 7,632 | 15,364 | 1.71 | | |
| 274 | 49 | 300 | 3696 | 1801 | 0.0822 | 2,054 | 6,853 | 11,745 | 24,742 | 1.71 | | 6.2 |
| 275 | 49 | 300 | 3696 | 1738 | 0.0884 | 2,289 | 5,626 | 10,894 | 25,646 | 1.94 | | 6.2 |
| 276 | 49 | 500 | 3496 | 1801 | 0.0897 | 2,241 | 7,566 | 12,677 | 24,141 | 1.68 | | 6.8 |
| 277 | 49 | 500 | 3496 | 1604 | 0.0940 | 2,637 | 7,713 | 14,050 | 28,043 | 1.82 | | 6.8 |

**Table 7.** Additional propylene-norbornene copolymerizations.

Standard polymerization conditions include 0.080 umol catalyst complex, 1.1 equivalence of N,N-dimethylanilinium tetrakis(perfluoronaphthalen-2-yl)borate activator, 1.0 ml propylene, 0.50 umol TNOA scavenger, 8 psi pressure loss (quench value) or a maximum reaction time of 30 minutes. 2-Norbornene values reported in the table are for neat norbornene amounts; norbornene was added to the reactor as 78 wt% solution in toluene. Toluene amounts listed in the table include toluene from the norbornene solution in addition to toluene used as the catalyst and activator diluent.

| EX# | Cat ID | Cat (umol) | NB (uL) | Isohexane (uL) | Toluene (uL) | T (C) | quench time (s) | yield (g) | Activity (g P/mmol cat.hr) | Mn | Mw | Mz | PDI | Tm (°C) |
|---|---|---|---|---|---|---|---|---|---|---|---|---|---|---|
| 278 | 5 | 0.030 | 0 | 2795 | 1205 | 70 | 45 | 0.3591 | 957,600 | 56,727 | 210,257 | 829,740 | 3.71 | 156.2 |
| 279 | 5 | 0.030 | 0 | 2795 | 1205 | 70 | 58 | 0.3690 | 763,448 | 52,587 | 245,473 | 1,014,487 | 4.67 | 155.0 |
| 280 | 5 | 0.030 | 0 | 2795 | 1205 | 70 | 47 | 0.3538 | 903,319 | 73,220 | 266,621 | 972,391 | 3.64 | 156.1 |
| 281 | 5 | 0.045 | 76 | 2642 | 1281 | 70 | 500 | 0.0851 | 13,616 | 54,877 | 102,898 | 215,613 | 1.88 | 127.6 |
| 282 | 5 | 0.045 | 76 | 2642 | 1281 | 70 | 555 | 0.0911 | 13,132 | 56,958 | 105,388 | 223,205 | 1.85 | 127.4 |
| 283 | 5 | 0.045 | 76 | 2642 | 1281 | 70 | 558 | 0.0895 | 12,832 | 51,863 | 105,044 | 245,975 | 2.03 | 128.6 |
| 284 | 5 | 0.045 | 153 | 2542 | 1305 | 70 | 1801 | 0.0553 | 2,456 | 30,587 | 54,099 | 111,232 | 1.77 | 101.3 |
| 285 | 5 | 0.045 | 153 | 2542 | 1305 | 70 | 1802 | 0.0537 | 2,384 | 25,535 | 49,652 | 101,124 | 1.94 | 98.6 |
| 286 | 5 | 0.045 | 229 | 2443 | 1328 | 70 | 1801 | 0.0256 | 1,137 | 16,905 | 35,345 | 77,291 | 209 | |
| 287 | 5 | 0.045 | 229 | 2443 | 1328 | 70 | 1801 | 0.0245 | 1,088 | 15,813 | 33,780 | 73,821 | 2.14 | |
| 288 | 5 C-4 | 0.045 | 229 | 2443 | 1328 | 70 | 1800 | 0.0251 | 1,116 | 18,387 | 35,848 | 81,363 | 1.95 | |
| C85 | | 0.030 | 0 | 2795 | 1205 | 50 | 43 | 0.2919 | 814,605 | 48,101 | 139,407 | 521,999 | 2.9 | 154.7 |
| C86 | C-4 | 0.030 | 0 | 2795 | 1205 | 50 | 46 | 0.3022 | 788,348 | 40,506 | 119,122 | 434,153 | 2.94 | 154.5 |
| C87 | C-4 | 0.030 | 0 | 2795 | 1205 | 50 | 42 | 0.2968 | 848,000 | 32,639 | 134,748 | 564,980 | 4.13 | 154.7 |
| C88 | C-4 | 0.045 | 76 | 2642 | 1281 | 50 | 1367 | 0.0925 | 5,413 | 56,563 | 107,828 | 231,322 | 1.91 | 144.1 |
| C89 | C-4 | 0.045 | 76 | 2642 | 1281 | 50 | 1421 | 0.0872 | 4,909 | 58,642 | 108,952 | 234,421 | 1.86 | 143.8 |
| C90 | C-4 | 0.045 | 76 | 2642 | 1281 | 50 | 1492 | 0.0938 | 5,029 | 58,531 | 112,015 | 240,237 | 1.91 | 144.1 |
| C91 | C-4 | 0.045 | 153 | 2542 | 1305 | 50 | 1801 | 0.0599 | 2,661 | 48,973 | 89,596 | 187,684 | 1.83 | 135.0 |
| C92 | C-4 | 0.045 | 153 | 2542 | 1305 | 50 | 1801 | 0.0564 | 2,505 | 45,681 | 86,320 | 181,518 | 1.89 | 134.3 |
| C93 | C-4 | 0.045 | 153 | 2542 | 1305 | 50 | 1801 | 0.0578 | 2,567 | 45,320 | 98,698 | 291,429 | 2.18 | 134.1 |
| C94 | C-4 | 0.045 | 229 | 2443 | 1328 | 50 | 1801 | 0.0381 | 1,692 | 42,344 | 73,317 | 146,118 | 1.73 | 127.1 |

(continued)

Standard polymerization conditions include 0.080 umol catalyst complex, 1.1 equivalence of N,N-dimethylanilinium tetrakis(perfluoronaphthalen-2-yl)borate activator, 1.0 ml propylene, 0.50 umol TNOA scavenger, 8 psi pressure loss (quench value) or a maximum reaction time of 30 minutes. 2-Norbornene values reported in the table are for neat norbornene amounts; norbornene was added to the reactor as 78 wt% solution in toluene. Toluene amounts listed in the table include toluene from the norbornene solution in addition to toluene used as the catalyst and activator diluent.

| EX# | Cat ID | Cat (umol) | NB (uL) | Isohexane (uL) | Toluene (uL) | T (C) | quench time (s) | yield (g) | Activity (g P/mmol cat.hr) | Mn | Mw | Mz | PDI | Tm (°C) |
|---|---|---|---|---|---|---|---|---|---|---|---|---|---|---|
| C95 | C-4 | 0.045 | 229 | 2443 | 1328 | 50 | 1801 | 0.0375 | 1,666 | 44,194 | 79,416 | 166,597 | 1.8 | 127.2 |
| C96 | C-4 | 0.045 | 229 | 2443 | 1328 | 50 | 1801 | 0.0372 | 1,652 | 34,644 | 79,163 | 189,099 | 2.29 | 126.9 |

Large Scale Polymerization

Polymerizations were carried out in a continuous stirred tank reactor system. A I-liter Autoclave reactor was equipped with a stirrer, a pressure controller, and a water cooling/steam heating element with a temperature controller. The reactor was operated in liquid fill condition at a reactor pressure in excess of the bubbling point pressure of the reactant mixture, keeping the reactants in liquid phase. Isohexane was pumped into the reactors by Pulsa feed pumps, and its flow rates was controlled using Coriolis mass flow controller (Quantim series from Brooks). Norbornene (Sigma Aldrich) was dissolved in toluene and form an about 85.3 wt% solution. The solution was fed into the reactor using a metering pump. Ethylene flowed as a gas under its own pressure through a Brooks flow controller. Monomers (e.g., ethylene and norbomene) were combined into one stream and then mixed with the isohexane stream. The mixture was then fed to the reactor through a single line. Scavenger solution was also added to the combined solvent and monomer stream just before it entered the reactor to further reduce any catalyst poisons. Similarly, catalyst solution was fed to the reactor using an ISCO syringe pump through a separated line. Isohexane (used as solvent), and norbornene solution and ethylene were purified over beds of alumina and molecular sieves. Toluene for preparing catalyst solutions was purified by the same technique. All the reactions were carried out at a pressure of about 2.4 MPa/g unless otherwise mentioned.

An isohexane solution of tri-n-octyl aluminum (TNOA) (25 wt% in hexane, Sigma Aldrich) was used as scavenger solution. The catalyst solution was prepared by combining the precatalyxt (Complex 6 or comparative complex C-7) with N,N-dimethylanilinium tetrakis (pentafluorophenyl)borate (Al) at a molar ratio of about 1:1 in 900 ml of toluene or (hydrogenated tallow alkyl)methylammonium tetra(pentaflourophenyl)borate (A2, 10 wt% in methylcyclohexane) at a molar ratio of about 1:1 in 900 ml of toluene. Both activators are available from Boulder Scientific Company.

The polymer produced in the reactor exited through a back pressure control valve that reduced the pressure to atmospheric. This caused the unconverted monomers in the solution to flash into a vapor phase which was vented from the top of a vapor liquid separator. The liquid phase, comprising mainly polymer and solvent, was collected for polymer recovery. The collected samples were first precipitated using isopropyl alcohol and stabilized using IRGANOX 1076 (available from BASF), and then dried in a vacuum oven at a temperature of about 90°C for about 12 hours. The vacuum oven dried samples were weighed to obtain yields. Tg was obtained using DSC and norbornene content was measured using proton NMR as describe above. The detailed polymerization conditions for Example G1 to G20 are listed in tables 8 through 10, below.

**Table 8**

| **Example #** | **G1** | **G2** | **G3** | **G4** |
|---|---|---|---|---|
| Polymerization temperature (°C) | 120 | 120 | 120 | 120 |
| Pressure (psig) | 350 | 350 | 350 | 350 |
| H2 (cc/min) | | | | |
| Ethylene feed rate (g/min) | 4.52 | 3.39 | 2.26 | 0.57 |
| Norbornene feed rate (g/min) | 20.0 | 20.0 | 20.0 | 20.0 |
| Catalyst/Activator | 6/A1 | 6/A1 | 6/A1 | 6/Al |
| Catalyst feed rate (mol/min) | 1.82E-07 | 1.82E-07 | 1.82E-07 | 1.82E-06 |
| TNOA feed rate (mol/min) | 3.70E-06 | 3.70E-06 | 3.70E-06 | 3.70E-06 |
| Isohexane feed rate (g/min) | 22.7 | 22.7 | 22.7 | 22.7 |
| Collection time (min) | 20 | 20 | 20 | 25 |
| Polymer made (gram) | 96.8 | 166.1 | 78 | 67.8 |
| Conversion (%) | 19.7% | 35.5% | 17.5% | 13.2% |
| Catalyst productivity (kg poly/kg catalyst) | 29,035 | 49,822 | 23,396 | 1,627 |
| Ethylene content (wt %) | 45.2% | 40.3% | 34.4% | 22.8% |
| NB content (wt%) | 54.8% | 59.7% | 65.6% | 77.2% |
| Tg (°C) | 31.7 | 52.4 | 58.9 | 110.1 |

**Table 9**

| Example # | G5 | G6 | G7 | G8 | G9 |
|---|---|---|---|---|---|
| Polymerization temperature (°C) | 120 | 120 | 120 | 120 | 120 |
| Pressure (psig) | 320 | 320 | 320 | 320 | 320 |
| H2 (cc/min) | 10 | 10 | 10 | 10 | 10 |
| Ethylene feed rate (g/min) | 4.52 | 3.39 | 2.26 | 2.26 | 2.26 |
| Norbornene feed rate (g/min) | 14.5 | 14.5 | 14.5 | 14.5 | 14.5 |
| Catalyst/Activator | 6/A2 | 6/A2 | 6/A2 | 6/A2 | 6/A2 |
| Catalyst feed rate (mol/min) | 5.83E-07 | 5.83E-07 | 5.83E-07 | 5.83E-07 | 9.71E-07 |
| TNOA feed rate (mol/min) | 5.47E-06 | 5.47E-06 | 5.47E-06 | 5.47E-06 | 5.47E-06 |
| Isohexane feed rate (g/min) | 22 | 22 | 22 | 22 | 22 |
| Collection time (min) | 40 | 22 | 40 | 40 | 40 |
| Polymer made (gram) | 185 | 127.4 | 163.1 | 163.1 | 176.9 |
| Conversion (%) | 25.1% | 33.2% | 24.8% | 24.8% | 26.9% |
| Catalyst productivity (kg poly/kg catalyst) | 8,672 | 10,858 | 7,646 | 7,646 | 4,976 |
| Ethylene content (wt %) | 38.4% | 43.0% | | | |
| NB content (wt%) | 61.6% | 57.0% | | | |
| Tg (°C) | 54.2 | 63.2 | 67.7 | 61.8 | 69.5 |

**Table 9 (continued)**

| Example # | G10 | G11 | G12 | G13 | G14 |
|---|---|---|---|---|---|
| Polymerization temperature (°C) | 120 | 120 | 120 | 120 | 120 |
| Pressure (psig) | 320 | 320 | 320 | 320 | 320 |
| H2 (cc/min) | 10 | 10 | 10 | 10 | 10 |
| Ethylene feed rate (g/min) | 1.13 | 0.57 | 1.13 | 0.57 | 0.57 |
| Norbornene feed rate (g/min) | 14.5 | 14.5 | 14.5 | 14.5 | 14.5 |
| Catalyst/Activator | 6/A2 | 6/A2 | 6/A2 | 6/A2 | 6/A2 |
| Catalyst feed rate (mol/min) | 9.71E-07 | 1.36E-06 | 3.11E-06 | 3.11E-06 | 6.22E-06 |
| TNOA feed rate (mol/min) | 5.47E-06 | 5.47E-06 | 5.47E-06 | 5.47E-06 | 5.47E-06 |
| Isohexane feed rate (g/min) | 22 | 22 | 22 | 22 | 22 |
| Collection time (min) | 40 | 40 | 40 | 40 | 40 |
| Polymer made (gram) | 90.1 | 56.8 | 108.2 | 70.7 | 80.1 |
| Conversion (%) | 14.6% | 9.5% | 17.5% | 11.8% | 13.4% |
| Catalyst productivity (kg poly/kg catalyst) | 2,534 | 1,141 | 951 | 621 | 352 |
| Ethylene content (wt %) | 35.5% | 36.6% | 32.3% | 19.6% | 15.9% |
| NB content (wt%) | 64.5% | 63.4% | 67.7% | 80.4% | 84.1% |
| Tg (°C) | 65.5 | 63.0 | 94.8 | 90.8 | 115.0 |

**Table 10 Comparative examples**

| Example # | G15 | G16 | G17 | G18 | G19 | G20 |
|---|---|---|---|---|---|---|
| Polymerization temperature (°C) | 120 | 120 | 120 | 120 | 120 | 120 |
| Pressure (psig) | 320 | 320 | 320 | 350 | 350 | 350 |

(continued)

| Example # | G15 | G16 | G17 | G18 | G19 | G20 |
|---|---|---|---|---|---|---|
| H2 (cc/min) | 10 | 10 | 10 | | | |
| Ethylene feed rate (g/min) | 4.52 | 3.39 | 2.26 | 4.52 | 3.39 | 2.26 |
| Norbornene feed rate (g/min) | 14.5 | 14.5 | 14.5 | 20 | 20 | 20 |
| Catalyst | C-7/A2 | C-7/A2 | C-7/A2 | C-7/Al | C-7/Al | C-7/A1 |
| Catalyst feed rate (mol/min) | 1.98E-06 | 1.98E-06 | 1.98E-06 | 2.20E-06 | 2.20E-06 | 2.20E-06 |
| TNOA feed rate (mol/min) | 5.47E-06 | 5.47E-06 | 5.47E-06 | 3.70E-06 | 3.70E-06 | 3.70E-06 |
| Isohexane feed rate (g/min) | 22 | 22 | 22 | 22.7 | 22.7 | 22.7 |
| Collection time (min) | 40 | 40 | 40 | 40 | 40 | 40 |
| Polymer made (gram) | 208.9 | 163 | 123 | 112.3 | 186.2 | 107.8 |
| Conversion (%) | 28.3% | 23.3% | 18.7% | 11.4% | 19.9% | 12.1% |
| Catalyst productivity (kg poly/kg catalyst) | 6,528 | 5,094 | 3,844 | 3,158 | 5,237 | 3,032 |
| Ethylene content (wt %) | | | | 46.9% | 42.2% | 37.6% |
| NB content (wt%) | | | | 53.1% | 57.8% | 62.4% |
| Tg (°C) | 31.1 | 50.1 | 32.9 | 20.6 | 30.8 | 47.6 |

## Claims

1. A polymerization process comprising contacting a cyclic olefin monomer and optional comonomer selected from $C_2$ to $C_{20}$ alpha olefins with a catalyst system comprising an activator and a catalyst compound represented by the Formula (**II**):

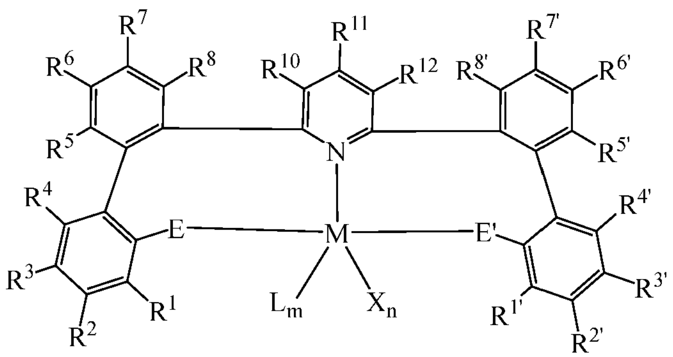

**(II)**

wherein:

M is Hf, Zr or Ti;
E and E' are each O;
each L is independently a Lewis base;
each X is independently an anionic ligand;
n is 1, 2 or 3;
m is 0, 1, or 2;
n+m is not greater than 4;
$R^1$ and $R^{1'}$ are independently a $C_4$-$C_{40}$ tertiary hydrocarbyl group, a $C_4$-$C_{40}$ cyclic tertiary hydrocarbyl group, or a $C_4$-$C_{40}$ polycyclic tertiary hydrocarbyl group,
each of $R^2$, $R^3$, $R^4$, $R^{2'}$, $R^{3'}$, and $R^{4'}$ is independently hydrogen, $C_1$-$C_{40}$ hydrocarbyl, $C_1$-$C_{40}$ substituted hydrocarbyl, a heteroatom or a heteroatom-containing group, or one or more of $R^2$ and $R^3$, $R^3$ and $R^4$, $R^{2'}$ and $R^{3'}$, $R^{3'}$ and $R^{4'}$ may be joined to form one or more substituted hydrocarbyl rings, unsubstituted hydrocarbyl

rings, substituted heterocyclic rings, or unsubstituted heterocyclic rings each having 5, 6, 7, or 8 ring atoms, and where substitutions on the ring can join to form additional rings;
any two L groups may be joined together to form a bidentate Lewis base;
an X group may be joined to an L group to form a monoanionic bidentate group;
any two X groups may be joined together to form a dianionic ligand group;
each of $R^5$, $R^6$, $R^7$, $R^8$, $R^{5'}$, $R^{6'}$, $R^{7'}$, $R^{8'}$, $R^{10}$, $R^{11}$, and $R^{12}$ is independently hydrogen, a $C_1$-$C_{40}$ hydrocarbyl, a $C_1$-$C_{40}$ substituted hydrocarbyl, a heteroatom or a heteroatom-containing group, or one or more of $R^5$ and $R^6$, $R^6$ and $R^7$, $R^7$ and $R^8$, $R^{5'}$ and $R^{6'}$, $R^{6'}$ and $R^{7'}$, $R^{7'}$ and $R^{8'}$, $R^{10}$ and $R^{11}$, or $R^{11}$ and $R^{12}$ may be joined to form one or more substituted hydrocarbyl rings, unsubstituted hydrocarbyl rings, substituted heterocyclic rings, or unsubstituted heterocyclic rings each having 5, 6, 7, or 8 ring atoms, and where substitutions on the ring can join to form additional rings.

**2.** The process of claim 1, wherein each X is, independently, selected from the group consisting of substituted or unsubstituted hydrocarbyl radicals having from 1 to 20 carbon atoms, hydrides, amides, alkoxides, sulfides, phosphides, halides, and a combination thereof, and optionally, two X's may form a part of a fused ring or a ring system.

**3.** The process of any of claims 1 to 2, wherein each L is a Lewis base, independently, selected from the group consisting of ethers, thioethers, amines, nitriles, imines, pyridines, halocarbons, and phosphines and a combination thereof, preferably each L is independently selected from ether and thioether groups, most preferably each L is a ethyl ether, tetrahydrofuran, dibutyl ether, or dimethylsulfide group.

**4.** The process of any of claims 1 to 3, wherein n is 2 and m is 0.

**5.** The process of claim 1, wherein M is Zr or Hf, and both $R^1$ and $R^{1'}$ are $C_4$-$C_{20}$ cyclic tertiary alkyls, preferably, both $R^1$ and $R^{1'}$ are adamantan-1-yl or substituted adamantan-1-yl.

**6.** The process of claim 1, wherein M is Zr or Hf, , both $R^1$ and $R^{1'}$ are $C_4$-$C_{20}$ cyclic tertiary alkyls, and both $R^7$ and $R^{7'}$ are $C_1$-$C_{20}$ alkyls, preferably both $R^7$ and $R^{7'}$ are $C_1$-$C_3$ alkyls.

**7.** The process of claim 1 wherein the catalyst compound is represented by one or more of the following formulas:

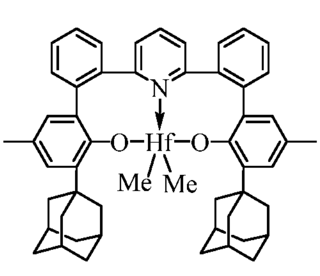
Complex 1

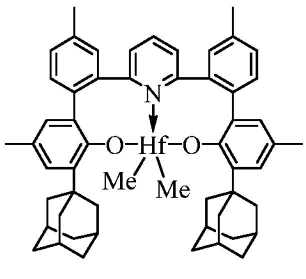
Complex 2

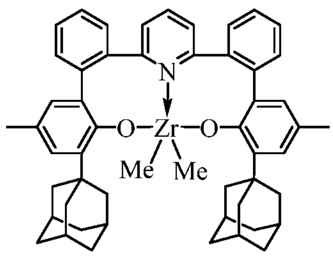
Complex 3

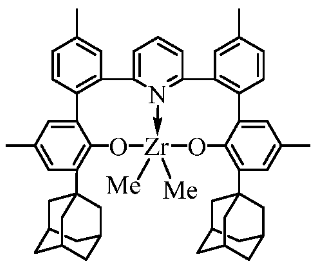
Complex 4

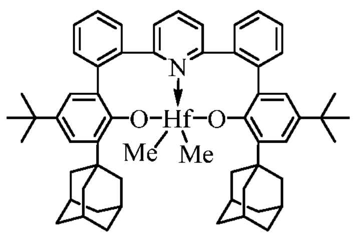
Complex 5

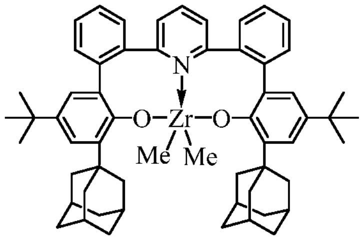

Complex 6

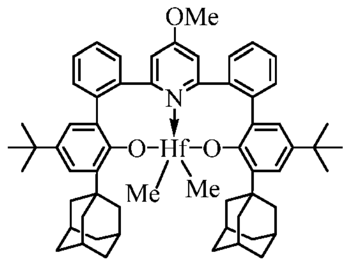

Complex 7

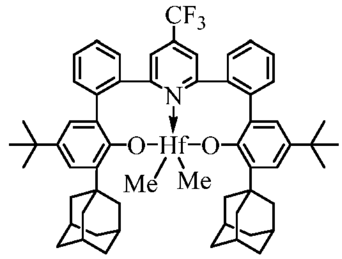

Complex 8

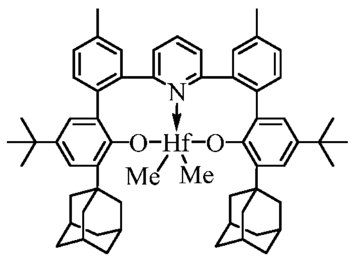

Complex 9

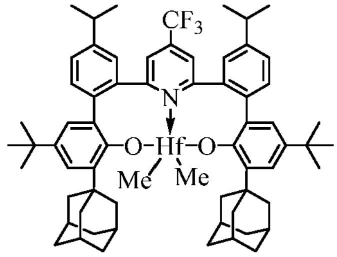

Complex 10

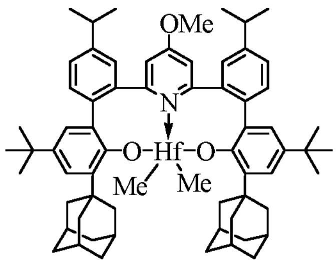

Complex 11

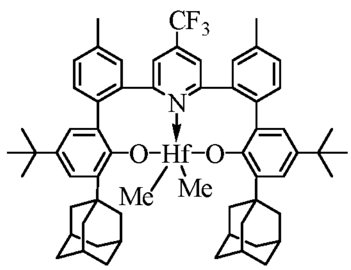

Complex 12

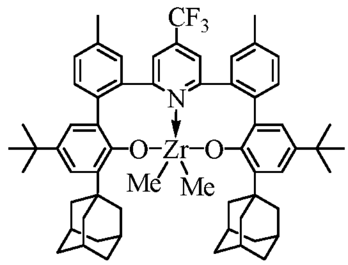

Complex 13

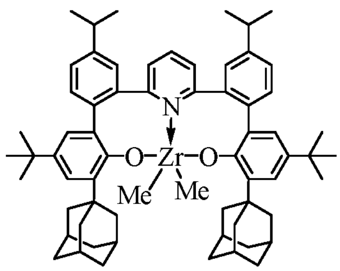

Complex 14

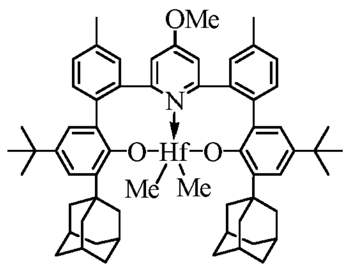

Complex 15

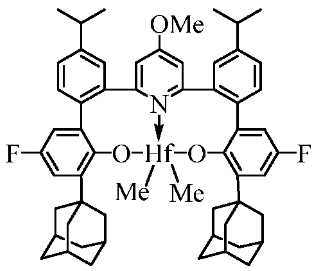

Complex 16

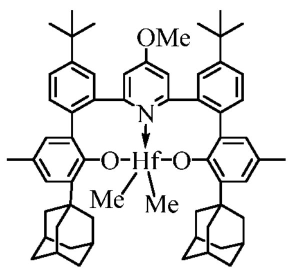

Complex 17

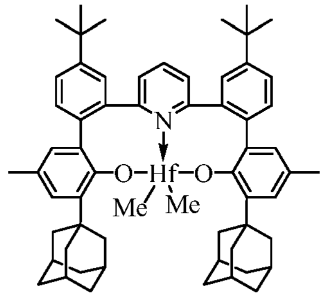

Complex 18

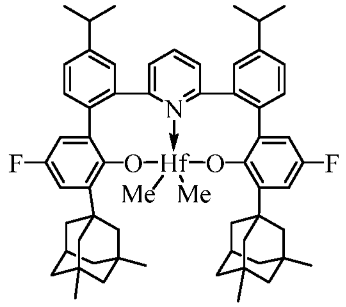

Complex 19

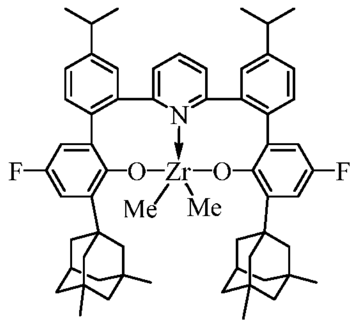

Complex 20

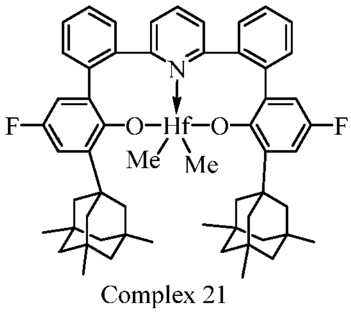

Complex 21

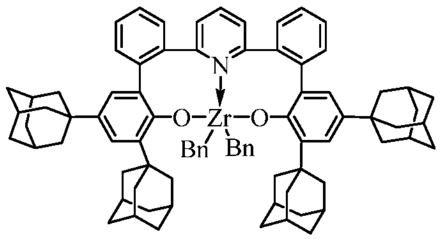

Complex 22

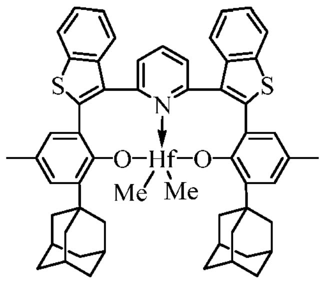

Complex 23

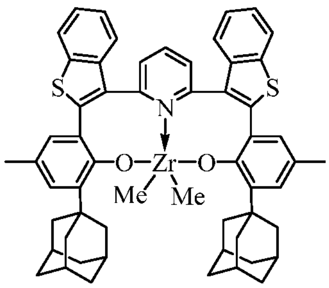

Complex 24

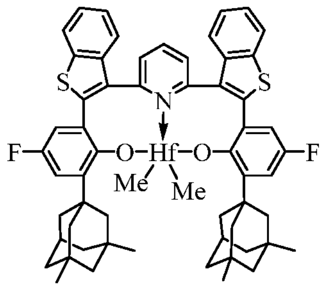

Complex 25

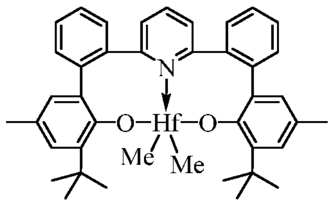

Complex 26

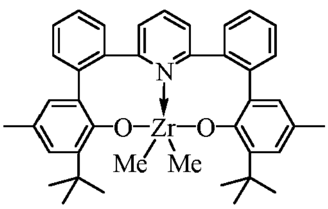

Complex 27

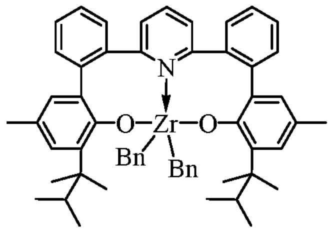

Complex 29

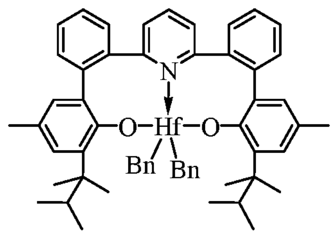

Complex 30

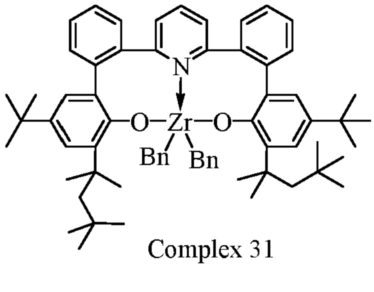

Complex 31

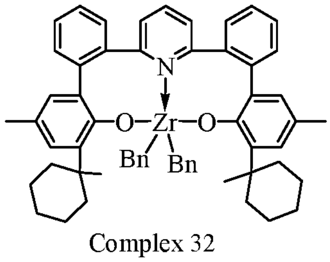

Complex 32

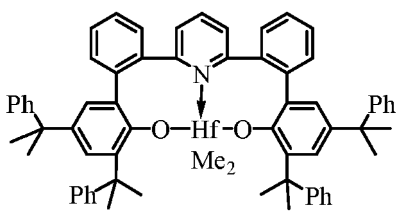

Complex 33

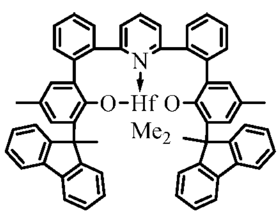
Complex 34
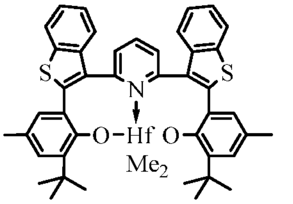
Complex 35
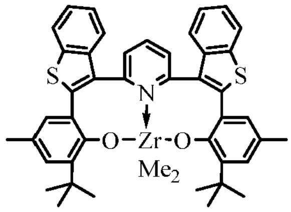
Complex 36

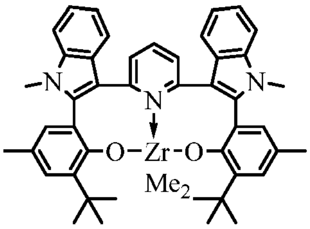
Complex 37
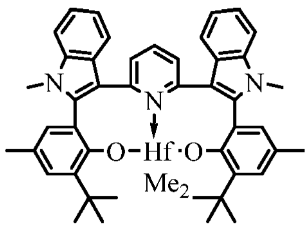
Complex 38
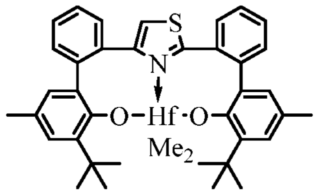
Complex 39

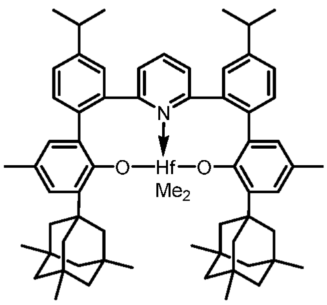
Complex 40
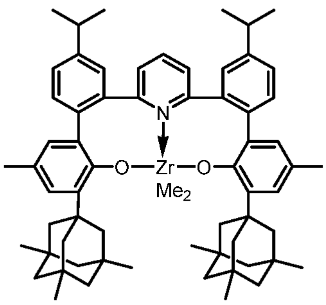
Complex 41
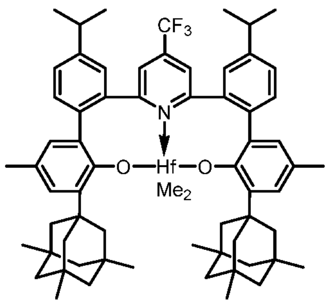
Complex 42

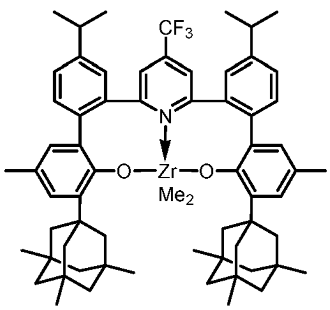
Complex 43
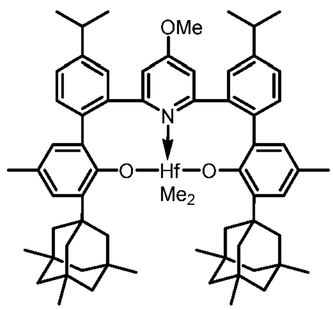
Complex 44
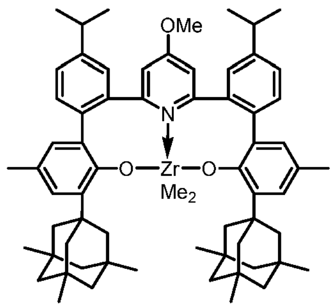
Complex 45

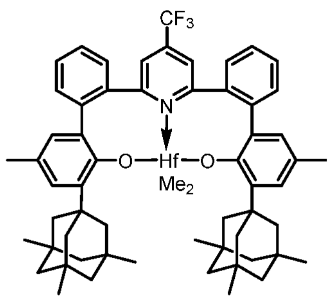
Complex 46
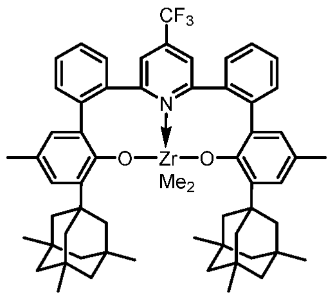
Complex 47
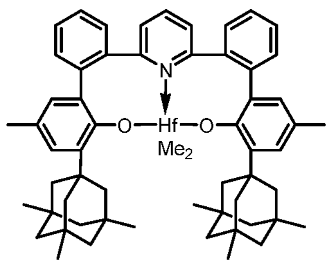
Complex 48

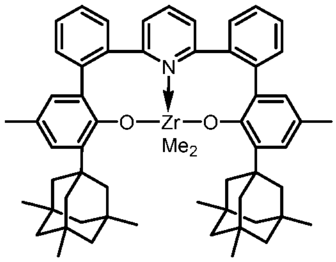

Complex 49

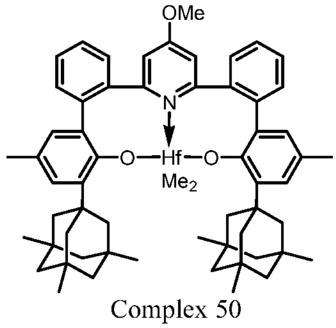

Complex 50

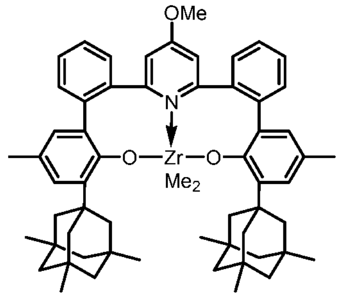

Complex 51

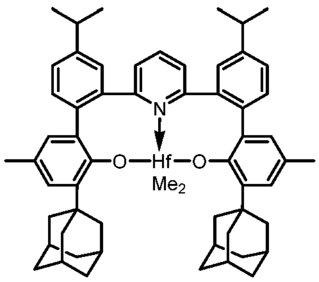

Complex 52

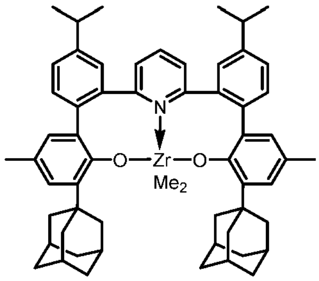

Complex 53

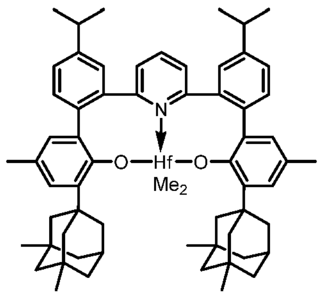

Complex 54

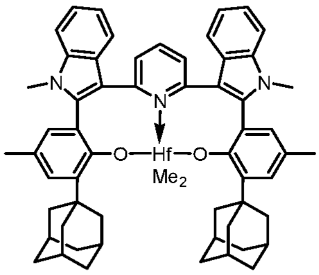

Complex 56

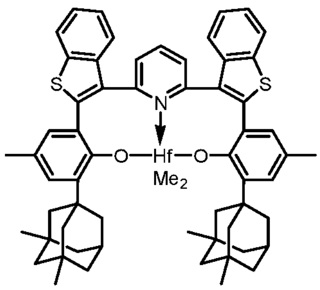

Complex 57

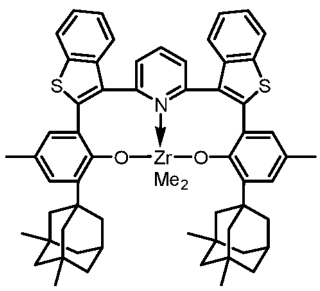

Complex 58

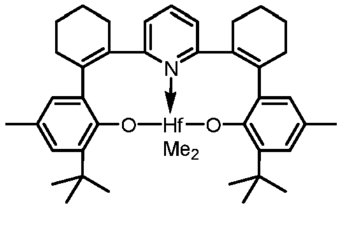

Complex 59

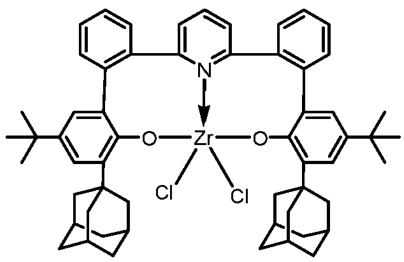

Complex 60

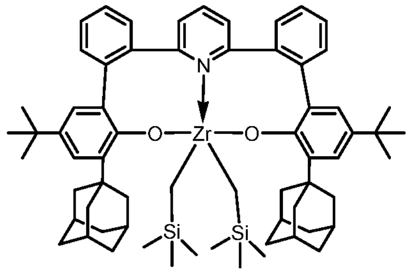

Complex 62

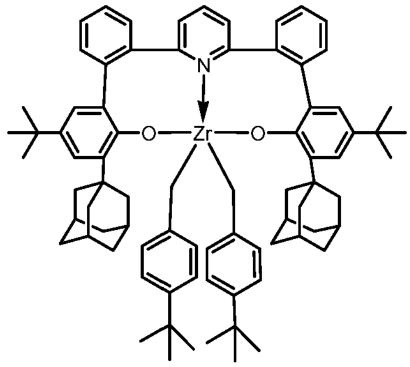

Complex 63

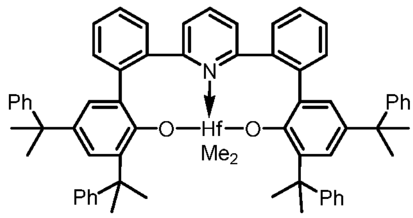

Complex 64

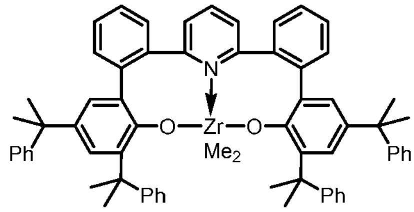

Complex 65

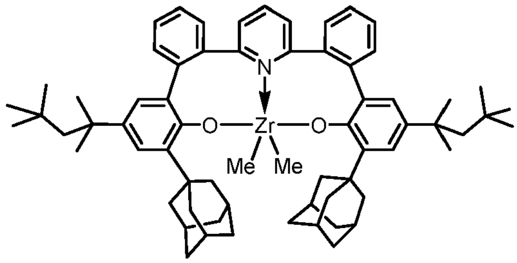

Complex 66

,

preferably wherein the catalyst compound is one or more of

| | | |
|---|---|---|
| 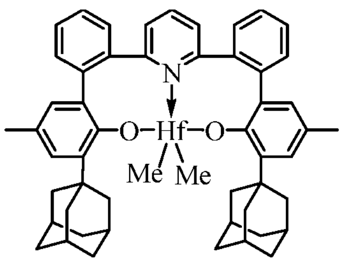 Complex 1 | 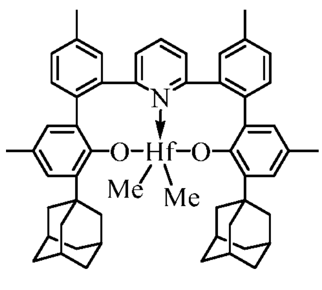 Complex 2 | 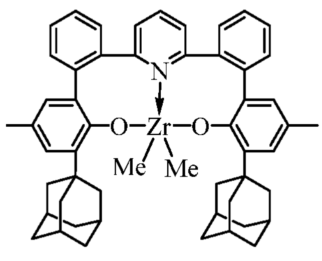 Complex 3 |

(continued)

| | | |
|---|---|---|
| 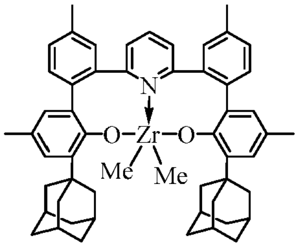 Complex 4 | 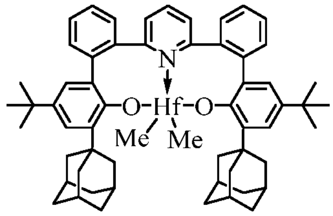 Complex 5 | 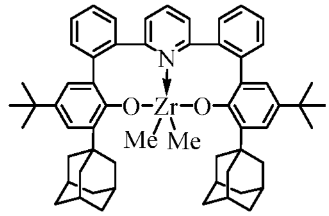 Complex 6 |
| 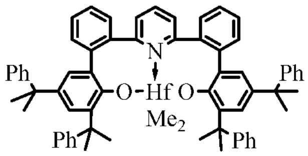 Complex 33 | 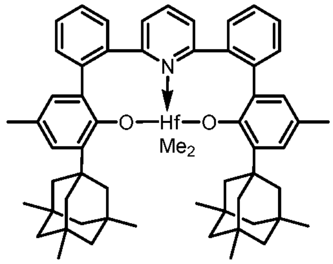 Complex 48 | 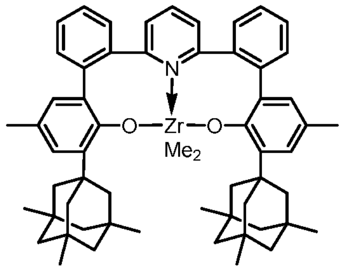 Complex 49 |
| 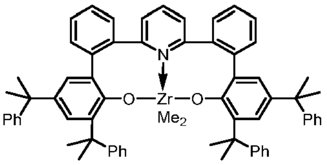 Complex 65 | 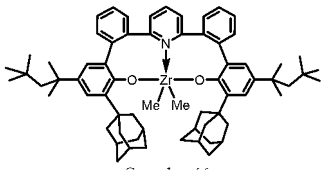 Complex 66 | |

**8.** The process of any of claims 1 to 7, wherein the activator comprises an alumoxane or a non-coordinating anion.

**9.** The process of any of claims 1 to 8, wherein the process is a solution process, preferably wherein the process occurs at a temperature of from about 80°C to about 300°C, at a pressure in the range of from about 0.35 MPa to about 10 MPa, and at a residence time up to 300 minutes.

**10.** The process of any of claims 1 to 9, further comprising recovering a polymer, wherein the polymer comprises at least 0.1 mol% cyclic olefin, preferably wherein the polymer comprises at least 1 mol% cyclic olefin, more preferably wherein the polymer comprises at least 10 mol% cyclic olefin.

**11.** The process of any of claims 1 to 10, further comprising recovering a polymer, wherein the polymer comprises at least 1 mol% cyclic olefin and at least 20 mol% ethylene or at least 20 mol% propylene.

**12.** The process of any of claims 1 to 9, further comprising recovering a polymer, wherein the polymer is a homopolymer of substituted or unsubstituted cyclopentene, preferably wherein the polymer is a homopolymer of cyclopentene.

**13.** The process of any of claims 1 to 11, further comprising recovering a polymer, wherein the polymer is one of the following:

(i) an ethylene cyclopentene copolymer having:

a Mn greater than 5,000 g/mole;
a Mw greater than 10,000 g/mole;
a Mw/Mn of about 1 to 10;
a cyclopentene content of 0.1 mole% or greater, with an upper limit of 50 mole%; and

having cyclopentene 1,2 linkages at about 90% or greater of the total cyclopentene units incorporated into the polymer, or

(ii) an ethylene norbornene copolymer having:

a Mn greater than 50,000 g/mole;
a Mw greater than 100,000 g/mole;
a Mw/Mn of about 1.2 to 5.0; and
having norbornene units that are from 10 to 80% isolated, from 10 to 80% alternating, and from 1 to 50% blocked wherein the total of isolated, alternating and blocked equals 100%, or

(iii) a propylene cyclopentene copolymer having:

a Mn greater than 3,000 g/mole;
a Mw greater than 6,000 g/mole;
a Mw/Mn of about 1 to 10;
a cyclopentene content of 0.1 mole% or greater, with an upper limit of 50 mole%; and having cyclopentene 1,2 linkages at about 90% or greater of the total cyclopentene units incorporated into the polymer, or

(iv) a propylene norbornene copolymer having:

a Mn greater than 3,000 g/mole;
a Mw greater than 6,000 g/mole;
a Mw/Mn of about 1.2 to 5.0;
a norbornene content of 1 mole% or greater, with an upper limit of 50 mole% or less.

**Patentansprüche**

**1.** Polymerisationsverfahren, umfassend das Inkontaktbringen eines cyclischen Olefin-Monomers und eines optionalen Comonomers, ausgewählt aus $C_2$- bis $C_{20}$-Alpha-Olefin, mit einem Katalysatorsystem, umfassend einen Aktivator und eine Katalysatorverbindung, dargestellt durch die Formel (II):

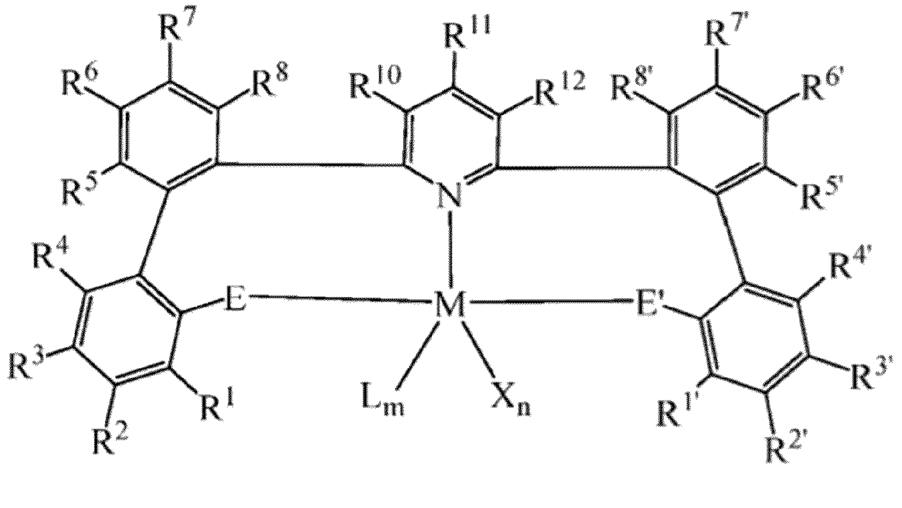

(II)

wobei:

M Hf, Zr oder Ti ist;
E und E' jeweils O sind;
jedes L unabhängig eine Lewis-Base ist;
jedes X unabhängig voneinander ein anionischer Ligand ist;
n 1, 2 oder 3 ist;
m 0, 1, oder 2 ist;

n + m nicht größer als 4 ist;
$R^1$ und $R^1$ unabhängig voneinander eine tertiäre $C_4$-$C_{40}$-Kohlenwasser-stoffgruppe, eine cyclische tertiäre $C_1$-$C_{40}$-Kohlenwasserstoffgruppe oder eine polycyclische tertiäre $C_4$-$C_{40}$-Kohlenwasserstoffgruppe sind;
$R^{2,}$, $R^3$, $R^4$, $R^{2'}$, $R^{3'}$ und $R^{4'}$ jeweils unabhängig voneinander Wasserstoff, $C_1$-$C_{40}$-Kohlenwasserstoff, $C_1$-$C_{40}$-substituierter Kohlenwasserstoff, ein Heteroatom oder eine Heteroatom-enthaltende Gruppe sind, oder ein oder mehrere von $R^2$ und $R^3$; $R^3$ und $R^4$; $R^2$ und $R^{3'}$, $R^{3'}$ und $R^{4'}$ miteinander verbunden sein können, um einen oder mehrere substituierte Kohlenwasserstoffringe, unsubstituierte Kohlenwasserstoffringe, substituierte heterocyclische Ringe oder unsubstituierte heterocyclische Ringe zu bilden, die jeweils 5, 6, 7 oder 8 Ringatome aufweisen, und wobei Substitutionen am Ring sich verbinden können, um zusätzliche Ringe zu bilden;
zwei beliebige L-Gruppen miteinander verbunden sein können, um eine zweizähnige Lewis-Base zu bilden;
eine X-Gruppe mit einer L-Gruppe verbunden sein kann, um eine monoanionische zweizähnige Gruppe zu bilden;
zwei beliebige X-Gruppen miteinander verbunden sein können, um eine dianionische Ligandengruppe zu bilden;
jedes von $R^5$, $R^6$, $R^7$, $R^8$, $R^{5'}$, $R^{6'}$, $R^{7'}$, $R^{8'}$, $R^{10}$, $R^{11}$ und $R^{12}$ unabhängig Wasserstoff, ein $C_1$-$C_{40}$-Kohlenwasserstoffrest, ein $C_1$-$C_{40}$-substituierter Kohlenwasserstoffrest ein Heteroatom oder eine heteroatomhaltige Gruppe ist oder eines oder mehrere von $R^5$ und $R^6$, $R^6$ und $R^7$, $R^7$ und $R^8$, $R^{5'}$ und $R^{6'}$, $R^{6'}$ und $R^{7'}$, $R^{7'}$ und $R^{8'}$, $R^{10}$ und $R^{11}$ oder $R^{11}$ und $R^{12}$ miteinander verbunden sein können, um einen oder mehrere substituierte Kohlenwasserstoffringe, unsubstituierte Kohlenwasserstoffringe, substituierte heterocyclische Ringe oder unsubstituierte heterocyclische Ringe zu bilden, die jeweils 5, 6, 7 oder 8 Ringatome aufweisen, und wobei Substitutionen am Ring miteinander verbunden sein können, um zusätzliche Ringe zu bilden.

2. Verfahren nach Anspruch 1, wobei jedes X unabhängig voneinander aus der Gruppe ausgewählt ist, die aus substituierten oder unsubstituierten Kohlenwasserstoffresten mit 1 bis 20 Kohlenstoffatomen, Hydriden, Amiden, Alkoxiden, Sulfiden, Phosphiden, Halogeniden und einer Kombination davon besteht, und wobei gegebenenfalls zwei X einen Teil eines kondensierten Rings oder eines Ringsystems bilden können.

3. Verfahren nach einem der Ansprüche 1 bis 2, wobei jedes L eine Lewis-Base ist, die unabhängig voneinander aus der Gruppe ausgewählt ist, die aus Ethern, Thioethern, Aminen, Nitrilen, Iminen, Pyridinen, Halogenkohlenstoffen und Phosphinen und einer Kombination davon besteht, wobei vorzugsweise jedes L unabhängig voneinander aus Ether- und Thioethergruppen ausgewählt ist, am meisten bevorzugt jedes L eine Ethylether-, Tetrahydrofuran-, Dibutylether- oder Dimethylsulfidgruppe ist.

4. Verfahren nach einem der Ansprüche 1 bis 3, wobei n gleich 2 und m gleich 0 ist.

5. Verfahren nach Anspruch 1, wobei M Zr oder Hf ist und sowohl $R^1$ als auch $R^{1'}$ $C_4$-$C_{20}$ cyclische tertiäre Alkyle sind, vorzugsweise sowohl $R^1$ als auch $R^{1'}$ Adamantan-1-yl oder substituiertes Adamantan-1-yl sind.

6. Verfahren nach Anspruch 1, wobei M Zr oder Hf ist, sowohl $R^1$ als auch $R^{1'}$ $C_4$-$C_{20}$ zyklische tertiäre Alkyle sind und sowohl $R^7$ als auch $R^{7'}$ $C_1$-$C_{20}$ Alkyle sind, vorzugsweise sowohl $R^7$ als auch $R^{7'}$ $C_1$-$C_3$ Alkyle sind.

7. Verfahren nach Anspruch 1, wobei die Katalysatorverbindung durch eine oder mehrere der folgenden Formeln dargestellt wird:

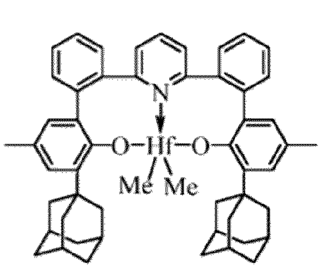
Komplex 1

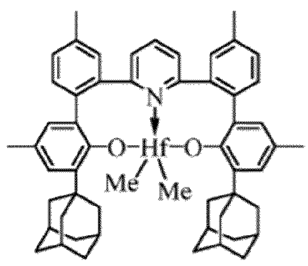
Komplex 2

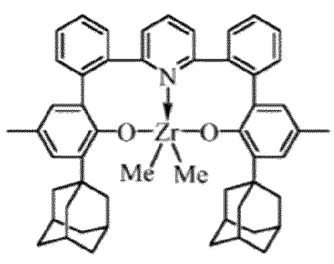
Komplex 3

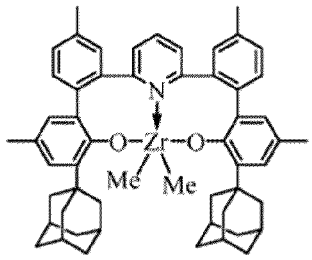
Komplex 4

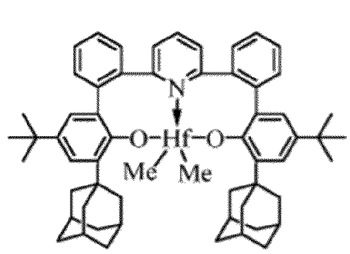
Komplex 5

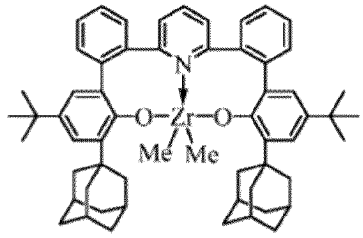
Komplex 6

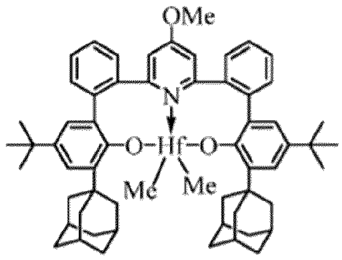
Komplex 7

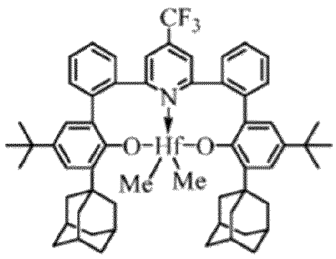
Komplex 8

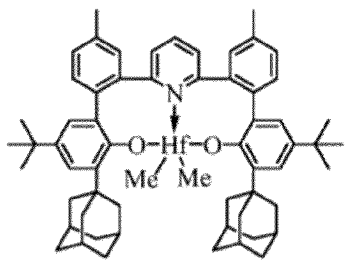
Komplex 9

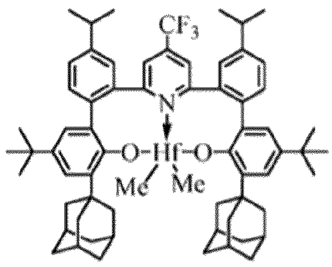
Komplex 10

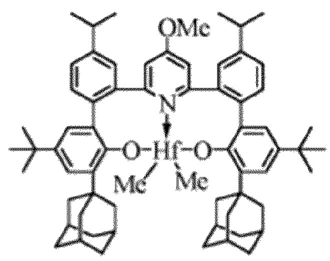
Komplex 11

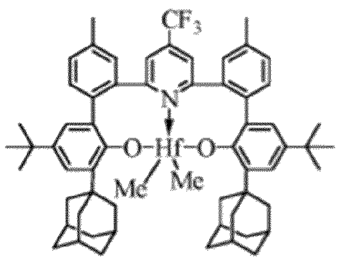
Komplex 12

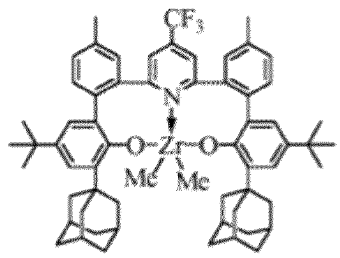
Komplex 13

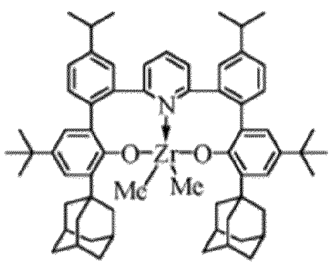
Komplex 14

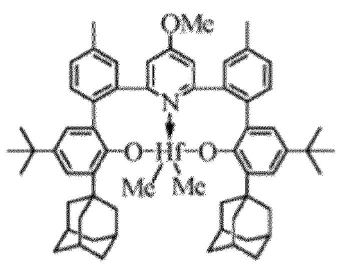
Komplex 15

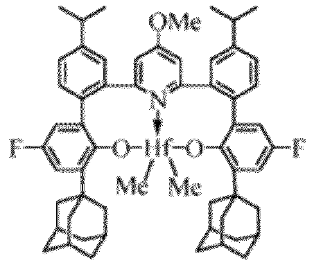

Komplex 16

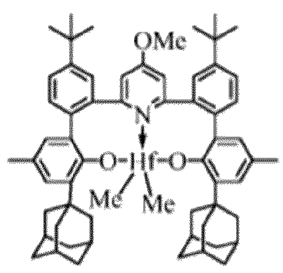

Komplex 17

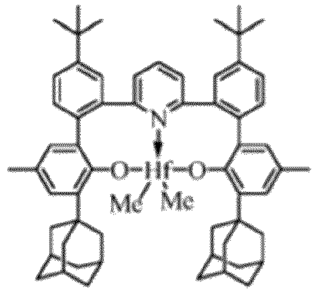

Komplex 18

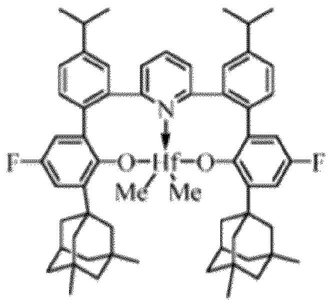

Komplex 19

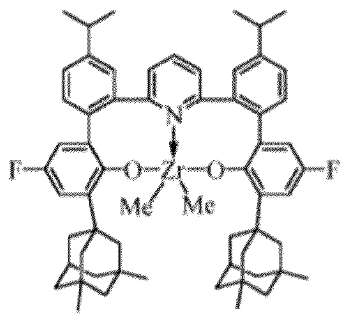

Komplex 20

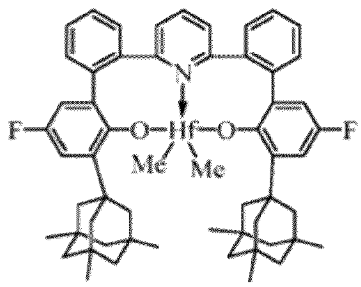

Komplex 21

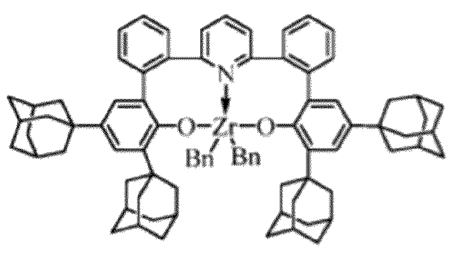

Komplex 22

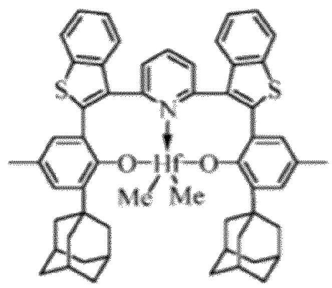

Komplex 23

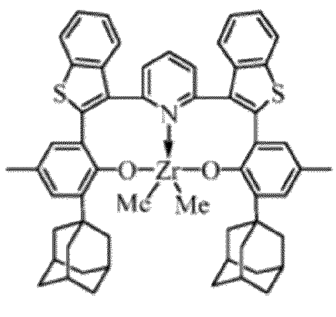

Komplex 24

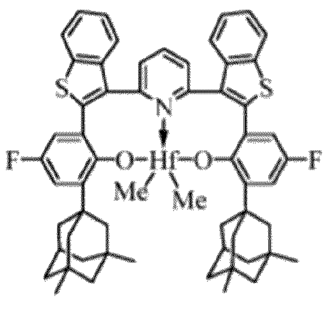

Komplex 25

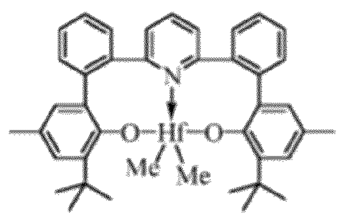

Komplex 26

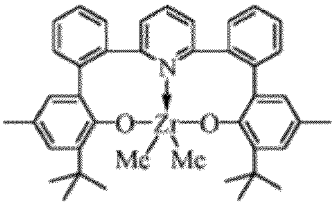

Komplex 27

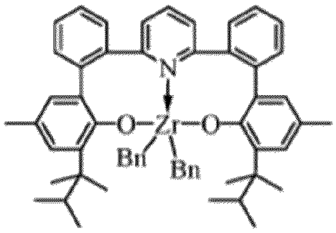

Komplex 29

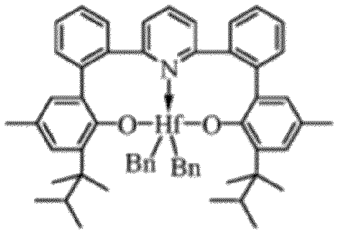

Komplex 30

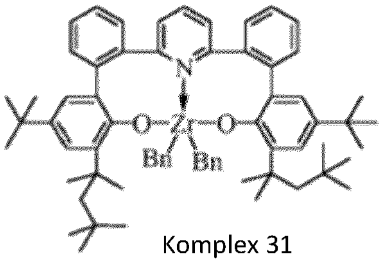

Komplex 31

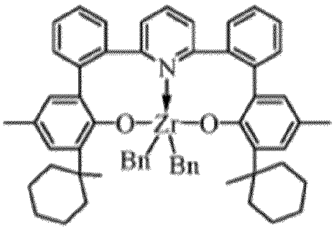

Komplex 32

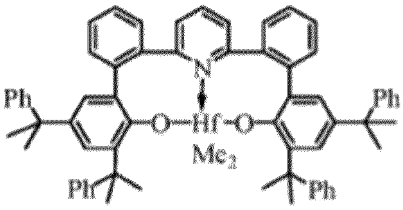

Komplex 33

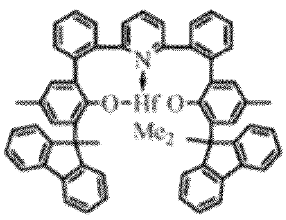

Komplex 34

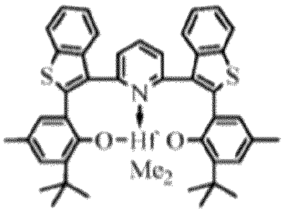

Komplex 35

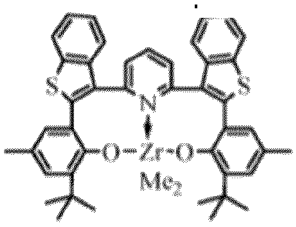

Komplex 36

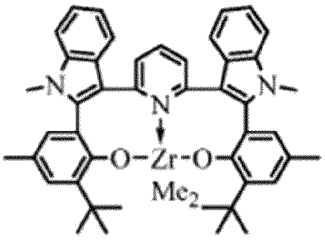

Komplex 37

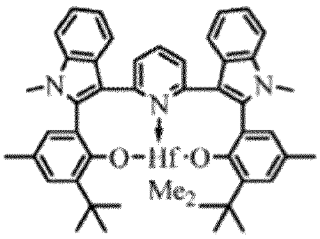

Komplex 38

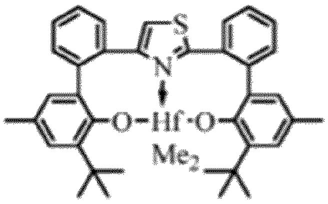

Komplex 39

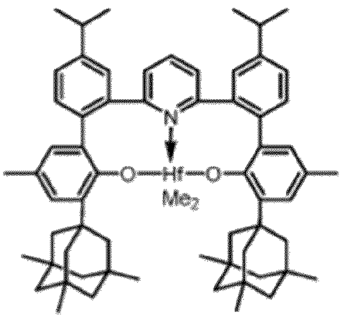

Komplex 40

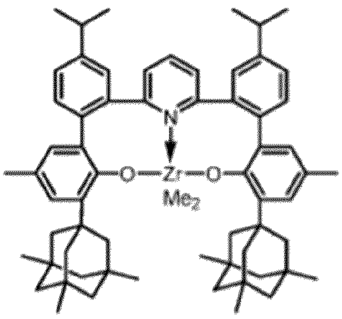

Komplex 41

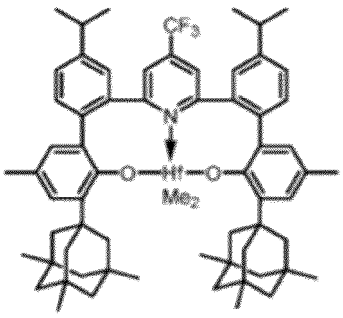

Komplex 42

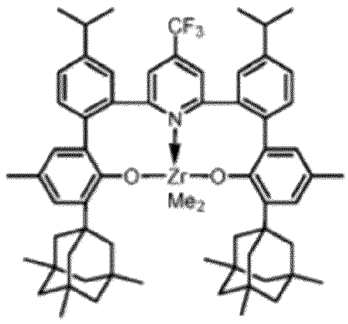

Komplex 43

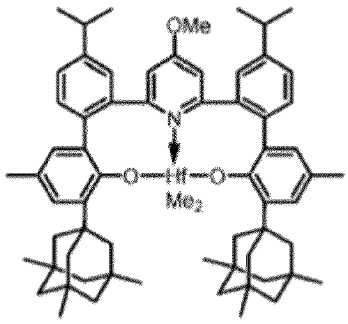

Komplex 44

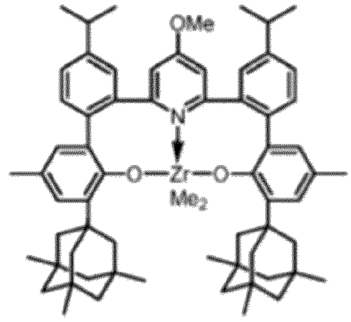

Komplex 45

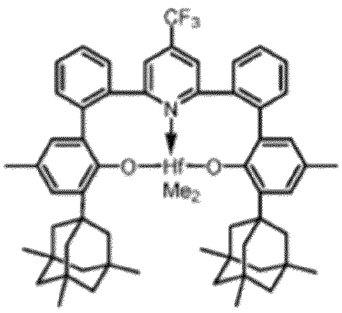

Komplex 46

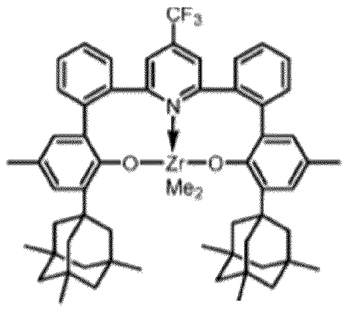

Komplex 47

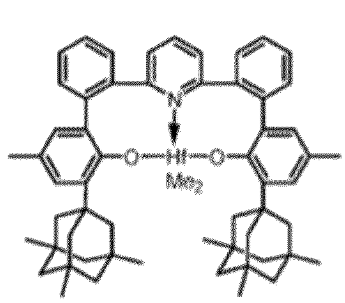

Komplex 48

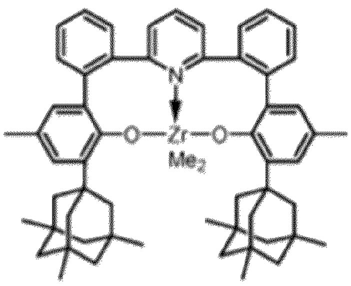

Komplex 49

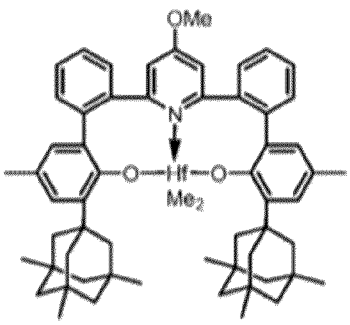

Komplex 50

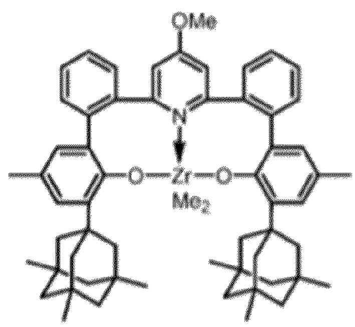

Komplex 51

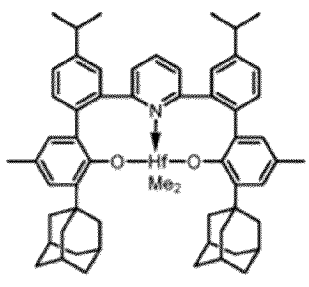

Komplex 52

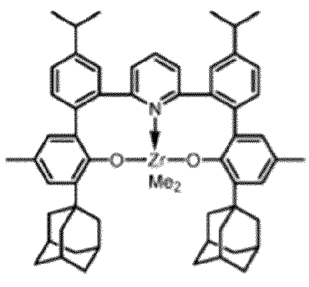

Komplex 53

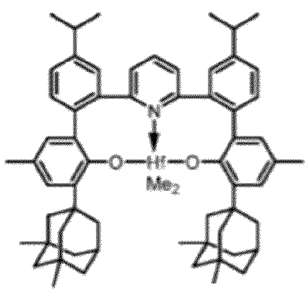

Komplex 54

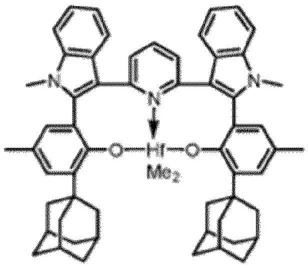
Komplex 56

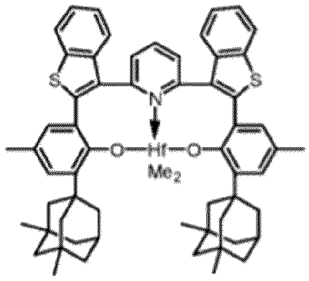
Komplex 57

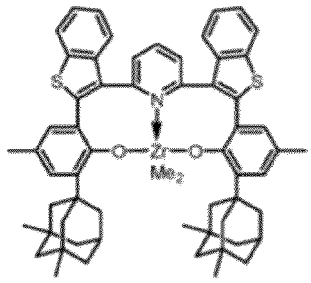
Komplex 58

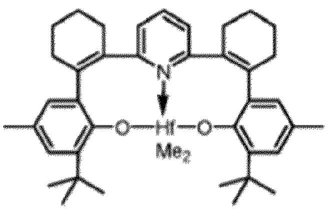
Komplex 59

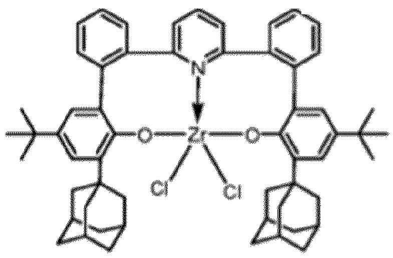
Komplex 60

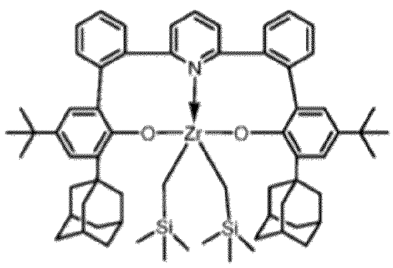
Komplex 62

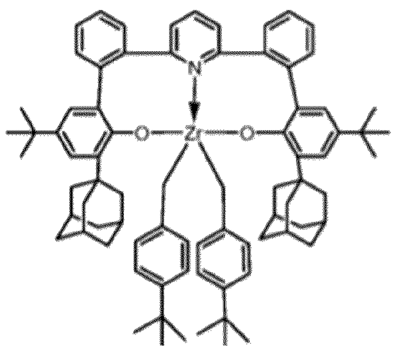
Komplex 63

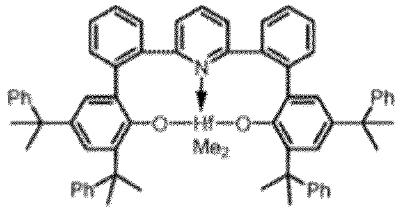
Komplex 64

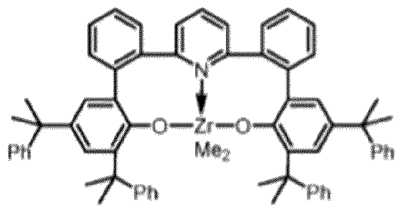
Komplex 65

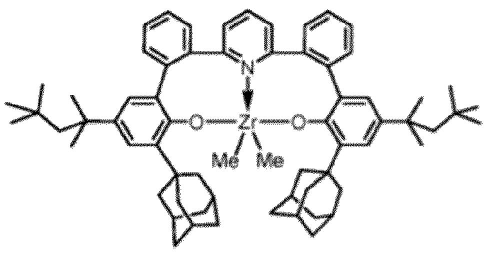
Komplex 66

wobei die Katalysatorverbindung vorzugsweise eine oder mehrere der folgenden Verbindungen ist

| | | |
|---|---|---|
| 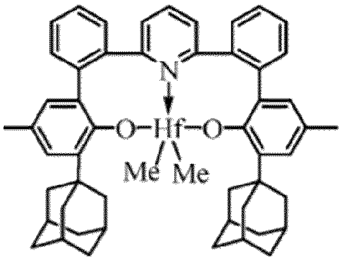 Komplex 1 | 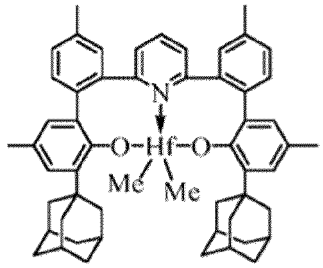 Komplex 2 | 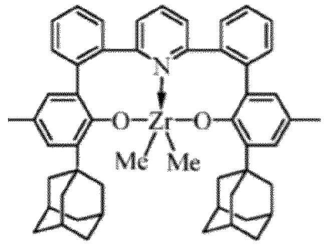 Komplex 3 |
| 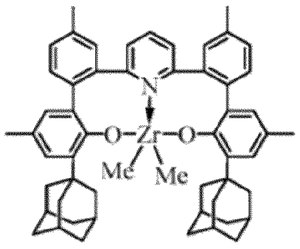 Komplex 4 | 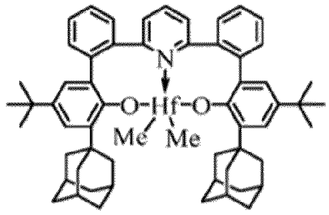 Komplex 5 | 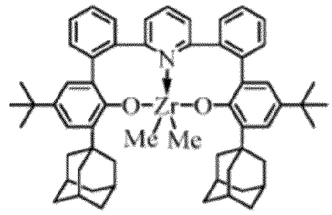 Komplex 6 |
| 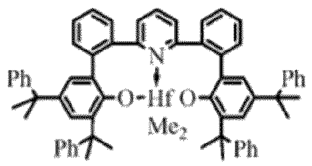 Komplex 33 | 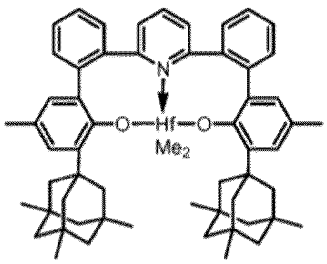 Komplex 48 | 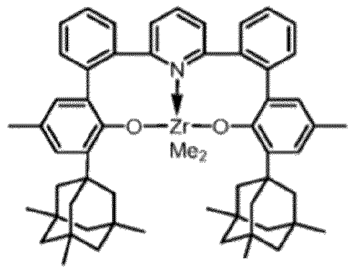 Komplex 49 |
| 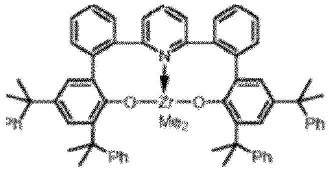 Komplex 65 | 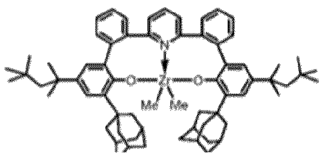 Komplex 66 | |

**8.** Verfahren nach einem der Ansprüche 1 bis 7, wobei der Aktivator ein Alumoxan oder ein nichtkoordinierendes Anion umfasst.

**9.** Verfahren nach einem der Ansprüche 1 bis 8, wobei das Verfahren ein Lösungsverfahren ist, wobei das Verfahren vorzugsweise bei einer Temperatur von etwa 80°C bis etwa 300°C, bei einem Druck im Bereich von etwa 0,35 MPa bis etwa 10 MPa und bei einer Verweilzeit von bis zu 300 Minuten stattfindet.

**10.** Verfahren nach einem der Ansprüche 1 bis 9, weiterhin umfassend die Gewinnung eines Polymers, wobei das Polymer mindestens 0,1 Mol-% cyclisches Olefin umfasst, vorzugsweise mindestens 1 Mol-% cyclisches Olefin und noch bevorzugter mindestens 10 Mol-% cyclisches Olefin umfasst.

**11.** Das Verfahren nach einem der Ansprüche 1 bis 10 umfasst ferner die Gewinnung eines Polymers, wobei das Polymer mindestens 1 Mol-% cyclisches Olefin und mindestens 20 Mol-% Ethylen oder mindestens 20 Mol-% Propylen umfasst.

**12.** Verfahren nach einem der Ansprüche 1 bis 9, ferner umfassend die Gewinnung eines Polymers, wobei das Polymer ein Homopolymer von substituiertem oder unsubstituiertem Cyclopenten ist, vorzugsweise wobei das Polymer ein Homopolymer von Cyclopenten ist.

**13.** Das Verfahren nach einem der Ansprüche 1 bis 11 umfasst ferner die Gewinnung eines Polymers, wobei das Polymer eines der folgenden ist:

(i) ein Ethylen-Cyclopenten-Copolymer mit:

einem Mn von mehr als 5.000 g/mol;
einem Mw von mehr als 10.000 g/Mol;
einem Mw/Mn von etwa 1 bis 10;
einem Cyclopentengehalt von 0,1 Mol-% oder mehr, mit einer Obergrenze von 50 Mol-%, und mit Cyclopenten-1,2-Verknüpfungen von etwa 90% oder mehr der gesamten in das Polymer eingebauten Cyclopenteneinheiten, oder

(ii) ein Ethylen-Norbornen-Copolymer mit:

einem Mn von mehr als 50.000 g/mol;
einem Mw von mehr als 100.000 g/Mol;
einem Mw/Mn von etwa 1,2 bis 5,0; und
mit Norborneneinheiten, die zu 10 bis 80 % isoliert, zu 10 bis 80 % alternierend und zu 1 bis 50 % blockiert sind, wobei die Summe aus isoliert, alternierend und blockiert 100 % beträgt, oder

(iii) ein Propylen-Cyclopenten-Copolymer mit:

einem Mn von mehr als 3.000 g/mol;
einem Mw von mehr als 6.000 g/Mol;
einem Mw/Mn von etwa 1 bis 10;
einen Cyclopentengehalt von 0,1 Mol-% oder mehr, mit einer Obergrenze von 50 Mol-%; und mit Cyclopenten-1,2-Verknüpfungen von etwa 90% oder mehr der gesamten in das Polymer eingebauten Cyclopenteneinheiten, oder

(iv) ein Propylen-Norbornen-Copolymer mit:

einem Mn von mehr als 3.000 g/mol;
einem Mw von mehr als 6.000 g/Mol;
einem Mw/Mn von etwa 1,2 bis 5,0;
einen Norbomengehalt von 1 Mol-% oder mehr, mit einer Obergrenze von 50 Mol-% oder weniger.

**Revendications**

**1.** Procédé de polymérisation comprenant la mise en contact d'un monomère d'oléfine cyclique et éventuellement d'un comonomère choisi parmi des alpha-oléfines en $C_2$ à $C_{20}$ avec un système de catalyseur comprenant un activateur et un composé de catalyseur représenté par la formule (II) :

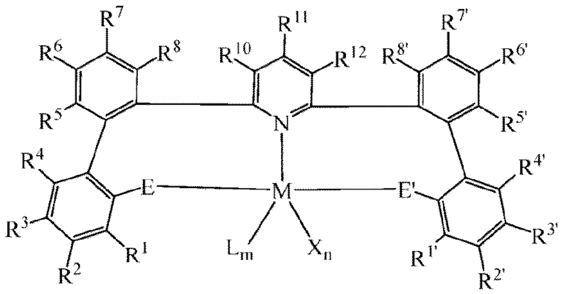

(II)

M étant Hf, Zr ou Ti ;
E et E' étant chacun O ;
chaque L étant indépendamment une base de Lewis ;
chaque X étant indépendamment un ligand anionique ;
n étant 1, 2 ou 3 ;
m étant 0, 1, ou 2 ;
n+m n'étant pas supérieur à 4 ;
$R^1$ et $R^{1'}$ étant indépendamment un groupe $C_4$-$C_{40}$ hydrocarbyle tertiaire, un groupe $C_4$-$C_{40}$ hydrocarbyle tertiaire cyclique, ou un groupe $C_4$-$C_{40}$ hydrocarbyle tertiaire polycyclique,
chacun parmi $R^2$, $R^3$, $R^4$, $R^{2'}$ $R^{3'}$, et $R^{4'}$ étant indépendamment hydrogène, $C_1$-$C_{40}$ hydrocarbyle, $C_1$-$C_{40}$ hydrocarbyle substitué, un hétéroatome ou un groupe contenant un hétéroatome, ou l'un ou plusieurs parmi $R^2$ et $R^3$, $R^3$ et $R^4$, $R^{2'}$ et $R^{3'}$, $R^{3'}$ et $R^{4'}$ pouvant être joints pour former un ou plusieurs cycles hydrocarbyle substitués, cycles hydrocarbyle non substitués, cycles hétérocycliques substitués ou cycles hétérocycliques non substitués chacun ayant 5, 6, 7, ou 8 atomes de cycle, et des substitutions sur le cycle pouvant se joindre pour former des cycles supplémentaires ;
deux groupes L quelconques pouvant être joints ensemble pour former une base de Lewis bidentate ;
un groupe X pouvant être joint à un groupe L pour former un groupe bidentate monoanionique ;
deux groupes X quelconques pouvant être joints ensemble pour former un groupe ligand dianionique ;
chacun parmi $R^5$, $R^6$, $R^7$, $R^8$, $R^{5'}$, $R^{6'}$, $R^{7'}$, $R^{8'}$, $R^{10}$, $R^{11}$, et $R^{12}$ étant indépendamment hydrogène, un $C_1$-$C_{40}$ hydrocarbyle, un $C_1$-$C_{40}$ hydrocarbyle substitué, un hétéroatome ou un groupe contenant un hétéroatome, ou l'un ou plusieurs parmi $R^5$ et $R^6$, $R^6$ et $R^7$, $R^7$ et $R^8$, $R^{5'}$ et $R^{6'}$, $R^{6'}$ et $R^{7'}$, $R^{7'}$ et $R^{8'}$, $R^{10}$ et $R^{11}$, ou $R^{11}$ et $R^{12}$ pouvant être joints pour former un ou plusieurs cycles hydrocarbyle substitués, cycles hydrocarbyle non substitués, cycles hétérocycliques substitués ou cycles hétérocycliques non substitués chacun ayant 5, 6, 7, ou 8 atomes de cycle, et des substitutions sur le cycle pouvant se joindre pour former des cycles supplémentaires.

**2.** Procédé selon la revendication 1, chaque X étant, indépendamment, choisi dans le groupe constitué par des radicaux hydrocarbyle substitués ou non substitués ayant de 1 à 20 atomes de carbone, les hydrures, les amides, les alcoxydes, les sulfures, les phosphures, les halogénures et une combinaison de ceux-ci, et éventuellement deux X pouvant former une partie d'un cycle condensé ou d'un système cyclique.

**3.** Procédé selon l'une quelconque des revendications 1 à 2, chaque L étant une base de Lewis, indépendamment, choisie dans le groupe constitué par les éthers, les thioéthers, les amines, les nitriles, les imines, les pyridines, les halogénocarbures, et les phosphines et une combinaison de ceux-ci, de préférence chaque L étant indépendamment choisi parmi des groupes éther et thioéther, de préférence chaque L étant un groupe éther éthylique, tétrahydrofuranne, éther dibutylique ou sulfure de diméthyle.

**4.** Procédé selon l'une quelconque des revendications 1 à 3, n étant 2 et m étant 0.

**5.** Procédé selon la revendication 1, M étant Zr ou Hf, et à la fois $R^1$ et $R^{1'}$ étant des $C_4$-$C_{20}$ alkyles tertiaires cycliques, préférablement, à la fois $R^1$ et $R^{1'}$ étant adamantan-1-yle ou adamantan-1-yle substitué.

**6.** Procédé selon la revendication 1, M étant Zr ou Hf, , à la fois $R^1$ et $R^{1'}$ étant des $C_4$-$C_{20}$ alkyles tertiaires cycliques, et à la fois $R^7$ et $R^{7'}$ étant des $C_1$-$C_{20}$ alkyles, préférablement à la fois $R^7$ et $R^{7'}$ étant des $C_1$-$C_3$ alkyles.

**7.** Procédé selon la revendication 1, le composé de catalyseur étant représenté par une ou plusieurs des formules suivantes :

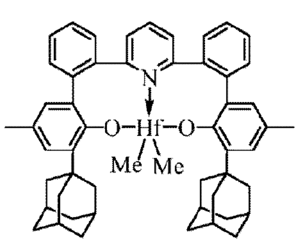
Complexe 1

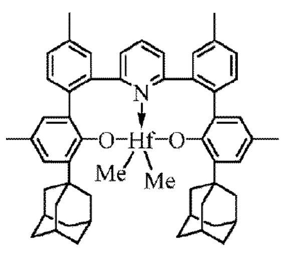
Complexe 2

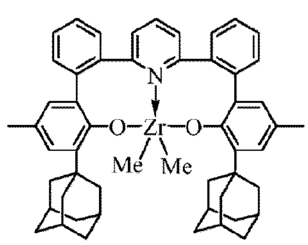
Complexe 3

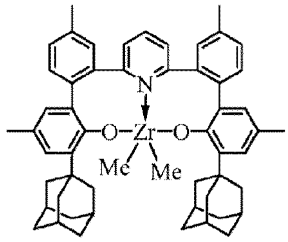

Complexe 4

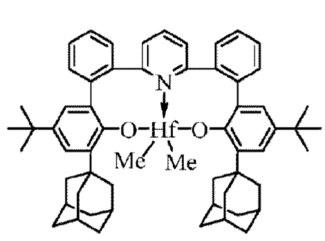

Complexe 5

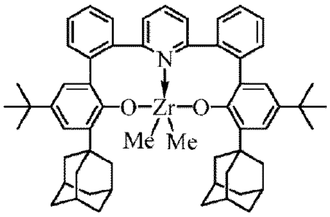

Complexe 6

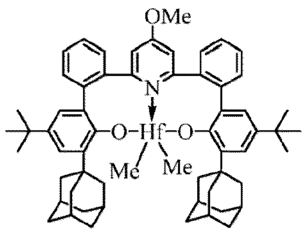

Complexe 7

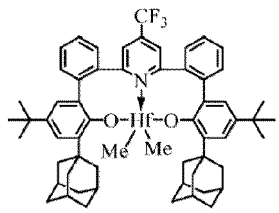

Complexe 8

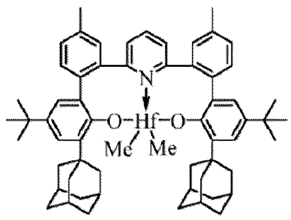

Complexe 9

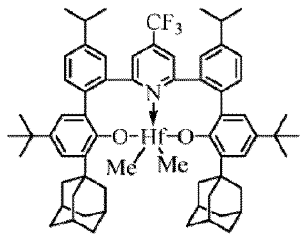

Complexe 10

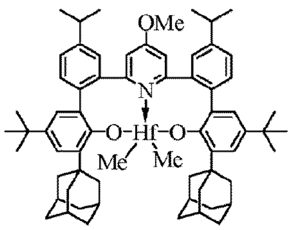

Complexe 11

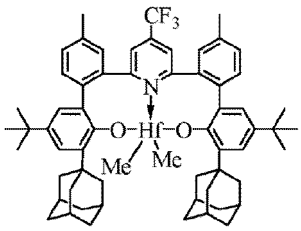

Complexe 12

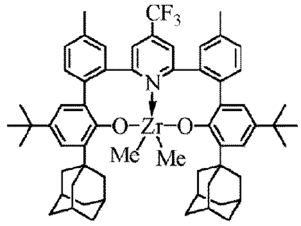

Complexe 13

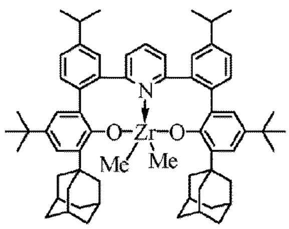

Complexe 14

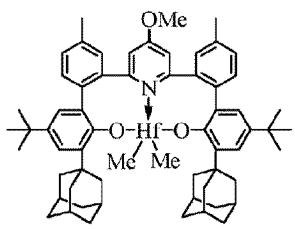

Complexe 15

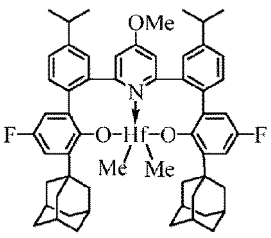

Complexe 16

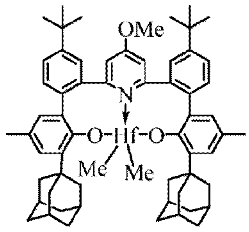

Complexe 17

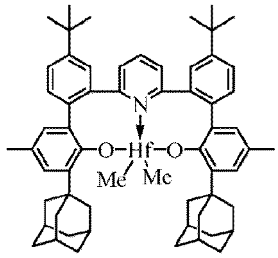

Complexe 18

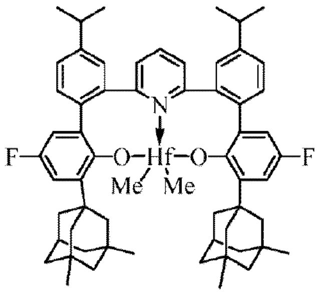

Complexe 19

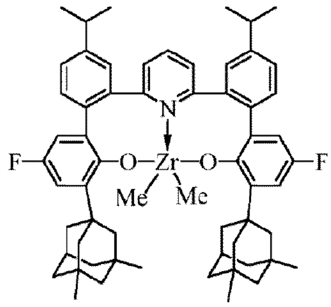

Complexe 20

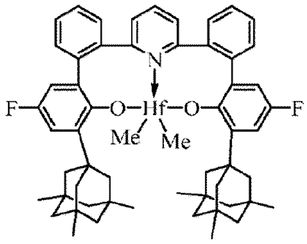

Complexe 21

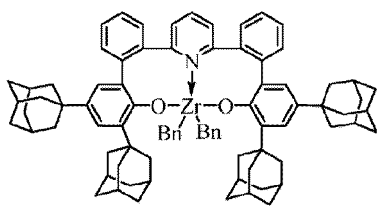

Complexe 22

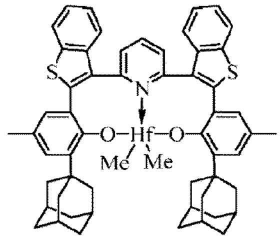

Complexe 23

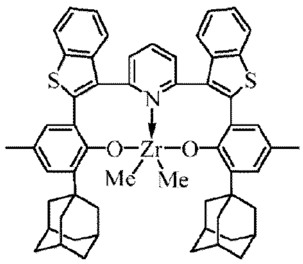

Complexe 24

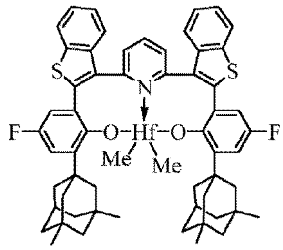

Complexe 25

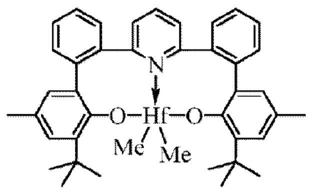

Complexe 26

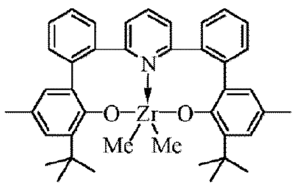

Complexe 27

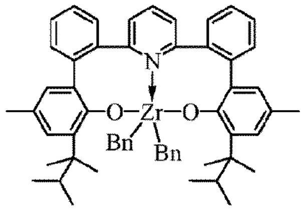

Complexe 29

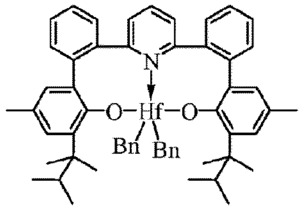

Complexe 30

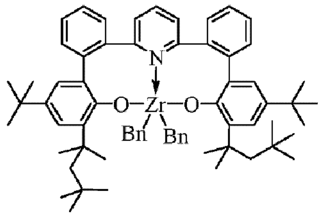
Complexe 31

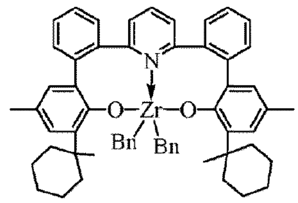
Complexe 32

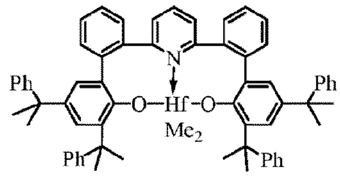
Complexe 33

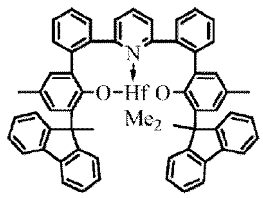
Complexe 34

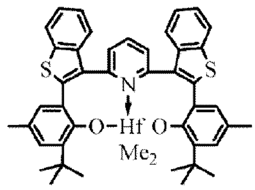
Complexe 35

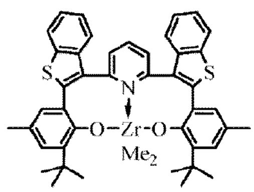
Complexe 36

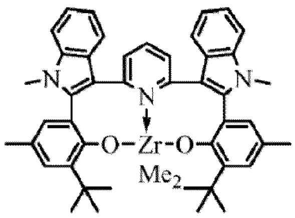
Complexe 37

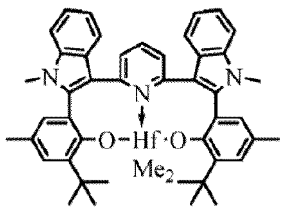
Complexe 38

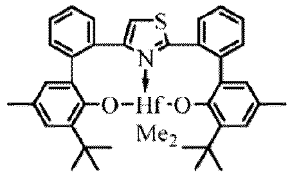
Complexe 39

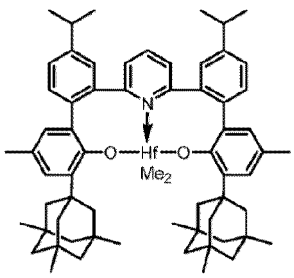
Complexe 40

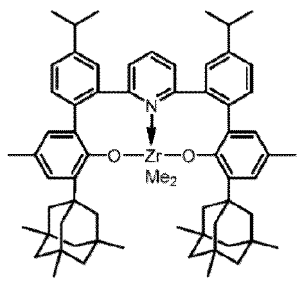
Complexe 41

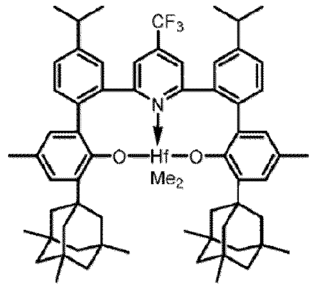
Complexe 42

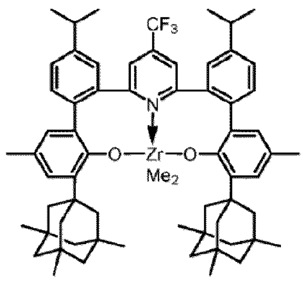
Complexe 43

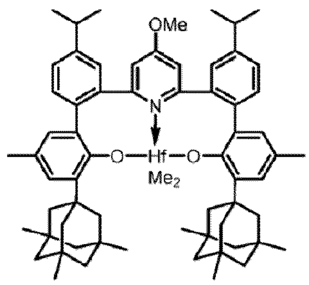
Complexe 44

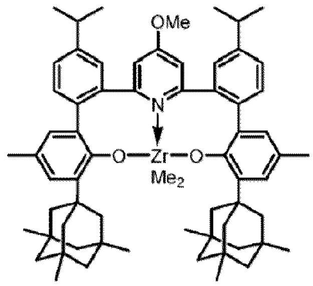
Complexe 45

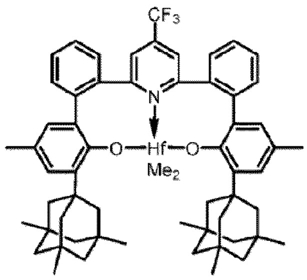
Complexe 46

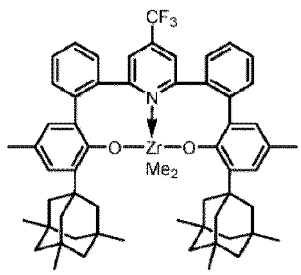
Complexe 47

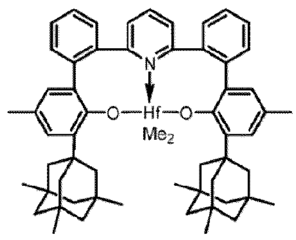
Complexe 48

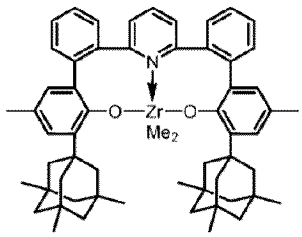
Complexe 49

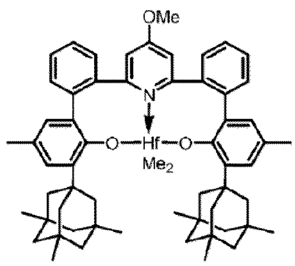
Complexe 50

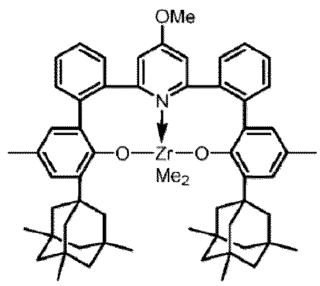
Complexe 51

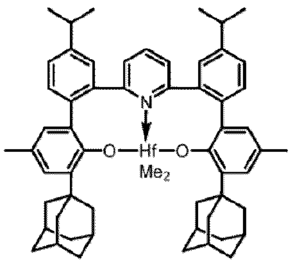
Complexe 52

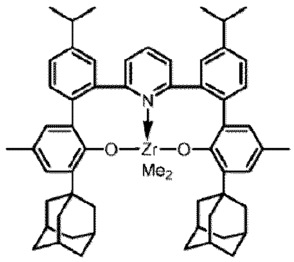
Complexe 53

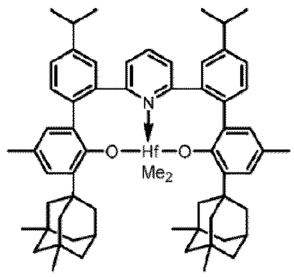
Complexe 54

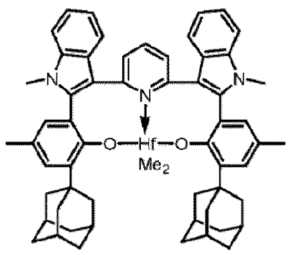
Complexe 56

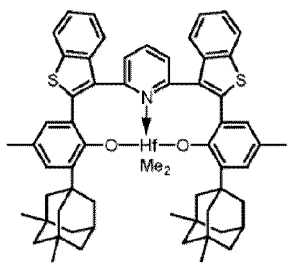
Complexe 57

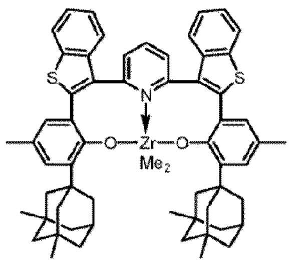
Complexe 58

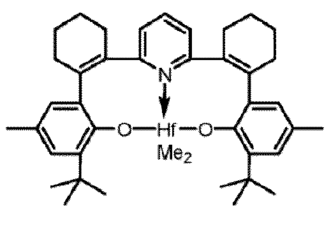
Complexe 59

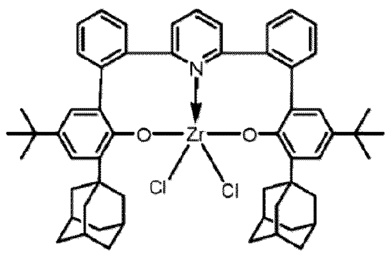
Complexe 60

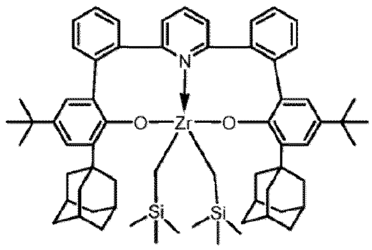

Complexe 62

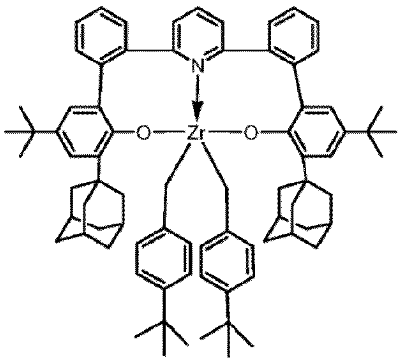

Complexe 63

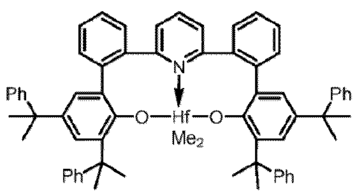

Complexe 64

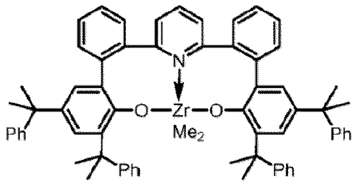

Complexe 65

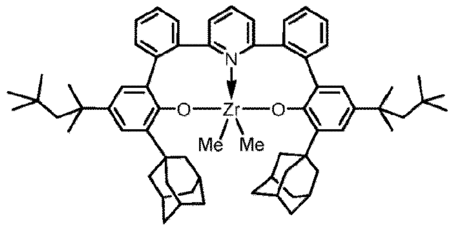

Complexe 66

de préférence, le composé de catalyseur étant un ou plusieurs composés parmi

| | | |
|---|---|---|
| 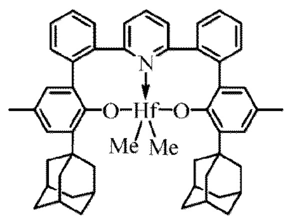 Complexe 1 | 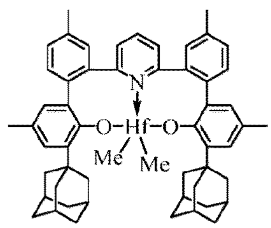 Complexe 2 | 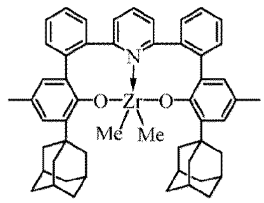 Complexe 3 |
| 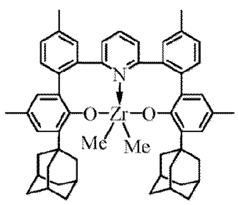 Complexe 4 | 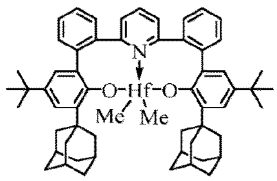 Complexe 5 | 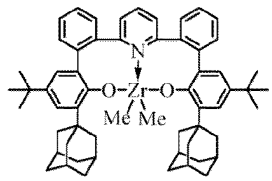 Complexe 6 |

(continued)

| | | |
|---|---|---|
| 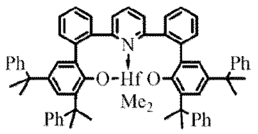 Complexe 33 | 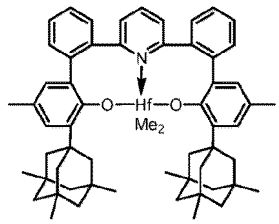 Complexe 48 | 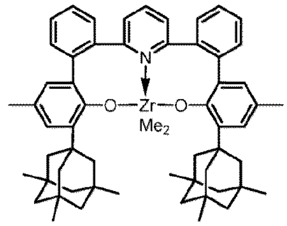 Complexe 49 |
| 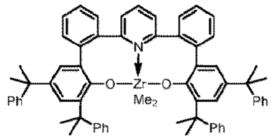 Complexe 65 | 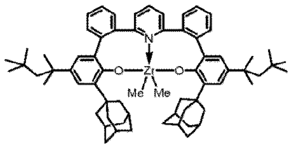 Complexe 66 | |

**8.** Procédé selon l'une quelconque des revendications 1 à 7, l'activateur comprenant un alumoxane ou un anion non coordinant.

**9.** Procédé selon l'une quelconque des revendications 1 à 8, le procédé étant un procédé en solution, de préférence le procédé ayant lieu à une température d'environ 80 °C à environ 300 °C, à une pression dans la plage d'environ 0,35 MPa à environ 10 MPa, et à un temps de séjour allant jusqu'à 300 minutes.

**10.** Procédé selon l'une quelconque des revendications 1 à 9, comprenant en outre la récupération d'un polymère, le polymère comprenant au moins 0,1 % en moles d'oléfine cyclique, de préférence le polymère comprenant au moins 1 % en moles d'oléfine cyclique, plus préférablement le polymère comprenant au moins 10 % en moles d'oléfine cyclique.

**11.** Procédé selon l'une quelconque des revendications 1 à 10, comprenant en outre la récupération d'un polymère, le polymère comprenant au moins 1 % en moles d'oléfine cyclique et au moins 20 % en moles d'éthylène ou au moins 20 % en moles de propylène.

**12.** Procédé selon l'une quelconque des revendications 1 à 9, comprenant en outre la récupération d'un polymère, le polymère étant un homopolymère de cyclopentène substitué ou non substitué, de préférence le polymère étant un homopolymère de cyclopentène.

**13.** Procédé selon l'une quelconque des revendications 1 à 11, comprenant en outre la récupération d'un polymère, le polymère étant l'un des suivants :

(i) un copolymère d'éthylène et de cyclopentène ayant :

un Mn supérieur à 5 000 g/mole ;
un Mw supérieur à 10 000 g/mole ;
un Mw/Mn d'environ 1 à 10 ;
une teneur en cyclopentène de 0,1 % en moles ou plus, avec une limite supérieure de 50 % en moles ; et ayant des liaisons cyclopentène 1,2 à environ 90 % ou plus des motifs de cyclopentène totaux incorporés dans le polymère, ou

(ii) un copolymère d'éthylène et de norbornène ayant :

un Mn supérieur à 50 000 g/mole ;
un Mw supérieur à 100 000 g/mole ;
un Mw/Mn d'environ 1,2 à 5,0 ; et
ayant des motifs norbornène qui sont de 10 à 80 % isolés, de 10 à 80 % alternés et de 1 à 50 % bloqués, le total

des motifs isolés, alternés et bloqués étant égal à 100 %, ou

(iii) un copolymère de propylène et de cyclopentène ayant :

un Mn supérieur à 3 000 g/mole ;
un Mw supérieur à 6 000 g/mole ;
un Mw/Mn d'environ 1 à 10 ;
une teneur en cyclopentène de 0,1 % en moles ou plus, avec une limite supérieure de 50 % en moles ; et ayant des liaisons cyclopentène 1,2 à environ 90 % ou plus des motifs de cyclopentène totaux incorporés dans le polymère, ou
(iv) un copolymère de propylène et de norbornène ayant :

un Mn supérieur à 3 000 g/mole ;
un Mw supérieur à 6 000 g/mole ;
un Mw/Mn d'environ 1,2 à 5,0 ;
une teneur en norbornène de 1 % en moles ou plus, avec une limite supérieure de 50 % en moles ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 2018022137
- US 7030256 B2
- US 6825296 B
- US 7847099 B
- WO 2016172110 A
- US 20200172645 A1
- WO 2008033197 A
- US 78790920
- US 5041584 A
- US 9340630 B
- US 8404880 B
- US 8975209 B
- US 5447895 A
- US 39416619
- US 39418619
- US 16394197 B
- WO 2004026921 A
- WO 2004046214 A
- US 8658556 B
- US 6211105 B
- US 5153157 A
- US 5453410 A
- EP 0573120 B1
- WO 1994007928 A
- WO 1995014044 A
- US 20160060430
- US 20200255553 A
- US 62972953
- US 62972936
- US 20200255555 A
- US 20200254431 A
- US 20200255556 A
- US 6491816 B
- US 6491823 B
- US 6475391 B
- US 6461515 B
- US 6436292 B
- US 6406632 B
- US 6175409 B
- US 6454947 B
- US 6260407 B
- US 6294388 B


### Non-patent literature cited in the description


- **BAIER, M. C. et al.** Post-Metallocenes in the Industrial Production of Polyolefins. *Angew. Chem. Int. Ed.*, 2014, vol. 53, 9722-9744
- **GOLISZ** ; **BERCAW**. Synthesis of Early Transition Metal Bisphenolate Complexes and their use as Olefin Polymerization Catalysts. *Macromolecules*, 2009, vol. 42, 8751-8762
- *Chemical and Engineering News,*, 1985, vol. 63 (5), 27
- **BERCAW**. *Macromolecules*, 2009, vol. 42, 8751-8762
- *Macromolecules*, 2009, vol. 42, 8751-8762
- **NEAL C. ANDERSON**. *Practical Process Research and Development - A Guide for Organic Chemists*, ISBN 1493300125X
- A Simple ''Back of the Envelope'' Method for Estimating the Densities and Molecular Volumes of Liquids and Solids. *Journal of Chemical Education*, November 1994, vol. 71 (11), 962-964
- **J. VLADIMIR OLIVEIRA et al.** *Ind. Eng. Chem. Res.*,, 2000, vol. 29, 4627
- Light Scattering from Polymer Solutions. Academic Press, 1972
- **T. SUN** ; **P. BRANT** ; **R. R. CHANCE** ; **W. W. GRAESSLEY**. *Macromolecules*, 2001, vol. 34 (19), 6812-6820
- Polymer Handbook. John Wiley and Sons, 1999
- *Organic Letters*, 2015, vol. 17 (9), 2242-2245
- **M. NAPOLI**. Copolymerization of Ethylene with Cyclopentene or 2-butene with Half Titanocenes-Based Catalysts. *Journal of Polymer Science A: Polymer Chemistry*, 2008, vol. 46, 4725-4733
- **A. JERSCHOW**. Nuclear Magnetic Resonance Evidence for a new Microstructure in Ethene-Cyclopentene Copolymers. *Macromolecules*, 1995, vol. 28, 7095-7099
- **N. NAGA** ; **Y. IMANISHI**. Structure of cyclopentene unit in the copolymer with propylene obtained by stereospecific zirconocene catalysts. *Polymer*, 2002, vol. 43, 2133-2139
- **BERGSTROM**. Influence of Polymerization Conditions on Microstructure of Norbomene-Ethylene Copolymers Made Using Metallocene Catalysts and MAO. *Journal of Applied Polymer Science*, 1997, vol. 63, 1071-1076

- **I. TRITTO**. Propene-Norbomene Copolymers: Synthesis and Analysis of Polymer Structure by C NMR Spectroscopy and ab Initio Chemical Shift Computations. *Macromolecules*, 2003, vol. 36, 882-890